(19) Europäisches Patentamt
European Patent Office
Office européen des brevets

(11) EP 1 566 624 A1

(12) EUROPEAN PATENT APPLICATION

(43) Date of publication:
**24.08.2005 Bulletin 2005/34**

(21) Application number: **05075109.8**

(22) Date of filing: **18.12.2002**

(51) Int Cl.[7]: **G01N 21/00**, G01N 21/17, G01N 21/31, G01N 21/62, G01N 37/00

(84) Designated Contracting States:
**AT BE BG CH CY CZ DE DK EE ES FI FR GB GR IE IT LI LU MC NL PT SE SI SK TR**
Designated Extension States:
**AL LT LV MK RO**

(30) Priority: **04.03.2002 US 6516**

(62) Document number(s) of the earlier application(s) in accordance with Art. 76 EPC:
**02807124.9 / 1 481 082**

(71) Applicants:
- **WAYNE STATE UNIVERSITY**
  **Michigan 48202 (US)**
- **TRUSTEES OF PRINCETON UNIVERSITY**
  **Princeton, NJ 08544-0086 (US)**

(72) Inventors:
- **Herschel, Rabitz**
  **Lawrenceville, NY 08648 (US)**
- **Schreiber, Elmar**
  **28199 Bremen (DE)**
- **Levis, Robert J., Temple University**
  **Philadelphia, PA 19122 (US)**

(74) Representative: **Lawrence, John**
**Barker Brettell,**
**138 Hagley Road,**
**Edgbaston**
**Birmingham B16 9PW (GB)**

Remarks:
This application was filed on 14 - 01 - 2005 as a divisional application to the application mentioned under INID code 62.

# (54) Quantum dynamic discriminator for molecular agents

(57) The disclosed invention (fig. 5.2) is related to the field of quantum dynamic discriminators, sample identification systems, mass spectrometers and methods for identifying a component in a composition. Also disclosed are quantum dynamic discriminators and methods for ascertaining the quantum dynamic states of a component in a composition. Optimal identification devices and methods for ascertaining quantum Hamiltonians of quantum systems are further disclosed.

FIG 5.2

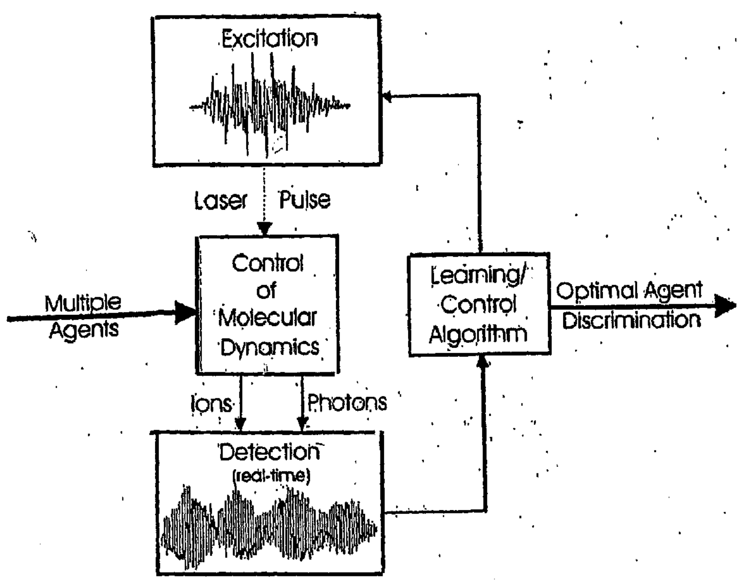




Printed by Jouve, 75001 PARIS (FR)

## Description

### GOVERNMENT RIGHTS

The work leading to the disclosed inventions was funded in whole or in part with Federal funds from the Department of Defense, under Contract or Grant Number DAAD 19-01-1-560 / 130-6788. Accordingly, the U.S. Government may have rights in these inventions.

### FIELD OF THE INVENTION

The present invention is related to the field of quantum dynamic discriminators, sample identification systems, mass spectrometers and methods for identifying a component in a composition. The present invention is also related to the field of quantum dynamic discriminators and methods for ascertaining the quantum dynamic states of a component in a composition. The present invention is further related to optimal identification devices and methods for ascertaining quantum Hamiltonians of quantum systems.

### BACKGROUND OF THE INVENTION

There is presently an urgent need to develop molecular detection technologies that can readily identify chemical, biological, and nuclear agents present in the environment. Unfortunately, the detection of such agents (e.g., molecules) is often complicated by complex background interference arising from the presence of a variety of other components in test samples. This problem is especially evident where an agent targeted for detection (e.g., a dangerous chemical warfare agent) is intentionally mixed with similarly structured agents to mask its presence. Typically, mixtures of such components require time-consuming separation processes for reducing the uncertainty in identifying a particular agent among a myriad of other components. Thus, there remains the problem of efficiently disriminating chemical, biological, and nuclear agents from a mixture of components without the need for a separate separation step.

Traditional approaches are often inadequate when real-time in situ observations are necessary, especially in the presence of a mixture of background species. Furthermore, with the ever-increasing number of potential agents, no single traditional detection technology is adequate at the present time. Regardless of the specific nature of the traditional probes utilized for this purpose, they may all be characterized as static techniques, probing time-independent properties of a molecule. Outside of a clean laboratory environment with a pure agent, such simple "one-dimensional" detection can be unsatisfactory. For samples containing complex molecules in field or industrial environments, traditional detection is often cumbersome, involving a slow separation stage (requiring several tens of minutes or even hours) followed by detection.

Prior methods employed for detection of chemical and biological agents are based on static technologies, but when the number of species present is large these approaches become inadequate. Analysis is commonly carried out using standard analytical methods such as chromatographic separation followed by flame ionization detection. Detection times in such experiments are on the order of one hour. More rapid analysis is possible using super critical fluid chromatography. Time-of-flight mass spectrometry is employed to provide a high degree of molecular specificity. However, analysis times remain $\sim$ 10 minutes due to the need for chromatographic separation. Other less rapid forms of chemical agent detection are also employed, including Raman spectroscopy, and enzyme inhibition bioassays.

Each of the traditional detection methodologies mentioned above relies on serial measurements of a particular molecular signature after separation. For simple laboratory-based analysis, these more or less linear response techniques are usually sufficient for identification of isolated molecular species. However, in the complex environment that may be present in the plant or field, these straight forward analysis technique can be insufficient. This difficulty arises because realistic conditions will include many molecular species that can mask the agents of interest, either in terms of retention time or fragmentation distribution in normal detectors.

Similar molecules often may be characterized as sharing common chemical structures made up of the same atomic components. Such molecules are expected to have related Hamiltonians, and thus similar chemical and physical properties. Examples range from simple isotopic variants (e.g., $^{79}Br_2$, $^{81}Br_2$) and isomers (e.g., *cis*- and *trans*-1,2-dichloroethylene) to highly complex molecules including those of biological relevance (e.g., nucleic acids and proteins). A common need is to analyze or separate one molecular species in the presence of possibly many other similar agents. This problem often demands rapid, sensitive, and dependable identification or purification measures. Traditional approaches mainly focus on exploiting the subtle differences in the microscopic properties (e.g., enhancing spectroscopic resolution to differentiate close absorption peaks) or macroscopic properties (e.g., utilizing some form of chromatography for species separation) of the species. See, for example, *Encyclopedia of Separation Science;* Wilson, I. D., et al., Eds.; Academic Press: San Diego, CA, 2000. Although these traditional approaches have been widely applied, they are essentially all characterized as "static" or "one-dimensional", wherein improvements seen in

detection technology have been at best slow and incremental. Thus, there is a great and pressing need for a new paradigm in molecular discrimination and detection technology that will enable and enhance the ability to discriminate similar molecules in a mixture. The new paradigm that is utilized by the present invention employs quantum dynamic discrimination to actively amplify the seemingly subtle differences between similar agents.

In a related matter, detailed knowledge of quantum Hamiltonians is desirable for a broad variety of applications. Various types of laboratory data have served as sources to extract the Hamiltonian information. Typically, experiments for this purpose are chosen based on practical considerations, as well as intuition regarding the significance of the data for the ultimate sought after Hamiltonian. The relationship between the observations and the underlying Hamiltonian is generally highly nonlinear. Choices of which experiments to perform based on intuition alone may unwittingly provide false guidance. In this regard, closed loop procedures are being developed to improve the estimation of Hamiltonian information.

Closed loop operations for system identification have a precedent in the engineering disciplines, see, e.g., L. Ljung, *System Identification. Theory for the User,* 2nd ed. (Prentice Hall PTR, 1999), but there are special distinctions that arise in the present circumstances. Typically, in engineering, inversion is carried out for the purpose of learning a portion of a model to improve an ultimate system control goal. In the case of quantum mechanics, a more general desire is to seek the Hamiltonian for other ancillary purposes besides control. Second, most common engineering applications involve maintaining operational stability, which usually is expressed in terms of a locally linear system model. In contrast, in quantum mechanics, most applications will not be amenable to perturbation theory, thereby producing a nonlinear modeling and identification problem. Lastly, the ability to perform massive numbers of control laser experiments (see, e.g., T. Brixner, et al., *id.,* and H. Rabitz, *id.*) opens up a special opportunity, difficult to achieve in engineering, where it is often prohibitive to thoroughly explore the analogous model distributions of Hamiltonians.

The interaction of molecules with tailored laser pulses in the strong field regime is under active exploration for optical control of chemical reactivity. Typically, the strong field regime is reached at laser intensities in excess of $10^{12}$ W $cm^{-2}$, where substantial Stark shifting, polarization, and disturbance of the field free electronic states occurs to produce a quasi-continuum of new states in the molecule. A calibration for the magnitude of the influence of an intense laser on a molecule can be obtained by calculating the maximum amplitude of the electric field vector of the laser beam using

$$E_o = (I/\in_o c)^{1/2} \quad (1)$$

where I is the intensity of the radiation, $\in_o$ is the vacuum permittivity, and $c$ is the speed of light. For example, the easily obtained intensity of $10^{14}$ W $cm^{-2}$ corresponds to $E_o$ = 2.75 V/Å. The result of the interaction of such a high electric field with a molecule is schematically shown in Figure 4.1 where the one-dimensional electrostatic potential energy surface of a diatomic molecule is modified by a laser pulse of approximately 1 V/Å, a field strength that is on the order of the fields binding valance electrons to nuclei. The control of the strong field induced near continuum using closed-loop methods has been used to influence gas-phase chemical reactions (see, e.g., (1) Levis, R. J.; Menkir, G. M.; Rabitz, H. Science 2001,.292, 709) where the outcome of the interaction between the strong field laser and the molecule is employed to interactively discover the optimal time-dependent pulse (see, e.g., (2) Judson, R. S.; Rabitz, H. Phys. Rev. Lett. 1992, 68, 1500).

At first one might anticipate that the degree of chemical control using pulses of such intensity would be extremely limited due to the highly nonlinear processes induced in the molecule. However, because the pulse duration is short (-50 fs), the excitation laser has the potential to limit the intuitively expected catastrophic decomposition to atomic fragments and ions. For example, in the strong field excitation of benzene (see, e.g., (3) Dewitt, M. J.; Levis, R. J. J. Chem. Phys. 1995, 102, 8670), ionization of the parent species was exclusively observed up to intensities of $10^{14}$ W $cm^{-2}$ with little induced dissociation. The observation of the single dominant channel (intact ionization) suggested that most of the possible final state channels (i.e., the large manifold of dissociative ionization states) may be suppressed in a well defined, strong field intensity regime. Furthermore, at these intensities there is opportunity to substantially manipulate the molecular wave function (see Figure 4.1) with suitable shaping of the laser pulses to induce and manage photochemical reactivity and products.

The advent of short pulse duration, intense lasers has led to the observation of many interesting strong field phenomena in atoms, molecules, and clusters including X-ray generation from high harmonics ((4) L'Huillier, A.; Balcou, Ph. Phys Rev.. Lett 1993, 70, 774), above threshold ionization ((5) Agostini, P. F.; Fabre, F.; Mainfray, G.; Petite, G.; Rahman, N. K. Phys Rev. Lett. 1979, 42, 1127); above threshold dissociation ((6) Zavriyev, A.; Bucksbaum, P. H.; Squier, J.; Saline, F. Phys. Rev. Lett. 1993, 70, 1077); multiple electron emission from molecules ((7) Kosmidis, C.; Tzallas, P.; Ledingham, K. W. D.; McCanny, T.; Singhal, R. P.; Taday, P. F.; Langley, A. J. J.Phys. Chem. A 1999, 103, 6950); intact ionization of large polyatomic molecules ((3), (8) DeWitt, M. J.; Peters, D. W.; Levis, R. J. Chem. Phys.

1997, 218, 211; (9) Levis, R. J.; DeWitt, M. J. J. Phys. Chem. A 1999, 103, 6493.); forced molecular rotation in an optical centrifuge ((10) Villeneuve, D. M.; Aseyev, S. A.; Dietrich, P.; Spanner, M.; Ivanov, M. Y.; Corkum, P. B. Phys. Rev. Lett. 2000, 85, 542); production of extremely high charge states from molecular clusters ((11) Purnell, J. S., E. M.; Wei, S.; Castleman, A. W., Jr. Chem. Phys. Lett. 1994, 229, 333.); production of highly energetic ions ((12) Schmidt, M.; Normand, D.; Cornaggia, C. Phys. Rev. A 1994, 50, 5037); and neutrons from clusters ((13) Ditmire, T.; Zweiback, J.; Yanovsky, V. P.; Cowan, T. E.; Hays, G.; Wharton, K. B. Nature 1999, 398, 489). A clear picture of the excitation mechanisms in the strong field regime is now emerging ((14) Gavrilla, M. Atoms in Intense Fields, Academic Press: New York, 1992).

While the use of strong fields to control chemistry is quite new, the area of coherent control research has broad foundations ((15) Tannor, D. J.; Rice, S. A. Adv. Chem. Phys. 1988, 70, 441; (16) Brumer, P.; Shapiro, M. Laser Part. Beams 1998,16, 599; (17) Warren, W. S.; Rabitz, H.; Dahleh, M. Science 1993, 259, 1581). The essence of the control concept in terms of optical fields and molecules is captured by the following transformation goal:

$$|\psi_i\rangle \rightarrow |\psi_f\rangle \quad (2)$$

where an initial quantum state $|\psi_i\rangle$ is steered to a desired final state $|\psi_f\rangle$ via interaction with some external field. As a problem in quantum control, the goal is typically expressed in terms of seeking a tailored laser electric field ε(t) that couples into the Schrödinger equation

$$i\hbar\frac{\partial}{\partial t}|\psi\rangle = [H_0 - \mu \bullet \in(t)]|\psi\rangle \quad (3)$$

through the dipole μ. This Born-Oppenheimer picture can be expanded to explicitly consider the electrons and nuclei. Regardless of the necessary level of Hamiltonian detail, the general mechanism for achieving quantum control is through the manipulation of constructive and destructive quantum wave interferences. One goal is to create maximum constructive interference in the state $|\psi_f\rangle$ according to eq 2, while simultaneously achieving maximum destructive interference in all other states $|\psi_{f'}\rangle$, f' ≠ f at the desired target time T. A simple analogy to this process is the traditional double slit experiment ((18) Shapiro, M.; Brumer, P. Coherent control of atomic molecular, and electronic processes, in Advances in Atomic Molecular and Optical Physics, 2000; Vol. 42; p 287). However, a wave interference experiment with two slits will lead to only minimal resolution. Thus, in the context of quantum control, two pathways can produce limited selectivity when there are many accessible final states for discrimination. Rather, a multitude of effective slits should be created at the molecular scale in order to realize high quality control into a single state ((19) Rabitz, H.; de Vivie-Riedle, R.; Motzkus, M.; Kompa, K. Science 2000, 288, 824), while eliminating the flux into all other states.

The requirement of optimizing quantum interferences to maximize a desired product leads to the need for introducing an adjustable control field ε(t) having sufficiently rich structure to simultaneously manipulate the phases and amplitudes of all of the pathways connecting the initial and final states. Construction of such a pulse is currently possible in the laboratory using the technique of spatial light modulation ((20) Weiner, A. M. Optical Quantum Electron. 2000, 32, 473; (21) Tull, J. X. D., M. A.; Warren, W. S. Adv. Magnetic Optical Reson. 1996,20). However, calculation of the time-dependent electric fields to produce the desired reaction remains a problematic issue for chemically relevant reactions. Unfortunately, the Hamiltonian at the Born-Oppenheimer level remains largely unknown for polyatomic molecules, and this severely limits the ability to perform a priori calculations at the present time. Even if the field free molecular Hamiltonian were known, the highly nonlinear nature of the strong field excitation process effectively removes all possibility of calculating an appropriate pulse shape in this regime.

## SUMMARY OF THE INVENTION

In one aspect of the present invention, there are provided quantum dynamic discriminators for analyzing compositions. In this aspect of the invention, the quantum dynamic discriminators include a tunable field pulse generator for generating a field pulse to manipulate at least one component of the composition and a detector for detecting at least one signal arising from at least one interaction arising from the application of an observation field to the composition. In this aspect of the invention, the detected signal is typically correlated to at least one of the following characteristics of the composition: the quantum dynamic state of the component, the Hamiltonian of the component, the molecular structure of the component, the amounts of two or more components, and the presence of an unknown component of the composition. A closed loop quantum controller is also provided in this aspect of the invention for the tunable field pulse generator, the controller being adapted with an optimal identification algorithm for iteratively changing the field pulse applied to the composition. Here, the optimal identification algorithm operates to minimize the variance

between the detected signal and at least one other detected signal in the iteration loop.

In a second aspect of the present invention, there are provided sample identification systems for ascertaining the identity of at least one component in a composition. This aspect of the invention couples a quantum dynamic discriminator with a data set to correlate the characteristics of the field pulses with the detected signals to indicate the presence or absence of one or more components in a composition. Here, the quantum dynamic discriminators include a tunable field pulse generator for generating a field pulse to manipulate at least one component of the composition and a detector for detecting at least one signal arising from at least one interaction between an observation field applied to the composition. A closed loop quantum controller for the tunable field pulse generator is also provided, the controller being adapted for iteratively changing the field pulse applied to the composition. In this aspect of the invention, an optimal identification algorithm typically operates to minimize the variance between the detected signal and at least one other detected signal in the iteration loop.

In a third aspect of the present invention, there are provided devices for ascertaining the molecular structure of a quantum system, e.g., a molecule. The devices include a quantum control/measurement component and an inversion component, which are linked together in a closed-loop architecture. In these devices, the closed-loop architecture includes a feedback signal that is determined from the quality of the emerging molecular structural parameters of the quantum system.

In a related aspect of the present invention, there are provided optimal identification (OI) devices for ascertaining the quantum Hamiltonian of a quantum system, e.g., a molecule. The OI devices include a quantum control/measurement component and an inversion component, which are linked together in a closed-loop architecture. In the OI devices, the closed-loop architecture includes a feedback signal that is determined from the quality of the emerging quantum Hamiltonian of the quantum system.

In a fourth aspect of the present invention, there are provided methods of ascertaining the molecular structure of a quantum system. These methods include manipulating a quantum system with at least one field pulse tuned with respect to at least one of frequency, phase, amplitude, timing and duration and detecting at least one signal arising from at least one interaction between an observation field and the manipulated quantum system. The detected signals are inverted to estimate at least one aspect of the molecular structure and an inversion error. These steps are performed iteratively, in which the tuning of at least one field pulse is in response to at least one aspect of the molecular structure and the inversion error of the manipulated quantum system.

In a related aspect of the present invention, there are provided methods of ascertaining the quantum Hamiltonian of a quantum system. These methods include manipulating a quantum system with at least one field pulse tuned with respect to at least one of frequency, phase, amplitude, timing and duration and detecting at least one signal arising from at least one interaction between an observation field and the manipulated quantum system. The detected signals are inverted to provide an estimated quantum Hamiltonian and an inversion error. These steps are performed iteratively, in which the tuning of at least one field pulse is in response to the estimated quantum Hamiltonian and the inversion error of the manipulated quantum system.

In a fifth aspect of the present invention, there are provided methods for identifying at least one component of a composition. These methods typically include manipulating the component in the composition with at least one field pulse and detecting at least one signal arising from at least one interaction between an observation field applied to the composition. Here, the detected signal is typically correlated to at least one of the following characteristics of the composition: the quantum dynamic state of the component, the Hamiltonian of the component, the molecular structure of the component, the amounts of two or more components, and the presence of an unknown component in the composition. In this aspect of the present invention, the method is carried out by repeating the manipulating and detecting steps under the control of a closed loop quantum controller, and correlating the tunable field pulse and the detected signal to the presence or absence of the component in the composition. In a related aspect of the invention are provided methods for determining the presence of a unknown component in a composition.

Related aspects of the invention also include irradiating molecular mixtures with a first laser pulse tuned with respect to at least one of frequency, phase, amplitude, timing and duration and detecting at least one interaction between the tuned laser pulse and the component. Here, the mixtures are irradiated with at least one further laser pulse tuned with respect to at least one of frequency, phase and amplitude, the further laser pulse being tuned differently from at least one of the prior laser pulses and detecting at least one interaction between the further laser pulse and the component. These steps are performed iteratively, in which the tuning of the further laser pulses are in response to a prior detecting step.

Another related aspect of the invention includes dynamically discriminating the quantum dynamic state of the at least one component from the quantum dynamic state of at least one other component in the composition.

In a sixth aspect of the present invention, there are provided mass spectrometers that include a sample chamber, a tunable field pulse generator for generating at least one field pulse, and an ion detector for detecting ions. The mass spectrometers of the present invention are configured such that at least one of the field pulses is directed upon a sample in the sample chamber, and at least one of the components of the sample being manipulated by at least one

of the field pulses. In this aspect of the invention, at least a portion of the manipulated sample is detected by the ion detector, and at least one tuned field pulse is altered in response to a signal arising from the detected ions, a signal arising from the manipulated sample, or any combination thereof.

In another aspect of the invention there are provided methods for controlling the peak intensity of a component of a sample in an analytical spectrometer, such as the mass peak in a mass spectrum obtained by a mass spectrometer. In this aspect of the invention, the methods include dynamically discriminating the component of the sample from at least one other component in the sample, and obtaining the analytical spectrum of the dynamically discriminated sample.

## BRIEF DESCRIPTION OF THE DRAWINGS

**FIG. 1.1** is a schematic of an optimal identification (OI) device described in Section 1, subsection II. The overall algorithm involves a combined, interactive, experimental/computational procedure which incorporates the components of both modem quantum control experiments (A) and global inversion algorithms (B) connected by a computer network. Optimal identification actively extracts a quantum system's Hamiltonian from measurements of its physical observables in a manner that minimizes the error in the extracted Hamiltonian.

**FIG. 1.2** compares the identification error using data corresponding to optimal fields determined by the OI device versus fields that were rejected by it in Example 1.1. In cases (A), (B), and (C) pulses with varying bandwidth restrictions were explored, and despite the restrictions, optimal identification [(A1), (B1) and (B2)] was always capable of extracting the Hamiltonian with minimal error. In the inset plots, the error in each extracted transition dipole moment element, $\Delta h_i \equiv \Delta\mu_{mn}$, is depicted by its shading (darker for larger error). Inversions performed with fields rejected by the optimal identification algorithm [(A2), (B2), and (C2)], do not permit high quality results. In all cases the optimal fields are simpler in structure.

**FIG. 1.3** summarizes the optimal and conventional identification results from Tables I-IV in Section 1. Plot (A) compares the average relative error in the extracted dipole moment matrix elements for control pulses with different bandwidth restrictions. Both the optimal and the conventional inversion errors decrease as the control pulse bandwidth is increased, however, the conventional identification contains nearly two orders of magnitude more error. Plot (B) demonstrates the ability of the optimal identification algorithm to resist the effects of increased error in the observables for inversion. As the data error is increased from 1% to 5%, the optimal identification quality decreases by only ~0.05%.

**FIG. 2.1** illustrates the components of an OI device operating under closed loop control to optimally identify a quantum systems' Hamiltonians. The decision on which new control experiments to perform in the loop is based on the goal of attaining the best quality Hamiltonian information.

**FIG. 2.2** illustrates the distribution of the inversion errors in extracting the dipole matrix elements of one embodiment described in Section 2. A single optimal inversion experiment far outperforms a standard inversion based on 500 random experiments

**FIG. 2.3** depicts the quality of the extracted matrix elements for $H_0$ and $\mu$ as a function of the number of the embodiment described in Section 2. The optimal inversion algorithm with only 32 data points is capable of identifying all 64 Hamiltonian matrix elements with errors at least an order of magnitude smaller than the laboratory error of 2% (shown as an arrow on the ordinate). In contrast, a standard non-optimal inversion with 200 data points produced an unacceptable inversion that magnified the laboratory errors.

**FIG. 2.4** illustrates the components of an OI device operating under closed loop control to optimally identify a quantum systems' molecular structure.

**FIG. 2.5** illustrates the components of a quantum dynamic discriminator operating under closed loop control.

**FIG. 2.6** illustrates the components of an analytical spectrometer which uses optimal dynamic discrimination techniques for controlling (e.g., enhancing) the peak intensity of at least one component of a composition (e.g., a sample).

**FIG. 3.1** is a graphic depiction of the quantum optimal dynamic discrimination mechanism described by equations 29 and 31 in Section 3. The signal for species $\xi$ is to be maximized while those of $\nu \neq \xi$ are to be minimized. The control process can be understood as the manipulation of the wave function component vectors $c^\nu(t)$. Initially at t = -T, the vectors $\{c^\nu(-T)\}$ for all species $\nu$ are nearly parallel to each other. At the end of the optimal control process (t = T), the'vector $c^\xi$ (T) is parallel to the vector D, while the background species have vectors $\{c^\nu (T)\}$ $(\nu \neq \xi)$ perpendicular to D. Here a single vector D is used for illustration, as $D^\nu \approx D$ for all similar chemical species v. A vector c is understood to have for both real $c^{Re}$ and imaginary $c^{Im}$ parts.

**FIG. 3.2** illustrates the time profile and power spectrum of the optimal pulse that maximizes $J^{A-B}$ in the first test of the systems with four active control states in Section 3.III.1). The power spectrum is in arbitrary units. The lines

as labeled correspond to specific identified transitions in A or B, but the corresponding transitions for the partner species also lie under the indicated power spectral bandwidths. This point is evident from the corresponding transition frequencies for A ($\omega_{01}^A$=1, $\omega_{23}^A$=2, $\omega_{12}^A$=3, $\omega_{02}^A$=4, $\omega_{13}^A$=5, and $\omega_{03}^A$=6) and for B ($\omega_{01}^B$=1.0033, $\omega_{23}^B$=2.0587, $\omega 12^B$=3.0027, $\omega_{02}^B$=4.006, $\omega_{13}^B$=5.0614, and $\omega_{03}^B$=6.0647). Discrimination of A and B is achieved by exploiting constructive and destructive dynamic interferences manifested through the subtle differences between the two molecules.

**FIG. 3.3** illustrates the evolution of the achieved maximum discrimination versus the generation of the GA for the cases A-B-C, B-A-C, and C-A-B in Section 3.III.2, where the signal of the first species is to be maximized over that of the others. Initially the discrimination is only moderate, and the maximum discrimination in each generation increases monotonically, because with a steady-state GA, the best control field from the previous generation is always retained.

**FIG. 4.1** is a schematic of a diatomic molecule interacting with an instantaneous, strong electric field. In this case the electric field strength is on the order of the field of the $H_2$ molecule 1 A from the nucleus. The process shown represents tunneling of the electron into the continuum.

**FIG. 4.2** is an illustration of one concept of closed-loop control. In this case there are four possible outcomes shown for the interaction of the laser pulse with the molecule. The desired distribution of products is first input into the algorithm at the upper left of the Figure. The program creates an initial laser pulse shape that interacts with the sample and yields a product distribution. Based on experimental measurement of the distribution (typically in combination with several other experiments) the algorithm creates a new pulse that yields a new distribution. The system loops iteratively until the desired level of control is exerted.

**FIG. 4.3** is a depiction of the interaction of intense laser radiation with a molecule. At the present time the wavelengths used for the interaction range between 10μm and 200 nm. The wavelengths employed in the examples reported in Section 4 range between 750 and 850 nm with intensities of $10^{13}$ to $10^{15}$ W $cm^{-2}$.

**FIG. 4.4** is a schematic of the structure-based model for representing molecules in intense fields. The presentation in the left-hand panel is the zero-range model where only the ionization potential of the system is employed in calculations. The presentation in the righthand panel represents the use of the electrostatic potential of the molecule in determining an appropriate one-dimensional rectangular well to represent the spatial extent of the system. To compare the models, an electric field of 1 V/Å is superimposed on each potential to reveal the barrier for tunnel ionization.

**FIG. 4.5** show schematics of a photoelectron spectrometer and a time-of-flight ion detector used for measuring the kinetic energy distribution and molecular weight of product ions.

**FIG. 4.6** is an illustration of the effect of various terms in the Hamiltonian for a charged particle in an oscillating electromagnetic field. The ionization potential of the system remains unchanged by the $A^2$ term as all states are raised equally. The A·P term lowers the ground state of the system by an amount equal to the $A^2$ term plus an additional amount due to the induced polarization of the system. The net result is an increase in the ionization potential by an amount approximately equal to the ponderomotive potential of the laser pulse.

**FIG. 4.7** is a schematic of a field-induced broadening resulting from a decreased lifetime of ground and excited states from ionization processes. Also shown is the field-induced shifting of the ground state to lower energy as a result of the intense laser pulse. Both of these processes contribute to an increase in the effective bandwidth in the excitation process.

**FIG. 4.8** depicts the strong field photoelectron spectrum for benzene shown in an energy axis that includes the photons necessary to induce ionization. The photoelectron spectrum was obtained using 2 x $10^{14}$ W $cm^{-2}$, 800 nm radiation of duration 80 fs. The quantum energy of the photons are shown to scale and indicate that 10-20 photons are available to drive excitation processes in the strong field excitation regime. In addition, uncertainty broadening of the pulse will also produce a distribution of allowed photon energies that approaches the photon energy when multiphoton processes of order 10 are approached.

**FIG. 4.9** depicts the retarding field measurement of H+ ion kinetic energy distributions arising from benzene, naphthalene, anthracene, and tetracene after excitation using 2 x $10^{14}$ W $cm^{-2}$, 800 nm radiation of duration 80 fs. The measurements reveal that as the characteristic length of the molecule increases, the cutoff energy increases monotonically.

**FIG. 4.10** depicts time-of arrival distributions for H+ ions for benzene, naphthalene, anthracene, and tetracene after excitation using 2 x $10^{14}$ W $cm^{-2}$, 800 nm radiation of duration 80 fs. The time of arrival distributions were measured by allowing the ions to drift in a field free zone of length 1 cm prior to extraction into the drift tube. In this experiment, earlier arrival times denote higher kinetic energies.

**FIG. 4.11** is a schematic of a closed-loop apparatus for tailoring the time-dependent laser fields to produce a desired reaction product. In this scheme an algorithm controls the spatial light modulator that produces a well-defined waveform. The tailored light pulse interacts with the molecular sample to produce a particular product distribution. The product distribution is rapidly measured using time-of-flight mass spectrometry and the results

are fed back into the control algorithm. The same closed-loop concept with other sources or detectors can be applied to control a broad variety of quantum phenomena.

**FIG. 4.12** is a schematic of an optical setup for generating a tuned (shaped) laser pulse. See text for description of the optical elements.

**FIG. 4.13** depicts the time-of-flight ion spectra of *p*-nitroaniline after excitation using pulses centered at 790 nm, of duration 80 fs. A: the pulse energy was varied from 0.60 to 0.10 mJ/pulse. B: the pulse duration was varied from 100 fs to 5 ps, the pulse energy was 0.60 mJ/pulse.

**FIG. 4.14** depicts the time-of-flight mass spectrum for acetone after excitation using 5 x $10^{13}$ W $cm^{-2}$, 800 nm radiation of duration 60 fs. The prominent peaks in the mass spectrum are marked.

**FIG. 4.15** (A) depicts the representative mass spectra of acetone (CH3-CO-CH3) for the initial $0^{th}$, $3^{rd}$, $10^{th}$, and $22^{nd}$ generations for the laboratory learning process when maximization for the CH3CO+ ion from acetone is specified. (B) $CH_3CO^+$ signal as a function of generation of the genetic algorithm. In (B) and the following plots of this type, the average signal for the members of the population at each generation is shown.

**FIG. 4.16** depicts the time-of-flight mass spectrum for trifluoroacetone ($CF_3$-CO-$CH_3$) after excitation using 5 x $10^{13}$ W $cm^{-2}$, 800 nm radiation of duration 60 fs. The prominent peaks in the mass spectrum are marked.

**FIG. 4.17** depicts the $CF_3$+ signal as a function of generation of the genetic algorithm. In this experiment the cost function was designed to simply optimize this signal.

**FIG. 4.18** depicts the time-of-flight mass spectrum for acetophenone ($C_6H_5$-CO-$CH_3$) after excitation using 5 x $10^{13}$ W $cm^{-2}$, 800 nm radiation of duration 60 fs. The prominent peaks in the mass spectrum are marked.

**FIG. 4.19** depicts the relative ion yield for phenylcarbonyl (dotted) and phenyl (dashed) and the $C_6H_5CO^+$/ $C_6H_5^+$ ratio (solid) as a function of generation when maximization of this ratio is the specified goal in the closed-loop experiment. The optimal masks resulting from the closed-loop process are shown in the inset

**FIG. 4.20** depicts the relative ion yield for phenylcarbonyl (dotted) and phenyl (dashed) and the $C_6H_5^+$ / $C_6H_5CO^+$ ratio (solid) as a function of generation when maximization of this ratio is specified. The optimal masks resulting from the closed-loop process are shown in the inset.

**FIG. 4.21** depicts the average signal for toluene, 92 amu, as a function of generation when maximization of the ion signal for this reaction product was specified for optimization. Corresponding electron-impact-ionization mass spectrometry revealed no evidence for toluene in the sample.

**FIG. 5.1** depicts a schematic representation of the dynamic detection of chemical agents. In the example shown here, three potential agents are detected in the sample. The discrimination system optimally identifies three separate laser pulse shapes, shown by the different electric fields as a function of time. Each of these pulses is specific to a certain agent (component of the composition) and reveals the presence of that agent in a series of sequential discrimination steps (see Figure 5.2).

**FIG. 5.2** depicts one embodiment of the present invention - a schematic of the operational components of a quantum dynamic discriminator of molecular agents. The device, e.g., machine, can be operated to maximize the signal from a particular component, e.g., agent, while minimizing the background from the other components present

While the invention is susceptible to various modifications and alternative forms, specific embodiments thereof have been shown by way of examples, in the drawings, and are herein described in detail. It should be understood, however, that the description herein of specific embodiments is not intended to limit the invention to the particular forms disclosed, but on the contrary, the invention is to cover all modifications, equivalents and alternatives falling within the spirit and scope of the invention as defined by the appended claims.

## DETAILED DESCRIPTION OF ILLUSTRATIVE EMBODIMENTS

In one embodiment of the present invention there is provided a quantum dynamic discriminator device, e.g, a machine, whose function is to discriminate chemical and biological agents (e.g., components, such as molecules) in the presence of complex background interference. Fig. 5.1, depicts a schematic of operational components of a quantum dynamic discriminator of molecular agents. The device can be operated to maximize the signal from a particular component, e.g., agent, while minimizing the background from the other components present. It typically enables the identification of agents with high sensitivity and selectivity by optimally enhancing the differences between one agent versus another by means of smart detectors recognizing in the unique dynamical behavior of the agents.

Referring to Figure 5.2., one embodiment of the device includes a combination of individual components and technologies from (a) ultrashort laser pulse generation, (b) pulse shaping, (c) sensitive detection, and (d) closed loop optimal control. Each component can be provided by currently available technology. The detection technology typically exploits tailored laser-driven molecular dynamics. A shaped laser pulse can be used to both excite a time-dependent molecular quantum mechanical wave packet and then specifically probe for a given agent using rapid (e.g. optical and/ or mass-spectroscopic) detection methods. Alternatively, a separate probe (observation) field can be applied.

In this embodiment, a closed loop learning algorithm based on quantum feedback control concepts typically slaves together the pulse shaping and detection units and achieves maximal discrimination of molecules in an environment with multiple complex agents. The quantum dynamic discriminator typically exploits the subtle features of the agent's dynamical driven temporal and spectral diversity in the detection process. This provides significant fidelity and efficiency of agent detection and discrimination.

The quantum dynamic discriminators of the present invention can be used to serve the increasing need to detect chemical and biological agents in the laboratory, field and in industrial settings, where the agents of interest may be found in the presence of similar masking materials. The quantum dynamic discriminators typically allow rapid, sensitive, and secure identification of agents confirmable by multiple detection schemes.

In one embodiment of the present invention, the optimal dynamic discriminators make use of a new paradigm drawing on the unique dynamical features of an molecular agent or a fingerprint of its presence. That is, although traditional spectral images of very similar agents may overlap each other, their coherent quantum dynamical behavior is rich due to structural, mass, and even subtle differences in their internal atomic interactions. Typically, the present inventions optimally discriminate one agent from another by effectively expanding the detection "dimension" to utilize the characteristic dynamical capabilities of each agent.

The present invention can be used in a great variety of applications requiring molecular agent discrimination and selectivity. For example, employing the invented machine in a femtosecond LIDAR (Light Detection And Ranging) apparatus for pollution monitoring will allow for the fast discrimination of atmospheric particles (e.g. aerosols) and pollutants. Besides such field applications the present invention enables the ready and unambiguous discrimination of mixtures of molecules, e.g. proteins, dyes or pharmaceutical agents under realistic laboratory or clinical conditions.

The dynamic discrimination of agents according to the present invention typically involves the use of shaped pulse (typically a laser pulse) field excitation coupled to highly sensitive optical, mass spectrometric, or other suitable detection techniques. In certain embodiments of the present invention, the discrimination methods are typically carried out using the time-dependent unique evolution of an agent's excited state quantum mechanical wave packet after photoexcitation using polychromatic radiation. The polychromatic pulse shaping and detection units are typically linked by a feedback learning-algorithm that enables the optimization of an agent's characteristic fingerprint and, hence, the discriminating detection of a particular agent within a mixture.

In certain embodiments, the present invention draws on the special dynamical characteristics of each molecule under quantum control to form a new detection technology capable of maximally discriminating amongst chemical and biological agents. It exploits the subtle features of the agent's (Hamiltonian) diversity in the detection method, as there is no greater source of discrimination than this. An effective multi-parameter agent detection capability is produced by drawing on this diversity combined with the high duty cycle for generating a very large number of discriminating laser pulses.

One embodiment of the method of discriminating agents draws on the unique dynamical features of any molecular agent. While traditional spectral images of very similar agents often overlap each other, their coherent quantum dynamical behavior is much richer due to structural, mass, and even subtle differences in their internal atomic interactions. Preferably, the present invention optimally discriminates one agent from another by effectively expanding the detection dimension to utilize the characteristic dynamical capabilities of each agent Usage of the term "optimally discriminates" as used throughout this specification is meant that a high degree of discrimination is achieved in keeping within the capabilities of having flexible multivariate controls. Preferably, the degree of discrimination that is achieved is as high as possible in keeping with the capabilities of having flexible multivariate controls.

One embodiment of the quantum dynamic discriminator is based on quantum feedback control concepts, as illustrated in Fig. 5.2. This embodiment is composed of four major components tied together in a loop: (a) a source for the generation of ultrashort laser pulses in a given wavelength region, (b) a device capable of rapidly shaping the generated laser pulses in a great variety of forms, (c) a detection system (e.g. optical or mass spectroscopic) that is sensitive to specific changes of a laser pulse-induced observable of the agent of interest, and (d) a controller (e.g., computer) with implemented learning algorithm to guide the closed loop process to discriminate at least one of the components of a composition from at least one other component in the composition. Typically, the controller is operated to achieve maximum discrimination. Here, the discriminator operates to maximize the detection signal from a particular agent at one or more times, while minimizing the background signal from the other components present. For this purpose, the learning algorithm typically employs the prior detected signals to specify the criteria for a new laser pulse for another refined excursion around the loop pulse.

Quantum dynamic discriminators for analyzing compositions are provided by the present invention. In one embodiment, the quantum dynamic discriminators include a tunable field pulse generator for generating a field pulse to manipulate at least one component of the composition and a detector for detecting at least one signal arising from at least one interaction arising from the application of an observation field to the composition.

Suitable tunable field pulse generators useful in the present invention are capable of generating a pulse field that varies in timing, frequency, wavelength, amplitude, phase and duration, or any combination thereof. Any type of

field that can be shaped with a suitable field generating device can be used in the present invention. Typically, the field is an electromagnetic field, although other types of fields can be used. Typically, the tunable field pulse generator comprises a pulsed laser. Suitable pulsed lasers described elsewhere in this specification are readily available to those skilled in the art and are described elsewhere in this specification. Suitable electromagnetic fields include laser light, typically having wavelengths of from 200 nanometers ("nm") to 10 microns ("µm), although other wavelengths may be used. Examples of other fields that can be tuned and formed into a pulse include microwaves, radio waves, UV radiation and X-rays.

The field pulse is typically controlled to manipulate the quantum dynamic state of at least one component in the composition. In certain embodiments, the field pulse is controlled to manipulate the amount of at least one component in the composition. The field pulse may also be controlled to manipulate the ionization state of at least one component in the composition. This is useful in certain embodiments that couple quantum dynamic discrimination with mass spectrometric techniques.

In another embodiment of the present invention, the field pulse is controlled to manipulate the detected signal for determining the molecular structure of at least one component in the composition. For example, the IR absorption spectra of a component being sensitive to molecular structure can be manipulated with the field pulse to determine the molecular structure of the component. This can be carried out, for example, by using a suitable IR light source as the observation field, detecting the IR absorption spectra of the component, and using closed loop quantum controller techniques to invert the IR absorption to a family of consistent molecular structures and to tune the field pulse generator in response thereto.

Suitable generators of the observation field include a continuous laser, a pulsed laser, a tunable pulsed laser, or any combination thereof. The observation field may also be generated by the tunable field pulse generator that generates the field pulse for manipulating at least one component in the composition. Alternatively, the observation field may be generated by a separate tunable field pulse generator. Suitable electromagnetic fields used by the observation field include laser light, typically having wavelengths of from 200 nanometers ("nm") to 10 microns ("µm), although other wavelengths may be used. Examples of other fields that can be tuned and formed into a pulse include microwaves, radio waves, UV radiation and X-rays. In the embodiments where the observation field is a tunable pulse, the shape of the observation field can be selected using a closed loop quantum controller employing an optimal identification algorithm. Optimal identification algorithms are described elsewhere in this specification.

In the quantum dynamic discriminators of the present the invention, the detected signals are typically correlated to at least one of the following characteristics of the composition: the quantum dynamic state of the component, the Hamiltonian of the component, the molecular structure of the component, the amounts of two or more components, and the presence of an unknown component of the composition. Unless indicated otherwise, the term "amount" as used herein with regard to composition, refers to both relative amounts and absolute amounts.

A closed loop quantum controller is also provided in this embodiment of the invention for the tunable field pulse generator. Suitable controllers are adapted with an optimal identification algorithm for iteratively changing the field pulse applied to the composition. Suitable closed loop quantum controllers will typically vary at least one of frequency, wavelength, amplitude, phase, timing, or duration, of the field pulse.

As described in further detail, the optimal identification algorithm operates to minimize the variance between the detected signal and at least one other detected signal in the iteration loop. In one embodiment, the optimal identification algorithm includes a genetic algorithm to control the tunable field pulse generator.

In one embodiment of the present invention, the closed loop quantum controller carries out the optimal identification algorithm by manipulating the constructive and destructive interferences of the field pulse and the quantum dynamic state of at least one component in the composition. In this regard, the signals from the targeted component are preferentially amplified over the signals from the other components in the composition. Here, the tunable field pulse typically induces at least one signal from at least one component in the composition while suppressing at least one signal from at least one other component in the composition.

The quantum dynamic discriminators of the present invention typically utilize an optimal identification algorithm. This algorithm operates to minimize the variance between the detected signal and at least one other detected signal in the iteration loop. Variance minimization is carried out by the controller to manipulate at least one of a variety of characteristics of the state of the composition, which include the quantum dynamic state of at least one component in the composition, the amount of at least one component in the composition, the ionization state of at least one component in the composition, the molecular structure of at least one component in the composition, and the amounts (e.g., the presence or absence of) one or more components in the composition. Detected signals arising from the interaction between the observation field and the composition can be of any type of signal that provides information to a detector Examples of suitable signals include an electric field, a magnetic field, an electromagnetic field, an optical field, an acoustical field, a particle, an ionized particle, a magnetized particle, or any combination thereof. The signals can be detected statically, dynamically, or both statically and dynamically. Typically, multiple signals are detected, and preferably averaged to improve the quality of the detected signals.

In certain embodiments of the present invention, the quantum dynamic discriminators may further include a sample chamber for holding the composition and exposing the composition to the tunable field pulse. A particularly useful embodiment is providing the sample chamber is in fluid communication with a mass spectrometer. In this embodiment, the quantum dynamic discriminators may be used for enhancing the peak position of a particular mass peak in the mass spectrum of a composition.

The quantum dynamic discriminators of the present invention can also be used for estimating the quantum Hamiltonian of the component from a plurality of detected signals. In this embodiment, a plurality of detected signals arise from interactions between the observation field and the component in the composition. As described in further detail elsewhere in this specification, the optimal identification algorithm determines the inversion error of the emerging quantum Hamiltonian of the component in the composition, and the optimal identification algorithm generates a feedback signal to the controller. The optimal identification algorithm assesses the quality of the emerging quantum Hamiltonian of the component to minimize the inversion error, thereby iteratively generating improved estimates of the Hamiltonian of a composition.

Sample identification systems for ascertaining the identity of at least one component in a composition are also provided by the present invention. This embodiment of the invention couples a quantum dynamic discriminator with a data set to correlate the characteristics of the field pulses with the detected signals to indicate the presence or absence of one or more components in a composition.

Any of the quantum dynamic discriminator as described herein may be used in the sample identification systems. In addition, suitable quantum dynamic discriminators include a tunable field pulse generator for generating a field pulse to manipulate at least one component of the composition and a detector for detecting at least one signal arising from at least one interaction between an observation field applied to the composition. A closed loop quantum controller for the tunable field pulse generator also provides for iteratively changing the field pulse applied to the composition.

In embodiment of the present invention, the sample identification system utilizes quantum dynamic discriminator enabled by an optimal identification algorithm that minimizes the variance between the detected signal and at least one other detected signal in the iteration loop. Variance minimization is typically carried out by the controller to manipulate at least one of a variety of characteristics of the state of the composition. The composition characteristics that may be manipulated include the quantum dynamic state of at least one component in the composition, the amount of at least one component in the composition, the ionization state of at least one component in the composition, the molecular structure of at least one component in the composition, and the amounts (e.g., the presence or absence of) one or more components in the composition.

Optimal identification (OI) devices for ascertaining the quantum Hamiltonian of a quantum system, e.g., a molecule, the molecular structure of a quantum system, and interactions between a quantum system's atoms, nuclei and electrons with an external field, are also provided in the present invention. The Hamiltonian of a quantum system is a measurement of the various interactions of internal fields within a quantum system, as well as a measurement of the interactions of external fields on a quantum system. Accordingly, knowledge about the Hamiltonian of a quantum system is useful for determining the quantum systems' structure (e.g., molecular structure).

Referring to Figure 1.1 and described in further detail elsewhere in this specification, the OI devices include a quantum control/measurement component and an inversion component, which are linked together in a closed-loop architecture. The quantum control/measurement component typically includes a control optimization manager, a tunable field pulse generator for generating field pulses to manipulate the quantum system, and a detector. The detector is used for detecting a plurality of signals arising from interactions between a plurality of observation pulses applied to the quantum system (i.e. a composition). The inversion component is used for inverting data received by the quantum control/measurement component to estimate the quantum Hamiltonian. The quantum control/measurement component and the inversion component are typically linked together in a closed-loop architecture. The closed-loop architecture typically includes a feedback signal that is determined from the quality of the emerging quantum Hamiltonian of the quantum system.

Methods of ascertaining the quantum Hamiltonian of a quantum system is provided according to the present invention. The Hamiltonian determination methods typically include manipulating a quantum system with at least one field pulse tuned with respect to at least one of frequency, phase, amplitude, timing and duration and detecting at least one signal arising from at least one interaction between an observation field applied to the manipulated quantum system. As described in further detail elsewhere in this specification, the detected signals are inverted to provide an estimated quantum Hamiltonian and an inversion error. These steps are typically performed iteratively, in which the tuning of at least one field pulse is in response to the estimated quantum Hamiltonian and the inversion error of the manipulated quantum system.

Methods are also provided by the present invention for identifying at least one component of a composition. These methods typically include manipulating at least one component in a composition with at least one field pulse and detecting at least one signal arising from at least one interaction between an observation field applied to the

composition. Here, the detected signal is typically correlated to at least one of the following characteristics of the composition: the quantum dynamic state of the component, the Hamiltonian of the component, the molecular structure of the component, the amounts of two or more components, and the presence of an unknown component in the composition.

The method is carried out by repeating the manipulating and detecting steps under the control of a closed loop quantum controller, and correlating the tunable field pulse and the detected signal to the presence or absence of the component in the composition. Closed loop quantum controllers typically utilize an optimal identification algorithm. Suitable algorithms operate to minimize the variance between the detected signal and at least one other detected signal in the iteration loop. Variance minimization is carried out by the controller to manipulate at least one of a variety of characteristics of the state of the composition, which include the quantum dynamic state of at least one component in the composition, the amount of at least one component in the composition, the ionization state of at least one component in the composition, the molecular structure of at least one component in the composition, and the amounts (e.g., the presence or absence of) one or more components in the composition. In one embodiment, the manipulating step typically provides for constructive and destructive wave interferences of the quantum dynamic states of the component in the composition.

Detected signals arising from the interaction between the observation field and the composition can be of any type of signal that provides information to a detector. Examples of suitable signals include an electric field, a magnetic field, an electromagnetic field, an optical field, an acoustical field, a particle, an ionized particle, a magnetized particle, or any combination thereof. The signals can be detected statically, dynamically, or both statically and dynamically. Typically, multiple signals are detected, and preferably averaged to improve the quality of the detected signals.

The methods described herein are useful for identifying the components of compositions composed of molecules, especially where the molecules have similar optical absorption spectra. By similar optical absorption spectra is meant that essentially no optical absorption peaks are discernible in an optical spectra that could discriminate the similar molecules. In applying these methods to molecules having similar optical absorption spectra the field pulse comprises electromagnetic radiation, typically a laser light pulse which is tunable with respect at least one of frequency, phase, amplitude, timing and duration.

In the embodiments where it is desirable to manipulate the quantum dynamic state of the component using a tunable electromagnetic pulse, it is desirable that the wavepacket motion of the targeted component gives rise to at least one discriminating signal. This is described in further detail elsewhere in the specification. Typically, the discriminating signal includes an electric field, a magnetic field, an electromagnetic field, an optical field, an acoustical field, a particle, an ionized particle, a magnetized particle, or any combination thereof, and is correlated to a component in the composition. Here, the process of correlating the discriminating signal to a component in the composition can be carried out deductively or inductively for component identification. In this regard, the method for identifying at least one component of a composition can also be used for determining the presence of a unknown component in a composition. In this embodiment, the method detects a signal that is not correlated to any *a priori* known signal, thereby identifying the presence of an unknown agent.

In another embodiment, the method for identifying at least one component of a composition can further include the steps of detecting at least one discriminating signal and applying to the composition at least one additional tunable electromagnetic pulse. In this embodiment, the additional tunable electromagnetic pulse is typically tuned under the control of a closed loop quantum controller in response to at least one prior discriminating signal. Correlating the tunable electromagnetic pulse and the discriminating signal is then carried out to ascertain the presence or absence of the at least one component in the composition.

Related embodiments of the present method also include irradiating molecular mixtures with a first laser pulse tuned with respect to at least one of frequency, phase, amplitude, timing and duration and detecting at least one interaction between the tuned laser pulse and the component. Here, the mixtures can be irradiated with at least one further laser pulse tuned with respect to at least one of frequency, phase and amplitude, the further laser pulse being tuned differently from at least one of the prior laser pulses and detecting at least one interaction between the further laser pulse and the component. These steps can be performed iteratively, in which the tuning of the further laser pulses are in response to a prior detecting step.

Mass spectrometers are also provide by the present invention. The mass spectrometers include a sample chamber, a tunable field pulse generator for generating at least one field pulse, and an ion detector for detecting ions.

The mass spectrometers of the present invention are typically configured such that at least one of the field pulses is directed upon a sample in the sample chamber, and at least one of the components of the sample being manipulated by at least one of the field pulses.

In one embodiment, at least a portion of the manipulated sample is detected by the ion detector, and at least one tuned field pulse is altered in response to a signal arising from the detected ions, a signal arising from the manipulated sample, or any combination thereof. In the mass spectrometers of the present invention, the detection and alteration of tuning steps are typically performed iteratively, which is typically carried out with a computer. Preferably,

the tunable field pulse induces at least one signal from at least one component in the composition while suppressing at least one signal from at least one other component in the composition.

The mass spectrometer is capable of controlling the field pulse to manipulate a variety of characteristic states of a composition, including the quantum dynamic state of at least one component in the composition, the amount of at least one component in the composition, the ionization state of at least one component in the composition, the molecular structure of at least one component in the composition, the amounts of one component over another in the composition, and any combination thereof. Typically, a closed loop quantum controller is provide that is capable of manipulating the constructive and destructive interferences of the field pulse and the quantum dynamic state of at least one component in the composition.

In one embodiment, mass spectrometers are provided that further contain a detector for detecting at least one signal arising from an interaction between the field pulse or an observation field applied to the sample and at least one component of the sample, and a closed loop quantum controller for the tunable field pulse generator. A variety of interactions can be detected, a number of which typically include optical absorbance, optical emission, nuclear spin state, molecular spin state, and ionic fragmentation of the component.

In this embodiment, the controller can be adapted for iteratively changing the field pulse applied to the composition in response to the signal arising from the interaction. Typically, the closed loop quantum controller includes a genetic algorithm to control the tunable field pulse generator, which is preferably driven to minimize the variance in the detected signals during an iteration loop. The tuning of the closed loop quantum controller typically varies at least one of frequency, wavelength, amplitude, phase, timing, or duration, of the electromagnetic pulse.

The observation field is typically generated by a generator which can be the same as or different than the tunable field pulse generator that provides the field pulse for manipulating the component. In the embodiments where the observation field is tunable, the shape of the observation field is typically selected using a closed loop quantum controller employing an optimal identification algorithm.

In the mass spectrometers of the present invention, the tunable field pulse generator typically generates at least one electromagnetic pulse that is capable of tuning the frequency, wavelength, amplitude; phase, timing, duration, or any combination thereof, of the electromagnetic pulse. Preferably, the tunable field pulse generator comprises a pulsed laser, which can also be used for generating the observation field. A different source may also be provide for the observation field, in which case the generator of the observation field is typically a continuous laser, a pulsed laser, a tunable pulsed laser, or any combination thereof.

Suitable detected signal include an electric field, a magnetic field, an electromagnetic field, an optical field, an acoustical field, a particle, an ionized particle, a magnetized particle, or any combination thereof. The signal is typically detected statically, dynamically, or both, and multiple signals can be detected and averaged for improving data quality.

In another embodiment of the invention there are provided methods for controlling the peak intensity of a component of a sample in an analytical spectrometer, such as the mass peak in a mass spectrum obtained by a mass spectrometer. In this embodiment of the invention, the methods include dynamically discriminating the component of the sample from at least one other component in the sample, and obtaining the analytical spectrum of the dynamically discriminated sample.

In this embodiment, any analytical spectrometer can be adapted with the dynamic discrimination methods described throughout this specification. Typical analytical spectrometers include the following: a nuclear magnetic resonance spectrometer, an optical spectrometer, a photoacoustic spectrometer, and preferably a mass spectrometer. Combinations of various other analytical spectrometers, including the aforementioned spectrometers, are also envisioned to be adaptable with the dynamic discrimination methods of the present inventions.

In these methods, the dynamically discriminating step includes manipulating the component in the sample with at least one field pulse, and detecting at least one signal arising from at least one interaction between the field pulse or an observation field applied to the sample and the component of the sample. These manipulating and detecting steps are typically repeated under the control of a closed loop controller to control the peak intensity of the component in the spectrum. Such controllers are typically under the operative control with a computer, that preferably uses a feedback learning algorithm, such as a genetic algorithm, to control the tuning.

When manipulating the quantum dynamic states, the manipulating step typically includes constructive and destructive wave interferences of the quantum dynamic states of the component in the composition. This can be typically carried out with a field pulse that includes electromagnetic radiation, which is preferably laser light that is tunable with respect to at least one of frequency, phase, amplitude, timing and duration.

In the methods for controlling the peak intensity of a component of a sample in an analytical spectrometer, the detected signal typically have a type including an electric field, a magnetic field, an electromagnetic field, an optical field, an acoustical field, a particle, an ionized particle, a magnetized particle, or any combination thereof.

In the preferred embodiments that control the mass peak spectrum, the method will typically include measuring the mass/charge ratio of at least one component of the composition with a mass spectrometer.

The present methods are particularly useful for determining the presence of a suspicious, unknown, agent in a sample. These methods can be carried out by optimizing the discriminator on a peak that is otherwise unidentifiable compared to a set of known peaks that are expected for the sample. Thus, in a related embodiment, these methods for identifying components in a sample are preferably carried out with the assistance of a data set for comparing peak positions measured from samples to the peak positions of know components. Accordingly, the information derived from the detection steps can be further stored in at least one further data set.
The subject matter in the following sections numbered 1, 2, 3, and 4 provide further details of various embodiments of the present invention.

## Section 1

In this section, the symbols, equation numbers, table numbers, and reference numbers pertain to this section and not the other sections discussed herein. Usage of mathematical variables and equations thereof in this section pertain to this section and may not pertain to the other sections which follow. The figure numbers denoted "x" in this section refer to Figures numbered as "1.x", e.g., reference to "figure 1" in this section refers to Figure 1.1.
The embodiments presented in this section introduce optimal identification (OI), a collaborative laboratory/computational algorithm for extracting various characterization information of compositions from experimental data specifically sought to minimize the measured variance in the data. The characterization information that can be extracted include the following: quantum Hamiltonians and the quantum dynamic states by minimizing the variance in the inversion error; molecular structure by minimizing the variance in the uncertainty of the measured molecular structure determination; and the component distribution by minimizing the variance in the measured component distribution.
In one embodiment, OI incorporates the components of quantum control and inversion by combining ultrafast pulse shaping technology and high throughput experiments with global inversion techniques to actively identify quantum Hamiltonians from tailored observations. These techniques can also be applied to actively identify the quantum dynamic state, molecular structure, and component distribution in a wide variety of compositions. The OI concept rests on the general notion that optimal data can be measured under the influence of suitable controls to minimize uncertainty in the measured date, e.g., extracted Hamiltonian information, despite data limitations such as finite resolution and noise. As an illustration of the operating principles of OI, the transition dipole moments of a multi-level quantum Hamiltonian were extracted from simulated population transfer experiments. As is shown below, the OI algorithm reveals a simple optimal experiment that determined the Hamiltonian matrix elements to an accuracy two orders of magnitude better than obtained from inverting 500 random data sets. The optimal and nonlinear nature of the algorithm are shown to be capable of reliably identifying the Hamiltonian even when there were more variables than observations. Furthermore, the optimal experiment acts as a tailored filter to prevent the laboratory noise from significantly propagating into the extracted Hamiltonian.

### I. INTRODUCTION

A general goal in chemistry and physics is to quantitatively predict quantum dynamics from quantitative knowledge of the molecular Hamiltonian. Despite advances in computational quantum chemistry, laboratory data continues to provide a valuable source of this information. Extracting components of the Hamiltonian from measured observables has motivated an ongoing effort to develop inversion procedures aimed at specific types of laboratory data. However, for any given experiment, setting the instrument's "knobs" to provide the best measurement conditions for the purpose of inversion has often been an *ad* hoc endeavor. For experiments where the knobs are simple, intuitive approaches may be sufficient. But, many modem experiments with large numbers of knobs, such as laser pulse shapers, cannot be effectively operated using intuition alone. Here, we introduce a procedure for obtaining optimal knowledge of a quantum Hamiltonian from algorithmically designed measurements.
In the present context, *identification* refers to the process of inverting laboratory data to reveal a system's Hamiltonian (often the potential), while *control* implies driving the system toward a specified objective using tailored electromagnetic fields. At first, identification and control appear to be different and the subjects have developed more-or-less independently. However, upon closer inspection, both draw on the same underlying process; they employ inversion procedures to search for an unknown portion of the Hamiltonian. For identification, the goal is to extract a potential that adequately reproduces the laboratory data, while for control, it is to find an external field that produces a specified physical objective. The two are intimately linked by their dependence on optimization to obtain the best results.
Hamiltonian identification has typically been approached using a number of specialized inversion tools. Examples include the Rydberg-Klein-Rees (RKR) method[1-3] for diatomic rovibrational spectra, the exponential distorted wave (EDW) approach for approximately inverting inelastic scattering cross sections[4], fully quantum procedures[5] for elastic scattering, the self-consistent-field method for inverting triatomic rovibrational lines[6, 7], *etc.* More recently,

inverse perturbation analysis methods[8-10] coupled with Tikhonov[11-15] regularization have provided a means for treating various observables in a fully quantum manner without resort to constrained potential forms or parameter fitting. Currently, fully global inversion algorithms utilizing neural networks and genetic algorithms, that do not linearize the relationship between the Hamiltonian and observable, are becoming available[16-23]. The most recent methods are capable of identifying the full family of potentials[20] consistent with the data.

Hamiltonian identification via inversion has played an important role in many molecular systems despite its shortcoming of being subservient to the *available* laboratory measurements. Data sets, either because of range, resolution, precision, *etc.,* contain varying degrees of information about the system being investigated. A better Hamiltonian identification is possible when the laboratory data contains more information about the system; however, it is rarely clear, even when observables are measured for the explicit purpose of inversion, which experiments *optimally* specify the Hamiltonian. Without this guidance, quantum system identification has sufficed with existing data and the implicit admission that a better quality inversion might be possible if the laboratory observations were performed in a different, albeit unknown, manner.

Quantum control has recently seen increasing experimental success in manipulating systems to obtain intricate and diverse objectives. The most promising, generally applicable approach for controlling quantum dynamics phenomena utilize shaped electromagnetic fields[24-27] and laboratory closed-loop learning[28-38]. Closed-loop control algorithms[31-35, 38] incorporate robust search procedures where the measured outcomes from previously tested pulses guide the selection of new trial fields as part of a learning process that capitalizes on the extremely high throughput of the laboratory experiments. Closed-loop learning commonly employs genetic algorithms[39, 40] (GAs) to minimize the difference between the observed outcome and the desired target. GAs permit global searches over the space of accessible laser fields, simultaneously propagate a large control solution family, remain convergent despite diverse algorithmic starting conditions, and are capable of providing high yields for well posed objectives.

Quantum optimal identification (OI) is proposed as a marriage between control and identification that aims to systematically reveal the best possible data for determining a particular Hamiltonian. OI incorporates the components of learning control, ultra-fast pulse shaping and high duty-cycle experiments with a global inversion algorithm to extract the full set of Hamiltonians consistent with the laboratory data. All of the components operate in an overall closed-loop fashion to maximize the quality of the extracted Hamiltonian. In this regard, OI should provide the best possible knowledge of the system Hamiltonian, within the laboratory capabilities, because it seeks the *optimal* data set for inversion.

OI is typically laboratory control linked to computational quantum inversion in a closed-loop fashion. In the laboratory, the quantum system is subjected to a shaped laser pulse, that creates an evolving wavepacket, followed by a measurement of a set of physical observables that are sensitive to the quantum dynamics. Measurements of the time-evolved observables are then inverted by computationally propagating wavepackets governed by trial Hamiltonians (including the corresponding control field) until finding one or more Hamiltonians that reproduce the data. OI is overseen by a laser control field optimization that minimizes the error in the inverted Hamiltonian by tailoring the shape of the electromagnetic field. For each trial pulse, a separate inversion is performed and the quality of the identified Hamiltonian is assessed. The resulting quality assessment is used to guide the selection of new pulses until identifying the best possible Hamiltonian.

The process described above produces an OI "machine" that extends the closed-loop concept [29] currently used for controlling quantum phenomena[28]. However, there is a subtle and important distinction between closed-loop control and OI. In control, the search algorithm guiding the sequence of trial fields has a straightforward objective. It operates to drive the laboratory observation, e.g., the expectation value of a chosen observable, toward a pre-specified target. The quality of each trial field is easily assessed by comparing its resulting observable to the target value. In contrast, closed loop OI does not operate under such explicit guidance because the Hamiltonian (i.e., typically the potential) to be identified is unknown at the start of the process. In OI, the optimal control fields must be chosen without a precise target, driven only by the assessed quality of the emerging Hamiltonian. This objective implicitly requires finding robust fields such that laboratory data errors minimally contaminate the inversion, yet allow the data to maximally reveal the details of the quantum Hamiltonian. Thus, the optimal measurements should be simultaneously sensitive to the Hamiltonian, but insensitive to laboratory noise. OI attempts to resolve these seemingly contradictory requirements.

Unlike previous inversion procedures, OI is an interactive interrogation of the system's Hamiltonian and dynamics accomplished with tailored electromagnetic fields that best unveil the system. Of course, probing complex molecular Hamiltonians, does not come without both experimental and computational effort. Compared to passive inversions, OI stands to provide superior information about quantum systems. As such, the process can be expensive since a collection of measurements and individual inversions must be performed as part of a hybrid experimental/computational process. In practice, OI can be massively parallelized providing practical machinery for aggressively studying molecular Hamiltonians.

Specific details on the construction of an OI machine, including a description of both the control and inversion components, as well as a reliable means for assessing the quality of the recovered Hamiltonian, are presented in Sec.

II. Two illustrations simulating OI operation are provided in Sec. III to demonstrate the concept's feasibility and operation. Finally, Sec.IV discusses extensions of the OI concept to other applications.

II. OPTIMAL IDENTIFICATION

The proposed laboratory OI machine concept incorporates the operating components of both quantum control and global inversion, linked together in a closed-loop architecture. In its design, OI shares some structural features with many emerging quantum control experimental procedures; however, in OI, the feedback signal is the quality of the emerging Hamiltonian, not a pre-specified target observable. During the closed-loop operation, data measured for using a trial laser pulse shape is sent to the inversion component to identify the system's Hamiltonian, along with a measure of its uncertainty. The inversion error, or the uncertainty in the recovered Hamiltonian, provides the feedback signal for the overseeing control experiment. The objective is to minimize the inversion error over the space of accessible pulse shapes and measurement capabilities to identify the Hamiltonian with as little uncertainty as possible.

A successful synthesis of these concepts requires considerable algorithmic attention, not only because the components are of a different nature (i.e., experimental and computational), but because the two can operate on vastly different time-scales. Performing experiments, including constructing the pulse-shaped field, manipulating the quantum system, and performing the dynamics measurements (possibly multiple times for the purpose of signal averaging) is generally faster than the inversion step. Although parallelization of the computationally expensive inversion stage is not required, it is beneficial because it helps the OI components to operate in better synchronization. Ideally, no individual component of the OI machine would produce an operational bottleneck. Parallelization, particularly by network distribution, can offer significant run-time relief for the computational inversion stage. To facilitate efficient computation, the optimal inversion algorithm developed here adheres to the client-server model[41].

Section Sec. IIA describes the overall layout of the proposed OI machine, while Sections IIB and IIC describe the control and inversion components.

A. Schematic of an Optimal Identification Machine

Implementing an OI algorithm requires a communication architecture that links the laboratory control and computational inversion components together. The overseeing component is the control optimization manager, Fig. 1 (Ai), which is responsible for automating the entire optimal inversion by performing the following tasks:

1. Instructing the pulse-shaper to produce the field and receiving the subsequent measurements of the induced dynamics phenomena
2. Submitting the data for inversion and receiving the returned family of identified Hamiltonians and its quality metric
3. Selecting new trial fields on the basis of the identification quality and closing the loop by returning to step 1
4. Deducing when to exit the closed-loop process (Steps 1-3) based on convergence and acceptable Hamiltonian quality

B. The Control Component

The first part of the OI operation involves a control/measurement component, Fig. 1 (A) that utilizes the familiar closed-loop design found in current quantum control procedures. The learning algorithm ($A_1$) is attached to the pulse-shaper ($A_2$), which can be any of a variety of types, e.g., deformable mirrors, liquid crystal masks, acousto-optical modulators, etc. The shaped pulse is then used to manipulate the quantum system ($A_3$), which was either previously state prepared or specified as a thermal distribution. The incoming pulse triggers an observation ($A_4$) of the system after it has evolved under the influence of the electromagnetic field. Any synchronization, if needed, between $A_3$ and $A_4$, as well as the type of measurement performed is determined by the system being studied. However, in general, the observation must measure observables that are sensitive to the time-evolution.

The electromagnetic field optimization (Ai) is accomplished by expressing the pulse in terms of a discrete collection of variables, called control "knobs", $\{c_1, ..., c_{Nc}\}$,

$$E(t) \rightarrow E(t\,; c_1, c_2,..., c_{Nc}) \tag{1}$$

and the space of accessible fields is defined by varying each $c_i$ over its laboratory range, $c_t^{(min)} \le c_i \le c_t^{(max)}$. For example, the control variables might represent the voltages applied to pixels in a liquid crystal mask, the offsets used in a spatially deformable mirror, the waveform used to drive an acousto-optical modulator, the parameters characterizing

the field phase and/or amplitude, *etc*.

It is physically beneficial for the optimal field (*i.e.*, for the control variables, c) to reflect the system's frequency or time domain characteristics. The inversion stage of OI must know the actual field used to influence the system so that it can properly compare the computed and observed propagation results. Characterizing the field may be accomplished using post-shot field analysis techniques, such as frequency-resolved optical gating (FROG) [42], or similar algorithms. However, a high quality set of knob → field calibrations could be performed prior to the actual OI operation to provide the field's frequency or time domain composition without real-time pulse characterization.

For each trial pulse, $E_k(t;\, c_k)$, $k$ = 1,2,..., investigated by the search algorithm, the pulse-shaper produces the requested field using the associated control knob settings, $c_k$. After the quantum system's ($A_3$) wavepacket has evolved under the influence of the field, $E_k(t)$, a suitable measurement, $\Phi_k^{(lab)}$, ($A_4$) is performed on the system and the data is returned to the overseeing control optimization manager to be submitted for inversion (c.f., Sec. IIC, below). Naturally, in a practical laboratory execution of OI, it is necessary to perform replicate observations using the same trial field to reduce noise by signal averaging. In this case, $\Phi_k^{(lab)}$ represents the average value of the observable, where the appropriate number of replicate measurements depends on factors including noise from the laser and the pulse-shaper, detector resolution and sensitivity, environmental conditions, etc. Since the inversion quality may be adversely affected by the data error, it is typical to obtain high precision by performing many averages. As used herein, "good inversion quality" means that the inversion error is low. A typical criterion for reliable inversion is to have available good knowledge of the errors in the data. Given the high duty cycle of current laser control experiments, which are many times faster than the inversions, it is possible to perform a large number of replicate measurements and accurately characterize the data error.

After inverting the data from the $k^{th}$, trial pulse, $E_k(t;c_k)$, the uncertainty in the extracted Hamiltonian, $\Delta H^*[E_k(t;\, c_k)]$ (defined in Sec. IIC3 below), is returned to the overseeing controller and used to guide the selection of future trial fields. The objective is to minimize $\Delta H^*$ over the space of accessible fields; however, when the resulting optimal pulses are to be physically interpreted, it is also desirable to remove extraneous field structure[43] by minimizing the control cost function,

$$\mathcal{J}_c[E(t;\mathbf{c})] = \Delta\mathbf{H}^*[E(t;\mathbf{c})] + \beta \sum_{i=1}^{N_c} \left| \frac{c_i - c_i^{(min)}}{c_i^{(max)} - c_i^{(min)}} \right| \qquad (2)$$

where the first term reduces inversion error and the second removes extraneous field components relative to their minimum value. β is an algorithmic parameter that balances the relative importance of inversion quality versus simplifying the field. The value of β must be. carefully chosen, which is most conveniently accomplished by adaptively ramping its value during the GA evolution. β should be as large as possible without compromising inversion quality[43]. In Eq. (2), the effective dynamic range of β is confined by normalizing the control variables according to their laboratory range, $c_i^{(min)} \leq c_i \leq c_i^{(max)}$.

C. The Inversion Component

The inversion component, Fig. 1 (B), is responsible for extracting the Hamiltonian from the data measured in Fig. 1 ($A_2$-$A_4$). Due to the availability of only finite, error-contaminated experimental data, there is generally a large family of different Hamiltonians that all reproduce the data to within its precision. A larger and more diverse solution family corresponds to greater inversion uncertainty, *i.e.,* the data admits a broader distribution with a greater number of distinct Hamiltonians. In a good inversion the solution family contains only a narrow distribution of similar Hamiltonians that all reproduce the data. Under less favorable conditions, the inversion algorithm might fail to find any Hamiltonians that are consistent with the data, perhaps because of a systematic error in the laboratory data. In this case, the inversion quality is measured by the discrepancy between the observed and computed data sets. A sophisticated OI algorithm with global search capabilities is capable of handling the possibilities of inconsistent data.

The OI algorithm seeks laser control pulses which minimize the diversity of the identified Hamiltonian family. In order to assess the quality of each trial inversion, the full family of Hamiltonians consistent with the observed data, must be obtained. Unfortunately, most traditional inversion procedures only produce a single solution because they utilize linearization and local *(e.g.,* gradient based) search techniques. However, a recently introduced class of global inversion algorithms [20-22], as well as others that provide nonlinear searches over the space of appropriate Hamiltonians[16-19], are capable of finding the full family of inverse solutions.

*1. Global Inversions*

At the disposal of the OI manager in Fig. 1(A) is a collection of client computers ($B_1$, $B_2$, $B_3$,...), for performing inversions. When the control manager receives data, it queries the list of clients to find a networked computer that is available for inverting the new data set. If none are idle, then the control manager may temporarily suspend the laboratory components while waiting for an inversion computer to signal its availability; without the interactive feedback provided by the inversion results, the pulse optimization can not proceed. It is therefore desirable that each inversion be performed as quickly as possible. The client polling process, performed by the supervising control manager, should be network-aware, *i.e.,* maintain statistics about its client machines so that the fastest computers are preferentially dispatched at all times. This is in accord with the basic principles of distributed network-parallelized computing. The precise nature of the manager algorithm depends on the efficiency of the inversion algorithms, and special high-speed techniques[20, 22, 23] honed for this special purpose are being developed (*c.f.,* comments in Sec. IV).

The global inversion of quantum mechanical observables may be accomplished by repeatedly calculating the observable from trial Hamiltonians as part of an optimization process. Identifying the family of potentials that reproduce the laboratory data set, $\Phi_k^{(lab)}$, for the $k^{th}$ trial field, requires minimizing the difference between the error-contaminated data and the calculated observable, $\Phi_k[H;E_k(t)]$, over Hamiltonian space. Generally each data set has $M$ individual measuremeiits,$\Phi_k^{(lav)} = \{\Phi_{k,l}^{(lab)}, ..., \Phi_{k,M}^{(lab)}\}$, with associated errors, $\{\varepsilon_{k,1}^{(lab)}, ..., \varepsilon_{k,M}^{(lab)}\}$. For a trial Hamiltonian to be acceptable, its computed observables must not violate any of the data members' confidence intervals.

The best means of treating experimental error depends on the level of detail available about the data. Ideally, an error distribution function, $p[(\Phi_k^{(lab)}]$, would be available and the acceptability of a trial Hamiltonian would be judged based on the probability of its resulting observables[22]. Typically, only limited information about the nature of the error distribution is available as estimated error bars, $\varepsilon_k^{(ab)}$, without any qualification of how the error is distributed (i.e., Gaussian, or otherwise) are reported. The precise nature of the data error distribution can produce subtle differences in the interpretation of the final Hamiltonian family and some aspects of the inversion algorithm operations. For the illustrations here, the laboratory uncertainty will be addressed by adopting a comparison function that ranks the trial data by treating $\pm_{\varepsilon k}^{(lab)}$ as hard bounds with a uniform distribution between the limits, $\Phi_k^{(lab)}\pm\varepsilon_k^{(lab)}$. The analysis below is specific to a uniform error distribution with hard bounds. Examples of inversions using other metrics can be found elsewhere[22].

In practice, inversion is performed by adopting a discrete set of variables, $h = \{h_1,..., h_{N_h}\}$ to distinguish one trial Hamiltonian from another. As a control field is utilized in the OI procedure, it is essential that the Hamiltonian family have the freedom to be consistent with the radiative interaction being utilized. There are many possible ways to define the Hamiltonian variables, and the best representation must be selected to suit the quantum system being inverted. In general, a sufficiently flexible and accurate description of Hamiltonian space requires a large number of variables, $N_h >> 1$. For example, the $\{h_i\}$ might be matrix elements, such as $H_{nm}$ in a chosen basis, interpolation points or parameters used to define a potential energy surface, transition dipole moments, *etc.* However, choosing suitable parameters with sufficient flexibility normally excludes the use of simple parameter fitting.

With the Hamiltonian variables, hi, defined, inversion is accomplished by minimizing a cost function that suitably treats experimental error and normalizes the data members,

$$J_{inv}(h;\Phi\frac{(lab)}{k} = C(h;\Phi\frac{(lab)}{k}) + \hat{K}h \qquad (3)$$

where C is a comparison function given by,

$$C(\mathbf{h};\Phi_k^{(lab)}) = \frac{1}{M}\sum_{i=1}^{M}\begin{cases} 0 & : \ |\Phi_{k,i}^{(lab)} - \Phi_{k,i}(\mathbf{h})| \le \varepsilon_{k,i}^{(lab)} \\ \left\|\frac{\Phi_{k,i}^{(lab)} - \Phi_{k,i}(\mathbf{h})}{\Phi_{k,i}^{(lab)}}\right\|^2 & : \ |\Phi_{k,i}^{(lab)} - \Phi_{k,i}(\mathbf{h})| > \varepsilon_{k,i}^{(lab)} \end{cases} \qquad (4)$$

for the observables and data errors associated with the $k^{th}$ trial control pulse $E_k(t)$. $\Phi_{k,i}(h)$ is the observable's computed value for the trial Hamiltonian, $H$, under the influence of the external field, $E_k(t)$, and $M$ is the number of distinct measurements in the data set. Optionally, a regularization operator, $K$, acting on the Hamiltonian, h, can be used to incorporate *a priori* behavior, such as smoothness in potential energy functions, proper asymptotic behavior, the correct symmetry, *etc.*, into the inverted Hamiltonian[8, 12, 20, 22].

Identifying the full family of inverse solutions consistent with the data requires an optimization algorithm that is capable of simultaneously finding many minima in Eq. (3). Again, GAs are an ideal choice because they propagate a solution family, are insensitive to initialization, converge under practical operating conditions, and provide global searches over nonlinear functional landscapes. GAs offer excellent exploration capabilities and can identify many distinct extrema. In the search, a population of $N_p$ (an algorithmic parameter) trial Hamiltonians are evolved until some acceptable portion of the population, reproduces the data.

*2. Recovered Hamiltonian Uncertainty*

The output of the inversion optimization is a set of $N_s$ identified Hamiltonians, $\{h_i^*,...,h_{N_s}^*\}$. Each optimized member, $h_s^*$, describes a Hamiltonian that reproduces the measured observable, $\Phi_k^{(lab)}$, and the set provides a discrete estimation of the full solution family, H*. The upper and lower bounds of each inverted variable defines the family,

$$^{<}h_i^* = \min_m\{h_{m,i}^*\} \quad (5a)$$

$$^{>}h_i^* = \max_{m'}\{h_{m',i}^*\} \quad (5b)$$

where $h_{m_2i}^*$ is the $i^{th}$ Hamiltonian variable from the $m^{th}$ member of H*. Provided that $N_8$ is large, the true Hamiltonian will lie somewhere between the upper and lower limits of the optimized solution family. Considering the comments above Eq. (3) regarding data error propagation, the full interpretation of the bounds <*h** and> h* depends on the information available about the data error distribution function, $p[\Phi^{(lab)}]$. Here, $\varepsilon^{(lab)}$ is considered a hard bound implying that <h* and >h* are the associated bounds within which the true Hamiltonian will lie. In the limit of large $N_8$, and a thorough global search over Hamiltonian space, no Hamiltonians outside of the hard bounds, <h* and >h*, will reproduce all of the data.

It is natural to consider quantifying this distribution using normal statistics involving the average and variance over the distribution. However, a simple distribution in the data, such as Gaussian or uniform, will generally not produce an *a priori* predictable distribution in the inversion family because of nonlinearity in the Hamiltonian-observable relationship. The inverse family distribution might be highly irregular and the system's true Hamiltonian could lie anywhere inside of the distribution, perhaps not where linear statistics would predict. For data with hard bounds, the most rigorous, measure of the uncertainty in each recovered Hamiltonian variable, $\Delta h_i^*$, is best quantified using the full width of its corresponding solution space,

$$\Delta h_i^* = {}^{>}h_i^* - {}^{<}h_i^* \quad (6)$$

as this definition fully captures the nonlinear nature of the inversion.

*3. Inversion Error Metric*

In conjunction with Eq. (3), the $\{\Delta h_i^*\}$ can be used to define the inversion error metric, in $\Delta H^*[E_k(t)]$Eq. (2), for the associated field, $E_k(t)$,

$$\Delta H^*[E_k(t)] = \frac{1}{N_s}\sum_{s=1}^{N_s} \mathcal{J}_{inv}[h_s^*; \Phi_k^{(lab)}] + \gamma\frac{1}{N_h}\sum_{i=1}^{N_h}\left|\frac{2\Delta h_i^*}{{}^{<}h_i^* + {}^{>}h_i^*}\right| \quad (7)$$

where $h^*_s$ is the $s^{th}$ member of the inversion family found from $E_k(t)$. The first term in Eq. (7) measures the ability of the inversion family to reproduce the data and the second measures the inversion uncertainty. The first sum vanishes if inversion can reproduce the data to within its experimental error, and the latter is weighted by an algorithmic parameter, $\gamma$. Under normal circumstances the value of $\gamma$ will be unimportant because there will be no systematic error in the data and the first term in Eq. (7) will vanish. When this is not the case, $\gamma$ balances the relative importance of matching the data versus minimizing uncertainty and must be selected on a problem by problem basis.

D. OI Results

At the conclusion of the control field optimization, the output is a collection of optimal pulses, their associated laboratory data and errors, and their corresponding inversion results, $\{E^*_k(t), \Phi^*_k, \varepsilon^*_k, h^*_i\}$. The best knowledge of the system's Hamiltonian is obtained by performing a final inversion using all of the optimal data, $\{E^*_k, \varepsilon^*_k, \Phi^*_k\}$ simultaneously to produce a final family of fully optimized Hamiltonians, $H^* = \{h^*1, ..., h^*_N\}$. The family defined by $H^*$ is the optimal identification result. However, in many cases, the final optimization may not be significantly better than that provided by $\{E^*_1(t), \Phi^*_1, \varepsilon^*_1, h^*_1\}$.

The error analysis described in Sec. IIC 3 can be used to assess the uncertainty in the optimally inverted Hamiltonian variables. By direct analogy to Eqs. (5a) and (5b), the uncertainty metrics,

$$\Delta h_i^* = >h_i^* - <h_i^* \qquad (8)$$

are defined to provide a nonlinear assessment of the uncertainty in each optimally inverted Hamiltonian variable. As per the discussion of Sec. IIC 3, normal statistics could be performed on the distribution of Hamiltonians in the OI family; however, a rigorous nonlinear treatment is best provided by Eq. (8). Or, if desired, the actual distribution of each variable, $h_i^*$, can be examined from the final GA inversion results, H*.

III. ILLUSTRATION

As a demonstration of the OI concept, we extracted a portion of a non-trivial Hamiltonian, the transition dipole moments of a multi-level quantum system, using simulated population transfer experiments[44]. Determining dipole moments is conventionally accomplished from spectroscopic measurements[45-47]. Here, they will be determined by observing the time propagation of the populations in the multi-level Hamiltonian. No attempt was made to address the tradeoffs between spectroscopic and temporal experiments, however, it is evident in the illustrations that OI provided high quality Hamiltonian information even in the presence of significant laboratory noise and restrictions on the bandwidth of the control pulse.

A simulated OI machine was used to identify a Hamiltonian of the form,

$$H(t) = H_0 - \mu \cdot E(t) \qquad (9)$$

where $H_0$, the reference Hamiltonian, was assumed known, but the dipole, $\mu$, was not. The objective of the optimal identification was to determine an optimal set of fields, $\{E_k(t)\}$, for extracting the dipole moment from measurements of the evolved populations at a time, $t$ = T, after the field had died away. In practice, there can be many variations in the experimental observations, such as performing measurements at multiple times, measuring different observables, *etc.* The goal here is to demonstrate the nature of the OI performance and its capabilities.

The identification was posed in the representation of the reference eigenstates, |n), where $H_0|_n\rangle = \varepsilon_n|n\rangle$. The objective is to extract the matrix elements, $\mu_{mn} = \langle m|\mu|n\rangle$. Although it might appear that choosing random fields, E (t), or even "intelligent" guesses, could provide sufficient data to identify $\mu_{mn}$, the illustrations below demonstrate that there is a clear advantage to introducing OI, especially when the data contains significant noise.

A. Inversion Data

Laboratory observations were simulated using a non-degenerate 10-level Hamiltonian[48, 49] chosen to resemble typical molecular vibrational transitions. The data,

$$\Phi^{(lab)}_{k,i} = pi(T; [E_k(t)]) \quad (10)$$

consisted of the I = 1 ... M = 10 state populations at the target time, $t$ = T, produced by the influence of the applied laser field, $E_k(t)$. Each observed population was obtained from the system's wavefunction,

$$|\Psi(t)\rangle = \sum_{i=1}^{N=10} a_i(t)|\phi_i\rangle \quad (11)$$

at $t = T$ according to,

$$pi = |a_i(T)|^2 \quad (12)$$

by propagating the initial state wavefunction, $|\Psi(0)\rangle$, to $|\psi(T)\rangle$ in the presence of the field, $E_k(t)$ using the time-dependent Schrodinger equation. The initial state, $|\psi(0)>$ contained all population in the ground state, p(0) = [1,0,0,0,0, 0, 0, 0, 0, 0].

To simulate a realistic laboratory experiment, each population outcome was averaged over $D$ = 100 replicate observations for a collection of noise-contaminated fields, $\{E^{(j)}_k, (t)\}$, $j$ = 1, ..., $D$, centered around the field, $E_k(t)$, requested by the control optimization manager Fig. 1($A_1$). Simulated error, $\varepsilon^{(lab)}$, was introduced into the population observations according to,

$$\Phi^{(lab)}_{k,i} = \left\langle (1+\rho_{ij})\, p_i(T; [E^{(j)}_k(t)]) \right\rangle_{j=1,\dots,D} \quad (13)$$

where the $\rho_{ij}$ were chosen randomly between $\pm\varepsilon^{(abs)}$ the relative error in each population observation. A different random value, $p_{ij}$, was selected every time a measurement was simulated. Each noise contaminated control field took the form of a modulated Gaussian shaped pulse,

$$E^{(j)}_k(t) = \exp\left(-(t-T/2)^2/(2s^2)\right) \sum_l A^{(j)}_l \cos(\omega_l t + \theta^{(j)}_l) \quad (14)$$

where the $\omega_t$ were the resonance frequencies [48,49] of $H_0$, $A^{(j)}_t$ their corresponding amplitudes and $\theta^{(j)}_t$, their associated phases. Field noise was modeled as uncertainties in the $A_t$ and $\theta_t$, which includes various types of both correlated and uncorrelated noise typical of laboratory pulse shaping devices. The field error was produced by introducing the parameters, $\gamma^{(j)}_A$ and $\gamma^{(j)}_0$, that were chosen randomly over [-ε($fld$), + ε($fld$)], corresponding to the relative error in the field amplitude or phase. Each individual field was constructed according to,

$$A^{(j)}_t = (1 + \gamma^{(j)}_{At})A_t, \qquad \theta^{(j)}_t = (1 + \gamma^{(j)}_{\theta_t})\theta_t \quad (15)$$

where $A_t$ and $\theta_t$ were the amplitudes and phases requested of the pulse shaper. A different random value (constant over the lifetime of the pulse) for $\gamma^{(j)}_{A_t}$ and $\gamma^{(j)}_{\theta_t}$ was selected each time a replicate simulation was performed.

In practice, the laboratory error distribution, $p[\Phi^{(lab)}_{k,i}]$, of the measured observable includes the combined effects of the noise in the control laser pulse, $\varepsilon^{(ftd)}$, and measurement error, $\varepsilon^{(abs)}$, in the observable detection process. The laboratory error distribution can be obtained by inspecting the individual values of the $D$ replicate measurements. For small fluctuations in the field and significant signal averaging, the laboratory error distribution may be Gaussian; however, the combined effects of field noise and measurement error can be correlated, complex and not *a priori* predictable. The only general approach for obtaining the error distribution used to define $\varepsilon^{(lab)}$ must be determined in the

laboratory for the problem at hand. Here, the error distribution was simulated as uniform between its error-bars, $\pm\varepsilon_k^{(lab)}$, which were defined as the Pythagorian sum of $\varepsilon^{(abs)}$ and $\varepsilon^{(fld)}$.

In terms of Eq. (2), and in accord with the discussion in Sec. II B, the control variables were the Fourier amplitudes and phases used to construct the pulse, $c = \{Al, \theta l\}$. Each amplitude, $A_l$, was allowed to vary over [0,1] V/Å, and the phases were allowed to vary over their full dynamic range, [0,2π] rad. In all cases, the target time, was taken to be $T$ = 1.5 ps, and the pulse width was given by $s$ = 0.2 ps. The control optimization, Fig. 1(A), with the cost functional described in Sec. II B by Eq. (2), was performed using a steady state genetic algorithm[39] with a population size of 15, a mutation rate of 8%, a crossover rate of 75% and a trans-generation population overlap of 50%. In each case, the cost functional parameter, β was ramped from $1\times10^{-6}$ to $1 \times 10^{-3}$ over the GA evolution, although the optimization was relatively insensitive to the exact choice of β. Typically, the GA required ~30 generations to converge, calling for a total of approximately 450 trial fields.

B. Dipole Matrix Inversion Component

The input to the inversion stage, including the population measurements, their error, and their corresponding fields *(i.e.,* the noise-free field requested of the pulse shaper), $\{\Phi_k^{(lab)}, \varepsilon_k^{(lab)} E_k\}$, was used to globally extract the family of transition dipole moment matrices consistent with the data, as described in Sec. IIC 1. A raw optimization of Eq. (3) from Sec. IIC 1 using a genetic algorithm was performed to obtain the solution family from the $k^{th}$ experiment. For each trial Hamiltonian (dipole matrix) during the GA search, the calculated populations, $\Phi_k(h)$, were obtained by propagating the initial wavefunction, $|\Psi(0)\rangle$ to $|\psi(T)\rangle$ in the presence of the control field, $E_k$, to obtain the final time wavefunction, $|\psi(T)\rangle$.

The inversion variables, h, were taken as the dipole matrix elements, $h_i = \mu_{mn}$, $i = \{m,n\}$. Since $\mu_{mn} = \mu_{nm}$ and $\mu_{mm} = 0$, only the upper triangular elements were considered making the number of inversion variables, $N_h$=45. Minimizing Eq. (3) for the inversion was performed with a steady state genetic algorithm, a population size of $N_p$ - 200, a mutation rate of 5%, a crossover rate of 80%, and an trans-generation population overlap of 50%. The large population size was used to ensure adequate sampling of the solution family in accord with the arguments of Sec. IIC 1. No regularization was performed in the inversion and therefore, the second term in Eq. (3) was ignored.

C. Optimal Identification Results

Several full optimal identifications were performed on the 10-level transition dipole moment matrix under various conditions to test the algorithm described in Sec. IIA and Fig. 1. In order to compare the inversion outcomes from optimal versus sub-optimal data, two questions were addressed:

1. How much better is the OI identified Hamiltonian family than achieved from an identification that employs sub-optimal fields, and how is this comparison affected by experimental bandwidth constraints on the control field?
2. How robust is the OI Hamiltonian quality with respect to laboratory measurement error, $\varepsilon^{(lav)}$? Can OI automatically find fields for which the measurement error, $\varepsilon^{(lab)}$ does not significantly limit the quality of the recovered Hamiltonian?

To address the first set of questions, three groups of inversions were performed with various bandwidth restrictions on the form of the control fields. The allowed bandwidth of the control pulse was constrained to see if OI could extract a high quality Hamiltonian despite the restrictions. Bandwidth constraints were simulated as follows: in the first group of tests, only the $v \rightarrow v + 1$ transition frequencies of $H_0$ were allowed in the control pulse, c.f., Eq. (14), in the second group, the $v \rightarrow v + 1$ and $v \rightarrow v + 2$ frequencies were included, and in the third, the $v \rightarrow v + 1$, $v \rightarrow v + 2$, and $v \rightarrow v + 3$ frequencies were allowed. These three groups contained fields with bandwidths of approximately 1200 $cm^{-1}$, 5000 $cm^{-1}$, and 9500 $cm^{-1}$, respectively.

In each of the three groups, the ability of OI versus that of a standard inversion was compared in two ways. First, the error in the OI extracted Hamiltonian family, H*, using data, $\Phi_k^*$, from the ten best fields, $E_k^*$, $k$ = 1,...10, was compared to a sub-optimal inversion performed using data for 500 random fields chosen from the space of accessible pulse shapes. At first sight, it might appear that 500 random fields with the proper system resonance frequencies would provide an excellent source of data given that there are only 45 unknowns. This first comparison investigated whether a large quantity of data (i.e., fifty times larger than the number of OI fields) could compensate for using sub-optimal experiments. In the second comparison, the Hamiltonian family obtained by inverting data from the single, best OI field

and data, $\{E^*_1,\Phi^*_1\}$, was compared to an inversion using data from a single sub-optimal field [i.e., one of the fields rejected by Eq. (2)]. This comparison was performed to directly examine individual fields and possibly reveal structural features in the pulse that improved the quality of the identified Hamiltonian.

The results from the bandwidth restricted inversion examples where the data error was $\varepsilon^{(lab)}_{k^*}$ = 1% are presented in Tables I-III and in Fig. 2. Table I depicts the OI dipole results, $\mu^*$, for the fields restricted to $v \rightarrow v + 1$ transition frequencies. The OI results for each $h_i = \mu_{mn}$ are listed as the upper and lower limits of the optimal solution family, $<h_i^*$ and $>h_i^*$, and the corresponding OI uncertainty, $\Delta h_i^* => h^*_i - <h^*_i$, for that particular variable. For comparison, the identification quality obtained by performing a standard global inversion on data for 500 sub-optimal, random fields is also provided. This latter inversion used all 500 experiments simultaneously, as commonly performed. In both the optimal and sub-optimal cases, the inversions were capable of reproducing the data to within its error.

Overall, OI far outperformed the sub-optimal identification as is evident by the average error results seen in the last row of Table I. Here, the average optimal error of 5.6xIO$^{-34}$ C-m, is two orders of magnitude smaller than that of the sub-optimal determination, with an average error of 2.5x10$^{-32}$ C-m. Upon inspection of the individual Hamiltonian variables, $h_i = \mu_{mn}$, it is seen that the random fields, despite the large quantity of data *(i.e.,* 500 population vectors, versus 10 for the optimal inversion), only provided sufficient information to precisely identify the nearest neighbor $\mu_{m,m}$+1 matrix elements. In direct contrast, no such pattern occurred in the OI results, $\Delta h_i^*$, where all of the dipole matrix elements were precisely identified. As the data for the 500 random fields also allowed inversions that reproduced all the population data, it can be concluded that even this large number of random experiments are seriously deficient. In contrast, the OI procedure extracted all of the Hamiltonian variables to high precision. In essence, the ten optimal experiments left essentially no freedom in the identified Hamiltonian family, H*, producing tight bounds around the true Hamiltonian variables.

The ability of OI to precisely obtain all of the Hamiltonian variables, despite the bandwidth constraints on the applied field is further demonstrated in Fig. 2(A). Panel (A1) shows the power spectrum of the best field, $E^*_i$, identified by the algorithm in Fig. 1 to extract the transition dipole matrix. Panel (A2) shows the power spectrum of one of the fields rejected by the control optimization used for the inversion. The inset plots provide a graphical depiction of the inversion errors in each transition dipole moment where darker shading represents a larger $\Delta h_i^*$, for (A1), and $\Delta h^*_i$, for (A2). The optimized field made it possible to identify precise values for all the $\mu_{mn}$ despite the bandwidth restrictions, whereas the rejected field only allowed precise determination of $\mu_{m,m+1}$.

A similar comparison between OI and conventional inversion was performed with $v \rightarrow v + 1$ and $v \rightarrow v + 2$ transitions allowed in the field. The results are described in Table II and in Fig. 2(B). Again, OI provided substantially better knowledge of the transition dipole moments, as evident by comparing the uncertainty in the recovered dipole matrix elements. For the OI bounds, $\Delta h_i^*$, the average error was 3.2x10$^{-34}$ C-m, while for the sub-optimal identification, it was 1.9x10$^{-32}$ C-m. Moderate improvement over the $v \rightarrow v + 1$ bandwidth limited example was observed in both the optimal and sub-optimal identifications by relaxing the field constraints. The OI results, however, improved more significantly. Table II and Fig. 2(B) depict identifications corresponding to the best optimal field, $E^*_1$, and one that was rejected by the control optimization. The sub-optimal identification was only capable of precisely extracting both the nearest and second nearest neighbor matrix elements; however, OI was again able to determine fields which produced precise values for all of the matrix elements.

The trend continued for fields containing $v \rightarrow v + 1$, $v \rightarrow v + 2$ and $v \rightarrow v + 3$ transitions, as seen in Table III and in Fig. 2(C). Both error bound averages in Table III displayed a modest decrease as constraints on the field were further relaxed. Here, the sub-optimal field data only permitted precise determination of the $\mu_{m,m+1}$, $\mu_{m,m+2}$ and $\mu_{m,m+3}$ transition dipole matrix elements, while OI precisely identified all of the elements. Again, OI outperformed the sub-optimal dipole matrix determination by two orders of magnitude with average errors of 1.7x1O$^{-34}$ and 1.4x1O$^{-32}$ C-m, respectively. Comparing the fields in Fig. 2(C1) and (C2) shows that the optimal field was considerably simpler than its sub-optimal counterpart. The combined results from the bandwidth restricted simulations are presented in Fig. 3(A) where it can be seen that although both identifications improve with increased control pulse bandwidth, the OI error is consistently two orders of magnitude smaller than conventional identification with 500 random fields, despite restrictions on the field. A general observation from these studies is that the $h_i^*$ determined from the single best control field was essentially the same as the from employing the ten best fields (c.f., compare Tables I and III and Fig. 2). Thus, the OI actually was able to find a single optimal experiment with excellent Hamiltonian identification capabilities.

Finally, the effect of experimental uncertainty on the identification error was investigated. The results from three OI's with increasing error, $\varepsilon^{(lab)}$, in the population measurements are presented in Table IV. In each case, fields

containing the $v \rightarrow v + 1$ and $v \rightarrow v + 2$ transition frequencies were adopted, and the final inversion was performing using the best 10 fields. OI was capable of handling the increase in the data error, and despite a five-fold increase in $\varepsilon^{(lab)}$ from 1% to 5%, the average inversion error was basically invariant to the additional noise, and only increased from $5.6x1O^{-34}$ to $6.7x1O^{-34}$ C-m. The OI algorithm was able to identify fields for which the quality of the extracted Hamiltonian variables was relatively insensitive to the data noise. The family of optimal control experiments $\{E_k^*, \Phi_k^*\}$, was distinct in the three cases of 1%, 2%, and 5% noise. It was also found that optimal fields found to treat measurements with 5% noise did not necessarily provide good identification when the noise was reduced to 1%. This result suggests that the optimal fields are highly specific for not only different systems and measurements, but also for the particular nature of the laboratory noise. In all cases, the OI inversions reproduced the data to within its error; furthermore, OI identified fields which filtered out the experimental error preventing it from propagating into the recovered dipole matrix elements. By properly (i.e., optimally) choosing the experiments, it was possible to overcome the effects of seemingly large laboratory uncertainty, as is seen in Fig. 3(B), where despite increasing $\varepsilon^{(lab)}$ from 1% to 5%, the error in the identified dipole moments increases by only ~0.05%.

Inspecting the results in Table IV, shows that some matrix elements were actually identified more precisely as the observation error increased. For example, the error reduced from $\Delta\mu_{5,T}=1.3\times10^{-33}$ to $9.0 \times 10^{-34}$ to $3.0\times10^{-34}$ C·m as the data error increased from $\varepsilon^{(lab)}$ = 1% to 2% to 5%. This is not a surprising finding since the primary objective of the optimal inversion algorithm was to achieve the smallest *overall* inversion error. In some cases, an individual Hamiltonian variable, $h_i$, might not be determined to the highest precision for a small data error, as was the case for $\mu 6,7$. This behavior is a result of the definition of the inversion quality metric, Eq. (7), which could be modified to target individual Hamiltonian variables for better scrutiny, if desired.

Each of the fields in Fig. 2 as well as many others obtained during the simulated optimal inversion runs were inspected to see if patterns in the optimal fields' power spectra could be linked to low inversion error. It was immediately seen that in all cases, the optimal fields were simpler because of the pressure against unnecessary components, *c.f.* Eq.(2). However, no underlying pattern or single transition appeared to stand out in these illustrations. Although not utilized here, frequency-time plots might provide an alternative view of the optimal fields' physical structure that could aid in understanding their mechanism for filtering data noise.

D. Laboratory Implementation and Feasibility

It is important to consider the feasibility of implementing OI in the laboratory, given the state of the technologies involved. There are two particular points to consider. First, typical pulse shaping control experiments only remain stable for a period of time. This circumstance is not a fundamental limitation, as stable operations need only to be maintained on a per cycle excursion around the closed loop. Slow drift would naturally be accounted for with the continued recording of the new control fields as they are called up. The most critical issue for practical execution of OI lies in the inversion stage, which is performed in the closed loop with the experiments. The inversion can be computationally intensive for complex Hamiltonians. The challenge in implementing OI is to make the inversion stage fast enough so that the OI algorithm can finish in a reasonable amount of time, ideally with all of the components in the closed loop of Figure 1 operating in sync with each other.

There are three principal means to meet the latter inversion stage challenge to make OI practical. First, the multiple inversions required to produce a distribution of consistent Hamiltonians are amenable to massive parallelization, as indicated in Figure 1. The present OI simulations utilized a rudimentary form of parallelization with 20 pc's. Extension to a massive number of machines linked together, for example, in a Beowulf configuration, would be ideal for closed loop OI implementation. The scaling should be roughly linear with the number of operating machines, and current costs suggest that a configuration with hundreds or more machines is feasible. Even beyond this mode of operation, the emerging technology of grid computing could ultimately provide even higher levels of computational savings. When planning such experiments, the computational arm of the overall OI apparatus should be given as much consideration as the laser control/detection components.

A second means to help alleviate the computational tasks of the inversion component in OI is through the use of map-facilitated algorithms [20, 22, 23, 50]. Map-facilitated algorithms involve a two part learning-inversion procedure where a high-speed functional representation of the observations in terms of the quantum system's Hamiltonian is first learned by computing the observable for a selected set of representative Hamiltonians. After the map is learned, it replaces the arduous task of repeatedly solving the Schrödinger equation in the inversion with an extremely fast map evaluation time. The map learning process could be performed prior to the laboratory optimization, thus alleviating any algorithmic bottleneck involving the data inversion in closed loop operations. A simulation of map-facilitated OI was performed, confirming the potential savings.

A third means to accelerate the inversion component of OI is through the introduction of a special additional

term into the guiding cost function in Eq. (2). For complex systems (i.e., high dimensional matrix representations of the Hamiltonian, or those described with multiple spatial coordinates), a cost can be included to guide the controls towards stimulating motion in a subspace [51]. This guidance can be performed in a consistent fashion with the inversion, where encroachment on the subspace boundaries can be monitored for control field guidance. In this way, the overall inversion problem could be broken into an overlaying set of simpler reduced problems. Each reduced problem might be characterized by either sampling a select set of Hamiltonian matrix elements, or motion in restricted domains of configuration space (although all of the relevant coordinates might still be active in a limited way in the subspace).

In summary, it appears currently feasible to carry out initial laboratory tests of the OI concept with at least simple molecular (quantum) systems using existing laser control technology combined with computational parallelization, the creation of input-output system maps, and possibly, algorithmic guidance towards reduced subspaces. Importantly, all of these technologies are themselves advancing, which should further bolster the feasibility of performing OI on systems of ever-increasing complexity in the future. The simulations in this paper showed the basic feasibility of the concept, with a special focus on closed loop operations providing a capability of identifying optimal experiments to filter out laboratory noise and ultimately obtain high quality inversion information. In the simulations, the parameterized pulse shapes are close to those exploited in typical control experiments; the greater flexibility in the laboratory (i. e., very large numbers of amplitude and phase variables) offers even more freedom.

IV. CONCLUSIONS AND FUTURE DIRECTIONS

In this section, the concept of OI was introduced and demonstrated using the particular example of extracting transition dipole moment matrix elements from population transfer experimental data. OI for extracting Hamiltonian information combines the strongest features of both modem laser control experiments and nonlinear inversion techniques to make use of global searching, high experimental repetition rates and ultra-fast pulse shaping technology to actively probe the quantum Hamiltonian and reveal the optimal data set for performing an identification. In some ways, it is ironic that closed-loop quantum control techniques were originally suggested[28] as a means to overcome the lack of detailed, quantitative information about molecular Hamiltonians. OI shows how one variant of these same principles [52, 53] can be redirected to obtain the very same information about molecular Hamiltonians whose absence lead to their development in the first place.

The power of optimality was demonstrated by the high-precision extraction of transition dipole moment matrix elements with OI. The data obtained under the influence of the optimal fields enabled a superior extraction of the Hamiltonian over identifications using an even larger quantity of sub-optimal data. It appears that the optimal fields utilize multiple complex, possibly difficult to interpret pathways, and intricate interference patterns to accumulate as much information as possible about the Hamiltonian from the experiments. The OI process seeks out fields where the associated data is highly sensitive to the Hamiltonian while simultaneously insensitive to both field and data noise. Although these criteria superficially appear contradictory, the data's information content and its noise are distinct. Taking advantage of the subtle interactions necessary for sensitive, noise-filtered Hamiltonian identifications will likely only be possible through the use of an optimal, closed-loop algorithm as illustrated here.

The OI concept is not limited to extracting transition dipole moments and is immediately applicable to many Hamiltonian inversion problems that are currently of interest. Applications in quantum mechanics include extracting an intermodular potential, either by identifying its matrix elements in a chosen basis, or by directly identifying the potential function itself. Another application would be to directly address the dipole moment as a function of the molecular system's internal coordinates. It should be simultaneously possible to identify the potential and the dipole. Regardless of the inversion goal, the sought after Hamiltonian must encompass the proper physics consistent with the nature of the experiment. In this context, strong fields could be treated provided that the Hamiltonian was suitably formulated.

Combining control and system identification has precedent in the engineering literature, but the proposed OI concept displays significant differences. Engineering system identification is typically performed to create a feedback controller, and any system model that accurately guides future control applications is acceptable. In contrast, OI attempts to reveal the true molecular Hamiltonian. In engineering, the data is generally chosen with the control objective in mind, while OI chooses the optimal data for the sole purpose of precision in the Hamiltonian identification. Typically, engineering identification operates with linear system models and inversion techniques because interest lies in a small domain around some nominal operating condition. Here, the drive is for broad, non-perturbative knowledge of the Hamiltonian over an inherently nonlinear domain. These latter criteria demand the use of of global, efficient inversion and control algorithms to thoroughly search for all physically realistic Hamiltonians consistent with the optimal data. The synthesis of all these points produces an OI machine concept with distinct characteristics.

Further development envisions a more general OI algorithm than the one presented in Sec. II. Such extensions might include determining the best collection of state resolved scattering cross sections, or other observables, for inversion, identifying those measurements which are self-contradictory (i.e., inconsistent) and hinder the inversion process, and etc. The same OI logic is also applicable to non-quantum mechanical examples such as determining the

optimal set of time points for concentration measurements and/or the best initial conditions for extracting chemical kinetic rate constants, identifying reaction pathways, both chemical and biochemical in nature. The concept and illustrations in this section demonstrates the importance of optimality in identification, and especially the attractive motivation for extending the OI concept to other applications.

[1] R. Rydberg, Z. Phys. **73**, 376 (1931).
[2] O. Klein, Z. Phys. **76**, 226 (1932).
[3] A. L. G. Rees, Proc. Phys. Soc. 59, 998 (1947).
[4] R. B. Gerber, V. Buch, U. Buck, and J. Maneke, G. Schleusene, Phys. Rev. Lett. **44**, 1937 (1980).
[5] U. Buck, Rev. Modern Phys. **46**, 369 (1974).
[6] R. B. Gerber, R. Roth, and M. Ratner, Mol. Phys **44**, 1335 (1981).
[7] R. Roth, M. Ratner, and R. Gerber, Phys. Rev. Lett. **52**, 1288 (1984).
[8] T.-S. Ho and H. Rabitz, J. Chem. Phys **90**, 1519 (1989).
[9] T.-S. Ho and H. Rabitz, J. Phys. Chem **97**, 13449 (1993).
[10] T.-S. Ho, H. Rabitz, and G. Scoles, J. Chem. Phys **112**, 6218 (2000).
[11] A. Tikhonov and V. Arsenin, *Solution of Ill-Posed Problems* (Wiley, Washington, D.C, 1977).
[12] K. J. Miller, Math. Anal. 1 **52** (1970).
[13] G. Backus and J. Gilbert, Geophys. J. R. Astron. Soc. **13**, 247 (1967).
[14] G. Backus and J. Gilbert, Geophys. J. R. Astron. Soc. **16**,169 (1968).
[15] R. Snieder, Inverse Prob. **7**, 409 (1991).
[16] P. Chaudhury, S. Bhattacharyya, and W. Quapp, Chem. Phys. **253**, 295 (2000).
[17] J. Braga, M. de Almeida, A. Braga, and et al., Chem. Phys. **260**, 347 (2000).
[18] F. Prudente, P. Acioli, and J. Neto, J. Chem. Phys. **109**, 8801 (1998).
[19] S. Hobday, R. Smith, and J. Belbruno, Model. Simul. Mater. Sc. **7**, 397 (1999).
[20] J. Geremia and H. Rabitz, Phys. Rev. A **64,** 022710 (2001).
[21] J. Geremia, E. Weiss, and H. Rabitz, Chem. Phys. **267**, 209 (2001).
[22] J. Geremia and H. Rabitz, J. Chem. Phys., submitted (2001).
[23] J. Geremia and H. Rabitz, J. Chem. Phys. **115**,8899 (2001).
[24] S. Shi, A. Woody, and H. Rabitz, J. Chem. Phys. **11**, 6870 (1988).
[25] S. Shi and H. Rabitz, J. Chem. Phys. **139**, 18,5 (1989).
[26] A. Pierce, M. Dahleh, and H. Rabitz, Phys. Rev. A **37**, 4950 (1988).
[27] R. Kosloff, S. Rice, P. Gaspard, S. Tezsigni, and D. Tannor, J. Chem. Phys. **139**, 201 (1989).
[28] R. Judson and H. Rabitz, Phys. Rev. Lett. **68**, 1500 (1992).
[29] H. Rabitz, R. de Vivie-Riedle, M. Motzkus, and K. Kompa, Science **288**, 824 (2000).
[30] W. Warren, H. Rabitz, and M. Dahleh, Science **259**,1581 (1993).
[31] A. Assion, M. Baumbert, T. Bergt, B. Brixner, V. Kiefer, M. Seyfried, M. Strehle, and G. Gerber, Science **282**, 919 (1998).
[32] C. Bardeen, V. 'Yakovlev, K. Wilson, S. Carpenter, P. Weber, and W. Warren, Chem. Phys. Lett. **280**, 151 (1997).
[33] T. Feurer, A. Glass, T. Rozgonyi, R. Sauerbrey, and Szabo, Chem. Phys. **267**, 223 (2001).
[34] T. Weinacht, J. White, and P. Bucksbaum, J. Phys. Chem. A **103**,10166 (1999).
[35] R. Bartels, B. Backus, E. Zeek, L. Misoguti, G. Vdovin, L Christov, M. M. Murnane, and H. Kapteyn, Nature **406**, 164 (2000).
[36] G. Toth, A. Lorincz, and H. Rabitz, J. Chem. Phys. **101**, 3715 (1994).
[37] P. Gross, D. Neuhauser, and H. Rabitz, J. Chem. Phys. **98**,4557 (1993).
[38] S. Vajda, B. Andreas, E.-C. Kaposta, T. Leisner, C. Lupulescu, S. Minemeto, P. Rosendo-Francisco, and L. Wöste, Chem. Phys., in press (2001).
[39] D. Goldberg, *Genetic Algorithms in Search, Optimization, and Machine Learning* (Addison-Wesley, Reading, Mass., 1989).
[40] S. Forrest, ed., *Proccedings of the Fifth International Conference on* ***Genetic*** *Algorithms (Morgan* Kaufmann Pub., San Mateo, 1993).
[41] W. Stephens, *UNIX Network Programing* (Prentice Hall, New Jersey,1990).
[42] J. Chilla and O. Martinez, Optics Letters **16**, 39 (1991).
[43] J. Geremia, W. Zhu, and H. Rabitz, J. Chem. Phys **113**, 10841 (2000).
[44] K. Bergmamn, H. Theuer, and B. Shore, Rev. Mod. Phys. **70**, 1003 (1998).
[45] P. Vaccaro, A. Zabludon, M. Carrerapatino, J. Kinsey, and R. Field, J. Chem. Phys. **90**, 4150 (1989).
[46] T. Ra, Appl. Optics **32**,7326 (1983).
[41] M. Herman, J. Lievin, J. Vander Auwera, and A. Campargue, Adv. in Chem. Phys. **108**, 1 (1999).
[48] $\omega_{12}$ = 1800.19, $\omega_{23}$ = 1620.56, $\omega_{34}$ = 1440.92, $\omega_{45}$ = 1261.29, $\omega_{56}$ = 1081.65, $\omega_{67}$ = 902.016, $\omega_{78}$ = 722.38,

$\omega_{89}$ = 542.744, and $\omega_{9,10}$ = 363.109 $cm^{-1}$.
[49] A. Matsumoto and K. Iwamoto, J. Quant. Spectrosc. Radiat. Transfer 55, 457 (1996).
[50] J. Geremia, C. Rosenthal, and H. Rabitz, J. Chem. Phys **114**, 9325 (2001).
[51] Y.-S. Kim and H. Rabitz, to be published (2002).
[52] H. Rabitz and S. Shi, *Optimal Control of Molecular Motion*: *Making Molecules Dance*, *in Advances* in *Molecular Vibrations and Collision Dynamics, Joel Bourman, ed.*, vol. VoL 1A (JAI Press, Inc., 1991).
[53] J. Geremia and H. Rabitz, Phys. Rev. Lett. (to be published).

TABLE I:

Optimal identification quality versus that of a sub-optimal (conventional) identification of the transition dipole moments of a 10-level Hamiltonian using noise-contaminated fields containing only the $\nu \rightarrow \nu + 1$ resonance frequencies of $H_0$.

| | *Optimal Identification* | | | *Conventional* | *Optimal Identification* | | | | *Conventional* |
|---|---|---|---|---|---|---|---|---|---|
| $h^a_i$ | $<h_i^b$ | $>h_i^{\ b}$ | $\Delta h_i^b$ | $\Delta h_i^{*c}$ | $h_i$ | $<h_i$ù$^b$ | $>h_i^b$ | $\Delta h_i^{\ b}$ | $\Delta h^*_i{}^{\ c}$ hspace0.6cm |
| $\mu_{1,2}$ | 5.1834 | 5.1856 | 0.0022 | 0.0324 | $\mu_{3,10}$ | 0.0275 | 0.0279 | 0.0004 | 0.4129 hspace0.6cm |
| $\mu_{1,3}$ | -1.0844 | -1.0783 | 0.0061 | 0.1234 | $\mu_{4,5}$ | 9.2714 | 9.2714 | 0.0000 | 0.0004 hspace0.6cm |
| $\mu_{1,4}$ | 0.2754 | 0.2800 | 0.0045 | 0.1170 | $\mu_{4,6}$ | -3.1583 | -3.1210 | 0.0373 | 0.2781 hspace0.6cm |
| $\mu_{1,5}$ | -0.0837 | -0.0825 | 0.0011 | 0.3983 | $\mu_{4,7}$ | 1.1794 | 1.1899 | 0.0105 | 0.1555 hspace0.6cm |
| $\mu_{1,6}$ | 0.0281 | 0.0286 | 0.0004 | 0.1627 | $\mu_{4,8}$ | -0.4894 - | 0.4846 | 0.0049 | 0.2394 hspace0.6cm |
| $\mu_{1,7}$ | -0.0108 | -0.0106 | 0.0002 | 0.3288 | $\mu_{4,9}$ | 0.2146 | 0.2171 | 0.0025 | 0.1252 hspace0.6cm |
| $\mu_{1,8}$ | 0.0044 | 0.0044 | 0.0000 | 0.2221 | $\mu_{4,10}$ | -0.1031 | -0.1017 | 0.0013 | 0.3558 hspace0.6cm |
| $\mu_{1,9}$ | -0.0020 | -0.0019 | 0.0000 | 0.2008 | $\mu_{5,8}$ | 9.9388 | 9.9479 | 0.0091 | 0.0155 hspace0.6cm |
| $\mu_{1,10}$ | 0.0009 | 0.0009 | 0.0000 | 0.7341 | $\mu_{5,7}$ | -3.7370 - | 3.7290 | 0.0080 | 0.1151 hspace0.6cm |
| $\mu_{2,3}$ | 7.0792 | 7.0792 | 0.0000 | 0.0201 | $\mu_{5,8}$ | 1.5226 | 1.5486 | 0.0260 | 0.3321 hspace0.6cm |
| $\mu_{2,4}$ | -1.8377 | -1.8213 | 0.0164 | 0.9830 | $\mu_{5,9}$ | -0.6823 - | 0.6750 | 0.0073 | 0.3555 hspace0.6cm |
| $\mu_{2,5}$ | 0.5417 | 0.5519 | 0.0102 | 0.8430 | $\mu_{5,10}$ | 0.3222 | 0.3268 | 0.0046 | 0.1817 hspace0.6cm |
| $\mu_{2,6}$ | -0.1872 | -0.1851 | 0.0021 | 0.0878 | $\mu_{6,7}$ | 10.4084 | 10.4211 | 0.0127 | 0.0058 hspace0.6cm |
| $\mu_{2,7}$ | 0.0692 | 0.0701 | 0.0009 | 0.0922 | $\mu_{6,8}$ | -4.2744 | -4.2726 | 0.0018 | 0.1152 hspace0.6cm |
| $\mu_{2,8}$ | -0.0288 | -0.0284 | 0.0005 | 0.3150 | $\mu_{6,9}$ | 1.8916 | 1.8985 | 0.0070 | 0.9735 hspace0.6cm |
| $\mu_{2,9}$ | 0.0126 | 0.0128 | 0.0002 | 0.1441 | $\mu_{6,10}$ | -0.9087 | -0.8922 | 0.0165 | 0.4670 hspace0.6cm |
| $\mu_{2,10}$ | -0.0061 | -0.0060 | 0.0001 | 0.2221 | $\mu_{7,8}$ | 10.7185 | 10.7185 | 0.0000 | 0.0235 hspace0.6cm |

[a]All values are in units of $1 \times 10^{-31}$ C-m
[b]Obtained by inverting data for 10 optimal fields
[c]Obtained by inverting sub-optimal data for 500 random fields

TABLE I: (continued)

| Optimal identification quality versus that of a sub-optimal (conventional) identification of the transition dipole moments of a 10-level Hamiltonian using noise-contaminated fields containing only the $\nu \rightarrow \nu + 1$ resonance frequencies of $H_0$. | | | | | | | | | |
|---|---|---|---|---|---|---|---|---|---|
| | *Optimal Identification* | | | *Conventional* | *Optimal Identification* | | | | *Conventional* |
| $h^a_i$ | $<h_i^b$ | $>h_i^b$ | $\Delta h_i^b$ | $\Delta h_i^{*c}$ | $h_i$ | $<h_i$ù$^b$ | $>h_i^b$ | $\Delta h_i^b$ | $\Delta h^*_i{}^c$ hspace0.6cm |
| $\mu_{3,4}$ | 8.3500 | 8.3533 | 0.0033 | 0.0332 | $\mu_{7,9}$ | -4.7555 | -4.7444 | 0.0111 | 0.2535 hspace0.6cm |
| $\mu_{3,5}$ | -2.5145 | -2.5095 | 0.0060 | 0.3883 | $\mu_{7,10}$ | 2.2548 | 2.2743 | 0.0195 | 0.0986 hspace0.6cm |
| $\mu_{3,6}$ | 0.8432 | 0.8550 | 0.0118 | 0.2551 | $\mu_{8,9}$ | 10.8821 | 10.8972 | 0.0151 | 0.0190 hspace0.6cm |
| $\mu_{3,7}$ | -0.3223 | -0.3176 | 0.0047 | 0.0999 | $\mu_{8,10}$ | -5.1798 | -5.1755 | 0.0043 | 0.3133 hspace0.6cm |
| $\mu_{3,8}$ | 0.1313 | 0.1324 | 0.0011 | 0.4515 | $\mu_{9,10}$ | 10.9182 | 10.9182 | 0.0000 | 0.0144 hspace0.6cm |
| $\mu_{3,9}$ | -0.0587 | -0.0577 | 0.0010 | 0.2818 | Average Error | | | 0.0056 | 0.2537 hspace0.6cm |

[a]All values are in units of $1 \times 10^{-31}$ C-m
[b]Obtained by inverting data for 10 optimal fields
[c]Obtained by inverting sub-optimal data for 500 random fields

TABLE II:

| Optimal identification quality versus that of a sub-optimal identification of the transition dipole moments of a 10-level Hamiltonian using noise-contaminated fields containing both the $\nu \rightarrow \nu + 1$ and $\nu \rightarrow \nu + 2$ resonance frequencies of $H_0$. | | | | | | | | | |
|---|---|---|---|---|---|---|---|---|---|
| | *Optimal Identification* | | | *Conventional* | *Optimal Identification* | | | | *Conventional* |
| $h_i^a$ | $<h_i^b$ | $>h_i^b$ | $\Delta h_i^b$ | $\Delta h_i^c$ | $h_i$ | $<h_i^b$ | $>_{h_i*}{}^b$ | $\Delta h_i^b$ | $\Delta h^*_i{}^c$ hspace0.6cm |
| $\mu_{1,2}$ | 5.1850 | 5.1855 | 0.0005 | 0.0324 | $\mu_{3,10}$ | 0.0275 | 0.0279 | 0.0004 | 0.4029 hspace0.6cm |
| $\mu_{1,3}$ | -1.0844 | -1.0783 | 0.0061 | 0.0211 | $\mu_{4,5}$ | 9.2714 | 9.2714 | 0.0000 | 0.0004 hspace0.6cm |
| $\mu_{1,4}$ | 0.2754 | 0.2800 | 0.0045 | 0.1134 | $\mu_{4,6}$ | -3.1479 | -3.1466 | 0.0011 | 0.0085 hspace0.6cm |
| $\mu_{1,5}$ | -0.0837 | -0.0825 | 0.0011 | 0.3251 | $\mu_{4,7}$ | 1.1801 | 1.1899 | 0.0098 | 0.1555 hspace0.6cm |
| $\mu_{1,6}$ | 0.0281 | 0.0286 | 0.0004 | 0.1627 | $\mu_{4,8}$ | -0.4894 | -0.4846 | 0.0049 | 0.2411 hspace0.6cm |
| $\mu_{1,7}$ | -0.0108 | -0.0106 | 0.0002 | 0.3712 | $\mu_{4,9}$ | 0.2146 | 0.2171 | 0.0025 | 0.0999 hspace0.6cm |
| $\mu_{1,8}$ | 0.0044 | 0.0044 | 0.0000 | 0.2001 | $\mu_{4,10}$ | -0.1031 | 0.1017 | 0.0013 | 0.3158 hspace0.6cm |
| $\mu_{1,9}$ | -0.0020 | -0.0019 | 0.0000 | 0.2008 | $\mu_{5,6}$ | 9.9388 | 9.9479 | 0.0091 | 0.0155 hspace0.6cm |

[a]all values are in units of $1 \times 10^{-31}$ C·m
[b]Obtained by inverting data for 10 optimal fields
[c]Obtained by inverting sub-optimal data for 500 random fields

TABLE II: (continued)

Optimal identification quality versus that of a sub-optimal identification of the transition dipole moments of a 10-level Hamiltonian using noise-contaminated fields containing both the $\nu \rightarrow \nu + 1$ and $\nu \rightarrow \nu + 2$ resonance frequencies of $H_0$.

| | *Optimal Identification* | | | *Conventional* | *Optimal Identification* | | | | *Conventional* |
|---|---|---|---|---|---|---|---|---|---|
| $h_i^a$ | $<h_i^b$ | $>h_i^b$ | $\Delta h_i^b$ | $\Delta h_i^c$ | $h_i$ | $<h_i^b$ | $>_{h_i*}^b$ | $\Delta h_i^b$ | $\Delta h*_i{}^c$ hspace0.6cm |
| $\mu_{1,10}$ | 0.0009 | 0.0009 | 0.0000 | 0.7187 | $\mu_{5,7}$ | -3.7370 | -3.7290 | 0.0080 | 0.0352 hspace0.6cm |
| $\mu_{2,3}$ | 7.0792 | 7.0792 | 0.0000 | 0.0201 | $\mu_{5,8}$ | 1.5326 | 1.5339 | 0.0013 | 0.3021 hspace0.6cm |
| $\mu_{2,4}$ | -1.8250 | -1.8213 | 0.0037 | 0.0337 | $\mu_{5,0}$ | -0.6823 | - 0.6750 | 0.0073 | 0.3155 hspace0.6cm |
| $\mu_{2,5}$ | 0.5470 | 0.5480 | 0.0010 | 0.8111 | $\mu_{5,10}$ | 0.3222 | 0.3268 | 0.0046 | 0.1817 hspace0.6cm |
| $\mu_{2,6}$ | -0.1872 | -0.1851 | 0.0021 | 0.0878 | $\mu_{6,7}$ | 10.4084 | 10.4211 | 0.0127 | 0.0058 hspace0.6cm |
| $\mu_{2,7}$ | 0.0692 | 0.0701 | 0.0009 | 0.0922 | $\mu_{6,8}$ | -4.2744 | -4.2726 | 0.0018 | 0.0009 hspace0.6cm |
| $\mu_{2,8}$ | -0.0288 | -0.0284 | 0.0005 | 0.3049 | $\mu_{6,9}$ | 1.8916 | 1.8985 | 0.0070 | 0.9635 hspace0.6cm |
| $\mu_{2,9}$ | 0.0126 | 0.0128 | 0.0002 | 0.1441 | $\mu_{6,10}$ | -0.9087 | -0.8922 | 0.0165 | 0.4370 hspace0.6cm |
| $\mu_{2,10}$ | -0.0061 | -0.0060 | 0.0001 | 0.2081 | $\mu_{7,8}$ | 10.7185 | 10.7185 | 0.0000 | 0.0235 hspace0.6cm |
| $\mu_{3,4}$ | 8.3500 | 8.3533 | 0.0033 | 0.0332 | $\mu_{7,9}$ | -4.7555 | -4.7530 | 0.0025 | 0.0087 hspace0.6cm |
| $\mu_{3,5}$ | -2.5145 | -2.5095 | 0.0060 | 0.0383 | $\mu_{7,10}$ | 2.2611 | 2.2661 | 0.0050 | 0.0986 hspace0.6cm |
| $\mu_{3,6}$ | 0.8500 | 0.8519 | 0.0019 | 0.2342 | $\mu_{8,9}$ | 10.8851 | 10.8900 | 0.0059 | 0.0190 hspace0.6cm |
| $\mu_{3,7}$ | -0.3223 | -0.3176 | 0.0047 | 0.0999 | $\mu_{8,10}$ | -5.1798 | -5.1755 | 0.0043 | 0.0118 hspace0.6cm |
| $\mu_{3,8}$ | 0.1313 | 0.1324 | 0.0011 | 0.3911 | $\mu_{9,10}$ | 10.9182 | 10.9182 | 0.0000 | 0.0144 hspace0.6cm |
| $\mu_{3,9}$ | -0.0587 | -0.0577 | 0.0010 | 0.2818 | Average Error | | | 0.0032 | 0.1927 hspace0.6cm |

[a]all values are in units of $1\times10^{-31}$ C·m
[b]Obtained by inverting data for 10 optimal fields
[c]Obtained by inverting sub-optimal data for 500 random fields

TABLE III:

Optimal identification quality versus that of a sub-optimal identification of the transition dipole moments of a 10-level Hamiltonian using noise-contaminated fields containing the $\nu \rightarrow \nu + 1$, $\nu \rightarrow \nu + 2$ and $\nu \rightarrow \nu + 3$ resonance frequencies of $H_0$.

| | *Optimal Identification* | | | *Conventional* | *Optimal Identification* | | | | *Conventional* |
|---|---|---|---|---|---|---|---|---|---|
| $h_i^a$ | $<h_i^b$ | $>h_i^b$ | $\Delta h_i^b$ | $\Delta h^*{}_i^c$ | $h_i$ | $<h_i^b$ | $>h_i^b$ | $\Delta h_i^b$ | $\Delta h_i{}^{*c}$ hspace0.6cm |
| $\mu_{1,2}$ | 5.1855 | 5.1855 | 0.0000 | 0.0207 | $\mu_{3,10}$ | 0.0272 | 0.0272 | 0.0000 | 0.4029 hspace0.6cm |
| $\mu_{1,3}$ | -1.0793 | -1.0793 | 0.0000 | 0.0207 | $\mu_{1,5}$ | 9.2714 | 9.2714 | 0.0000 | 0.0004 hspace0.6cm |
| $\mu_{1,4}$ | 0.2754 | 0.2800 | 0.0045 | 0.0194 | $\mu_{4,6}$ | -3.1474 | -3.1474 | 0.0000 | 0.0085 hspace0.6cm |
| $\mu_{1,5}$ | -0.0837 | -0.0825 | 0.0011 | 0.3251 | $\mu_{4,7}$ | 1.1856 | 1.1850 | 0.0005 | 0.0055 hspace0.6cm |
| $\mu_{1,6}$ | 0.0281 | 0.0286 | 0.0004 | 0.1627 | $\mu_{4,8}$ | -0.4855 | -0.4846 | 0.0009 | 0.1911 hspace0.6cm |
| $\mu_{1,7}$ | -0.0106 | -0.0106 | 0.0000 | 0.3712 | $\mu_{1,9}$ | 0.2146 | 0.2171 | 0.0025 | 0.0999 hspace0.6cm |
| $\mu_{1,8}$ | 0.0044 | 0.0044 | 0.0000 | 0.2001 | $\mu_{4,10}$ | -0.1031 | -0.1017 | 0.0013 | 0.2772 hspace0.6cm |
| $\mu_{1,0}$ | -0.0020 | -0.0019 | 0.0000 | 0.2008 | $\mu_{5,6}$ | 9.9388 | 9.9490 | 0.0002 | 0.0155 hspace0.6cm |
| $\mu_{1,10}$ | 0.0009 | 0.0009 | 0.0000 | 0.7187 | $\mu_{5,7}$ | -3.7370 | -3.7290 | 0.0080 | 0.0352 hspace0.6cm |
| $\mu_{2,3}$ | 7.0792 | 7.0792 | 0.0000 | 0.0201 | $\mu_{5,8}$ | 1.5332 | 1.5334 | 0.0002 | 0.1926 hspaoe0.6cm |
| $\mu_{2,4}$ | -1.8250 | -1.8213 | 0.0037 | 0.0337 | $\mu_{5,9}$ | -0.6823 | -0.6750 | 0.0073 | 0.1952 hspace0.6cm |
| $\mu_{2,5}$ | 0.5470 | 0.5480 | 0.0010 | 0.0111 | $\mu_{5,10}$ | 0.3222 | 0.3268 | 0.0046 | 0.1817 hspace0.6cm |
| $\mu_{2,6}$ | -0.1872 | -0.1851 | 0.0021 | 0.0878 | $\mu_{6,7}$ | 10.4100 | 10.4120 | 0.0020 | 0.0058 hspace0.6cm |
| $\mu_{2,7}$ | 0.0692 | 0.0701 | 0.0009 | 0.0922 | $\mu_{6,8}$ | -4.2744 | 4.2726 | 0.0018 | 0.0009 hspace0.6cm |
| $\mu_{2,8}$ | -0.0286 | -0.0286 | 0.0000 | 0.2143 | $\mu_{6,9}$ | 1.8916 | 1.8985 | 0.0070 | 0.7825 hspace0.6cm |
| $\mu_{2,9}$ | 0.0128 | 0.0128 | 0.0000 | 0.1333 | $\mu_{6,10}$ | -0.9087 | -0.9005 | 0.0082 | 0.3629 hspace0.6cm |
| $\mu_{2,10}$ | -0.0061 | -0.0061 | 0.0000 | 0.1923 | $\mu_{7,8}$ | 10.7185 | 10.7185 | 0.0000 | 0.0103 hspace0.6cm |
| $\mu_{3,4}$ | 8.3500 | 8.3533 | 0.0033 | 0.0332 | $\mu_{7,8}$ | -4.7555 | -4.7530 | 0.0025 | 0.0083 hspace0.6cm |
| $\mu_{3,5}$ | -2.5099 | -2.5095 | 0.0004 | 0.0383 | $\mu_{7,10}$ | 2.2611 | 2.2661 | 0.0050 | 0.0221 hspace0.6cm |
| $\mu_{3,6}$ | 0.8500 | 0.8519 | 0.0019 | 0.0249 | $\mu_{8,9}$ | 10.8851 | 10.8900 | 0.0059 | 0.0099 hspace0.6cm |
| $\mu_{3,7}$ | -0.3202 | -0.3200 | 0.0002 | 0.0893 | $\mu_{8,10}$ | -5.1763 | - 5.1764 | 0.0001 | 0.0182 hspace0.6cm |

[a] All values are in units of $1\times10^{-31}$ C·m

[b] Obtained by inverting data for 10 optimal fields

[c] Obtained by inverting sub-optimal data for 500 random fields

TABLE III: (continued)

Optimal identification quality versus that of a sub-optimal identification of the transition dipole moments of a 10-level Hamiltonian using noise-contaminated fields containing the $\nu \rightarrow \nu + 1$, $\nu \rightarrow \nu + 2$ and $\nu \rightarrow \nu + 3$ resonance frequencies of $H_0$.

| | *Optimal Identification* | | | *Conventional* | *Optimal Identification* | | | | *Conventional* |
|---|---|---|---|---|---|---|---|---|---|
| $h_i^a$ | $<h_i^b$ | $>h_i^b$ | $\Delta h_i^b$ | $\Delta h^{*c}_i$ | $h_i$ | $<h_i^b$ | $>h_i^b$ | $\Delta h_i^b$ | $\Delta h_i^{*c}$ hspace0.6cm |
| $\mu_{3,8}$ | 0.1313 | 0.1324 | 0.0011 | 0.1611 | $\mu_{9,10}$ | 10.9182 | 10.9182 | 0.0000 | 0.0044 hspace0.6cm |
| $\mu_{3,9}$ | -0.0587 | -0.0577 | 0.0010 | 0.1218 | Average Error | | | 0.0017 | 0.1358 hspace0.6cm |

[a]All values are in units of $1 \times 10^{-31}$ C·m
[b]Obtained by inverting data for 10 optimal fields
[c]Obtained by inverting sub-optimal data for 500 random fields

TABLE IV:

Optimal identification quality, measured as the uncertainty in each optimally inverted variable $\Delta h_i^*$, versus the experimental error in the data, $\varepsilon^{(lab)}$.

| | $\Delta h_i^*$ versus $\varepsilon^{(lab)}$ | | | $\Delta h_i^*$ versus $\varepsilon^{(lab)}$ | | | |
|---|---|---|---|---|---|---|---|
| $h_i^a$ | 1% | 2% | 5% | $h_i^a$ | 1% | 2% | 5% |
| $\mu$1,2 | 0.0022 | 0.0020 | 0.0020 | $\mu_{3,10}$ | 0.0004 | 0.0018 | 0.0031 |
| $\mu_{1,3}$ | 0.0061 | 0.0091 | 0.0093 | $\mu_{4,5}$ | 0.0000 | 0.0030 | 0.0025 |
| $\mu_{1,4}$ | 0.0045 | 0.0063 | 0.0061 | $\mu_{4,6}$ | 0.0373 | 0.0020 | 0.0031 |
| $\mu_{1,5}$ | 0.0011 | 0.0051 | 0.0058 | $\mu_{4,7}$ | 0.0105 | 0.0030 | 0.0083 |
| $\mu_{1,6}$ | 0.0004 | 0.0099 | 0.0099 | $\mu_{4,8}$ | 0.0049 | 0.0053 | 0.0057 |
| $\mu_{1,7}$ | 0.0002 | 0.0044 | 0.0071 | $\mu_{4,9}$ | 0.0025 | 0.0119 | 0.0201 |
| $\mu_{1,8}$ | 0.0000 | 0.0001 | 0.0001 | $\mu_{4,10}$ | 0.0013 | 0.0015 | 0.0018 |
| $\mu_{1,9}$ | 0.0000 | 0.0003 | 0.0007 | $\mu_{5,6}$ | 0.0091 | 0.0007 | 0.0011 |
| $\mu_{1,10}$ | 0.0000 | 0.0002 | 0.0008 | $\mu_{5,7}$ | 0.0080 | 0.0011 | 0.0132 |
| $\mu_{2,3}$ | 0.0000 | 0.0004 | 0.0005 | $\mu_{5,8}$ | 0.0260 | 0.0052 | 0.0055 |
| $\mu_{2,4}$ | 0.0164 | 0.0235 | 0.0235 | $\mu_{5,9}$ | 0.0073 | 0.0158 | 0.0110 |
| $\mu_{2,5}$ | 0.0102 | 0.0332 | 0.0042 | $\mu_{5,10}$ | 0.0046 | 0.0000 | 0.0003 |
| $\mu_{2,6}$ | 0.0009 | 0.0003 | 0.0006 | $\mu_{6,7}$ | 0.0127 | 0.0090 | 0.0030 |
| $\mu_{2,7}$ | 0.0005 | 0.0003 | 0.0007 | $\mu_{6,8}$ | 0.0018 | 0.0190 | 0.0099 |
| $\mu_{2,8}$ | 0.0002 | 0.0003 | 0.0006 | $\mu_{6,9}$ | 0.0070 | 0.0118 | 0.0311 |
| $\mu_{2,9}$ | 0.0001 | 0.0026 | 0.0028 | $\mu_{6,10}$ | 0.0165 | 0.0092 | 0.0099 |
| $\mu_{2,10}$ | 0.0033 | 0.0029 | 0.0029 | $\mu_{7,8}$ | 0.0000 | 0.0119 | 0.0187 |
| $\mu_{3,4}$ | 0.0060 | 0.0002 | 0.0005 | $\mu_{7,9}$ | 0.0111 | 0.0020 | 0.0023 |
| $\mu_{3,5}$ | 0.0118 | 0.0006 | 0.0005 | $\mu_{7,10}$ | 0.0195 | 0.0201 | 0.0325 |
| $\mu_{3,6}$ | 0.0047 | 0.0010 | 0.0041 | $\mu_{8,9}$ | 0.0151 | 0.0006 | 0.0011 |
| $\mu_{3,7}$ | 0.0011 | 0.0073 | 0.0074 | $\mu_{8,10}$ | 0.0043 | 0.0008 | 0.0010 |
| $\mu_{3,8}$ | 0.0010 | 0.0020 | 0.0018 | $\mu_{9,10}$ | 0.0000 | 0.0182 | 0.0192 |
| $\mu_{3,9}$ | 0.0049 | 0.0049 | 0.0058 | Average | 0.0056 | 0.0060 | 0.0067 |

[a]All values are in units of $1 \times 10^{-31}$ C·m

**Section 2**

In this section, the symbols, equation numbers, table numbers, and reference numbers pertain to this section and not the other sections discussed herein. Usage of mathematical variables and equations thereof in this section pertain only to this section and may not pertain to the other sections which follow. The figure numbers denoted "x" in

this section refer to Figures numbered as "2.x", e.g., reference to "figure 1" in this section refers to Figure 2.1.

In this embodiment of the present invention, a closed loop learning controller is introduced for teaching lasers to manipulate quantum systems for the purpose of optimally identifying Hamiltonian information. In this embodiment, the closed loop optimal identification algorithm operates by revealing the distribution of Hamiltonians consistent with the data. The control laser is guided to perform additional experiments, based on minimizing the dispersion of the distribution. Operation of such an apparatus can be readily carried for two model finite dimensional quantum systems.

In one embodiment of the present invention, a closed loop procedure for optimally identifying (OI) Hamiltonian information is provided, which takes advantage of the freedom inherent with shaped control fields to manipulate physical systems. In this embodiment, execution of the OI concept is particularly attractive in situations that may exploit the emerging capabilities of closed loop laser control of quantum dynamics phenomena (see, e.g., R.S. Judson and H. Rabitz, *Phys. Rev. Lett.,* **68**, 1500-1503 (1992), and T. Brixner, N.H. Damrauer, and G. Gerber, *Adv. Atom. Mol. Opt. Phys.,* **46**, 1 (2001)). Successful control over the dynamics of a quantum system typically relies on high finesse manipulation of constructive and destructive quantum wave interferences through suitably shaped laser fields (see, e.g., H. Rabitz, R. de Vivie-Riedle, M. Motzkus, and K. Kompa, *Science,* **288**, 824-828 (2000). Recognizing that the outcome of such experiments can be sensitive to the often imprecisely known Hamiltonian led to the suggestion of employing closed loop laboratory techniques for directly teaching lasers how to achieve quantum system control (R.S. Judson, id.). This procedure circumvents the need for prior knowledge about the system Hamiltonian, and a growing number of successful closed loop quantum control experiments have been reported, e.g., T. Brixner, et al., id; A. Assion, et al., *Science,* **282**, 919-922 (1998); R.J. Levis, G. Menkir, and H. Rabitz, *Science,* **292**, 709-713 (2001); J. Kunde, et al., *Appl. Phys. Lett.,* **77**, 924-926 (2000); T. Weinacht, J. White, and P. Bucksbaum, *J. Phys. Chem.,***103**, 10166-10168 (1999); T. Hornung, R. Meier, and M. Motzkus, *Chem. Phys. Lett.,* **326**, 445-453 (2000) ; and R. Bartels, et al., *Nature,* **406**, 164-166 (2000).

In one embodiment of the present invention, similar closed loop laboratory operations can be redirected for the purpose of extracting information about the underlying Hamiltonian, rather than meeting some particular observational target. In this embodiment, high quality Hamiltonian structure (e.g., matrix elements, potentials, dipoles, etc.) is obtained. The OI algorithm guides a controlled collection of data to reveal an optimal set of experiments that are robust to the noise and optimal for inversion. The OI device deduces tailored controls and associated observations that minimizes the uncertainty, typically absolutely minimizes the uncertainty, about the underlying Hamiltonian.

Figure 1 presents an overall view of the basic OI machine components of one embodiment of the present invention. The inversion algorithm in the loop extracts Hamiltonian information from the laboratory observations, while the learning control algorithm suggests new laser pulses guided by the goal of improving the quality of the inversion. The inversion algorithm typically provides as much information as possible about the full distribution of Hamiltonians consistent with the data in order for the learning control algorithm to make reliable choices for minimizing the breadth of the distribution. As with closed loop learning control aimed at a specific dynamical target, the learning control algorithm in the OI loop can attractively function using genetic algorithms (GA), see, e.g., D.E. Goldberg, in *Genetic Algorithms in Search. Optimization and Machine Learning* (Addison-Wesley Publishing Company, Inc., 1989); B.J. Pearson, J.L. White, T.C. Weinacht, and PH. Buckbaum, *Phys. Rev. A,* **63**, 063412-1-12 (2001); and D. Zeidler, S. Frey, K.-L. Kompa, and M. Motzkus *Phys. Rev.* A, 64, 023420-1-13 (2001). The requirement that the inversion algorithm produce a distribution of solutions (i.e., Hamiltonians) points towards GA's as the typical procedure in that component as well.

In this embodiment of the present invention, each excursion around the loop (i.e., iteration) typically involves a family of K laser control fields $\varepsilon_k(t)$, k = 1,2,...,K, where a particular field $\varepsilon_k(t)$ is associated with a concomitant laboratory observation $\Phi_k^{lab}$. Typically, the action of each field upon the quantum system is repeated due to field and observation noise, yielding a distribution of observations $P_k^{lab}$ [$\Phi_k^{lab}$ ,$\varepsilon_k$]. This distribution may have a Gaussian profile or another type of distribution profile. In turn, the inversion of the k-th data set typically results in a distribution $q_k(H)$ of consistent Hamiltonians H. In this embodiment, H is typically described using a collection of matrix elements or some other representation of the relevant Hamiltonian components. The shape of the distribution $q_k(H)$ is typically determined by the laboratory data distribution and the various dynamical intricacies driving the quantum phenomena. The GA guiding the inversion is preferably performed with a very large population (e.g., $N_s \gtrsim 500$) of Hamiltonians $H_s$, s = 1,2, ...,$N_s$ to generate the distribution $q_k(H)$. The inversion is typically carried out aiming at a match between the laboratory and theoretical observational distributions, $P_k^{lab}$ and $P_k^{th}$, where the inversion is typically performed by taking into account the reported errors in the control field and observations. A cost function guiding the GA for this purpose,

$$J_{inv}^{k} = \frac{1}{N_s}\sum_{s=1}^{N_s} J_{inv}\left(H_s, \Phi_k^{lab}, \varepsilon_k\right) \quad k = 1,2,\ldots,K$$

could have any of a variety of standard forms. A typical choice is to minimize the norm $\|P_k^{lab} - P_k^{th}\|$ over the set of consistent Hamiltonians $\{H_s\}$ to yield the distribution of acceptable Hamiltonians $q_k(H)$ associated with the k-th control field. A suitable error metric $\Delta H_k$ may be obtained (e.g., the left and right relative error variance of the relevant components of H) from $q_k(H)$. Incorporating a suitable error metric, such as $\Delta H_k > 0$, a cost function of the general form $J_{cont}^{k} = J_{inv}^{k} + \Delta H_k + \|\varepsilon_k\|$, k = 1,2,...,K can be utilized to seek better control fields for another excursion around the loop. The norm $\|\varepsilon_k\|$ serves to maintain control field simplicity, build in any laboratory constraints on the field or guide the apparatus away from introducing laser pulse shapes that have little significance for a successful inversion. In this regard, the choice of a new family of control fields $\{\varepsilon_k(t)\}$ for another excursion around the loop is typically made by balancing the inversion quality $J_{inv}^{k}$ (which is expected to be readily achieved, such that $J_{inv}^{k} \simeq 0$) against minimization of the Hamiltonian uncertainty $\Delta H_k$, along with some weighting on $\|\varepsilon_k\|$ to keep the control field within a physically meaningful range. The new family of control fields $\{\varepsilon_k(t)\}$ is deduced by the GA considering the performance of the prior family of controls in successfully minimizing $J_{cont}^{k}$. As with the current closed loop quantum control experiments, there is considerable flexibility in all of these algorithmic aspects, including in the choice of operating conditions for the two GA's guiding the inversion and choice of controls. OI device performance (i.e., the production of an absolute minimum dispersion in the distribution $q_k(H)$) for at least one value of k will typically depend on these algorithmic details.

Two illustrations were carried out to demonstrate the OI machine concepts in Figure 1. Both illustrations involve a system corresponding to HF (A. Matsumoto and K. Iwamoto, *J. Quant. Spectrose. Transfer*, **55**, 457 (1996)) having a Hamiltonian of the form $H = H_0 - \mu \cdot \varepsilon(t)$, where $H_0$ is field-free, and $\mu$ is the system dipole. This system serves as a model to test the OI algorithm with realistic Hamiltonian matrix elements. In practice, the iterative inversion typically uses the relative error metric $\Delta H_k$, which is the ratio of current estimated errors to the estimate for the associated matrix elements in $H_k$. Thus, the normalization places the small and large matrix elements on an equal footing and provides a rather generic test of the OI algorithm. The simulations will be carried out with noise in the control fields and in the observations, where the overall error distribution

$$P_k^{lab}\left[\Phi_k^{lab}, \varepsilon_k\right]$$

is assumed to arise from a root mean square combination of both error sources. The GA's used for inversion and control in both illustrations performed in a standard fashion with mutation and crossover operations (see, e.g., D.E. Goldberg, *id*., B.J. Pearson, et al., *id*. and D. Zeidler, et al.).

For demonstration of the OI concept, the control fields were chosen to have the form

$$\varepsilon_k(t) = \exp\left[-(t/\sigma)^2\right]\sum_{\ell} a_{\ell}^{k}\cos(\omega_{\ell} + \phi_{\ell}^{k}),$$

where the actual controls are the amplitudes $a_{\ell}^{k}$ and phases $\phi_{\ell}^{k}$ associated with the system resonance frequencies $\omega_{\ell}$. The fields had a width of $\sigma$ = 200 fs.

The first illustration consisted of a ten-level Hamiltonian, with the data $\phi_{k,i}^{lab}$, i = 1,2,...,10 for the k-th control experiment being the state populations at the time T = 1.5 ps, after the control field $\varepsilon_k(t)$ evolved the system from its ground state. The matrix $H_0$ was taken as diagonal and known, with the goal of deducing the real dipole matrix elements $\{\mu_{nm}\}$. The latter elements [15] had the natural trend of having larger magnitude associated with smaller values of |n - m|, n ≠ m. With $\mu_{nm}$ = 0, there are a total of 45 unknown matrix elements to be determined by the closed loop OI

operation. The inversion quality of the 17 most significant elements $\mu_{n,n\pm1}$, $\mu_{n,n\neq\pm2}$ is reported here, although comparable high quality information was obtained for the entire matrix. The control fields guiding the machine operations in Figure 1 were capable of inducing up to third order transitions $|n - m| \leq 3$. Figure 2 shows the error distribution for the extracted 17 matrix elements $\mu_{n,n\pm1}$, $\mu_{n,n\pm2}$, considering the laboratory error distributions $P_k^{lab}$ as uniform with a standard deviation of 1%. Excellent quality dipole matrix elements were extracted after a number of cycles around the loop in Figure 1. The mean error of the extracted elements was less than 0.1%, which is an order of magnitude smaller than the laboratory data error. Importantly, this high quality extracted information was obtained using a single optimally deduced control field and its 10 observations. The fact that a successful inversion may be performed with only 10 observations to determine 17 unknown matrix elements reflects the fact that the relation between the data and the sought-after matrix elements in the inversion is highly nonlinear. This nonlinear feature is advantageous in aiding the OI procedure to find a single optimal control experiment that produces a high quality Hamiltonian consistent with the data. The OI process required less than 500 experiments to deduce the single optimal experiment. As a point of comparison, a series of non-optimal reference experiments were simulated, involving 500 randomly chosen amplitudes and phases for the control fields, and therefore, 5000 population observations. Utilizing all of this collective data for inversion produced the associated error distribution also shown in Figure 2. Despite the fact of having an overwhelming amount of data (i.e., 5000 data points to determine 17 unknown matrix elements), the quality of the non-optimal inversion is far inferior to that obtained by OI using a single identified field and its associated 10 observations. To further illustrate the power of the OI machine concept, additional simulations were carried out with observation errors of 2% and 5%. Despite these quite significant increases in laboratory error, the associated dipole matrix element error distributions were almost identical to the optimal one shown in Figure 2, although the optimal fields depended on the amount of noise in the data. This behavior indicates that the OI machine sought out the best control field to filter out the data noise under each set of conditions.

As a second illustration, both $H_0$ (i.e., the potential portion of the field free Hamiltonian) and $\mu$ were treated as unknowns in a corresponding real Hamiltonian matrix of dimension 8. Again, considering that $\mu_{nn} = 0$, there are a total of 64 matrix elements as unknowns in $H_0$ and $\mu$. These matrix elements are represented in the basis associated with the observed populations. The data consisted of the populations sampled at evenly spaced times out to 1 ps, and the laboratory error was taken as 2%. Figure 3 shows the effect of increasing amounts of data upon the quality of the inversion of both $H_0$ and $\mu$. With a set of eight observations at a single time of 1 ps, the average error for $\mu$ is already less than the laboratory error, while that of $H_0$ is somewhat larger. The situation improves when taking in data at a second time of 0.5 ps, and finally, at four times spaced by 0.25 ps, for a total of 32 data points. The quality of both the extracted $H_0$ and $\mu$ matrix elements is excellent, with average errors being at least an order of magnitude smaller than the laboratory data error. In contrast, Figure 3 also shows that taking a total of 200 data points using a set of random control field phases and amplitudes produced a totally unacceptable inversion, with extracted matrix element errors approximately an order of magnitude larger than the noise in the observations.

Both of these examples indicate that high quality Hamiltonian information may be determined from an optimal set of experiments honed for that specific purpose. The extracted Hamiltonian quality was far better than the noise in the input data. This behavior arises from the closed loop OI machine deducing an optimal control field tailored to the inversion. The data associated with the optimal field combined with the underlying exploratory character of the controlled evolution leaves essentially no freedom for the identified Hamiltonian, except for a narrow distribution around the truth. In both illustrations, operating in a "standard" fashion with a very large set of random control experiments produced distinctly inferior inversion results, indicating that the processes involved in achieving OI performance are quite subtle. This point was also evident from examination of some of the fields put aside by the closed loop control algorithm on the way to determining the best final OI experiment; those discarded fields (especially during the early cycles of the loop) and their associated data gave inferior inversion results.

Full synchronization of the loop operations is desirable, as indicated in Figure 1, especially to take advantage of the high duty cycle of the laser control experiments. In this regard, the most time consuming step in Figure 1 is typically the data inversion. A variety of techniques may be employed to accelerate this operation, including prior mapping of trial Hamiltonians upon the data, such as described in J.M. Geremia and H. Rabitz, *J. Chem. Phys.,* 115, 8899-8912 (2001), and parallelizing the inversion computations. This shows that the OI device and algorithm methods are useful for extracting high quality Hamiltonian information. OI devices can be readily provided with essentially no changes in the laser control apparatus configurations that are presently available.

The control principles described above for identifying Hamiltonians can also be applied for identifying molecular structure in another embodiment of the present invention. Referring to Figure 4 in this section (Figure 2.4), a quantum system (e.g., a composition) is manipulated (i.e., "controlled") in a measurement apparatus arising from an interaction of the quantum system with a tunable field pulse. The tunable field pulse is tuned (i.e., "shaped") by a control pulse shaper (i.e., a tunable field pulse generator), and the characterization of the pulse fields is sent to the inversion algorithm, along with the measurement results (i.e., arising from the detected signals) for estimating the molecular

structure of the controlled quantum system. The quality of the inversion is used by a learning algorithm to generate an optimal pulse shape (i.e., field pulse characterization) that minimizes the variance with a subsequent determination of the inversion quality of the molecular structure. In this embodiment, the measurement apparatus includes a detector for detecting a signal arising from an interaction between the observation field and the component. In this embodiment, the detected signal is typically sensitive to the molecular structure and driven by the tunable field pulse.

In one embodiment for identifying molecular structure, the control field (i.e., the field pulse that manipulates the composition) and the detected signals arising from the interaction of the composition with an observation field are used as input parameters by the inversion algorithm to estimate a family of molecular structures that is consistent with these input parameters. The inversion quality is typically a measurement of the degree of variation (e.g., the statistical variance) among the family members. As the variation within the family of consistent molecular structures decreases, the inversion quality typically increases. Thus, in this embodiment, the optimal identification algorithm operates to minimize the variance in the family of molecular structures consistent with the input parameters. The molecular structure is, optimally identified when a user-defined level of inversion quality is achieved.

The family of consistent molecular structures can be identified using any number and combination of characterizing parameters that are known to be useful for describing the structure of molecules. Examples of suitable molecular structural parameters include the following: atom type (i.e., any element having at least one nucleon), number of atoms, bond lengths between adj acent atoms, bond angles between the atoms, bond type (e.g., s, p, sp, $sp^2$, $sp^3$, d, f, etc.), number of bonds, functional groups, number of functional groups, ionization state, molecular weight, molecular weight distribution, mass/charge ratio, nuclear isotope, electronic quantum state, macromolecular conformation, intra-molecular interactions (e.g., hydrogen bonding in mRNA forming secondary loop structures), and intermolecular interactions (e.g., van der Waals bonds, hydrogen bonds), particularly in condensed matter systems.

In another embodiment of the present invention, there is provided a quantum dynamic discriminator for discriminating the characteristics (e.g., 'quality') of components in a composition. Referring to Figure 5 in this section (Figure 2.5), a quantum system (e.g., a composition) is manipulated (i.e., "controlled") in a measurement apparatus arising from an interaction of the quantum system with a tunable field pulse. The tunable field pulse is tuned (i.e., "shaped") by a control pulse shaper (i.e., a tunable field pulse generator), and a detected signal (i.e., 'measurement results') arising from the interaction of the controlled quantum system with an observation field (not shown) is sent to the learning algorithm. The learning algorithm varies the subsequent pulse shape in the iteration loop in response to the previous detected signal to enhance the discrimination of the component.

In a related embodiment, the measurement results along with characterization information from the field pulses may be used by a suitable inversion algorithm (as depicted above in Figure 2.1) to extract compositional information (e.g, the identification and amount of components, i.e., the component distribution). In this embodiment, the control principles described above for identifying Hamiltonians can also be applied for identifying molecular structure in another embodiment of the present invention. Here, a quantum system (e.g., a composition) is manipulated (i.e., "controlled") in a measurement apparatus arising from an interaction of the quantum system with a tunable field pulse. The tunable field pulse is tuned (i.e., "shaped") by a control pulse shaper (i.e., a tunable field pulse generator), and the characterization of the pulse fields is sent to the inversion algorithm, along with the measurement results (i.e., arising from the detected signals) for estimating the compositional distribution of the controlled quantum system. The quality of the inversion is used by a learning algorithm to generate an optimal pulse shape (i.e., field pulse characterization) that minimizes the variance with a subsequent determination of the inversion quality of the compositional distribution. In this embodiment, the measurement apparatus includes a detector for detecting a signal arising from an interaction between the observation field and the components in the composition. In this embodiment, the detected signal is typically sensitive to the compositional distribution and driven by the tunable field pulse.

In one embodiment for identifying compositional information, the control field (i.e., the field pulse that manipulates the composition) and the detected signals arising from the interaction of the composition with an observation field are used as input parameters by the inversion algorithm to estimate a family of compositional distributions that is consistent with these input parameters. The inversion quality is typically a measurement of the degree of variation (e. g., the statistical variance) among the family members. As the variation within the family of consistent compositional distributions decreases, the inversion quality typically increases. Thus, in this embodiment, the optimal identification algorithm operates to minimize the variance in the family of compositional distributions consistent with the input parameters. The compositional distribution is optimally identified when a user-defined level of inversion quality is achieved.

The family of compositional distributions can be identified using any number and combination of characterizing parameters that are known to be useful for describing compositional distributions. Examples of compositional distribution characterizing parameters include the following: atom type (i.e., any element having at least one nucleon), number of atoms, molecule type, number of atoms, functional group type, number of functional groups, functional group molecular weight, component molecular weight, overall molecular weight, bond lengths between adjacent atoms, bond angles between the atoms, bond type (e.g., s, p, sp, $sp^2$, $sp^3$, d, f, etc.), ionization state, nuclear isotope, electronic quantum state, macromolecular conformation, intra-molecular interactions (e.g., hydrogen bonding in mRNA forming

secondary loop structures), and intermolecular interactions (e.g., van der Waals bonds, hydrogen bonds), particularly in condensed matter systems.

In another embodiment of the present invention, there is provided an analytical spectrometer which uses optimal dynamic discrimination techniques for controlling (e.g., enhancing) the peak intensity of at least one component of a composition (e.g., sample). Referring to Figure 6 in this section (Figure 2.6), a quantum system (e.g., a composition) is manipulated (i.e., "controlled") in a measurement apparatus arising from an interaction of the quantum system with a tunable field pulse. The tunable field pulse is tuned (i.e., "shaped") by a control pulse shaper (i.e., a tunable field pulse generator), and a detected signal (i.e., 'measurement results') arising from the interaction of the controlled quantum system with an observation field (not shown) is sent to the learning algorithm. The learning algorithm varies the subsequent pulse shape in the iteration loop in response to the previous detected signal to control the peak intensity of the component in the analytical spectrum.

In a related embodiment, an analytical spectrometer is provided that is able to control peak intensities as well as identify additional characterization information of the composition (e.g., Hamiltonians, molecular structures, compositional distributions, and any combination thereof). In this embodiment, the measurement results along with characterization information from the field pulses may be used by any one, or combination of, the inversion algorithms provided above, e.g., as depicted in Figure 2.1) to extract any additional characterization information about the composition as described above. Examples of how additional characterization information is obtainable are as follows: Hamiltonians can be identified by using a suitable inversion algorithm for Hamiltonian extraction (as described earlier); molecular structure information can be obtained using a suitable inversion algorithm for molecular structure extraction (as described earlier); and compositional information (e.g, the identification and amount of components, i.e., the component distribution) can be obtained by using a suitable inversion algorithm for compositional distribution extraction (as described earlier).

Here, a quantum system (e.g., a composition) is manipulated (i.e., "controlled") in a measurement apparatus arising from an interaction of the quantum system with a tunable field pulse. The tunable field pulse is tuned (i.e., "shaped") by a control pulse shaper (i.e., a tunable field pulse generator), and the characterization of the pulse fields is sent to the inversion algorithm, along with the measurement results (i.e., arising from the detected signals) for estimating the additional information that is sought. The quality of the inversion is used by a learning algorithm to generate an optimal pulse shape (i.e., field pulse characterization) that minimizes the variance with a subsequent determination of the inversion quality of the additional characterization information that is sought. In this embodiment, the measurement apparatus includes a detector for detecting a signal arising from an interaction between the observation field and the components in the composition. In this embodiment, the detected signal is typically sensitive to the additional characterization information that is sought and driven by the tunable field pulse.

**Section 3**

In this section, the symbols, equation numbers, table numbers, and reference numbers pertain to this section and not the other sections discussed herein. Usage of mathematical variables and equations thereof in this section pertain to this section and may not pertain to the other sections which follow. The figure numbers denoted "x" in this section refer to Figures numbered as "3.x", e.g., reference to "figure 1" in this section refers to Figure 3.1.

In one embodiment of the present invention there is provided an optimal dynamic discrimination (ODD) approach that exploits the richness of quantum molecular dynamics. Although the dynamics of similar quantum systems are governed by related Hamiltonians, each species could evolve in a distinct fashion under the same properly tailored external control. Thus the detection "dimension" is dynamically expanded, opening up the prospect for ODD. Exploiting ODD draws on emerging laser pulse shaping techniques combined with closed loop optimal learning control concepts, e.g., as provided in (2) Assion, A.; Baumert, T.; Bergt, M.; Brixner, T.; Kiefer, B.; Seyfried, V.; Strehle, M.; Gerber, G. Science 1998, 282, 919. (3) Bardeen, C. J.; Yakovlev, V. V.; Wilson, K. R.; Carpenter, S. D.; Weber, P. M.; Warren, W. S. Chem. Phys. Lett. 1997, 280, 151. (4) Bartels, R.; Backus, S.; Zeek, E.; Misoguti, L.; Vdovin, G.; Christov, I. P.; Murnane, M. M.; Kapteyn, H. C. Nature 2000, 406, 164. (5) Hornung, T.; Meier, R.; Zeidler, D.; Kompa, K. L.; Proch, D.; Motzkus, M. Appl. Phys. B 2000, 71, 277. (6) Judson, R. S.; Rabitz, H. Phys. Rev. Lett. 1992, 68, 1500. (7) Levis, R. J.; Menkir, G.; Rabitz, H. Science 2001, 292, 709, and references therein. (8) Rabitz, H.; de Vivie-Riedle, R.; Motzkus, M.; Kompa, K. Science 2000, 288, 824, and references therein. (9) Vajda, S*.; Bartelt, A.; Kapostaa, E. C.; Leisnerb, T.; Lupulescua, C.; Minemotoc, S.; Rosendo-Franciscoa, P.; Wo*ste, L. Chem. Phys. 2001, 267, 231. (10) Warren, W. S.; Rabitz, H.; Dahleh, M. Science 1993, 259, 1581, and references therein.

Control theory was recently applied to separating an isotopic mixture of diatomic molecules, (11) Leibscher, M.; Averbukh, I. S. Phys. Rev. A 2001, 6304, 3407, and a closed loop learning control experiment was shown to be possible working with two separate molecular samples, (12) Brixner, T.; Damrauer, N. H.; Niklaus, P.; Gerber, G. Nature 2001,414, 57. Closed loop learning control for ODD has attractive features, including the fact that little knowledge of the sample molecules is needed to determine tailored laser pulses capable of attaining selective dynamic evolution.

Success in this regard requires only the existence of a clearly distinct one-to-one relationship connecting a specific laser pulse shape to the recorded signals from each species in the mixture. The ODD approach is not restricted by the complexity of the quantum systems to be discriminated, nor the intricacy of the quantum processes involved. The wave packets of the similar molecules in the system are excited by a common laser pulse, which is tailored with the goal of inducing signals (possibly detected with another common laser pulse) from only one species, while suppressing signals from all the others. Optimal control techniques (see, e.g., (13) Kosloff, R; Rice, S. A.; Gaspard, P.; Tersigni, S.; Tannor, D. J. Chem. Phys. 1989, 139, 201.(14) Peirce, A.; Dahleh, M.; Rabitz, H. Phys. Rev. A 1988, 37, 4950; (15) Shi, S.; Woody, A.; Rabitz, H. J. Chem. Phys. 1988, 88, 6870) are potentially ideal tools for implementing ODD, as the underlying closed loop learning control process6 inherently operates based on achieving discrimination between one dynamical process versus another. The special distinction here is seeking discrimination among different species. The manipulation of constructive and destructive interferences is at the heart of quantum control (8, 10, 13-15), and (16) Brumer, P.; Shapiro, M. Philos. Trans., R. Soc. London A 1997,355, 2409; (17) Gordon, R. J.; Rice, S. A. Annu. Rev. Phys. Chem. 1997, 48, 601. This feature is present in the application of ODD to multiple species, but in this case constructive and destructive wave interferences typically occurs separately within each species when attempting to attain overall control with a common laser field. An exemplification of this embodiment of the present invention aims to present some of the basic principles of ODD relevant to the experimental studies using learning control. (6,12) Simulations of the ODD process will be presented using simple few-level systems to illustrate the concepts. In section II, the ODD quantum control processes are described, and section III presents simulation results for two illustrations of up to three similar systems described by several discrete levels. Some brief conclusions are given in section IV.

## II. Principles of Optimal Dynamic Discrimination

The analysis below aims to address the basic principles of ODD, and this will be done within a simple framework of seeking simultaneous control over multiple chemical/physical systems. Realistic systems will generally be more complex, but the basic principles should remain the same. The individual members of the set of similar systems subject to simultaneous ODD will be labeled by an identifying index $\nu$ = 1, 2, 3, .... Each species will be characterized by a finite number of active control states ($|\Phi^{\nu}_0\rangle$, $\Phi^{\nu}_l\rangle$, ..., $|\phi^{\nu}_{N-1}\rangle$), which may interact with the control field $\in_c(t)$, and an additional single detection state ($|\Gamma^{\nu}\rangle$), which is monitored to form a detection signal. This situation could, for example, correspond to the states $\{|\phi^{\nu}_i\rangle\}$ being in the ground electronic state and $|\Gamma^{\nu}>$ being an excited vibronic state; many other variations may also arise in practical laboratory circumstances. For simplicity of presentation, these overall states are taken as orthonormal and form an ($N$+1)-dimensional Hilbert space; more complex settings where the number $N$ of active control states ($|\phi^{\nu}_0\rangle$, $|\phi^{\nu}_1\rangle$,..., $|\phi^{\nu}_{N-1}\rangle$) is not the same for all species can also be treated in a straightforward fashion. In a real environment the species would be at a finite temperature calling for dynamics described by the density matrix. To reveal the basic principles involved here, the dynamics of species $\nu$ will be described for simplicity by a wave packet $|\psi^{\nu}(t)\rangle$,

$$|\psi^{\nu}(t)\rangle = \sum_{i=0}^{N-1} c_i^{\nu}(t)|\phi_i^{\nu}\rangle + d^{\nu}(t)|\Gamma^{\nu}\rangle \quad \nu = 1, 2, 3, \ldots \qquad (1)$$

where the coefficients $c^{\nu}_i(t)$ and $d^{\nu}(t)$ will evolve in time due to the influence of external fields. Generally, they are complex lumbers subject to the following constraint:

$$\sum_{i=0}^{N-1} |c_i^{\nu}(t)|^2 + |d^{\nu}(t)|^2 = 1 \qquad (2)$$

because of the normalization of $|\psi^{\nu}(t)\rangle$.

The total wave function $|\Psi(t)\rangle$ of all the species has the form $\Pi\nu|\psi^{\nu}(t)\rangle$ under the assumption that dynamical

interaction between the systems relevant to the control processes may be neglected; in practice the closed loop learning control procedure would likely seek to optimally diminish the influence of any such interactions, and the presence of a surrounding solvent would aid this matter as well by tending to keep the species spatially separated.

Initially at time - $T$, the systems are all taken to be in their lowest energy level,

$$|\psi^{\nu}(-T)\rangle = |\phi_0^{\nu}\rangle \tag{3}$$

The collective sample is then exposed to a common laser pulse $\in_c(t)$ over the interval $-T \leq t < T$. This control laser pulse has frequency components that include only transitions among the first $N$ levels $\{|\phi_i{}^{\nu}\}$ of each species such that at time $T$, the wave packets are described by

$$|\psi^{\nu}(T)\rangle = U_c^{\nu}(T,-T)|\psi^{\nu}(t)\rangle = \sum_{i=0}^{N-1} c_i^{\nu}(T)|\phi_i^{\nu}(t)\rangle \tag{4}$$

Here $U_c^{\nu}(T,-T)$ is the time propagator describing the control of system $\nu$ under the influence of the field $\in_c(t)$. The term $c^{\nu}(T) = \{c_i^{\nu}(T)\}$ is an $N$-dimensional complex vector with unit modulus because of the normalization of $|\pi^{\nu}(T)\rangle$,

$$||c^{\nu}(T)|| = [\sum_{i=0}^{N-1}|c_i^{\nu}(T)|^2]^{1/2} = \{\sum_{i=0}^{N-1}[c_i^{\nu,\mathrm{Re}}(T)]^2 + [c_i^{\nu,\mathrm{Im}}(T)]^2\}^{1/2} = 1 \tag{5}$$

The superscripts Re and Im denote the real and imaginary part of $c_l^{\nu}(T)$, respectively. Equations 2 and 5 are consistent, as under the evolution driven by $\in_c(t)$ the amplitude in the detection state $|\Gamma^{\nu}\rangle$ satisfies $d^{\nu}(T) = 0$, $-T \leq t < T$.

The dynamics of each system is governed by its Schrödinger equation,

$$i\hbar\frac{\partial}{\partial t}|\psi^{\nu}(t)\rangle = [H_0^{\nu} - \mu^{\nu}\in_c(t)]|\psi^{\nu}(t) \tag{6}$$

with

$$H_0^{\nu}|\phi_i^{\nu}\rangle = E_i^{\nu}|\phi_i^{\nu}\rangle$$

$$\langle\phi_i^{\nu}|\mu|\phi_j^{\nu}\rangle = \mu_{ji}^{\nu}\ \mu_{ij}^{\nu} = \mu_{ij}^{\nu} = 0 \tag{7}$$

Here $H_0^{\nu}$ is the internal Hamiltonian and $\mu^{\nu}{}_{ij}$ is an element of the dipole moment matrix which is assumed real for simplicity. After evolution under the control laser pulse $\in_c(t)$, the systems are excited by a second detection laser pulse $\in_d(t)$, whose frequency components couple the levels $|\phi_l^{\upsilon}\rangle$ to the detection state $|\Gamma^{\nu}\rangle$. The field $\in_d(t)$ could be initiated at any time, including even before $T$; here it is assumed to act over the interval $T \leq t \leq T'$ with an associated time

propagator $U_d^\nu(T + T', T)$. Thus the entire quantum propagation of species ν under the influence of the control and detection fields is

$$|\psi^\nu(T + T')\rangle = U_d^\nu(T + T', T)|\psi^\nu(T)\rangle = U_d^\nu(T + T', T)U_c^\nu(T, -T)|\psi^\nu(-T)\rangle \quad (8)$$

In the present work, the detection signal $O^\nu$ is simply taken as the final population in the detection state.

$$O^\nu[\epsilon_c(t),\epsilon_d(t)] = |\langle\Gamma^\nu|\psi^\nu(T+T')\rangle|^2 = |\sum_{i=0}^{N-1} c_i^\nu(T)\langle\Gamma^\nu|U_d^\nu(T+T', T)|\phi_i^\nu\rangle|^2 \quad (9)$$

The signal $O^\nu[\in_c(t),\in_d(t)]$ used for discrimination purposes could be either static and evaluated at a fixed $T'$ or dynamic, as a time profile of $O[\in_c(t),\in_d(t), T']$ versus $T'$. A static signal is used in the present study, but dynamic signals have more flexibility and possibly offer higher degrees of discrimination. Both the control pulse $\in_c(t)$ and the detection pulse. $\in_d(t)$ can be tailored for maximum ODD performance. To simplify the simulations here only the control pulse $\in_c(t)$ is optimized to attain discrimination. For our purposes the pulse $\in_d(t)$ need not be prescribed, as only the elements $\langle\Gamma^p| U^\nu_d|\phi^\nu_i\rangle$ enter into eq 9 and they are specified as real numbers $D^\nu_i$ (treating the numbers as complex does not alter the general structure of the discrimination formulation).

$$\langle\Gamma^\nu|U_d^\nu(T + T', T)|\phi_i^\upsilon\rangle = D_i^\nu = 0, 1, \ldots, N - 1 \quad (10)$$

$D^\nu = \{D^\nu_i\}$ is an $N$-dimensional real vector and is expected to be similar for all the species due to their closely related nature. Equation 9 now has the following simple form for the detection signal of system ν:

$$O^\nu[\epsilon_c(t)] = |\sum_{i=0}^{N-1} c_i^\nu(T) D_i^\nu|^2$$

$$= [\sum_{i=0}^{N-1} c_i^{\nu,\mathrm{Re}}(T) D_i^\nu]^2 + [\sum_{i=0}^{N-1} c_i^{\nu,\mathrm{Im}}(T) D_i^\nu]^2$$

$$= [\boldsymbol{c}^{\nu,\mathrm{Re}}(T)\cdot \boldsymbol{D}^\nu]^2 + [\boldsymbol{c}^{\nu,\mathrm{Im}}(T)\cdot \boldsymbol{D}^\nu]^2 \quad (11)$$

where the symbol · denotes a scalar product.

The signal $O^\nu[\in_c(t)]$ from each of the similar systems ν = 1, 2, 3, ..., is a functional of the same control field $\in_c(t)$. Given the similarity of the species; application of an arbitrary field $\in_c(t)$ might give similar dynamics and signal $O^\nu[\in_c(t)]$ for all the species $\nu$ with little discrimination, and this outcome was observed to be the case in the simulations in section III. Rather, we seek to optimize $\in_c(t)$ to achieve ODD. To attain ODD for species ξ over that of all other species ν ≠ ξ, one approach is to maximize signal $O^\xi[\in_c(t)]$, while simultaneously minimizing the signals $O^\nu[\in_c(t)]$ (ν

$\neq \xi$), through tailoring $\in_c(t)$. A simple control functional for this purpose is

$$J[\epsilon_c(t)] = O^{\xi}[\epsilon_c(t)] - \sum_{\nu \neq \xi} O^{\nu}[\epsilon_c(t)] \qquad (12)$$

where the goal is to maximize $J$. Other terms may be added to the functional to attain ancillary benefits (e.g., control field simplicity[18]).

Understanding the possible maximum and minimum values of the signals $O^{\nu}[\in_c(t)]$ is important. Both the maximization and minimization of $O^{\nu}[\in_c(t)]$ with respect to $c^{\nu,Re}(T)$ and $c^{\nu,Im}(T)$ are subject to the constraint in eq 5. This maximum signal is

$$O^{\nu,\max}[\epsilon_c(t)] = ||\boldsymbol{D}^{\nu}||^2 = \sum_{i=0}^{N-1} (D_i^{\nu})^2 \qquad (13)$$

when

$$c^{\nu,Re}(T) = \alpha^{\nu} D^{\nu},\ c^{\nu,Im}(T) = \beta^{\nu} D^{\nu} \qquad (14a)$$

$$(\alpha^{\nu})^2 + (\beta^{\nu})^2 = \frac{1}{||\boldsymbol{D}^{\nu}||^2} = \frac{1}{\sum_{i=0}^{N-1} (D_i^{\nu})^2} \qquad (14b)$$

with $\alpha^{\nu}$ and $\beta^{\nu}$ being constant functional of the control field $\in_c(t)$. The structure of eq 14a implies that the vectors $c^{\nu,Re}(T)$ and $c^{\nu,Im}(T)$ are either parallel or antiparallel to the vector $D^{\nu}$, which is a demanding condition to arrange by $\in_c(t)$. The minimal signal is

$$O^{\nu,\min}[\in_c(t)] = 0 \qquad (15)$$

which leads to

$$c^{\nu,Re} \bullet D^{\nu} = 0,\ c^{\nu,Im} \bullet D^{\nu} = 0 \qquad (16)$$

implying that the vectors $c^{\nu,Re}(T)$ and $c^{\nu,Im}(T)$ are perpendicular to the vector $D^{\nu}$. All pairs of vectors $c^{\nu,Rc}(T)$ and $c^{\nu,Im}(T)$ in the ($N$-1)-dimensional space perpendicular to the vector $D^{\nu}$ satisfy this condition. There is much more flexibility in satisfying eq 16 than the maximization conditions in eq 14. Thus the control objective in this realization of ODD is to steer species $\xi$ to the state $|\psi\xi(T)\rangle$ with $c\xi(T)$ satisfying eq 14, while steering all the other species $\nu \neq \xi$ to states $|\psi^{\nu}(T)\rangle$ with $c^{\nu}(T)$ satisfying eq 16. Figure 1 graphically depicts the conditions in eqs 14 and 16 achieved under application of ODD through the influence of the optimal control field $\in_c(t)$. Here a single vector $\boldsymbol{D}$ is shown, as all the vectors $\boldsymbol{D}^{\nu}$ could be nearly coincident for very similar systems. The demanding nature of eq 14 and the orthogonality freedom in eq 16 are evident from the geometry of the vectors. Achieving ODD for species $\xi$ over all the other species $\nu \neq \xi$ thus calls for manipulating the vectors $\boldsymbol{c}^{\xi}$ and $\{\boldsymbol{c}^{\nu}\}$ ($\nu \neq \xi$) into these perpendicular orientations, respectively. The application

of an arbitrary control field is likely to leave the set of vectors $\boldsymbol{c}^{\xi}$ and $\{\boldsymbol{c}^{\nu}\}$ ($\nu \neq \xi$) roughly aligned with resultant poor discrimination because of the similarities of the species. Thus the control field has to be detennined carefully.

A basic question is whether the multiple optimization goals above can be achieved simultaneously. In other words, are these similar systems simultaneously controllable with a single laser pulse? Controllability in the present context is defined as the existence of at least one control field $\varepsilon_c(t)$ capable of steering a quantum system from a certain initial state to a certain final state within finite time. The system here is understood to be described by the full Hamiltonian consisting of the ensemble $\{H_0^{\nu} - \mu^{\nu}\in_c(t)\}$ for all species, with controllability being simultaneously sought for all of the states $|\psi^{\nu}(t)\rangle$. An analysis of the mathematics involved will be considered in a following work.[19] However, all of the cases investigated in section III were fully controllable, so that the extrema in eqs 14 and 16 can in principle be achieved by at least some control field within finite time. This point of certainty can be used to assess the effectiveness of the learning algorithm in the ODD simulations in section III. Nevertheless, no precise value for the duration of the control pulse, $T$, allowing simultaneous control of all the species is available via theoretical controllability analysis; moreover, it is generally expected that the time for simultaneously controlling multiple systems may be longer than that required for controlling only one system.

### III. Simulations of Optimal Dynamic Discrimination

The simulations below aim to explore some of the basic concepts of ODD and its capabilities. Realistic laboratory cases[2-5,7,9,12] will likely be far more complex, but simple systems have often proved useful[6,13-15] in capturing the essence of quantum control techniques. Two cases are simulated here: (1) two similar systems with four levels in their active control space, and (2) three similar systems with ten levels in their active control space. In the examples no specific regular relations were imposed between the energy levels and the transition dipoles, following what would likely be the situation in realistic cases where optimal discrimination would be most useful. Thus, the indicated quantum numbers should just be viewed as state labels in the present work. The numerical values below have the units of fs for time, rad/fs for frequency and energy, V/Å for electric field, and $10^{-20}$ CÅ for electric dipole moment.

In all the simulations the control field is constrained to the following form:

$$\epsilon_c(t) = \epsilon_0 \exp[-(t/\sigma)^2]\sum_{l=1}^{L} a_l \cos(\omega_l t + \theta_l) \qquad (17)$$

in winch $\in_0$, $\sigma$, and all the frequencies $\omega_l$ are fixed beforehand, while all the amplitudes $\alpha_l$ and phases $\theta_l$ are control variables to be optimized over the intervals [0,1] and [0,2,$\pi$], respectively. Because of the restrictions on duration, amplitude, and shape of the excitation pulse, reaching the maximal possible ODD signals is not guaranteed. The power spectrum of each frequency component of $\in_c(t)$ in eq 17 is a finite-width Gaussian-shaped peak $\exp[-(\omega-\omega/(2/\sigma)^2]$ centered at $\omega_l$, with a half width of $1.67/\sigma$. The functional $J[\in_c(t)]$ is now reduced to a function of the control variables $\mathbf{a} = \{\alpha_1\}$ and $\theta = \{\theta_1\}$.

$$J[\in_c(t)] = J(\mathrm{a},\theta) \qquad (18)$$

The simulations for finding the ODD fields were done with a genetic algorithm (GA)[20] along the lines of current experimental practice in a variety of quantum control applicafions,[2-9,12] although other learning algorithms could be used. In addition, some cases also included control field noise to explore its impact on ODD performance. The adopted GA software package, GALib[21] was modified for our specific purposes. In the following simulations, a steady-state GA is implemented and real-valued genomes, instead of binary genomes, are used to represent the parameters to be optimized. The operating parameters for the GA are as follows: the population size is 100, the number of generations is less than 2000, the mutation probability is 5%, the crossover probability is 90%, and the generation-to-generation replacement percentage is 90%.

1. **Two Similar Four-Level Systems.** This simulation involves two similar systems, A and B, and both have four active control levels. The energies $E_i$, the transition dipole moments $\mu_{ij}$, and the parameters characterizing the detection process $D_i$ of A are fixed and specified in ref 22, while those of B are randomly chosen to be close to those

of A. The goal is to induce a maximum signal from A while simultaneously quenching the signal from B, as described in section II and specified through maximization of $J^{A\text{-}B}$.

$$J^{A\text{-}B}(a\theta) = O^{A}(a,\theta) - O^{B}(a\theta) \qquad (19)$$

The control pulse in eq 17 has the parameters $T = 100$, $\sigma = 40$, and $\varepsilon_0 = 1$. The frequencies $\omega_l$ correspond to all possible transitions between the active control states of A and B respectively, so that $L = 12$ in eq 17 covers the transitions of both species. The possible maximum of $J^{A\text{-}B}$ is 0.2125 calculated with the parameters $D_l^{A}$ 22 using eq 13.

In the first test, B is chosen to be similar to A[22] with the randomly set parameters in ref 23. The maximum value of $J^{A\text{-}B}$ reached in the simulation is 0.2124 ($O^A = 0.2124$, $O^B = 1.0 \times 10^{-5}$, corresponding to 99.95% discrimination[24]). Figure 2 shows the optimal control pulse $\in_c(t)$ and its power spectrum. By assigning the peaks in the spectrum to the transitions of either A or B, the paths taken by A (i.e., transitions 0↔1, 0↔2, 1↔3, and 0↔3) and B (i.e., transitions 2↔3, 1↔2, and 0↔3) appear to be quite disparate. However the actual ODD mechanism is more subtle, as almost all the pairs of transition frequencies for A and B (calculated using the energy differences from the data in refs 22-23, see the caption of Figure 2) are well within the half widths of 0.04 rad/fs evident in Figure 2. In addition, dynamic Stark shining (i.e., power broadening) of the levels by the field will further enhance the subtle relationship between the impact of the control on the dual dynamics of A and B. Thus, each frequency component in Figure 2 labeled by a transition of a particular species A or B will actually have some direct influence on the same transition in the other corresponding species. This circumstance illustrates the common situation where simple spectral filtering alone cannot satisfactorily discriminate one complex species from another.

Successful quantum control is best achieved through the manipulation of destructive and constructive interferences to favor one outcome over that of other possibilities.[8,10] Table 1 shows that this is the underlying reason for the successful performance of ODD in this example. It is evident that the amplitude for the states of A and B are manipulated in a subtle fashion such that upon projection to the detection states $|\Gamma^A\rangle$ and $|\Gamma^B\rangle$ the contributions from all the active control states to the signal $O^A$ constructively add up, but destructively cancel

**TABLE 1: Mechanism of Quantum Optimal Dynamic Discrimination**

| $j$ | species A | | species B | |
|---|---|---|---|---|
| | $c_j^{A}$ [a] | $c_j^{A} D_j^{A}$ [b] | $c_j^{B}$ [a] | $c_j^{B} D_j^{B}$ [b] |
| 0 | −0.065+0.083i | 0.003−0.004i | 0.001−0.423i | 0.021i |
| 1 | 0.498−0.712i | 0.199−0.285i | 0.228+0.023i | 0.091+0.009i |
| 2 | 0.246−0.354i | 0.049−0.071i | −0.608−0.376i | −0.121−0.075i |
| 3 | −0.134+0.171i | 0.014−0.017i | −0.283−0.420i | 0.028+0.042i |
| $\sum_{j=0}^{N-1} c_j D_j$ [c] | not applicable | 0.265−0.377i | not applicable | −0.002−0.003i |

[a] Wave packet components of active control states. [b] Components projected upon the detection state. [c] The observed signal of A is maximized and that of B is minimized by constructive and destructive interferences in the respective detection states. This case is the first example in section III.1. The mechanism for discriminations in the other examples similarly draws on interference effects.

out for $O^B$, which explains the maximal signal for A and the minimal signal for B. This result demonstrates that the

conditions for maximal and minimal signals given in eqs 14 and 16 and illustrated in Figure 1 are equivalent to exploiting constructive and destructive interferences, respectively. Furthermore, this case also shows that A and B would not be properly discriminated by conventional spectroscopic means if the population in the detection states $|\Gamma^A\rangle$ and $|\Gamma^B\rangle$ were monitored, as without suitable control the differences between the signals $O^A$ and $O^B$ are not enough for optimal discrimination. In the present example sufficiently high-resolution spectroscopy from the ground state would permit discrimination. However, the purpose of the present illustrations is to introduce a capability for dynamic discrimination where spectral approaches are not adequate. Thus the finite bandwidth of the present control $\in_c(t)$ introduces complexities of the type expected in treating realistic molecular situations.[2-5,7,9,11,12]

Since the transition frequencies of A and B are close and the power spectrum of the excitation pulse is a collection of Gaussian peaks centered around them, there inevitably are overlaps between the corresponding transitions of A and B, as discussed above and shown in Figure 2. For cases where A and B are so different that there is no overlap at all, and the dynamic Stark effect does not induce significant overlap between the corresponding transitions, then the species A and B may be independently controlled based on frequency alone. In this circumstance, an overall control $\in_c(t) = \in_c^A(t) + \in_c^B(t)$ made up of a portion $\in_c^A(t)$ that maximizes the signal $O^A$ and a portion $\in_c^B(t)$ that minimizes the signal $O^B$ will produce an optimal value for $J^{A\text{-}B}$. At the other extreme, if A and B are the same system, then their transitions fully overlap, and clearly no discrimination is possible. Between these two extremes, when there are (a) spectral overlaps, (b) similar transition dipoles, and (c) nearly the same transfer couplings $\boldsymbol{D}^\nu$ to the observation state, as in the above test case, the situation is quite complex requiring that the ODD control pulse $\in_c(t)$ be determined working *simultaneously* with A and B, instead of being synthesized from the two separate optimal pulses that individually maximize $O^A$ and minimize $O^B$. Under closed loop optimal control, even dynamic power broadening effects might be turned into a beneficial process to aid the discrimination. Cases of increasingly similar spectra are naturally expected to make it more difficult to achieve good quality discrimination. To test this issue, two other B systems, described in refs 25 and 26, were considered, whose energy levels are more similar to A than the system B[23] in the first test; the system B[26] is more similar to A than that of B.[25] Additionally, it was found in these examples that the differences between the dipole moments and $D_i$ values of A and B did not have a significant effect on the optimization, so the dipole moments and $D_i$ values for B[25,26] are the same as those of B.[23] The maximal value of $J^{A\text{-}B}$ found for B[25-26] is in accordance with the degree of similarity between A and B. The maximal value of $J^{A\text{-}B}$ found for B[25] is 0.2099 (98.77% discrimination) and for B[26] is 0.1686 (79.34% discrimination). These results are not the maximum achievable values with arbitrary control pulses (i.e., the combined systems in all the cases are fully controllable[19]), primarily due to the restrictions on the duration, shape, and amplitude of the control pulses as well possibly because the GA did not fully explore the available control space.

One complexity involved in laboratory control experiments is the presence of laser pulse noise and observation errors, both of which can have several sources. If the optimal pulse is not robust to such noise, then the ODD process will be of less value. In practice, signal averaging would be performed in the laboratory to report[18]

$$\tilde{J}^{A-B} = \langle J^{A-B} \rangle_M \qquad (20)$$

which is the average of $M$ repeated runs with nominally the same control field. As a simulation of this process in the case of A[22] and B[23] for each field called for by the GA, the amplitudes and phases were randomly chosen around those of the candidate pulse. For the amplitudes, the fluctuations had a relative standard deviation of 1%. For the phases, the fluctuations had an absolute standard deviation of 0.05 rad. The combined observed signal $J^{A\text{-}B}$ also had an absolute standard deviation of 0.002 (i.e., corresponding to an observation error of approximately 1%). $M$ is chosen as 100, and the maximal value of $\tilde{J}^{A\text{-}B}$ reached was 0.2067 (97.3% discrimination). Of the 100 random pulses tested around the final optimal pulse, 54 of them yielded higher $J^{A\text{-}B}$ than $\tilde{J}^{A\text{-}B}$ ($\sigma^+ = 3.5 \times 10^{-4}$) and 46 yielded lower $J^{A\text{-}B}$ than $\tilde{J}^{A\text{-}B}$ ($\sigma^- = 4.6 \times 10^{-4}$). The quality of the discrimination is still excellent, and the standard deviation of $\tilde{J}^{A\text{-}B}$ is smaller than that of the control and observation errors, indicating that control pulses can be found that are both optimal for discrimination and robust. As argued before[18] and demonstrated here, the use of signal averaging while seeking optimality produces an inherent degree of robustness to field noise. However, if large amplitude noise fluctuations remain a problem, then minimization of the standard deviation of $J^{A\text{-}B}$ with respect to field noise can be explicitly added to the cost to further enhance robustness. [18]

In addition to control field noise and observation errors, the molecules may be subjected to various, environmental effects including intermolecular interactions for samples at sufficient densities, and various other line broadening processes. These processes can compromise the constructive/destructive interference beneficial to the performance of ODD. Nevertheless, this situation does not necessarily suggest a breakdown of ODD, as alternative discrimination mechanisms can arise including the beneficial manipulation of decoherence among the family of similar quantum systems. Simulations of ODD in this regime call for a suitable density matrix formulation, and laboratory studies already operate in this domain.[12]

**2. Three Similar Ten-Level Systems.** This illustration involves three similar systems, A, B, and C, each of which has 10 states in its active control spaces. The energy levels, $E_i$, dipole moments, $\mu_{ij}$, and $D_i$ values for A are listed in ref 27, and those of B and C are arranged (not shown here) within close proximity to those of A as in the examples of section III.1 As mentioned earlier, the characteristics of A[27] were chosen rather arbitrarily. The following three functions are separately maximized:

$$J^{A\text{-}B\text{-}C}(a,\theta) = O^{A}(a,\theta) - O^{B}(a,\theta) - O^{C}(a,\theta)$$

$$J^{B\text{-}A\text{-}C}(a,\theta) = O^{B}(a,\theta) - O^{A}(a,\theta) - O^{C}(a,\theta)$$

$$J^{C\text{-}A\text{-}B}(a,\theta) = O^{C}(a,\theta) - O^{A}(a,\theta) - O^{B}(a,\theta) \quad (21)$$

Each case attempts to induce a maximal signal exclusively from the first of the three species while suppressing signals from the other two (e.g., maximize $O^A$ for $J^{A\text{-}B\text{-}C}$ while minimizing $O^B$ and $O^C$). The control pulse $\in_c(t)$ in each case had the characteristic variables $T$ = 500, $\sigma$ = 200, and $\in_0$ = 1. From the experience learned through the simulations described in section III. 1, the closer the corresponding transitions of A, B, and C, the more difficult it will be to achieve the desired discrimination. All the possible transitions between pairs of levels were carefully screened, and only the 16 most distinct transitions in each species were retained for control purposes. This leaves a total of $L$ = 48 terms in eq 17 corresponding to 96 control variables; in principle, the GA would have acted as well to discover this reduced set of significant variables and the preselection was done just to accelerate the search process. The allowed transitions permit all of the levels to be connected either directly or indirectly, so that arbitrary amplitude transfer within each species is still possible in principle. $J^{A\text{-}B\text{-}C}$achieved a maximal value of 0.7861 ($O^A$ = 0.7908, $O^B$ = 0.0026, $O^C$ = 0.0021) corresponding to 93.8% discrimination. $J^{B\text{-}A\text{-}C}$ was maximized to the value of 0.8263 (98.2% discrimination), and $J^{C\text{-}A\text{-}B}$ to 0.7969 (94.2% discrimination). The evolution of the achieved maximum discrimination throughout the GA optimization process is displayed in Figure 3 as a function of generation. Each species was separately detected to a high degree of quality in the presence of the other two competing species. A detailed examination of the wave function amplitudes at $t$ = $T$ shows that ODD is again achieved through subtle use of constructive and destructive interferences. Similar to the situation in section III.1, the fields in these three cases have significant contributions at frequencies producing simultaneous overlaps with all the species transitions. Full 100% discrimination is not achieved mainly because of the restrictions on the control pulse, which will always be present in some form in the laboratory. As a final more difficult case, we set the levels 3, 4, 5, and 6 of A, B, and C to have exactly the same corresponding energies, as well as the same dipole moment matrix elements between them and the same corresponding $D_i$ values. Nevertheless, better than 85% discrimination was achieved.

**3. Comments on Optimal Dynamic Discrimination.** Although the test cases are much simpler in section III.1 and section III.2 than many real systems of interest in the laboratory, they suffice for illustrating the ODD concept. Importantly, application of ODD does not require any detailed information about the individual systems, and systems of high complexity (i.e., characterized by broad overlapping spectra) should be amenable to treatment. Only experimental studies will be able to discern the practical degrees of discrimination possible in any particular case. This effort should be facilitated by the fact that essentially the same laboratory setups being used for closed loop learning control of chemical reactivity and other applications[2,4-7,9] may be redirected for ODD. A recent closed loop experimental study discriminating two dye molecules in a mixture is indicative that this can be done.[12]

The high repetition rate and stability of laser sources and modulators, along with fast signal detection should permit the exploration of thousands or more trial discrimination pulses over a reasonable laboratory time frame of even minutes, Efficient learning algorithms are still necessary, since the optimization problem is nominally of exponential complexity in the number of control variables due to the highly complex landscape of the control functional. In all of the simulations in this work, the random pulses used to initialize the GA give very low to moderate discrimination, reflecting the basic similarity of the molecules. With the progress through the GA generations, ever more discrimination was realized until very high quality was achieved as shown in Figure 3. This behavior also speaks to the need to include the signals $O^{\nu'}$ along with $O^{\nu}$ in eq 12; for typical circumstances only optimizing on $O^{\nu}$ will inevitably produce undesirable contamination from $O^{\nu'}$ ($\nu' \neq \nu$) signals. The optimal management of the entire sample simultaneously is the essence

of the ODD process. Although the number of control variables went from 24 to 96 in the A-B and A-B-C cases, the learning algorithm showed no significant slowdown in finding the optimal results. A further issue to explore is the influence of the amount of each species present in the sample upon the performance of ODD.

IV. Conclusion

Optimal control of quantum systems using closed-loop learning algorithms directly in the laboratory is a general procedure with demonstrated successful control over a variety of chemical and physical phenomena. (2-5,7,9,12) The simulations provided in this section suggest that quantum ODD is a practical tool for many applications. The simulations used one particular type of signal, and in principle any signal sensitive to the evolving quantum states can be employed. This flexibility is one significant feature of the ODD procedure. ODD is able to draw on the richness of quantum dynamics behavior to magnify the differences between seemingly similar systems. Because quantum ODD utilizes quantum interference phenomena, quantum ODD has the potential of achieving higher sensitivity, compared with the traditional "static" discrimination approaches.

Applications of quantum ODD include detection/separation of isotopes, see e.g., (11), and isotope labeled molecules and discrimination of molecules with similar spectroscopic features, see e.g., (12). A variety of optical and mass spectroscopic detection (7) approaches are also applicable to implement ODD.

**References and Notes**

(1) *Encyclopedia of Separation Science;* Wilson, I. D., Adlard, E. R., Cooke, M., Poole, C. F., Eds.; Academic Press: San Diego, CA, 2000.

(2) Assion, A.; Baurnert, T.; Bergt, M.; Brixner, T.; Kiefer, B.; Seyfried, V.; Strehle, M.; Gerber, G. *Science* **1998**, *282*, 919.

(3) Bardeen, C. J.; Yakovlev, V. V.; Wilson, K. R.; Carpenter, S. D.; Weber, P. M.; Warren, W. S. *Chem. Phys. Lett.* **1997**, *280*, 151.

(4) Baitels, R.; Backus, S.; Zeek, E.; Misoguti, L.; Vdovin, G.; Christov, I. P.; Murnane, M. M.; Kapteyn, H. C. *Nature* **2000**, *406*, 164.

(5) Hornung, T.; Meier, R.; Zeidler, D.; Kompa, K. L.; Proch, D.; Motzkus, M. *Appl Phys. B* **2000**, *71*, 277.

(6) Judson, R. S.; Rabitz, H. *Phys. Rev. Lett.* **1992**, *68*, 1500.

(7) Levis, R. J.; Menkir, G.; Rabitz, H. *Science* **2001**, *292*, 709, and references therein.

(8) Rabitz, H.; de Vivie-Riedle, R; Motzkus, M.; Kompa, K. *Science* 2000, 288, 824, and references therein.

(9) Vajda, S.; Bartelt, A.; Kapostaa, E. C.; Leisnerb, T.; Lupulescua, C.; Minemotoc, S.; Rosendo-Franciscoa, P.; Wöste, L. *Chem. Phys.* **2001**, 267, 231.

(10) Warren, W. S.; Rabitz, H.; Dahleh, M. *Science* **1993**, *259*, 1581, and references therein.

(11) Leibscher, M.; Averbukh, I. S. *Phys. Rev. A* **2001**, *6304*, 3407.

(12) Brixner, T.; Damrauer, N. H.; Niklaus, P.; Gerber, G. *Nature* **2001**, 414, 57.

(13) Kosloff, R; Rice, S. A.; Gaspard, P.; Tersigni, S.; Tannor, D. J. *Chem. Phys.* **1989**, *139*, 201.

(14) Peirce, A.; Dahleh, M.; Rabitz, H. *Phys. Rev. A* **1988**, *37*, 4950.

(15) Shi, S.; Woody, A.; Rabitz, H. *J. Chem. Phys.* **1988,** *88*, 6870.

(16) Brumer, P.; Shapiro, M. *Philos. Trans., R. Soc. London A* **1997,** 355, 2409.

(17) Gordon, R. J.; Rice, S. A. *Annu. Rev. Phys. Chem.* **1997**, *48*, 601.

(18) Geremia, J. M.; Zhu, W.; Rabitz, H. *J. Chem. Phys.* **2000,** *113,* 3960.

(19) Turinici, G.; Ramakrislma, V.; Li, B.; Rabitz, H., submitted to *Phys. Rev. A.*

(20) Goldberg, D. E. *Genetic Algorithms in Search, Optimization, and Machine Learning;* Addison-Wesley: Reading, MA 1989.

(21) The source code of the genetic algorithm software package, GALib, used in the simulations is available at http://lancet.mit.edu/ga/.

(22) The variables characterizing A in the two species example in section III.1: $E_0^A$ = 0.0; $E_1^A$ = 1.0; $E_2^A$ = 4.0; $E_3^A$ = 6.0; $\mu_{01}^A$ = 1.6; $\mu_{02}^A$ = 0.3; $\mu_{03}^A$ = 0.7; $\mu_{12}^A$ = 0.8; $\mu_{13}^A$ = 0.2; $\mu_{23}^A$ = 0.9; $D_0^A$ = - 0.05; $D_t^A$ = 0.4; $D_2^A$ = 0.2; $D_3^A$ = - 0.1.

(23) The variables characterizing B in the two species example in section III.1: $E_0^B$ = - 0.0325; $E_1^B$ = 0.9708; $E_2^B$ = 3.9735; $E_3^B$ = 6.0322; $\mu_{01}^B$ = 1.5896; $\mu_{02}^B$ = 0.2977; $\mu_{03}^B$ = 0.6996; $\mu_{12}^B$ = 0.8011; $\mu_{13}^B$ = 0.1985; $\mu_{23}^B$ = 0.894; $D_0^B$ = -

0.0503; $D^B_1$ = 0.3966; $D^B_2$ = 0.1987; $D^B_3$ = - 0.1002.

(24) The percentage discrimination is defined as the actually achieved maximum of *J* divided by the possibly achievable maximum of *J,* which can be calculated using eqs 13 and 15.

(25) A more demanding case for B in the two species example in section III.1: $E^B_0$ = 0.0159; $E^B_1$ = 1.0173; $E^B_2$ = 4.0108; $E^B_3$ = 5.9865. The other variables are the same as in ref 23.

(26) The most demanding case for B in the two species example in section IIL 1: $E^B_0$ = 0.0052; $E^B_1$ = 1.007; $E^B_2$ = 3.9943; $E^B_3$ = 5.99. The other variables are the same as in ref 23.

(27) The variables characterizing A in the three species example in section III.2: $E^A_0$ = 2.9923; $E^A_1$ = 5.9973; $E^A_2$ = 8.6744; $E^A_3$ = 10.9953; $E^A_4$ = 13.0022; $E^A_5$ = 14.6376; $E^A_6$= 15.9601; $E^A_7$ = 16.9411; $E^A_8$ = 17.5713; $E^A_9$ = 17.8630; $\mu^A_{01}$ = 9.76 × $10^{-2}$; $\mu^A_{02}$ = -3.66 × $10^{-2}$; $\mu^A_{03}$ = 4.9041 × $10^{-1}$; $\mu^A_{04}$ = 6.4 × $10^{-3}$; $\mu^A_{05}$ = -6.5 × $10^{-2}$; $\mu^A_{06}$ = 6.077 × $10^{-1}$; $\mu^A_{07}$ = -1.4 × $10^{-3}$; $\mu^A_{08}$ = 1.3278 × $10^{-2}$; $\mu^A_{09}$ = -9.29 × $10^{-2}$; $\mu^A_{12}$ = 7.036 × $10^{-1}$; $\mu^A_{13}$ = 4 × $10^{-4}$; $\mu^A_{14}$ = -3.4673 × $10^{-3}$; $\mu^A_{15}$ = 2.1741 × $10^{-2}$; $\mu^A_{16}$ = -1.2250 × $10^{-1}$; $\mu^A_{17}$ = 8.012 × $10^{-1}$; $\mu^A_{18}$ = -1 × $10^{-4}$; $\mu^A_{19}$ = 1 × $10^{-3}$; $\mu^A_{23}$ = -6.2 × $10^{-3}$: $\mu^A_{24}$ = 3.1867 × $10^{-2}$; $\mu^A_{25}$ = -1.556 × $10^{-1}$; $\mu^A_{26}$ = 8.888 × $10^{-1}$; $\mu^A_{27}$ = 0; $\mu^A_{28}$ = - 3.7585 × $10^{-4}$; $\mu^A_{29}$ = 2.1 × $10^{-3}$; $\mu^A_{34}$ = -1.01 × $10^{-2}$; $\mu^A_{35}$ = 4.34 × $10^{-2}$; $\mu^A_{36}$ = -1.8831 × $10^{-1}$; $\mu^A_{37}$ = 9.7425 × $10^{-1}$; $\mu^A_{38}$ = 0; $\mu^A_{39}$ = 1 × $10^{-4}$; $\mu^A_{45}$ = -8 × $10^{-4}$; $\mu^A_{46}$ = 3.6 × $10^{-3}$; $\mu^A_{47}$ = -1.49 × $10^{-2}$; $\mu^A_{48}$ = 5.69 × $10^{-2}$; $\mu^A_{49}$ = -2.217 × $10^{-1}$; $\mu^A_{56}$ = 1.0624; $\mu^A_{57}$ = 0; $\mu^A_{58}$ = 6.2864 × $10^{-5}$; $\mu^A_{59}$ = 3.0000 × $10^{-4}$; $\mu^A_{67}$ = -1.4 × $10^{-3}$; $\mu^A_{68}$ = 5.8806 × $10^{-3}$; $\mu^A_{69}$ = -2.1 × $10^{-2}$; $\mu^A_{78}$ = 7.3074 × $10^{-2}$; $\mu^A_{79}$ = -2.597 × $10^{-1}$; $\mu^A_{89}$ = 1.134; $D^A_0$ = 0.0499; $D^A_1$ = 0.3962; $D^A_2$ = 0.2; $D^A_3$ = 0.1009; $D^A_4$ = 0.3024; $D^A_5$ = 0.5: $D^A_6$ = 0.45; $D^A_7$ = 0.2482; $D^A_8$ = 0.1499; $D^A_9$ = 0.074.

(28) Zhang, H.; Rabitz, H. unpublished, 1994.

**Section 4**

In this section, the symbols, equation numbers, table numbers, and reference numbers pertain to this section and not the other sections discussed herein. Usage of mathematical variables and equations thereof in this section pertain only to this section and may not pertain to the other sections which follow. The figure numbers denoted "x" in this section refer to Figures numbered as "4.x", e.g., reference to "figure 1" in this section refers to Figure 4.1.

The method of closed-loop control for laser-induced processes[2] offers a way to surmount our lack of knowledge of the Hamiltonian to find appropriate pulse shapes, ∈(*t*). In closed-loop operations, the molecule, the laser pulse shaper, and a pattern recognizing learning algorithm form the elements for repeated cyclic operation to teach the laser how to control the molecules. A schematic of this process is shown in Figure 2. This procedure, especially in the strong field regime, provides the only general means at the present time to deduce laser pulse shapes that can successfully manipulate molecular dynamics phenomena. The method is general because any molecule can be excited in the strong field regime using a nominally 800 nm pulse, and closed-loop methods provide a means to determine the optimal time-dependent, strong field excitation to produce a specific target state. The quantum system, upon each cycle of the loop, is replaced by a new one, thereby (a) avoiding the need for ultrafast computations, electronics, and laser switching, and (b) eliminating any concerns about the observation process disturbing the actual dynamics. In the experiments described in this article, the phase and amplitudes of the component frequencies of a 40 fs pulse are the control variables, and the resultant mass spectrum is the observable employed to evaluate the fitness of the pulse shape. Optical or other means of detection could also be employed for a feedback signal.

The closed-loop learning procedure for teaching lasers to control quantum systems has now been demonstrated in many diverse investigations. Those performed to date employ closed-loop control of a laser pulse shaper to optimize a desired process. These experiments include adaptive pulse compression[22,23] and control of pulse phase,[24] manipulation of pure rotational[25] and vibrational[26] dynamics in diatomics, one and two photon transitions in atoms,[27,28] creation of specific wave functions in Rydberg atoms,[29] and generation of high harmonics in Ar gas.[30] In the case of controlling chemical processes, a number of experiments have been performed. These include schemes employing low lying resonances to maximize fluorescence from a dye molecule in solution,[31] generation of specific photochemical

fragments from organometallics[32,33] and alkali clusters,[34] maximization of stimulated Raman signal from methanol in solution,[35] and the optimization of coherent antistokes Raman emission.[36] Most recently, shaped, strong field laser pulses have been employed to enable the control of photodissociation processes in organic molecules.[1,37] The combination of closed-loop operations with strong field laser control has opened the door to the ready control of chemically interesting processes.

This paper seeks to define the emerging area of strong field control of chemical reactivity using closed-loop, tailored light pulses. To do this we review several relatively new areas of research including closed-loop optimization and strong field processes. We also review the experimental linkage of these two areas through spatial light modulation of intense laser radiation. Experiments using intense near-infrared laser pulses will be considered here. The paper is organized into the following sections. Section II reviews the processes resulting from the interaction of molecules with strong laser fields; including both electronic and nuclear dynamics. Principles of quantum optical control, and especially closed-loop learning control with tailored femtosecond laser pulses, are discussed[49] in section III. Laboratory laser control of atomic and molecular processes in the strong-field regime is the subject of section IV. Finally, section V considers future trends and possible new applications of closed-loop laser control of molecular dynamics phenomena.

## II. Molecules in Intense Laser Fields

When a molecule interacts with an intense laser pulse, a number of product channels may be accessed. Some of the potential outcomes are listed in Figure 3 where coupling into the nuclear, electronic, and nonlinear optical channels are delineated. Initial intuition suggested, incorrectly, that intense, short duration laser pulses interacting with polyatomic molecules would result primarily in multiphoton dissociation as shown in the first channel. Early experiments using intense nanosecond, picosecond, and femtosecond pulses provided ample evidence for the second and third coupling channels in Figure 3, which may be described as dissociative ionization and Coulomb explosion,[38] respectively. Pulses of femtosecond duration have been shown to couple into electronic channels, resulting in ionization without nuclear fragmentation for molecules such as benzene and naphthalene.[3] In such experiments the energy in excess of the ionization potential (up to 50 eV!)[39,40] couples mainly into the kinetic energy of the photoelectron. In terms of control experiments, the ability to produce intact ions at such elevated laser intensities suggested the possibility that intense lasers could be used to guide the dynamics of a molecule into a channel other than catastrophic decomposition. Molecules interacting with intense laser fields may also convert the fundamental of the excitation laser into higher harmonics.[41] This review will focus on the channels of dissociative ionization and molecular ionization listed in Figure 3.

The relative importance of each product channel shown in Figure 3 is dictated by the Hamiltonian for the molecule-radiation system. Our understanding of the Hamiltonian for polyatomic molecules in general, and the more complex Hamiltonian for the interaction between strong fields and molecules in particular, is rather limited at the present time.[9] One would like to have high quality time-dependent calculations to model the strong field interaction, but these are simply intractable with current computational technology. Calculations for simple systems containing up to three protons and one or two electrons have been performed, and these systems are reasonably well understood.[42-44] For polyatomic systems, the number of degrees of freedom is too large for first-principles calculations. Thus, simple models have been employed to gain some insight into the mechanisms of interaction between intense laser pulses and atoms.

There is a hierarchy of models for representing molecules interacting with intense laser fields. The earliest viewed the potential energy of interaction between the electron and the core as a delta function having a single state at the ionization potential of the system (called a zero-range potential).[45] Subsequently, a Coulomb potential was employed for calculations in atoms.[46,47] This was followed by a rectangular potential for molecules defined within the context of the structure-based model as shown in Figure 4.[9,39,48-50] The rectangular potential approximates the delocalization of electrons over the length scale of the molecular dimension by defining the width of the well to be equal to the characteristic length of the molecule. The characteristic length is defined as the largest distance between classical turning points in the three-dimensional electrostatic potential energy surface at the ionization potential of the molecule. The height of the rectangular well is the ionization potential of the molecule. A further advance incorporated time dependence into the radiation—molecule interaction to go beyond the quasi-static regime.[51]

The experiments reviewed in this article focus on both. photoelectron and photoion measurements to determine the basic phenomenology of strong field excitation of polyatomic species and to test theoretical models. The apparati used to measure the photoelectron and photoion distributions are shown in Figure 5. The electron kinetic energy distributions have been measured as a function of molecular structure and laser intensity. The photoelectron distribution provides a snapshot of the intense laser-molecule interaction during excitation because the time scale for photoelectron ejection is short (~fs) in comparison with the time scale for photoion decomposition (~ps). The latter provides information about the final state distribution of the laser-molecule interaction. The photoion experiments reviewed here include measurements of the ion mass distribution and ion kinetic energy distribution. The photoion kinetic energy distribution measurements compliment the photoelectron measurements regarding the final state energy partitioning after strong field excitation.

**A. Electronic Dynamics of Molecules in Intense Laser Fields.** To describe the mechanisms of strong field control of chemical processes it is important to consider the influence of the intense laser field on electrons in the molecule. For instance, we will see that bound electrons can gain significant ponderomotive energy (~1-5 eV) during the pulse, and eigenstates can shift by similar energies.[52] In the case of the interaction of a laser pulse with a molecule, the appropriate starting point is the Hamiltonian for a multielectron system interacting with an electromagnetic field:

$$H = \frac{P_c^{\ 2}}{2M} + \frac{1}{2\mu}\sum_{l=1}^{z} P_l^{\ 2} + \frac{1}{m_n}\sum_{i>j=1}^{z} P_i \cdot P_j + V(x_1\ldots, x_i, \ldots x_c) + \frac{e}{\mu c} A(x_c, t)\frac{i=1}{Z} P_i + \frac{Ze^2}{2\mu c^2} A^2(x_c, t) \quad (4)$$

where $P$ is momentum, $V$ is the potential energy as a function of position, $Z$ is the nuclear charge, and $A(x_{c,}t)$ is the vector potential of the laser radiation. The first four terms describe the field free motion of the system. The last two terms describe the effect of the laser radiation on the population of eigenstates and corresponding shifts in the eigenstates of the system. In the electric field gauge the last term becomes

$$Ze^2E^2(x_c, t)/(2\ \mu\omega^2) \quad (5)$$

where $E$ is the electric field of the laser, and $\omega$ is the frequency of the laser. The average of this term over the period of oscillation for linearly polarized light is

$$U_p = (Ze^2E_0^{\ 2})/4\ \mu\omega^2) \quad (6)$$

where $E_0$ is the amplitude of the electric field. $U_p$ is known as the ponderomotive potential. In strong fields this term shifts all eigenstates upward in energy equally by $U$p. A differential shifting of eigenstates results from the **A•P** term. To first and higher order, the **A•P** term may used to describe allowed transitions of amplitude between eigenstates. To second and higher order, this term will describe differential shifting of the eigenstates. The magnitude and sign of the shift of a given state are dependent on the wavelength and the electronic structure of the system. Pan et al.[53] have derived expressions for the shifting of the ground state and Rydberg/continuum states of a model system. A lowest nonvanishing order perturbation theory treatment[53] yields the ground ($\Delta E_g$) and Rydberg level ($\Delta E_R$) energy shifts as

$$\Delta E_g = -\frac{Ze^2E_0^2}{4\mu\omega^2} - {}^1/_2\ \alpha E_0^{\ 2} \quad (7)$$

$$\Delta E_R \approx 0 \quad (8)$$

where $\alpha$ is the ground-state polarizability. The first term in eq 7 is the negative of the ponderomotive potential $U_p$. The second term is equivalent to the dc Stark shift. This treatment is valid when the ground state is deeply bound and separated from adjacent ei genstates by many times the photon energy, hv- (the low-frequency approximation). This is valid for most atoms and molecules investigated with near-infrared or longer wavelength light. High lying bound states and all continuum states experience no **A•P** shift, whereas deeply bound states of the atom experience a much greater, negative shift.[54] The pertinent shift in the states as a function of the tenns in the Hamiltonian in the long wavelength limit is summarized in Figure 6.

The laser intensities employed in recent high field experimental manipulation of chemical reactivity range up

to $5 \times 10^{14}$ W $cm^{-2}$. This corresponds to ponderomotive shifts up to 10 eV with similar shifts in the separation of the ground and excited-state potential energy levels. The laser employed in these investigations has a period of 2.5 fs and an envelope with fwhm of 60-170 fs corresponding to at least a several hundred significant oscillations in the electric field vector interacting with the molecule. The states of the molecule undergo an associated oscillation in the splitting between energy levels that may result in periodic excitation on a time scale of the period of the laser. This dynamic shifting of energy levels implies that there will be transient field-induced resonances (or Freeman resonances).[55] Evidence for these resonances in the case of molecules has been obtained by measuring the strong field photoelectron spectroscopy of a number of molecules including acetone, acetylene,[52] water, benzene, and naphthalene.[56] The oscillatory nature of the intense laser excitation also leads to above threshold ionization (ATI) peaks in the photoelectron spectrum.[5] These are denoted by peaks spaced by the photon energy extending to many photons above the minimum number required for ionization.

In the case of acetylene,[52] strong field photoelectron evidence has been found for substantial shifting (1-4 eV) of the 4p series of Rydberg states to attain resonance. Peaks observed in strong field photoelectron spectra can be assigned via transient shifting of states by an amount up to the ponderomotive potential of the laser. The method developed to measure and assign the spectra is called field-induced resonance enhanced multiphoton ionization (FIRE MPI). To assign the strong field spectra one first calculates $U_p'(l)$, the variable ponderomotive shift required to bring a given candidate state into $l$ photon resonance[52] (see Figure 6 for the field dependent shifting of states). This virtual ponderomotive shift is

$$U_p'(l) = lh\nu - E_{state} \tag{9}$$

where $E_{state}$ is the energy of the given state under field-free conditions. $U_p'(l)$ is allowed to shift up to the maximum ponderomotive potential of the laser, $U_p$, because resonance may occur at any intensity within that range. The $IP$ of the system at the instant of resonance is shifted simultaneously to some higher (intensity dependent) value given by

$$IP'(l) = IP + U_p'(l) \tag{10}$$

The kinetic energy of the photoelectron generated by absorbing $m$ additional photons above the $l$ photon resonance is then

$$E_{feature} = (l + m)h\nu - IP'(l) \tag{11}$$

In the limit where $U_p' = 0$, eq 5 reduces to the conventional REMPI condition, $E_{feature} = (l + m)h\nu - IP$, where $lh\nu = E_{state}$. However, in strong laser fields, $E_{state}$ may shift into $l$ photon resonance, giving rise to the transient features observed in FIRE-MPI. All potential $l$-photon resonances are analyzed to determine those generating photoelectrons of appropriate kinetic energy. Such field-induced shifting of intermediate states provides a powerful mechanism for strong field coupling to molecules and may be responsible in part for the strong field control mechanism. In the case of acetylene, the measurements also demonstrated that strong field photoelectron spectroscopy could detect states that had been theoretically predicted but were not detected using nanosecond resonance-enhanced multiphoton ionization because of short-lived states.

Transient resonances are not the only strong field processes induced upon molecular eigenstates during intense laser. The electric field can also broaden molecular states through a lifetime mechanism. Lifetime broadening is expected for any mechanism that causes decay of population from a given state, including, for example, ionization, nonadiabatic effects, and dissociation. In the static limit, an electric field superimposed on any system can result in tunneling. The tunneling rate may be calculated using the WKB approximation (modeling the system as one-dimensional) where the rate is given by

$$w = \exp\{-2\int_{r_1}^{r_2} [2(IP - V(r))]^{1/2}\, dr\} \tag{12}$$

where the limits of integration are defined by the path length for tunneling, as shown in Figure 4. The lifetime of the

molecule in the neutral state is given by the inverse of the tunnel ionization rate. Thus, an upper limit is placed on the lifetime of the neutral state which may then be related to the uncertainty of the state energy by the Heisenberg relation

$$\Delta E \Delta\ t = h \text{ or } \Delta E w^{-1} = h \qquad (13)$$

Lifetime broadening enhances the opportunity for excitation and may be thought of as a mechanism for increasing excitation bandwidth. Here, the excitation bandwidth is the combination of the laser bandwidth and the width of the field-induced quasi continuum. In the weak field regime, the excitation bandwidth is given almost exclusively by the bandwidth of the exciting laser. A long duration radiation source, such as a nanosecond laser, will have a bandwidth of ~μeV, while a 100 fs duration laser will have a bandwidth of ~50 meV. In the weak field case the excitation scheme is necessarily limited to states that fall within the spectral range of the excitation source and possibly low harmonics of that source. In the strong field case there is an opportunity to increase the bandwidth of the excitation laser by widening the eigenstate to a band of perhaps several eV by the lifetime broadening mechanism. A schematic of the combined effects of state shifting and lifetime broadening is shown in Figure 7. These strong field effects provide an attractive regime to consider for molecular control, as one no longer needs to search for a molecule that suits the finite laser frequencies available in the laboratory. Rather, the laser pulse may be tailored to suit virtually any molecule.

Evidence for the broadening of eigenstates during the strong field excitation process, can be found in the photoelectron measurements for acetylene,[50] benzene, and naphthalene.[56] In each of these molecules the photoelectron spectra contain a well-defined series of features that can be assigned using the method of FIRE MPI as described previously. As the laser intensity increases above that required for detection of photoelectrons, the features begin to broaden. In general at an intensity of roughly 1 order of magnitude larger than the ionization threshold, the discrete features are smeared into a continuum. This implies that for these highly nonlinear processes broadening on the order of several eV occurs rapidly above the threshold for ionization, perhaps through the lifetime mechanism. The fact that intact ions are observed in the mass spectra at these elevated intensities suggests that ionization of dissociated products is not responsible for loss of the features. A similar broadening of eigenstates has been observed at constant laser intensity in the series benzene, naphthalene, and anthracene at constant laser intensity where the characteristic length of the molecule increases.[39] In the case of benzene, having the smallest characteristic length and hence the largest barrier to tunnel through, there are several series of observable features. In the case of naphthalene, having a larger characteristic length, there are discrete features superimposed on a feature having a broad distribution of energies. Anthracene reveals no evidence for well-resolved peaks within the broad photoelectron distribution. These observations suggest that the lifetime broadening scales with increasing characteristic length.

An important consideration for the control of chemical reactivity in the strong field regime is the order of the multiphoton process during excitation. This order indicates the maximum number of photons that are available to drive a chemical reaction. Some indication of the number of photons involved in the strong field excitation process can be gleaned from measurements of strong field photoelectron spectra. Figure 8 displays the photoelectron kinetic energy distribution for benzene with the energy axis rotated by 90 degrees. The energy scale has been offset to include the energy of the ground and ionization potential of the molecule in the absence of the strong electric field. The arrows on the figure represent the photons involved in both exceeding the ionization potential and in creating the above threshold ionization photoelectron distribution. At least six photons are required to surmount the ionization potential of benzene. Recall that in the presence of the strong electric field, the ionization potential will increase by an amount greater than the ponderomotive potential, further increasing the actual number of photons involved in the excitation process. At the intensity of $10^{14}$ W $cm^{-2}$ in this measurement, on the order of 10 photons may be absorbed to induce the photoelectron spectra shown. Including the photons required to reach the ionization potential, this means that approximately 20 photons may be involved in the excitation process. With the shaped pulses used in the experiments described in section IV, the intensities are lower and on the order of 10 or fewer photons are likely involved in the excitation process.

Several other methods have been developed to predict the ionization probability of molecules. One is based on discretizing a molecule into a collection of atomic cores that individually interact with the strong laser field and emit electrons. [57] In this model, a carbon atom, for instance, is represented by an atom with an effective potential. The ionization probability is then a function of the individual ionization probabilities from atoms with opportunity for quantum interference during the ionization event Unfortunately, the method must be parameterized for each molecule at the present time. The second method under development employs S-matrix[57] theory to calculate the ionization probability for atoms and now molecules. This method focuses on the interference of the outgoing electron wave. Predictions about relative ionization probabilities are based on the symmetries of the highest occupied molecular orbital.

**B. Nuclear Dynamics of Molecules in Intense Laser Fields.**

The response of a molecule to a time-dependent electric field is the means by which chemical reactivity is controlled in these experiments. In the case of weak laser fields, the response can be calculated with reasonable accuracy.[58-60] In the case of strong fields, the situation is much more complex but the dynamical possibilities are much richer. In principle, the nuclear dynamics in strong laser fields could be determined using exact numerical solutions of the time-dependent Schrödinger equation. Such solutions are possible only for the simplest of molecules at the present time.[42-44] In fact, the bulk of such simulations have been performed using a one-dimensional model for the $H_2$+ system.[61-63] These calculations show the presence of non-Born-Oppenheimer electron—nuclear dynamics. Since the nuclei move considerably on the time scale of the laser pulse, electronic modes are necessarily coupled with nuclear modes. Three distinct final states have been observed in strong field (no pulse shaping) mass spectra of polyatomic molecules: production of intact molecular ion, ionization with molecular dissociation, and removal of multiple electrons to produce Coulomb explosion.[9] The hallmark of. the latter process is production of ions substantial (>5 eV) kinetic energy. The presence of Coulomb explosion has been shown to depend on charge resonance-enhanced ionization[64] (CREI) which becomes the dominant mechanism at large critical internuclear distances. Interestingly, the production of high charge states in molecular clusters can be controlled using pump-probe excitation schemes.[65]

At intensities that are lower than the threshold for multielectron ionization, the majority of molecules display some fraction of intact ionization. This phenomenon is not expected intuitively because the ionization processes are not resonant with low order multiples of the fundamental frequency, implying that intense pulses must be employed for excitation. Nonetheless, many molecules have been investigated to date and all appear to provide some degree of intact molecular ionization when 800 nm excitation is employed. The mechanism behind this ionization appears to involve suppression of ladder switching coupled with coherent excitation of electronic modes. The state of this subject has been reviewed recently.[9,66,67]

To measure the amount of energy that may couple into the nuclear degrees of freedom during the intense laser excitation event, we have investigated[40] the kinetic energy release in $H^+$ ions using both time-of-flight and retarding field measurements. A typical time-of-flight mass spectroscopy apparatus employed to make such measurements is shown in Figure 5. In the series benzene, naphthalene, anthracene, and tetracene, the most probable kinetic energy in the measured distributions was observed to increase as the characteristic length of the molecules increased as shown in Figure 9. The corresponding retarding field measurements are shown in Figure 10. Again the coupling into nuclear degrees of freedom was observed to increase in the larger molecules. The most probable kinetic energies increased from 30 V for benzene to 60 V for tetracene when a $1.2 \times 10^{14}$ W $cm^{-2}$ laser excited the molecules. In terms of providing an enabling capability for strong field control, these results suggest that up to 80 photons may be involved in the excitation process when a molecule such as tetracene is excited under strong field conditions.

A general observation after ionization of large polyatomic molecules is the measurement of an enhanced degree of dissociation as the length of the molecule increases. This was first attributed to field-induced effects[3] without a quantitative model. Recently, a strong field nonadiabatic coupling model has been introduced to account for the enhanced coupling into nuclear modes in molecules with increasing characteristic length.[51] This excitation is akin to plasmon excitation where the precise energy of the resonance depends on the coherence length and binding energy of the electrons and the strength and frequency of the driving field. The model considers the amplitude of electron oscillation in comparison with the length of the molecule. If the amplitude of oscillation is small, the molecule may first absorb energy nonresonantly and then ionize from the excited states. The amplitude of the electron oscillation in an laser field is given by $a_{osc} = E/\omega_L^2$. In the event that the $a_{osc} < L$, where $L$ is the characteristic length of the molecule, the electron gains ponderomotive energy from the laser. Given an energy level spacing of $\Delta_o$, the probability of nonadiabatic excitation within the Landau-Zener model becomes $\exp(-\pi\Delta_o^2/4\omega_L EL)$. As described,[45] the threshold for nonadiabatic excitiation (when $\Delta O^2 = \omega_L EL$) of a 4 eV transition for a system having $L$ = 13.5 Å with 700 nm radiation occurs at $5.6 \times 10^{12}$ W $cm^{-2}$. This theory implies that the probability for exciting nuclear modes in large molecules with delocalized electronic orbitals increases monotonically with characteristic length as observed experimentally.[3,51] The theory also suggests that intact molecular ionization will increase with increasing excitation wavelength for large molecules, and this has been confirmed.[51] Whether the nonadiabatic excitation can be controlled remains an open question at the present time. The present successes [1,32,37] in controlling chemical reactivity suggest that nonadiabatic processes either are not significant or that the closed-loop control method is able to effectively deal with this excitation pathway.

**III. Theoretical Concepts for Controlling Molecular Dynamics Phenomena**

**A. General Considerations.** The material in section II spelled out the phenomena and mechanisms operative when strong laser fields interact with polyatomic molecules. The present section will introduce the formal concepts and principles underying the control of molecular dynamics using such laser-induced processes. Attempts at controlling molecular-scale phenomena with lasers have a long history,[68] going back to the early 1960s. It is useful to freshly

examine the basic objectives and desires while considering the special features provided by operating in the strong field regime. Perhaps the most important aspect of operating with strong fields is the ability to move the molecular energy level resonances about, as necessary, to cooperate with the laser capabilities and thereby create molecular electronic-nuclear wave packets with great flexibility.[1] An essential feature of this process is the effective broad bandwidth provided the strong field interactions with the molecule. Analogous broad bandwidth control capabilities may also emerge from other laser technologies (e.g., locking together multiple lasers operating at distinct frequencies) in the future.[69]

Regardless of the control field characteristics, a basic goal of all chemical experiments is to achieve the best possible outcome (e.g., selective manipulation of reactivity). Thus an optimization process is a desirable way to manipulate molecular-scale phenomena, thereby laying the foundation for introducing optimal control theory[70-72] (OCT) as well as the allied realization of optimal control experiments[73] (OCE). The notions of OCE, and especially its practical closed-loop implementations, 2,74-84 have roots in OCT, and both procedures share some common algorithmic features.

Given the general goal of steering the dynamics of the molecular system, the next consideration is how to identify the appropriate laser fields to meet the posed objectives. Some 40 years ago, at the inception of laser control over reactivity, simple chemical intuition was thought to be sufficient for this purpose;[68] the lack of significant positive results over the subsequent approximately 30 years speaks to the inadequacy of using intuition alone. Physical intuition will always play a central role; however, it needs to be channeled into the appropriate mathematical and laboratory frameworks to be useful. A traditional approach to discover appropriate laser fields for molecular control would be through theoretical design, followed by implementation of the design in the laboratory upon the actual molecular sample.[70,72,73,85,86] This logic, folded in with the desire to achieve the best possible results, is the essence of OCT for attaining laser field designs. Although many practical difficulties may be encountered in executing such designs for interesting chemical systems (i.e., polyatomic molecules), OCT laid the foundation for OCE[2,87] leading to the recent successful laser experiments on manipulating chemical reactivity in complex molecules[1,32] and other systems.[30,35,88,89] In addition, the largely informational inadequacies (i.e., lack of quantitative knowledge of the Hamiltonian) and computational difficulties plaguing OCT are not inherent. Algorithmic and other advances will surely lead to better design capabilities in the coming years. For all of these reasons, section IIIB will summarize the general concepts behind OCT.

Although the capability of designing laser fields to achieve particular physical objectives is improving, a most interesting set of recent experiments,[1,30-32,35,88,89] and especially those involving strong field manipulation of polyatomic molecules, have operated by performing OCE directly in the laboratory. The success of this detour around OCT fundamentally rests on the ability to perform high throughput laser control experiments, [19] slaved to fast learning algorithms capable of operating at the apparatus duty cycle. In this fashion, patterns are rapidly identified in the control field $\rightarrow$ molecular response relationship emerging from each cycle of the closed-loop operations, thereby homing in on control fields that optimally achieve the desired physical objective. Notwithstanding the anticipated improvements in OCT and even the present ability to reliably perform laser field designs for certain "simple" chemical applications,[73] it is reasonable to categorically state that, in the foreseeable future, closed-loop OCE will form the only practical means of achieving successful control of complex polyatomic molecules, especially with multiple product channels. Thus, section IIIC will express the general principles and procedures for closed-loop OCE.

**B. Optimal Control Theory.** A fundamental question to ponder before considering any control field design algorithms is whether any field exists that may lead to successful control in a particular quantum system. This question is addressed by a controllability analysis. Controllability tools are available to assess whether it is, in principle, possible to arbitrarily steer about the wave function[90] and the more general time evolution operator[91] in any given quantum system expressed in a finite dimensional basis. Although an affirmative answer to controllability of the wave function would immediately imply the ability to control any physical observable for the system, the control of a particular observable should be a less demanding task to assess and possibly achieve. Even a respectable level of partial controllability may be quite adequate for many applications. However, the tools have yet to be developed for assessing controllability of arbitrary physical observables.

Putting aside fundamental issues of controllability, OCT forms a reliable design procedure to identify the best control field possible under a given set of conditions.[70,72,73,85,86] The most comprehensive means for controlling a molecule undergoing complex dynamical evolution is through coordination of the controlling electromagnetic field with the molecule's characteristics. The spectral content and temporal structure of the control field should be continuously alterable throughout the process. This tight coordination ensures that all of the dynamical capabilities (i.e., both electronic and nuclear) of the molecule can be exploited to best meet the chemical objectives. Given specified initial and final states of the molecule, as in eq 2, and any imposed restrictions on the field or molecular dynamics, the time-dependent control field required to meet the objective may be designed using OCT. This general formulation encompasses both the weak and strong field limits, and, in principle, is capable of discovering control methods based on two-pathway interference induced by monochromatic laser fields,[92,93] the "'pump-dump" techniques based on two ultrashort

laser pulses,[94,95] and control via stimulated Raman adiabatic passage.[96,97]

Optimal control theory has an extensive history in traditional engineering applications,[98] but the quantum nature of molecular-scale phenomena imposes special features. Consider a quantum system (e.g., a molecule), whose free evolution is governed by the Hamiltonian $H_0$. The full Hamiltonian of the laser-driven system is $H = H_0 - \mu\in(t)$, with the dynamics prescribed by eq 3. A more complete picture with all electrons and nuclei specifically treated could be considered based on the Hamiltonian in eq 4. The goal of OCT is to design an electric field that will allow manipulation of the system dynamics in a desired way, subject to eq 3 being satisfied.

A typical quantum control objective is to maximize the magnitude of the expectation value $\langle\gamma(T)|O|\psi(T)\rangle$ of a specified observable operator *O* at the final time *T.* For example, *O* might be the flux operator associated with a reactive channel, with the control objective being maximization of the product yield in that channel. In practice, there may be multiple objectives involving distinct observable operators corresponding to the desire to simultaneously manipulate several physical aspects of the same system (e.g., control the fate of multiple bonds in a polyatomic molecule). In addition, there may be costs or constraints on the form, magnitude, frequency, or other characteristics of the control field. These various objectives and constraints will often be in competition with each other. This recognition motivates posing the control design problem as an optimization attempting to strike a balance between the competing physical goals. Balancing such competition is an essential feature of OCT. The physical objectives are expressed collectively in a cost functional $J[\psi(t),\in(t)]$, dependent on the evolving wave function[70] (or density matrix,[99] if appropriate), the target states or expectation values, any constraints, and the electric field. Physical input, often guided by intuition, will enter through the form and relative weight given to the different terms in the cost functional. The cost functional *J* is optimized with respect to the control field $\in(t)$, to yield the best possible control performance in balance with any other competing factors.

Consider, for example, the case of maximizing the expectation value $\langle y(T)|O|\psi(T)\rangle$ of a positive definite operator *O* at the target time *T,* while minimizing the laser field fluence. In this circumstance, the cost functional may take the form

$$J = \langle\psi(T)|O|\psi(T)\rangle - \alpha_0\int_0^T [\epsilon(t)]^2\,dt - 2\mathcal{A}\int_0^T \langle\chi(t)|i\hbar\partial_t - H|\psi(t)\rangle\,dt] \quad (14)$$

Here, $\partial_t = \partial/\partial t, \alpha_0$ is a positive parameter chosen to weight the significance of the laser fluence, $|\psi(t)\rangle$ is the system wave function, and $|\chi(t)\rangle$ is a Lagrange multiplier introduced to ensure satisfaction of the Schrödinger equation in the design process. Requiring that the first variation of *J* with respect to $|\psi(t)\rangle$, $|\chi\text{-}(t)\rangle$, and $\in(t)$ satisfy $\delta J = 0$ will give equations for the wave function, Lagrange multiplier, and optimized laser field:[70,72]

$$i\hbar\partial_t|\psi(t)\rangle = H|\psi(t)\rangle, |\psi(0)\rangle = |\psi_0\rangle \quad (15)$$

$$i\hbar\partial_t|\chi(t)\rangle = H|\chi(t)\rangle, |\chi(T)\rangle = O|\psi(T)\rangle \quad (16)$$

$$\epsilon(t) = -\mathcal{J}\chi(t)|\mu|\psi(t)\rangle/\alpha_0 \quad (17)$$

Here, $|\psi_0\rangle$ is the initial state of the quantum system. Numerical solution of the above equations will give the desired optimal control field, although this often is a problem of significant computational complexity. Specifically, the accurate solution of the many-dimensional Schrödinger equation in eqs 15 and 16 poses a significant challenge even for cases with a few atoms. Equations 15-17 will generally have multiple solutions corresponding to a family of locally optimal control field designs.[100] Various iterative algorithms have been developed for the calculation of optimal control fields and many numerical examples have demonstrated quantum optimal control of molecular-scale phenomena, (e.g., rotational, [101] vibrational,[102] electronic,[103] reactive,[104,105] and other processes.[106] In addition to achieving a balance among the physical objectives, the OCT design process may also include the goal of achieving the objectives while simultaneously having the process be as robust as possible to laser field errors or Hamiltonian uncertainties.[107]

The many OCT simulations performed in recent years have produced physical insight into the control of quantum phenomena. However, all of these efforts have been carried out with relatively simple systems or simple models of complex systems. Notwithstanding this comment, the most important result coming from the various OCT simulations is that successful control fields exist, capable of providing high quality molecular manipulation to meet many physical objectives. The significance of this conclusion stands, regardless of the fact that it is drawn from models of molecules and other systems. The ability to perform OCT will surely improve in the coming years, and it should continue to provide at least physical insight into virtually all control applications.

**C. Optimal Control Experiments.** Optimal control theory has proved to be a valuable theoretical tool for exploring coherent laser manipulation of quantum systems. However, attaining laboratory-significant OCT field designs requires precise knowledge of the system Hamiltonian, which often is not available for the most interesting molecules or materials, even for those of modest complexity. The quality of laser field designs is also limited by the ability to accurately solve the design equations. To appreciate the significance of these comments, recall that quantum control relies on the often delicate manipulation of matter wave interferences through the proper tuning of laser phases and amplitudes. It is reasonable to expect that there will be only limited tolerance to inevitable field design errors.

A crucial step toward attaining high-quality laboratory laser control of molecular-scale phenomena was the introduction of adaptive control techniques, initially suggested by Rabitz and Shi in 1991,[87] and elaborated on by Judson and Rabitz in 1992[2] and in subsequent investigation.[74-76,78-81] In this OCE approach, known as learning control, a loop is closed in the laboratory around the quantum system, with results of the control field → observable outcomes used to evaluate the success of the candidate applied laser field designs and to refine them, until the control objective is reached as best as possible with an optimal field. In learning control, a new molecular sample is used in each cycle of the loop, which (i) circumvents the possibly disruptive back action exerted by the measurement process on a quantum system, and (ii) permits the loop closure to be performed on laboratory apparatus cycling time scales (e.g., ~$10^{-3}$ s for liquid crystal laser modulators). The OCE learning process is based on the following realizations: (A) The molecule "knows" its own Hamiltonian, with no uncertainty. (B) when exposed to a laboratory control field, a molecule will solve its Schrödinger equation on ultrafast real molecular time scales, with absolute fidelity. (C) Laser pulse shapers with duty cycles of up to $10^4$ distinct pulses per second are becoming available under full computer control. (D) Many physical objectives correspond to easily detectable outcomes, calling for little or no refined data analysis. (E) Fast algorithms exist to recognize patterns in the emerging control field → observable relationships, to automatically suggest new (better) control fields.

The synthesis of steps (A),...,(E) produces an efficient closed-loop learning procedure for teaching lasers to control quantum systems, and a schematic of this process is shown in Figure (2).

The learning control procedure for manipulating quantum systems generally involves five basic elements: (1) an input trial control laser design, (2) the laboratory apparatus for generation of shaped laser pulses, (3) application of the laser control fields to the quantum system sample, (4) observation of the resultant control outcome, and (5) a learning algorithm that analyzes the measurement results from the prior experiments and suggests a new control field to be used in the next loop cycle. All of the current closed-loop learning control experiments[1,30-32,35,88,89] were started by generating random initial control fields (i.e., side-stepping element (1) above). However, an OCT design may yield a good initial estimate for further laboratory OCE refinement as well as provide helpful guidance on the physical mechanism involved.[73,87]

An important enabling technology for laboratory quantum learning control is the ability to shape ultrafast laser pulses on the femtosecond scale. [108] This technology is presently available and rapidly improving. Phase and amplitude modulation of the frequency components of the dispersed pulse is performed in the focal plane typically by an acousto-optic modulator (AOM)[17] or by a liquid crystal modulator (LCM).[20] The advantages of the AOM include high spectral resolution and fast response time, but it suffers from low light transmission (typically, about 5%). A LCM exhibits high light transmission (about 80%) and easy implementation (these devices are commercially available for the spectral range from 430 nm to 1.6 μm). However, a LCM has low spectral resolution (typically 128 discrete pixels) and slow transformation times, requiring at least a millisecond to change the pixels. Fast transformation times are important for closed-loop learning control, which may require exploring many thousands of distinct pulse shapes before finding an optimal result. However, current molecular implementations are not significantly limited by the number of LCM pixels or the pixel transformation time.

The present pulse-shaping technology in the visible and near-infrared spectral ranges is suitable for exciting transitions between molecular electronic surfaces and for the manipulation of highly excited molecular vibrations. Further progress in the development of pulse shapers working in the mid- and far-infrared spectral ranges is necessary for control of molecules in their ground electronic state. The stability of pulse shapers appears to be adequate for the majority of chemical applications. The presence of modest noise in the laser electric field does not limit the quality of laboratory learning techniques employing evolutionary algorithms, and can even help the search for a better solution in a complex multidimensional parameter space. [74,75,80] The opinion existed just a few years ago that the use of monochromatic lasers for control would be preferable in practice because laboratory learning control with tailored pulses

would be too difficult to implement. However, recent advances in pulse-shaping technology have made this point of view obsolete, as demonstrated by closed-loop laboratory methods employing ultrashort shaped laser pulses that are rapidly becoming common experimental practice, with excellent reliability.

There is no need to measure the laser field in the learning process, because any systematic characterization of the control "knobs" (e.g., pulse shaper parameters) is sufficient This set of control knobs, determined by the experimental apparatus, defines the parameter space to be searched by the learning algorithm for an optimal laser shape. The closed-loop OCE procedure naturally incorporates any laboratory constraints on the control laser fields. Moreover, the algorithm will identify only those pathways to desired products that are adequately robust to inevitable random disturbances encountered in the laboratory.[80]

The learning algorithm should be sufficiently intelligent to ensure that the cyclic control process will converge on the objective. A variety of learning algorithms may be employed,7[5,76,79] but following the original proposal,2 the recent laboratory studies [1,31-33,35,84,88,109-11] have focused on the use of evolutionary genetic algorithms[26,112 -114] as global search techniques. These techniques are quite effective even when noise is present,[74,75,80] both in the measurements of the control outcome and in the tuning of the laser field.

In contrast to excellent OCE performance, global search techniques are very difficult to use in numerical OCT simulations of learning control, because they demand enormous computational efforts.[112] In such theoretical simulations, the global search for the optimum requires numerous iterations of the computationally intensive task of solving the time-dependent Schrödinger equation. However, in OCE learning control, the global search is remarkably efficient, because the evolving quantum system naturally "solves" its Schrödinger equation as accurately and as fast as possible. This OCE procedure eliminates the numerical burden of solving Schrödinger's equation and allows for real-time adaptive control in the closed-loop experiments.

Although algorithms of the evolutionary type (e.g., genetic algorithms) are technically effective, they suffer from the conceptual drawback that little information about the control mechanisms is gained from the optimum search process. Recent progress has been made toward designing new algorithms for laboratory control that bring more insight into the physical processes operative in the controlled system.[81] One approach uses high-dimensional model representation (HDMR), which provides a systematic means to experimentally determine the functional relationship between the applied control field and the resulting value of the control objective.[115,116] In HDMR, the input (e.g., the control field) and the output (e.g., the control objective) are related through a hierarchy of control variable correlations. Nonlinear input → output maps based on HDMR have been recently employed to create an algorithm for laboratory learning control.[81] This task is facilitated by expressing the control phases, amplitudes, or other laboratory parameters as a set of $n$ input variables $(x_1,...,x_n) \equiv x$. A hierarchical map between a laboratory observable $O$ and $x$ may be written as

$$O(x) = O_0 + \sum_i O_i(x_i) + \sum_{i<j} O_{ij}(x_i,x_j) + \ldots \qquad (18)$$

Here, $O_0$ is the constant mean response, $O_i(x_i)$ describes the independent action of variable $x_i$, and $O_{ij}(x_i,x_j)$ describes the cooperative effect of the variables $x_i,x_j$, etc. Within HDMR, an input → output map (i.e., the significant functions on the righthand side of eq 18) is learned from laboratory data and may be used to facilitate the search for the optimal control field. An important feature of this algorithm is that the HDMR maps reveal the degree to which each field variable contributes to the desired control output, as well as the relative importance of correlations (e.g., $O_{ij}$) between different field parameters. The analysis of this information can be valuable even if the HDMR maps are not used for optimization, as they can clarify the physical mechanisms of control over molecular-scale processes.

Short of performing additional observations of the evolving controlled molecule, the primary clues about quantum control mechanisms are contained in the available control field. But before any reliable physical analysis of the field can be made, it is first necessary to ensure that the control field contains only those features that are truly required to achieve the control objective. Such a field cleanup must be done while the OCE learning process is being executed in the laboratory. An algorithm for this purpose was recently introduced and demonstrated in simulations.[80] It should be readily implemented in the laboratory, as it calls for no basic change in the OCE hardware.

In summary, closed-loop learning algorithms provide a broad generic tool for teaching a laser how to manipulate quantum phenomena of any type. The technique may operate with any suitable laser and detector appropriate for the particular physical system and its chosen objectives. As shown in the next section, closed-loop OCE in the strong field regime is especially attractive, as it can form a generic means for manipulating molecules and other quantum systems.

## IV. Strong Field. Control Using Tailored Laser Pulses

**A. Experimental.** To implement the OCE closed-loop control paradigm in the strong field regime three technologies are combined: (1) regenerative amplification of ultrashort pulses; (2) pulse shaping using spatial light modulation; and (3) some feedback detection system, (i.e., time-of-flight mass spectral detection in the experiments presented here). An overview of this implementation of the closed-loop control experiment is shown in Figure 11. Briefly, the experiment begins with a computer generating a series of random, time-dependent laser fields (40 such control pulses are employed in the experiments presented here). In some cases, prior estimates for fields might be available by design or from related systems to introduce specific trial field forms. Each of the control pulses is amplified into the strong field regime and subsequently interacts with the gas phase sample under investigation. Products are measured using time-of-flight mass spectrometry, and this requires approximately 10 μs to detect all of the ion fragments. The mass spectra are signal averaged with a number of repeats for the same pulse shape and analyzed by the computer to determine the quality of the match to the desired goal. The remainder of the control fields sequentially interact with the sample, and the fitness of the products are also stored on a computer. After each of the 40 control fields have been analyzed in terms of the product distribution, the results of the fitness are employed to determine which fields will be used to create the next set of laser pulses for interaction with the sample. The system iterates until an acceptable product distribution has been achieved.

The technique of regenerative amplification will be briefly described to better understand the pulse shaping method for implementing the control strategy. Kerr lens mode locking in an Ar ion-pumped Ti:sapphire crystal is used to generate the initial short pulse. With our system the pulse duration is approximately 20 is and is supported in 80 nm of bandwidth centered at 800 mn. The production of the short pulse occurs when the frequencies of the emission of the Ti:sapphire are phase locked according to

$$\sum_i \cos\omega_i t + \phi_\mathrm{i}) \qquad (19)$$

where the relative phase, $\phi_i$, is zero for each of the frequency components. Before amplification can occur, the pulse must be stretched from 20 fs to approximately 100 ps so that damage of the optics does not occur. Stretching is accomplished by making each frequency travel a different, well-defined path length before amplification. This is accomplished in our system by first dispersing the radiation using a grating as shown in Figure 12. The radiation is then collimated using a lens and is refocused onto a second grating. If the second grating is at the focal point of the second lens, no stretching occurs to the radiation and such an optical layout is termed a zero length stretcher. This stretching configuration is used (without retroreflection) in spatial light modulation schemes. If the second grating is not at the focal point of the second lens, the redder frequencies of the radiation travel a shorter path length than the blue frequencies and the pulse is stretched to a desired duration that depends on the path length difference. Most importantly, the relative phase delay between the frequency components can be compensated for after amplification in a second optical device, the compressor.

After stretching, the pulse amplification occurs in a second Ti:sapphire cavity that is pumped by a Nd:YAG laser. The pulse is amplified by passage through the gain medium on the order of 15 times, and the amplified pulse is fed to a dual grating compressor to return the relative phase of the frequency components as close as possible to the initial values. The distance between the grating pair can be adjusted to compensate for second order retardation effects of the optical components and thus minimize the duration of the amplified pulse. At a grating separation greater (less) than the optimal setting, the bluer (redder) frequencies lead the redder (bluer) frequencies producing a so-called negatively (positively) chirped pulse. The pulse duration can be adjusted using the separation in the gratings or by altering the bandwidth of the laser pulse that is amplified. Less bandwidth leads to longer pulse duration. Regenerative amplifiers have an intrinsic bandwidth limit due to gain narrowing, a phenomenon that arises because the laser gain profile is not a uniform function of frequency. There is a preferred frequency (having the highest gain) that becomes amplified at the expense of frequencies having lower gain.

To shape the laser pulse we first transform the pulse into frequency space using a zero length stretcher. The apparatus for this is shown in Figure 12. In the plane between the two lenses of the stretcher (the so-called Fourier plane) each of the frequency components of the pulse can be spatially addressed with high resolution. Modification of the relative phases and amplitudes of these components will change the shape of the time-dependent laser electric field after recombination on the second grating. To modify the phase and amplitude of the dispersed frequency components a CRI liquid crystal spatial light modulator is employed. This device has two arrays of liquid crystals, each having 128 pixels that are 100 μm wide and 2 mm high. The dead space between pixels is 3 μm. The arrays have crossed polarization axes. When followed by a polarization element, the sum of the retardances provides the phase modulation, $\phi_i$, and the difference of the retardances provides the amplitude modulation. The retardance is set by

specifying a voltage (between 0 and 10 V with 8-bit resolution in our case) to be applied to the liquid crystal. The set of the 2 × 128 voltages uniquely specifies the time-dependent electric field.

The voltages used to specify a time-dependent electric field are determined on the fly upon each cycle of the closed-loop by the computer using a genetic algorithm. The genetic algorithm produces a set of 40 time-dependent electric fields using the methods of cloning, crossover, and mutation. When cloned, the electric field with the best fitness value is simply copied *n* number of times in the next generation. A cloning rate of 2 provided good convergence rates in these experiments. Crossover denotes an operator that allows exchange between two tailored pulses. In this process two voltage arrays (genomes), A and B, are copied verbatim up to a randomly chosen element in the arrays. After that point the remaining genome of A is switched with B, while the remainder of B is switched with A. Mutation refers to a process where each voltage in the new genome has some probability to be modified to a new random value. For these experiments a mutation rate of 6% per pixel was found to acceptable convergence rates. The particular rates of mutation and crossover are specific to each laser system, detection scheme, and physical system.

**B. Trivial Control of Photochemical Ion Distributions.** We first consider whether manipulation of the dissociation distribution can be achieved by simple alteration of either pulse energy or pulse duration. These are termed trivial control methods, and in either case there is no need to systematically manipulate the relative phases of the constituent frequency components. Pulse energy modulation is achieved here using a combination of a polarization rotator and beam splitter or by the use of thin glass cover slips to reflect away several percent of the beam. Pulse duration control can be implemented by either restricting the bandwidth of the seed laser or by placing a chirp onto the amplified pulse in the compressor optics.

Investigations of trivial control suggest that the ionization/fragmentation distribution can often be manipulated by altering either pulse energy or pulse duration. Whether this is a general observation for all molecular systems is under active investigation. As an example, Figure 13 shows the mass spectral distributions measured for *p*-nitroanaline as a function of either pulse duration (Figure 13a) or pulse energy (Figure 13b). In the case of the transform limited mass spectrum at $10^{14}$ W $cm^{-2}$ there are many features in the mass spectrum corresponding to production of the $C_{1\text{-}5}H_x^+$ fragments. There is a minor peak at *m*/*e* 138 amu corresponding to formation of the parent molecular ion. We observe that when the pulse duration is increased the fragmentation distribution shifts toward lower mass fragments. This indicates an enhanced opportunity for ladder switching during the excitation process. Ladder switching allows facile excitation of the internal modes of the molecule.[9] Increasing the pulse duration also leads to lowering the pulse intensity. Alternatively, to lower the pulse intensity, the pulse energy can be reduced. When this form of trivial control is implemented, a completely different mass spectral distribution is obtained, as shown in Figure 13b. When the intensity is reduced by a factor of 5, the parent molecular ion becomes one of the largest features in the mass spectrum. These results suggest that in any control experiment a series of reference experiments probing the products as a function of pulse energy and duration are necessary to rule out the possibility of trivial effects.

**C. Closed-loop Control of Selective Bond Cleavage Processes.** Closed-loop control in the strong field regime has now been demonstrated on a series of ketone molecules.[1] We begin with acetone as a simple polyatomic system. Figure 14 displays the transform limited mass spectrum resulting from the interaction of acetone vapor with a pulse of duration 80 fs and intensity $10^{13}$ W $cm^{-2}$. There are a number of mass spectral peaks corresponding to various photoreaction channels as summarized in Scheme 1. Channel (a) corresponds to simple removal of an electron from the molecule to produce the intact acetone radical cation at *m*/*e* = 58. As noted in the Introduction, the ability to observe the intact molecule in the mass spectrum reveals that not all of the excitation energy necessarily couples into nuclear modes. The second pathway, (b), observed is cleavage of one methyl group to produce the $CH_3CO$ and methyl ions. The third pathway corresponds to the removal of two methyl species to produce the CO and methyl ions. Only one of the product species in each channel is shown with a positive charge. Clearly there will be a probability for each of the product species to be ionized that depends on the details of the laser pulse, the fragment's electronic and nuclear structure, and the dissociation pathway.

One of the simplest illustrations of the OCE closed-loop control algorithm is the case of enhancing the $CH_3CO$ ion signal from acetone. This corresponds to specifying optimization of the second pathway b shown in Scheme 1. Using this criterion, representative mass spectra are shown as a function of generation in Figure 15 when the algorithm has been directed to increase the intensity of the methyl carbonyl ion at $m/e^-$ = 43 amu. The intensity of this ion increases by an order of magnitude by the fifth generation in comparison with the initial randomly generated pulses and is seen to saturate shortly thereafter. The modulation in the signal in subsequent generations is largely

SCHEME 2

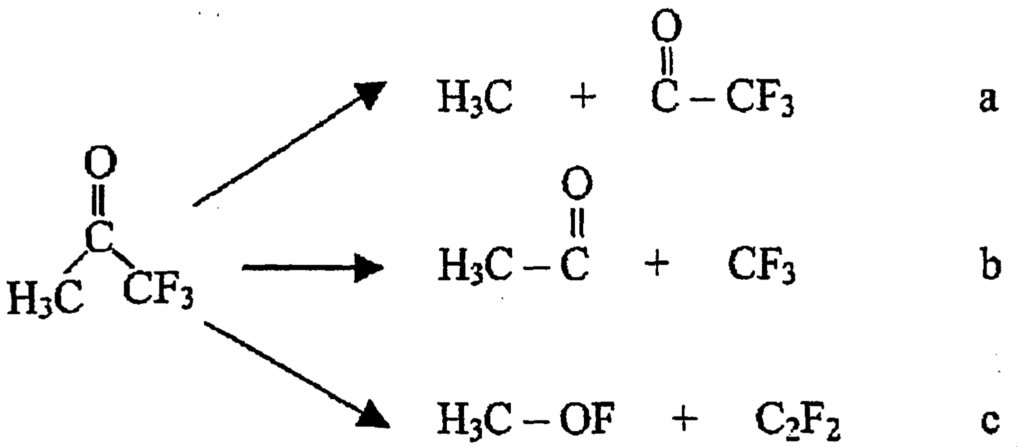

due to the algorithm searching new regions of amplitude and phase control field space through the operations of mutation and crossover. The experiment demonstrated two important features of the closed-loop control. The first was that the algorithm was capable of finding suitable solutions in a reasonable amount of laboratory time (10 min in this case). The second was that the shaped strong field pulses were able to dramatically alter the relative ion yields and thus the information content in a mass spectrum. We anticipate that the method will have important uses as an analytical tool based on this capability. Finally, the control exerted in this case is of the trivial form, and is due to intensity control as indicated by the masks showing that the optimal pulse was near transform limited and of full intensity. The reference experiments also demonstrated that intense transform limited pulses resulted in a similar fragmentation distribution.

The control over the selective cleavage of various functional groups has been investigated using the molecules trifluoroacetone and acetophenone. Trifluoroacetone was investigated because there are two distinct unimolecular decomposition routes as shown in Scheme 2 a and b.

Figure 16 displays the mass spectrum associated with the transform limited, intense laser excitation of trifluoroacetone. The ions of importance in the spectrum include peaks at *m*/*e* 15, 28, 43, 69, and 87 corresponding to $CH_3$, CO, $CH_3CO$, $CF_3$, and $CF_3CO$. These peaks are associated with cleavage of the methyl, fluoryl, or both species from the carbonyl group as indicated in Scheme 2. Interestingly, there is also a feature at *m*/*e* = 50 amu that can only be assigned to $CH_3OF$ shown in pathway (c). This species must be formed by an intense field rearrangement process and has not been observed in the weak field regime of photochemical reactivity. Such rearrangement processes are discussed in more detail in section IV.4.

The ability of the closed-loop control to cleave a specific bond is demonstrated in Figure 17 where we have specified that the algorithm search for solutions enhancing the signal at *m*/*e* = 59. This ion corresponds to the $CF_3$ species. Figure 17 demonstrates that the closed-loop OCE method may be used to enhance the desired ion signal by a factor of approximately 30 in comparison with the initial random pulses. While this experiment was successful in enhancing the desired ion yield, it does not necessarily demonstrate control. Control is achieved when one channel is enhanced at the expense of another.

To demonstrate control over selective cleavage of specified bonds in a molecule we consider acetophenone, a system that has a carbonyl species bound to methyl and phenyl functional groups. The transform limited mass spectrum for acetophenone is shown in Figure 18. There are numerous peaks detected in the spectrum revealing that there are a multitude of decomposition paths available after excitation. The ions observed at 15 and 105 amu correspond to the species obtained after cleavage of the methyl group. The pair of ions at 77 and 43 amu correspond to cleavage of the phenyl group. The dissociation

## SCHEME 3

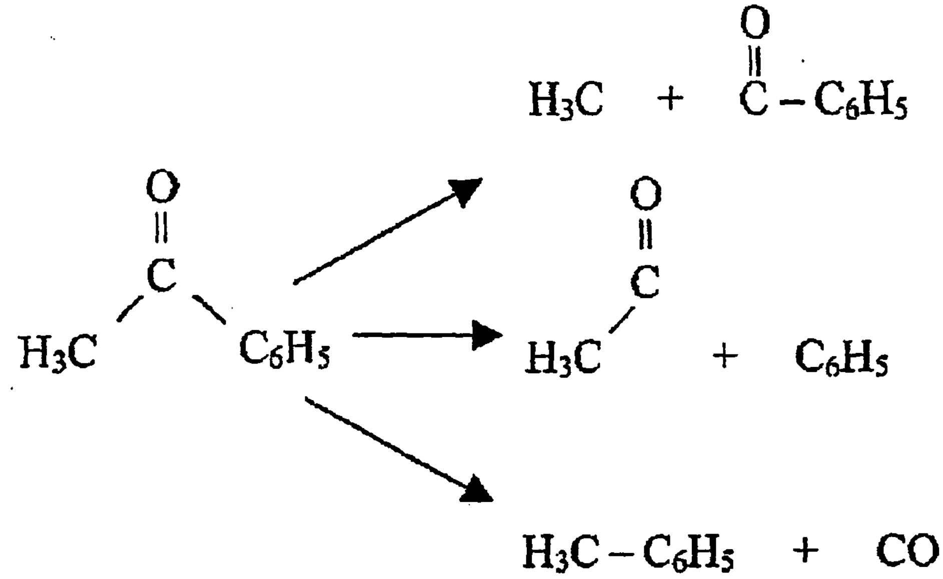

a

b

c

and rearrangement reactions investigated for this molecule are shown in Scheme 3.

Scheme 3(c) implies the rearrangement of acetophenone to produce toluene and CO, and this is signified in the mass spectrum by peaks at 92 and 28 amu, respectively. To determine whether a path can be selectively enhanced, we specified enhancement of the ion ratio for the species $C_6H_5CO/C_6H_5$. This denotes selective cleavage of the methyl group at the expense of the phenyl group. Note that we do not stipulate how the ratio should be increased, i.e., increase $C_6H_5CO$ or decrease $C_6H_5$. Picking a particular path could be done with another cost functional. The ratio as a function of generation is shown in Figure 19. The ratio increases by approximately a factor of 2 after 20 generations. Other ions could have been chosen to control the cleavage reaction, the two chosen happen to be experimentally convenient. Themnodynamically, the goal of enhancing methyl dissociation is the favored cleavage reaction because the bond strength of the methyl group is 15 kcal less than that of the phenyl group. [117] The ratio of phenyl ion to phenyl carbonyl can also be enhanced as shown in Figure 20. The learning curve for this experiment reveals that the phenyl carbonyl ion remains relatively constant while the phenyl ion intensity increases. This is interesting because the energy required to cleave the phenyl-CO bond is 100 kcal while the methyl-CO bond requires 85 kcal. Thus the ratio of these ions can be controlled over a dynamic range of approximately five in the previously reported experiment[1] and a dynamic range of up to 8 has been recently observed.

The goal of laser control of chemical reactivity transcends the simple unimolecular dissociation reactions observed to date.[1.32-34,37] Observation of the toluene ion in the strong-field acetophenone mass spectrum suggests that control of molecular dissociative rearrangement may be possible. To test this

## SCHEME 4

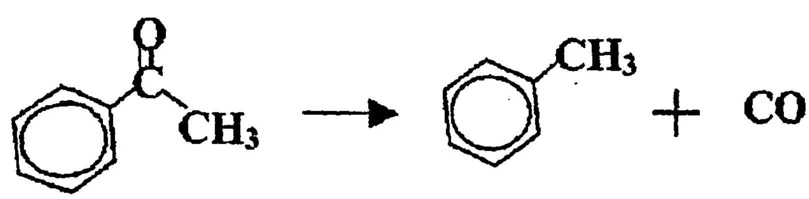

hypothesis we specified the goal of maximizing the toluene yield from acetophenone, as shown in Scheme 4. For toluene to be produced from acetophenone, the loss of CO from the parent molecule must be accompanied by formation of a bond between the phenyl and methyl substituents. The closed-loop control procedure produced an increase in the ion yield at 92 amu of a factor of 4 as a function of generation as shown in Figure 21. As a further test, we specified maximization of the ratio of toluene to phenyl ion and observed a similar learning curve to that in Figure 20; with an

enhancement in the toluene-to-phenyl ratio of a factor of 3. Again, the final tailored pulse does not resemble the transform-limited pulse. To confirm the identity of the toluene product, measurements on the deuterated acetophenone molecule $C_6H_5COCD_3$ were carried out and the $C_6H_5CD_3^+$ ion was the observed product in an experiment analogous to Figure 21. The observation of optically driven dissociative rearrangement represents a new capability for strong field chemistry. In fact conventional electron-impact mass spectrometric analysis of acetophenone is incapable of creating toluene in the cracking pattern. In strong-field excitation, the molecular electronic dynamics during the pulse is known to be extreme, and substantial disturbance of the molecular eigenstates (compare with Figure 1) can produce photochemical products, such as novel organic radicals, that are not evident in the weak-field excitation regime. Operating in the strong field domain opens up the possibility of selectively attaining many new classes of photochemical reaction products.

Extensive manipulation of mass spectra is possible when shaped, strong field laser pulses interact with molecules under closed-loop control. The control pulses occur with intensity of ~$10^{13}$ W $cm^{-2}$ where the radiation significantly disturbs the field-free eigenstates of the molecule. Even in this highly nonlinear regime, the learning algorithm can identify pulse shapes that selectively cleave and rearrange organic functionality in polyatomic molecules. These collective results suggest that closed-loop strong field laser control may have broad applicability in manipulating molecular reactivity. The relative ease in proceeding from one parent molecule to another should facilitate the rapid exploration of this capability.[1]

The limit on the range in control in the examples shown here may be due to a number of factors. The first is that we have employed a limited search space by ganging a series of eight collective pixels in each of the two masks to produce a total of 16 variable elements. We have observed that relaxing this restriction leads to a much longer convergence time, and while a better result is expected, we have not observed such to date. However, other researchers have employed schemes using all pixels, as well as schemes to constrain the amplitude and phase search space.[26,113] Furthermore, the mass spectrometer was limited to eight averages for these experiments so that convergence can occur on a reasonable time scale. Obviously longer averaging will require longer experiment times. This parameter is under investigation at the present time. Another reason for limited dynamic range is the requirement that the same pulse used to alter the nuclear dynamics also must produce ionization. Each of these processes requires a different pulse time scale. In the case of ionization, the shortest pulse possible, ~10s of fs, is best for high ionization rates with little dissociation. For the control of the nuclear wave packet it is expected that a pulse with duration on the time scale of nuclear motion, ~ps, should be optimal. Thus, separation of these two processes should lead to a higher dynamic range.

## V. Conclusion

Recent progress in the understanding of fundamental quantum control concepts and in closed-loop laboratory techniques opens the way for coherent laser control of a variety of physical and chemical phenomena. Ultrafast laser pulses, with shapes designed by learning algorithms, already have been used for laboratory control of many quantum processes, including unimolecular reactions in the gas and liquid phases, formation of atomic wave packets, second harmonic generation in nonlinear crystals, and high harmonic generation in atomic gases. One may expect a further increase in the breadth of controlled quantum phenomena, as success in one area should motivate developments in others. The various applications of coherent laser control, no matter how diverse, all rely on the same principal mechanism: the quantum dynamics of a system is directed by the tailored interference of wave amplitudes, induced by means of ultrafast laser pulses of appropriate shape. An important question is whether applications exist for which coherent laser control of molecular reactions offers special advantages (e.g., new products or better performance) over working in the traditional fully incoherent kinetic regime. Finding these applications will be of vital importance for the future progress of coherent control in chemistry and physics.

In addition to the practical utilization of laser control, the ultimate implications for controlling quantum processes may reside in the fundamental information extracted from the observations about the interactions of atoms. The following is intuitively clear: the more complete our knowledge of a quantum system, the better our ability to design and understand successful controls. But, is it possible to exchange the tools and the goals in this logical relationship and use control as a means for revealing more information on properties of microscopic systems? A challenging objective is to use observations of the controlled molecular dynamics to extract information on the underlying interatomic forces. Attaining precise knowledge of interatomic forces[73] has been a long-standing objective in the chemical sciences, and the extraction of this information from observed coherent dynamics requires finding the appropriate data inversion algorithms.

Traditionally, the data from various forms of continuous wave spectroscopy have been used in attempts to extract intramolecular potential information. Although such spectroscopic data are relatively easy to obtain, serious algorithmic problems have limited their inversion to primarily diatomic molecules or certain special cases of polyatomics. Analyses based on traditional spectroscopic techniques suffer from a number of serious difficulties, including the need

to assign the spectral lines and to deal with inversion instabilities. An alternative approach to the inversion problem is to use an excited molecular wave packet that scouts out portions of the molecular potential surfaces. The sensitive information about the intramolecular potentials and dipoles may be read out in the time domain, either by probing the wave packet dynamics with ultrashort laser pulses or via measurements of the emitted fluorescence. A difficulty common to virtually all inverse problems is their ill-posedness (i.e., the instability of the solution against small changes of the data) which arises because the data used for the inversion are inevitably incomplete. Recent studies suggest that experiments in the time domain may provide the proper data to stabilize the inversion process.[118,119] In this process, the excitation of the molecular wave packet and its motion on a potential energy surface may be guided by ultrafast control laser fields. Control over the wave packet dynamics in this context can be used to maximize the information on the molecular interactions obtained from the measurements. The original suggestion[87] for using closed-loop techniques in quantum systems was for the purposes of gaining physical information about the system's Hamiltonian. Now that closed-loop OCE is proving to be a practical laboratory procedure, the time seems right to consider refocusing the algorithms and laboratory tools to reveal information on fundamental physical interactions.

**References and Notes**

(1) Levis, R. J.; Menkir, G. M.; Rabitz, H. *Science* **2001**, *292*, 709.
(2) Judson, R. S.; Rabitz, H. *Phys. Rev. Lett.* **1992**, *68*, 1500.
(3) Dewitt, M. J.; Levis, R. J. *J. Chem. Phys.* **1995**, *102,* 8670.
(4) L'Huillier, A.; Balcou, Ph. *Phys Rev. Lett* **1993**, *70*, 774.
(5) Agostini, P. F.; Fabre, F.; Mainfray, G.; Petite, G.; Rabman, N. K. *Phys Rev. Lett.* **1979**, *42*, 1127.
(6) Zavriyev, A.; Bucksbaum. P. H.; Squier, J.; Saline, F. *Phys. Rev. Lett.* **1993**, *70,* 1077.
(7) Kosmidis, C.; Tzallas, P.; Ledingham, K. W. D.; McCanny, T.; Singhal, R. P.; Taday, P. F.; Langley, A. J. *J.Phys. Chem. A* **1999**, *103*, 6950.
(8) DeWitt, M. J.; Peters, D.W.; Levis, R. J. *Chem. Phys.* **1997**, *218.,* 211.
(9) Levis, R. J.; DeWitt. M. J. *J. Phys. Chem. A* **1999**, *103,* 6493.
(10) Villeneuve, D. M.; Aseyev, S. A.; Dietrich, P.; Spanner, M.; Ivanov, M. Y.; Corkum, P. B. *Phys Rev. Lett.* **2000,** *85*, 542.
(11) Purnell, J. S., E. M.; Wei, S.; Castleman, A. W., Jr. *Chem. Phys. Lett.* **1994**, *229,* 333.
(12) Schmidt, M.; Normand, D.; Cornaggia, C. *Phys. Rev. A* **1994**, *50*, 5037.
(13) Ditmire, T.; Zweiback, J.; Yanovsky, V. P.; Cowan, T. E.; Hays, G.; Wharton, K. B. *Nature* **1999**, *398*, 489.
(14) Gavrilla, M. *Atoms in Intense Fields,* Academic Press: New York, 1992.
(15) Tannor, D. J.; Rice, S. A. *Adv. Chem. Phys.* **1988**, *70,* 441.
(16) Brumer, P.; Shapiro, M. *Laser Part. Beams* **1998**, *16,* 599.
(17) Warren, W. S.; Rabitz, H.; Dahleh, M. *Science* **1993**, *259,* 1581.
(18) Shapiro , M.; Brumer, P. Coherent control of atomic molecular, and electronic processes. *In Advances in Atomic Molecular and Optical Physics,* **2000**; Vol. 42; p 287.
(19) Rabitz, H.; de Vivie-Riedle, R.; Motzkus, M.; Kompa, K. *Science* **2000**, *288*, 824.
(20) Weiner, A. M. *Optical Quantum Electron.* **2000**, *32*, 473.
(21) Tull, J. X. D., M. A.; Warren, W. *S.Adv. Magnetic Optical Reson.* **1996**, *20*.
(22) Yelin, D.; Meshulach, D.; Silberberg, Y. *Optics Lett.* **1997**, *22*, 1793.
(23) Brixner, T.; Oehrlein, A.; Strehle, M., Gerber, G. *Appl. Phys. B* **2000**, *70*, S119.
(24) Efimov, A.; Moores, M. D.; Beach, N. M.; Krause, J. L.; Reitze, D. H. *Optics Lett.* **1998**, *23*, 1915.
(25) Uberna, R.; Amitay, Z.; Loomis, R. A.; Leone, S. R. *Faraday Discuss.* **1999**, 385.
(26) Hornung, T.; Meier, R.; Motzkus, M. *Chem. Phys. Lett.* **2000**, *326*, 445.
(27) Meshulach. D.; Silberberg, Y. *Nature* **1998**, *396,* 239.
(28) Hornung, T.; Meier, R; Zeidler, D.; Kompa, K. L.; Proch, D.; Motzkus, M. *Appl. Phys. B* **2000**, *71*, 277.
(29) Weinacht, T. C.; Ahn, J.; Bucksbaum, P. H. *Nature* **1999**, *397,* 233.
(30) Bartels, R.; Backus, S.; Zeek, E.; Misoguti, L.; Vdovin, G.; Christov, I. P.; Murnane, M. M.; Kapteyn, H. C. *Nature* **2000**, *406,* 164.
(31) Bardeen, C. J.; Yakovlev, V. V.; Wilson, K. R.; Carpenter, S. D.; Weber, P. M.; Warren, W. S. *Chemical Physics Lett.* **1997**, *280,* 151.
(32) Assion, A.; Baumert, T.; Bergt, M.; Brixner, T.; Kiefer, B.; Seyfried, V.; Strehle, M.; Gerber, G. *Science* **1998**, *282*, 919.
(33) Vajda, S.; Bartelt, A.; Kaposta, E. C.; Leisner, T.; Lupulescu, C.; Minemoto, S.; Rosendo-Francisco, P.; Woste, L. *Chem. Phys.* **2001**, *267*, 231.

(34) Daniel, C.; Full, J.; Gonzalez, L.; Kaposta, C.; Krenz, M.; Lupulescu, C.; Manz, J.; Minemoto, S.; Oppel, M.; Rosendo-Francisco, P.; Vajda, S.; Woste, L. *Chem. Phys.* **2001**, *267*, 247.
(35) Weinacht, T. C.; White, J. L.; Bucksbaum, P. H. *J. Phys. Chem. A* **1999**, *103,* 10166.
(36) Hornung, T.; Meier, R.; de Vivie-Riedle, R.; Motzkus, M. *Chem. Phys*. **2001**, *267*, 261.
(37) Moore, N. P.; Menkir, G. M.; Markevitch, A. N.; Graham, P.; Levis, R. J. The Mechanisms of Strong-Field Control of Chemical Reactivity Using Tailored Laser Pulses. In *Laser Control and Manipulation of Molecules*; Gordon, R. J., Ed.; ACS Symposium Series in Chemistry; American Chemical Society: Washington, DC, 2001.
(38) Cornaggia. C.; Lavancier, J.; Normand, D.; Morellec, J.; Agostini, P.; Chambaret, J. P.; Antonetti, A. *Phys. Rev. A* **1991**, *44*, 4499.
(39) DeWitt, M. J.; Levis, R. J. *Phys. Rev. Lett.* **1998**, *81*, 5101.
(40) Markevitch, A. N.; Moore, N. P.; Levis, R. J. *Chem. Phys.* **2001**, *267*, 131.
(41) Hay, N.; Castillejo, M.; de Nalda, R.; Springate, E.; Mendham, R. J.; Marangos, J. P. *Phys. Rev. A* **2000**, *6105,* 3810.
(42) Bandrauk, A. D.; Ruel, J. *Phys. Rev. A* **1999**, *59,* 2153.
(43) Bandrauk, A. D.; Chelkowski, S. *Chem. Phys. Lett.* **2001**, *336*, 518.
(44) Bandrauk, A. D.; Chelkowski, S. *Phys. Rev. Lett.* **2000**, *84*, 3562.
(45) Keldysh, L. V. *Sov. Phys. JETP* **1965**, *20*, 1307.
(46) Perelomov, A. M. P.; V. S.; Terent'ev, M. V. *Sov. Phys. JETP* **1966**, 924.
(47) Ammosov, M. V. D., N. B.; Krainov, V. P. *Sov. Phys. JETP* **1986**, 1191.
(48) DeWitt, M. J.; Levis, R. J. *J. Chem. Phys.* **1998**, *108*, 7045.
(49) DeWitt, M. J.; Levis, R. J. *J. Chem*. *Phys*. **1999**, *110*, 11368.
(50) DeWitt, M. J.; Prall, B. S.; Levis, R. J. *J. Chem. Phys.* **2000**, *113*, 1553.
(51) Lezius, M.; Blanchet, V.; Rayner, D. M.; Villeneuve, D. M.; Stolow, A.; Ivanov, M. Y. *Phys. Rev*. *Lett*. **2001**, *86,* 51.
(52) Moore, N. P.; Levis, R. J. *J. Chem*. *Phys*. **2000**, *112*, 1316.
(53) Pan, L.; Armstrong, L.; Eberly, J. H. *J. Opt. Soc. Am*. *B* **1986**, *3*, 1319.
(54) Bucksbaum, P. H.; Freeman, R. R.; Bashbansky, M.; McIlrath, T. J. *J. Opt*. *Soc*. *Am B* **1987**, *4*, 760.
(55) Freeman, R. R.; Bucksbaum, P. H. *J. Phys. B* **1991**, *24*, 325.
(56) Moore, N. P.; Markevitch, A. N.; Levis, R. J. *J. Chem*. *Phys*. **2001**/**2002**, submitted.
(57) Muth-Bohm, J.; Becker, A.; Chin, S. L.; Faisal, F. H. M. *Chem*. *Phys*. *Lett*. **2001**, *337*, 313.
(58) Mukamel, S.; Tretiak, S.; Wagersreiter, T.; Chernyak, V. *Science* **1997**, *277*, 781.
(59) Tretiak. S.; Chemyak, V.; Mukamel, S. *Phys. Rev*. *Lett*. **1996**, *77*, 4656.
(60) Tretiak, S.; Chernyak. V.; Mukamel, S. *Chem. Phys. Lett.* **1996**, 259, 55.
(61) Yu, H. T.; Zuo, T.; Bandrauk, *A. D. J. Phys B* **1998**, *31*, 1533.
(62) Yu, H. T.; Bandrauk, A. D. *Phys*. *Rev*. *A* **1997**, *56*, 685.
(63) Zuo, T.; Bandrauk, A. D. *Phys. Rev. A* **1995**, *52*, R2511.
(64) Chelkowski, S.; Conjusteau, A.: Zuo, T.; Bandrauk, A. D. *Phys*. *Rev. A* **1996**, *54*, 3235.
(65) Snyder, E. M.; Buzza, S. A.; Castleman, A. W. *Phys*. *Rev*. *Lett*. **1996**, *77*, 3347.
(66) Ledingham, K. W. D.; Singhal, R. P. *Int. J. Mass Spectrom. Ion Process.* **1997**, *163,* 149.
(67) Baumert, T.; Gerber, G. *Phys. Scripta* **1997**, *T72,* 53.
(68) Zewail, A. H. *Phys. Today* **1980**, *33*, 27.
(69) Sokolov, A. V.; Walker. D. R.; Yavuz, D. D.; Yin, G. Y.; Harris, S. E. *Phys. Rev*. *Lett*. **2001**, *8703,* 3402.
(70) Peirce, A. P.; Dahlel, M. A.; Rabitz, H. *Phys*. *Rev*. *A* **1988**, *37*, 4950.
(71) Shi, S. H.; Woody, A.; Rabitz, H. *J*. *Chem*. *Phys*. **1988**, *88*, 6870.
(72) Shi, S. H.; Rabitz, H. *J. Chem. Phys*. **1990**, *92*, 364.
(73) Rabitz, H.; Zhu, W. S. *Acc*. *Chem*. *Res*. **2000**, *33*, 572.
(74) Gross, P.; Neuhauser, D.; Rabitz, H. *J. Chem. Phys.* **1993**, *98*, 4557.
(75) Toth, G. J.; Lorincz, A.; Rabitz, H. *J. Chem. Phys.* **1994**, *101*, 3715.
(76) Phan, M. Q.; Rabitz, H. *Chem. Phys.* **1997**, *217*, 389.
(77) Toth, J.; Li, G. Y.; Rabitz, H.; Tomlin, A. S. *Siam*. *J*. *Appl*. *Math*. **1997**, *57*, 1531.
(78) Toth, G. J.; Lorincz, A.; Rabitz, H. *J. Mod*. *Opt*. **1997**, *44*, 2049.
(79) Phan, M. Q.; Rabitz, H. *J. Chem*. *Phys*. **1999**, *110*, 34.
(80) Geremia, J. M.; Zhu, W. S.; Rabitz, H. *J. Chem*. *Phys*. **2000**, *113,* 10841.
(81) Geremia, J. M.; Weiss, E.; Rabitz, H. *Chem. Phys*. **2001**, *267*, 209.
(82) de Vivie-Riedle, R.; Sundermann, K.; Motzkus, M. *Faraday Discuss.* **1999**, 303.
(83) de Vivie-Riedle, R.; Sundermann, K. *Appl. Phys*. *B* **2000**, *71.* 285.
(84) Hormung, T.; Motzkus, M.; de Vivie-Riedle, R. *J. Chem. Phys.* **2001**, *115*, 3105.
(85) Kosloff, R; Rice, S. A.; Gaspard, P.; Tersigni, S.; Tannor, D. J. *Chem*. *Phys*. **1989**, *139*, 201.
(86) Rice, S. *A.;* Zhao, M. *Optical Control of Molecular Dynamics*; John Wiley and Sons: New York, 2000.

(87) Rabitz, H.; Shi, S. In *Advances in Molecular Vibrations and Collision Dynamics;* JAI Press: New York., 1991; Vol. 1.
(88) Kunde, J.; Baumann, B.; Arlt, S.; Morier-Genoud, F.; Siegner, U.; Keller, U. *Appl. Phys. Lett*. **2000**, *77*, 924.
(89) Omenetto, F. G.; Taylor, A. J.; Moores, M. D.; Reitze, D. H. *Opt. Lett,* **2001**, *26*, 938.
(90) Turinici, G.; Rabitz, H. *Chem. Phys*. **2001**, *267*, 1.
(91) Ramakrishna, V.; Salapaka, M. V.; Dahleh, M.; Rabitz, H.; Peirce, A. *Phys. Rev. A* **1995**, *51*, 960.
(92) Brumer, P.; Shapiro, M. *Acc. Chem. Res.* **1989**, *22*, 407.
(93) Gross, P.; Rabitz, H. *J. Chem. Phys.* **1996**, *105*, 1299.
(94) Tannor, D. J.; Rice, S. A. *J. Chem. Phys.* **1985**, *83*, 5013.
(95) Shi, S. H.; Rabitz, H. *J. Chem. Phys.* **1992**, *97*, 276.
(96) Gaubatz, U.; Rudecki, P.; Schiemann, S.; Bergmann, K. *J. Chem*. *Phys*. **1990**, *92*, 5363.
(97) Rice, S. A.; Shah, S.; Tannor, D. J. *Abstr. Pap. Am. Chem. Soc.* **2000**, *220*, 280.
(98) Bryson, A. E. *Applied Optimal Control*; Hemisphere Publishing Corporation: Washington DC, 1975.
(99) Ohtsuki, Y.; Nakagami, K.; Fujimura, Y.; Zhu, W. S.; Rabitz, H. *J. Chem. Phys*. **2001**, *114*, 8867.
(100) Demiralp, M.; Rabitz, H. *Phys. Rec. A* **1993**, *47*, 831.
(101) Judson, R. S.; Lehrnann, K. K.; Rabitz, H.; Warren, W. S. *J. Mol. Struct*. **1990**, *223*, 425.
(102) Shi, S. H.; Rabitz, H. *Chem*. *Phys*. **1989**, *139*, 185.
(103) Amstrup, B.; Carlson, R. J.; Matro, A.; Rice, S. A. *J. Phys. Chem.* **1991,** *95,* 8019.
(104) Tannor, D. J.; Kosloff, R.; Rice, S. A. *J. Chem. Phys.* **1986,** *85*, 5805.
(105) Shi, S.; Rabitz, H. *Comput. Phys. Commun.* **1991,** *63*, 71.
(106) Gross, P.: Ramakrishna, V.: Vilallonga, E.; Rabitz, H.; Littman, M.; Lyon, S. A.; Shayegan, M. *Phys. Rev. B* **1994,** *49*, 11100.
(107) Beumee, J. G. B.; Rabitz, H. *J. Math. Chem.* **1993,** *14*, 405.
(108) Weiner, A. M. *Prog. Quantum Electron.* **1995,** *19*, 161.
(109) Zeidler, D.; Hornung, T.; Proch, D.; Motzkus, M. *Appl. Phys. B* **2000,** *70*, S125.
(110) Bergt, M.; Brixner, T.; Kiefer, B.; Strehle, M.; Gerber, G. *J. Phys. Chem. A* **1999,** *103,* 10381.
(111) Brixner, T.; Kiefer, B.; Gerber, G. *Chem. Phys.* **2001,** *267,* 241.
(112) Goldberg, D. E. *Genetic Algorithms in Search, Optimization & Machine Learning*; Addison-Wesley Longman, Incorporated: Reading, MA, 1989.
(113) Pearson, B. J.; White, J. L.; Weinacht, T. C.; Bucksbaum, P. H. *Phys. Rev. A* **2001,** *6306,* 3412.
(114) Zeidler, D.; Frey, S.; Kompa, K. L.; Motzkus, M. *Phys. Rev. A* **2001,** *6402,* 3420.
(115) Rabitz, H.; Alis, O. F. *J. Math. Chem.* **1999,** *25,* 197.
(116) Geremia, J. M.; Rabitz, H.; Rosenthal, C. *J. Chem. Phys.* **2001,** *114,* 9325.
(117) Berkowitz, J.; Ellison, G. B.; Gutman, D. *J. Phys. Chem.* **1994,** *98*, 2744.
(118) Zhu, W. S.; Rabitz, H. *J. Chem. Phys.* **1999,** *111,* 472.
(119) Lu, Z. M.; Rabitz, H. *Phys. Rev. A* **1995,** *52,* 1961.

## Claims

**1.** A quantum dynamic discriminator for analyzing a composition, comprising:

a. a tunable field pulse generator for generating a field pulse to manipulate at least one component of the composition;

b. a detector for detecting at least one signal arising from at least one interaction arising from the application of an observation field to the composition, the detected signal being correlated to at least one of the molecular structure of the at least one component, or the amounts of two or more components; and

c. a closed loop quantum controller for the tunable field pulse generator;

d. the controller being adapted with an optimal identification algorithm for iteratively changing the field pulse applied to the composition, the optimal identification algorithm operating to minimize the variance between the detected signal and at least one other detected signal in the iteration loop.

**2.** The quantum dynamic discriminator of claim 1 wherein the field pulse is controlled to manipulate the quantum dynamic state of at least one component in the composition.

3. The quantum dynamic discriminator of claim 1 wherein the field pulse is controlled to manipulate the amount of at least one component in the composition.

4. The quantum dynamic discriminator of claim 1 wherein the field pulse is controlled to manipulate the ionization state of at least one component in the composition.

5. The quantum dynamic discriminator of claim 1 wherein the field pulse is controlled to manipulate the detected signal for determining the molecular structure of at least one component in the composition.

6. The quantum dynamic discriminator of claim 1 wherein the observation field is generated by the tunable field pulse generator.

7. The quantum dynamic discriminator of claim 1 wherein the observation field is generated by a generator other than the tunable field pulse generator.

8. The quantum dynamic discriminator of claim 1 wherein the shape of the observation field is selected using a closed loop quantum controller employing an optimal identification algorithm.

9. The quantum dynamic discriminator of claim 1 wherein the tunable field pulse generator generates at least one electromagnetic pulse.

10. The quantum dynamic discriminator of claim 9 wherein the tunable field pulse generator is capable of tuning the frequency, wavelength, amplitude, phase, timing, duration, or any combination thereof, of the electromagnetic pulse.

11. The quantum dynamic discriminator of claim 9 wherein the tunable field pulse generator comprises a pulsed laser.

12. The quantum dynamic discriminator of claim 1 wherein the generator of the observation field comprises a continuous laser, a pulsed laser, a tunable pulsed laser, or any combination thereof.

13. The quantum dynamic discriminator of claim 1 wherein the closed loop quantum controller is capable of manipulating the constructive and destructive interferences of the field pulse and the quantum dynamic state of at least one component in the composition.

14. The quantum dynamic discriminator of claim 13 wherein the tunable field pulse induces at least one signal from at least one component in the composition while suppressing at least one signal from at least one other component in the composition.

15. The quantum dynamic discriminator of claim 1 wherein the detected signal comprises an electric field, a magnetic field, an electromagnetic field, an optical field, an acoustical field, a particle, an ionized particle, a magnetized particle, or any combination thereof.

16. The quantum dynamic discriminator of claim 1 wherein the signal is detected statically, dynamically, or both.

17. The quantum dynamic discriminator of claim 1 wherein multiple signals are detected.

18. The quantum dynamic discriminator of claim 17 wherein the multiple signals are averaged.

19. The quantum dynamic discriminator of claim 1 wherein the closed loop quantum controller comprises a genetic algorithm to control the tunable field pulse generator.

20. The quantum dynamic discriminator of claim 1 wherein the closed loop quantum controller varies at least one of frequency, wavelength, amplitude, phase, timing, or duration, of the electromagnetic pulse.

21. The quantum dynamic discriminator of claim 1 further comprising a sample chamber for holding the composition.

22. The quantum dynamic discriminator of claim 1 wherein the composition is exposed to the tunable field pulse in the sample chamber.

**23.** The quantum dynamic discriminator of claim 22 wherein the sample chamber is in fluid communication with a mass spectrometer.

**24.** The quantum dynamic discriminator of claim 1 wherein the quantum Hamiltonian of the component is estimated from a plurality of detected signals arising from interactions between the observation field and the component in the composition.

**25.** A sample identification system for ascertaining the identity of at least one component in a composition, comprising:

a. quantum dynamic discriminator for analyzing a composition, comprising:

i. a tunable field pulse generator for generating a field pulse to manipulate at least one component of the composition;

ii. a detector for detecting at least one signal arising from at least one interaction between an observation field applied to the composition; and

iii. a closed loop quantum controller for the tunable field pulse generator;

iv. the controller being adapted with an optimal identification algorithm for iteratively changing the field pulse applied to the composition, the optimal identification algorithm operating to minimize the variance between the detected signal and at least one other detected signal in the iteration loop;

and

b. a data set correlating the characteristics of the shape of the field pulse shape, the detected signal, or both, to the presence or absence of the component in the composition.

**26.** The sample identification system of claim 25 wherein the field pulse is controlled to manipulate the quantum dynamic state of at least one component in the composition.

**27.** The sample identification system of claim 25 wherein the field pulse is controlled to manipulate the amount of at least one component in the composition.

**28.** The sample identification system of claim 25 wherein the field pulse is controlled to manipulate the ionization state of at least one component in the composition.

**29.** The sample identification system of claim 25 wherein the field pulse is controlled to manipulate the detected signal for determining the molecular structure of at least one component in the composition.

**30.** The sample identification system of claim 25 wherein the observation field is generated by the tunable field pulse generator.

**31.** A method for identifying at least one component of a composition, the method comprising:

a. manipulating the component in the composition with at least one field pulse;

b. detecting at least one signal arising from at least one interaction between an observation field applied to the composition, the detected signal being correlated to at least one of the molecular structure of the at least one component, or the amounts of two or more components;

c. repeating steps a and b under the control of a closed loop quantum controller; and

d. correlating the tunable field pulse and the detected signal to the presence or absence of the component in the composition.

**32.** The method of claim 31 wherein the manipulating step comprises constructive and destructive wave interferences of the quantum dynamic states of the component in the composition.

**33.** The method of claim 31 wherein the composition comprises molecules.

**34.** The method of claim 33 wherein the molecules have similar optical absorption spectra.

**35.** The method of claim 31 wherein the field pulse comprises electromagnetic radiation.

**36.** The method of claim 35 wherein the electromagnetic radiation comprises laser light.

**37.** The method of claim 36 wherein at least one of frequency, phase, amplitude, timing and duration of the laser light is tunable.

**38.** The method of claim 31 wherein the detected signal comprises an electric field, a magnetic field, an electromagnetic field, an optical field, an acoustical field, a particle, an ionized particle, a magnetized particle, or any combination thereof.

**39.** The method of claim 32 wherein the wavepacket motion of the quantum dynamic state of the component is manipulated by a tunable electromagnetic pulse, the wavepacket motion giving rise to at least one discriminating signal.

**40.** The method of claim 39 wherein the discriminating signal comprises an electric field, a magnetic field, an electromagnetic field, an optical field, an acoustical field, a particle, an ionized particle, a magnetized particle, or any combination thereof.

**41.** The method of claim 39 wherein the discriminating signal is correlated to the component in the composition.

**42.** The method of claim 31 wherein the correlating step deductively identifies the component in the composition.

**43.** The method of claim 31 wherein the correlating step inductively identifies the component in the composition.

**44.** The method of claim 39 further comprising:

a. detecting the at least one discriminating signal;

b. applying to the composition at least one additional tunable electromagnetic pulse, the additional tunable electromagnetic pulse being tuned under the control of a closed loop quantum controller in response to at least one prior discriminating signal;

c. correlating the at least one tunable electromagnetic pulse and the at least one discriminating signal to the presence or absence of the at least one component in the composition.

**45.** A device for ascertaining the molecular structure of a quantum system, comprising:

a. a quantum control/measurement component, comprising a control optimization manager, a tunable field pulse generator for generating field pulses to manipulate the quantum system, and a detector for detecting a plurality of signals arising from interactions between a plurality of observation pulses applied to the quantum system; and

b. an inversion component for inverting data received by the quantum control/measurement component, the inverted data estimating at least one aspect of the molecular structure;

c. the quantum control/measurement component and the inversion component being linked together in a closed-loop architecture, the closed-loop architecture comprising a feedback signal being determined from the quality of the emerging molecular structure of the quantum system.

**46.** The device of claim 45 wherein the at least one aspect of the molecular structure is atom type, number of atoms, bond length, bond angle, bond type, number of bonds, functional group type, number of functional groups, ionization state, molecular weight, molecular weight distribution, mass/charge ratio, nuclear isotope, electronic quantum state, macromolecular conformation, intra-molecular interactions, or intermolecular interactions.

**47.** A method for ascertaining the molecular structure of a quantum system, comprising:

a. manipulating a quantum system with at least one field pulse tuned with respect to at least one of frequency, phase, amplitude, timing and duration;

b. detecting at least one signal arising from at least one interaction between an observation field and the manipulated quantum system;

c. inverting the detected signal to estimate at least one aspect of the molecular structure and an inversion error; and

d. performing steps a, b and c iteratively;

e. the tuning of at least one field pulse being in response to the estimated molecular structure and the inversion error.

**48.** The device of claim 47 wherein the at least one aspect of the molecular structure is atom type, number of atoms, bond length, bond angle, bond type, number of bonds, functional group type, number of functional groups, ionization state, molecular weight, molecular weight distribution, mass/charge ratio, nuclear isotope, electronic quantum state, macromolecular conformation, intra-molecular interactions, or intermolecular interactions.

FIG 1.1

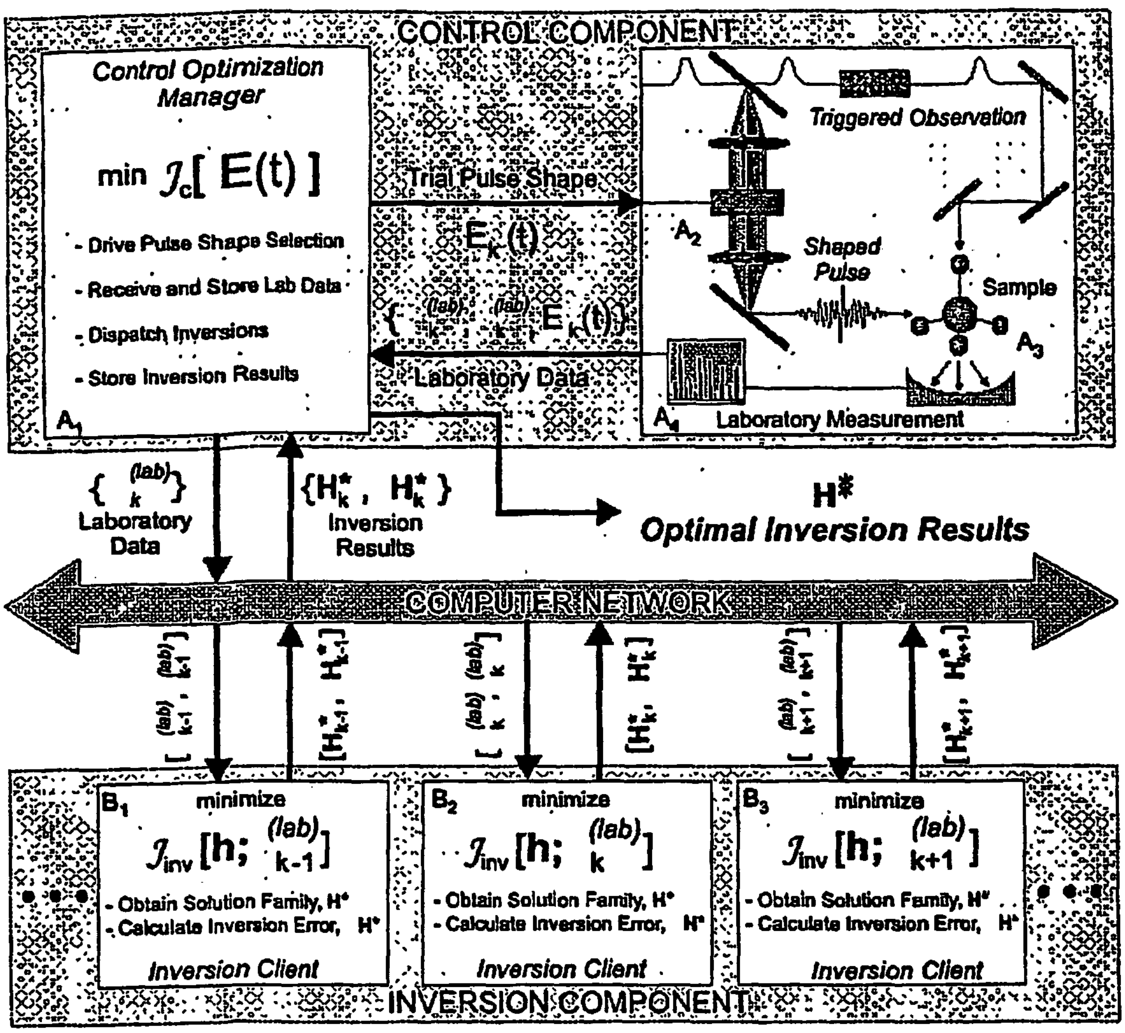
CONTROL COMPONENT
Control Optimization Manager
min $\mathcal{J}_c$[ E(t) ]
- Drive Pulse Shape Selection
- Receive and Store Lab Data
- Dispatch Inversions
- Store Inversion Results
A1
Trial Pulse Shape
$E_k(t)$
Laboratory Data
Triggered Observation
A2
Shaped Pulse
Sample
A3
A4
Laboratory Measurement
Laboratory Data
Inversion Results
H*
Optimal Inversion Results
COMPUTER NETWORK
B1 minimize
B2 minimize
B3 minimize
- Obtain Solution Family, H*
- Calculate Inversion Error, H*
Inversion Client
INVERSION COMPONENT

FIG 1.2

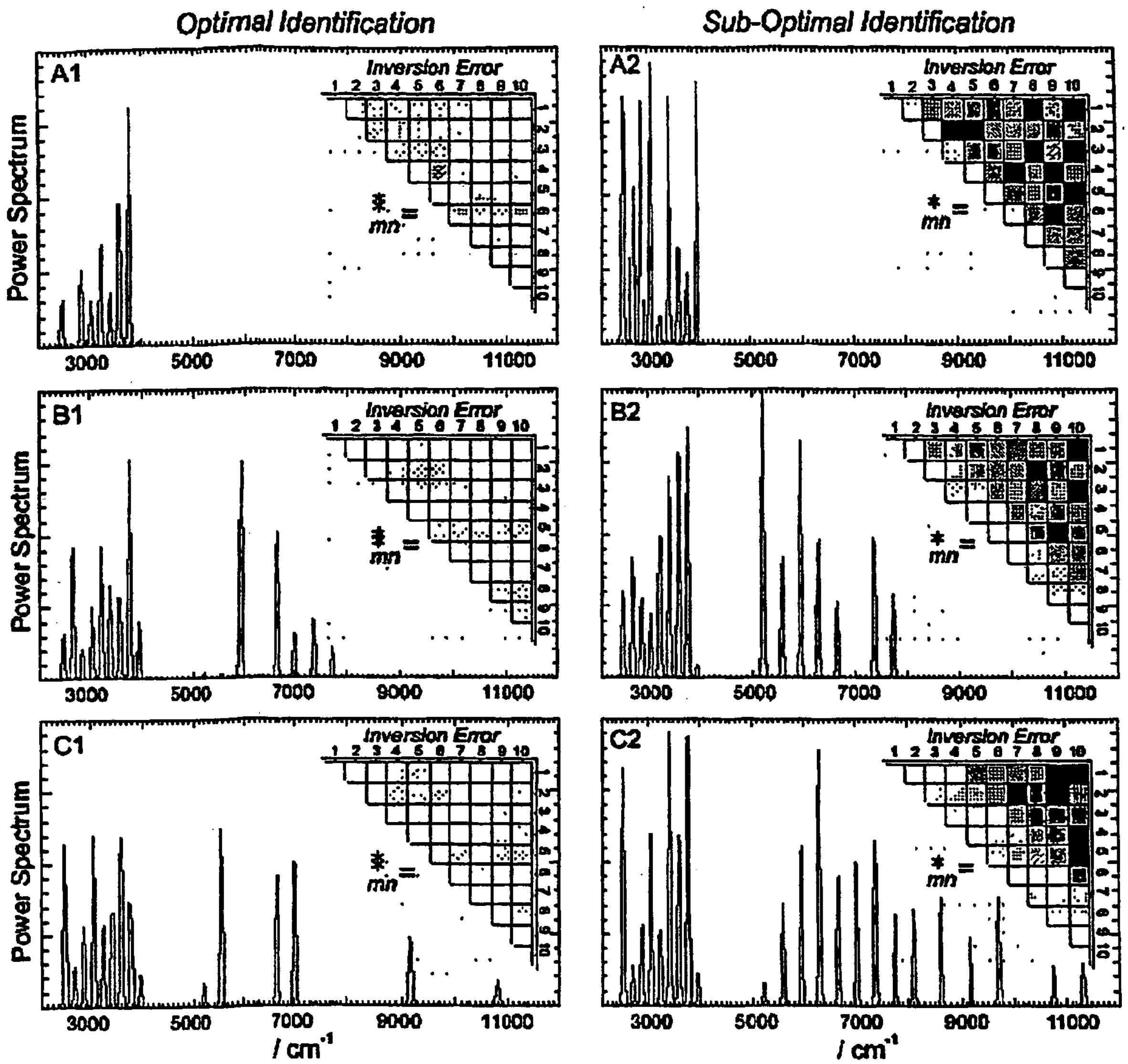
Optimal Identification
Sub-Optimal Identification
A1
A2
B1
B2
C1
C2
Inversion Error
Power Spectrum
3000
5000
7000
9000
11000
/ cm⁻¹

FIG 1.3

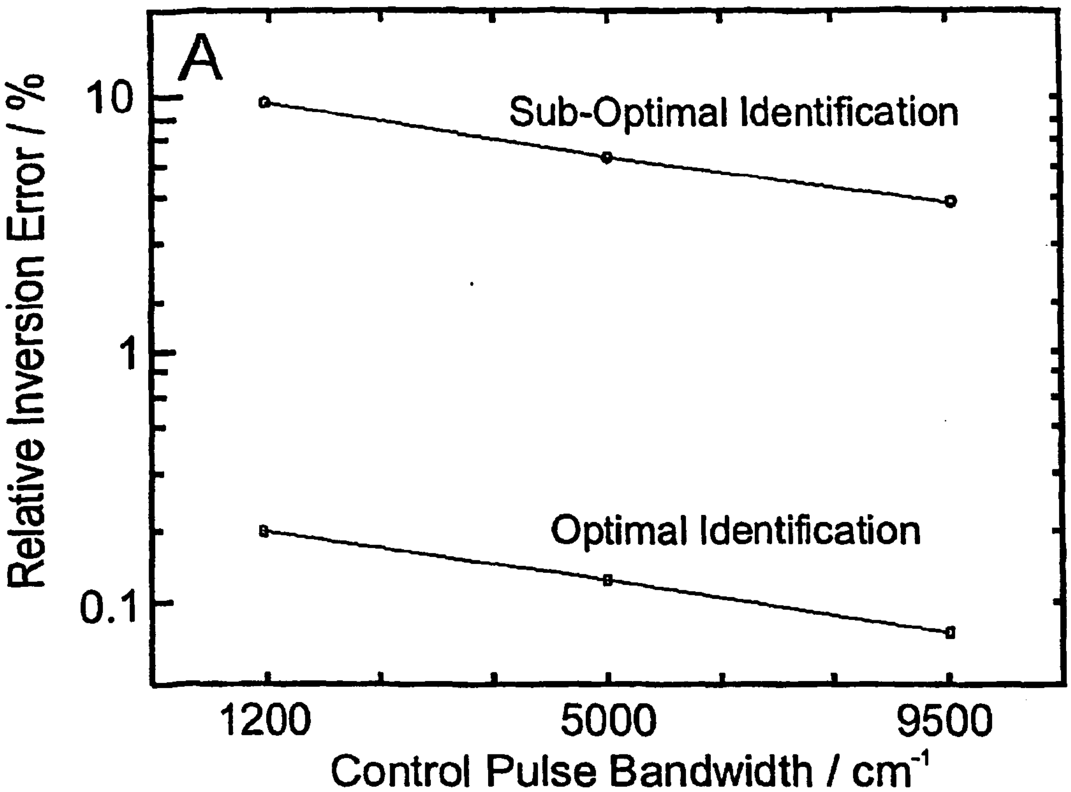
A
Relative Inversion Error / %
10
1
0.1
Sub-Optimal Identification
Optimal Identification
1200
5000
9500
Control Pulse Bandwidth / cm-1

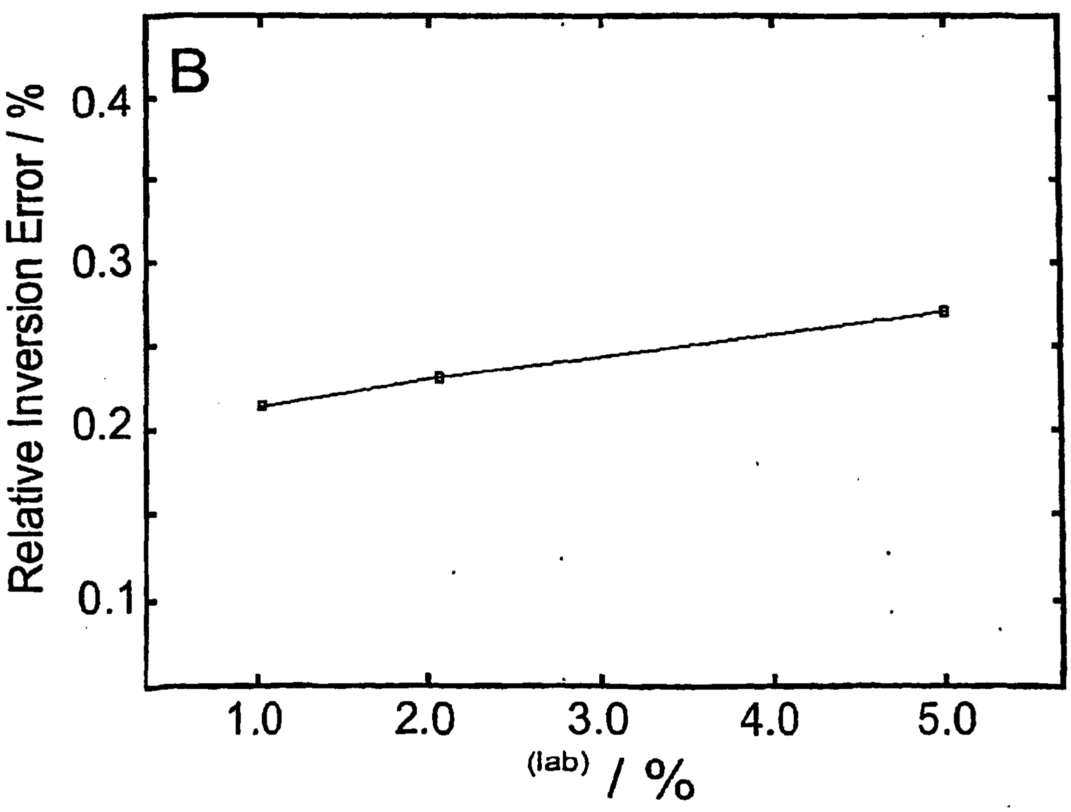
B
Relative Inversion Error / %
0.4
0.3
0.2
0.1
1.0
2.0
3.0
4.0
5.0
(lab) / %

FIG 2.1

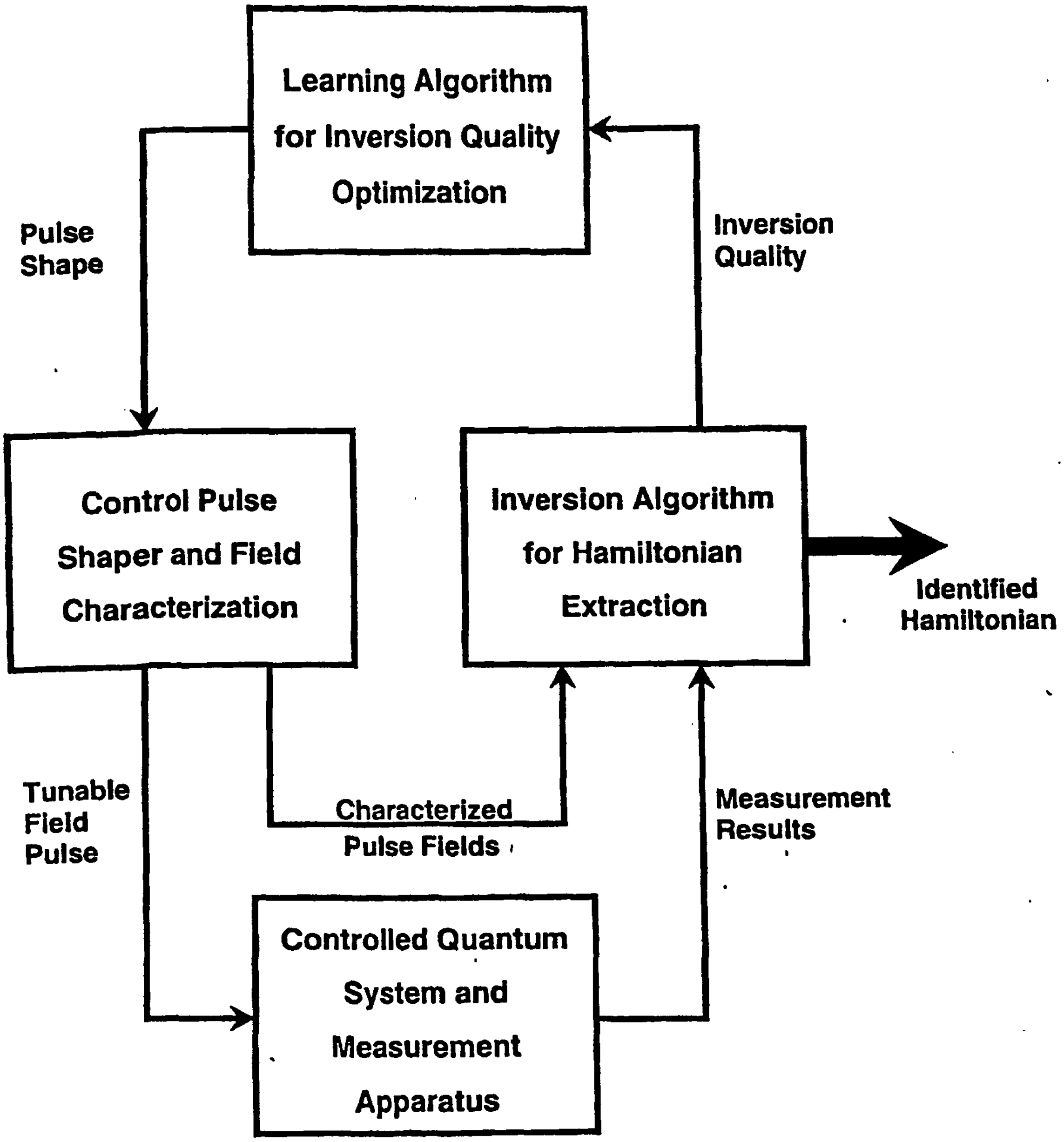
Learning Algorithm for Inversion Quality Optimization
Pulse Shape
Inversion Quality
Control Pulse Shaper and Field Characterization
Inversion Algorithm for Hamiltonian Extraction
Identified Hamiltonian
Tunable Field Pulse
Characterized Pulse Fields
Measurement Results
Controlled Quantum System and Measurement Apparatus

FIG 2.2

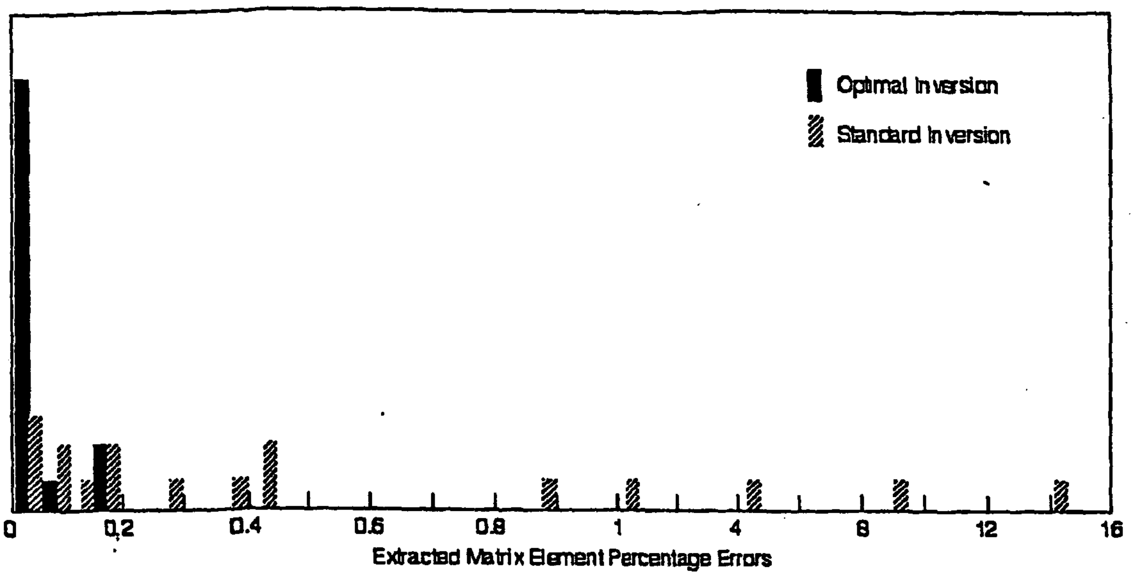
Optimal Inversion
Standard Inversion
0
0.2
0.4
0.6
0.8
1
4
8
12
16
Extracted Matrix Element Percentage Errors

FIG 2.3

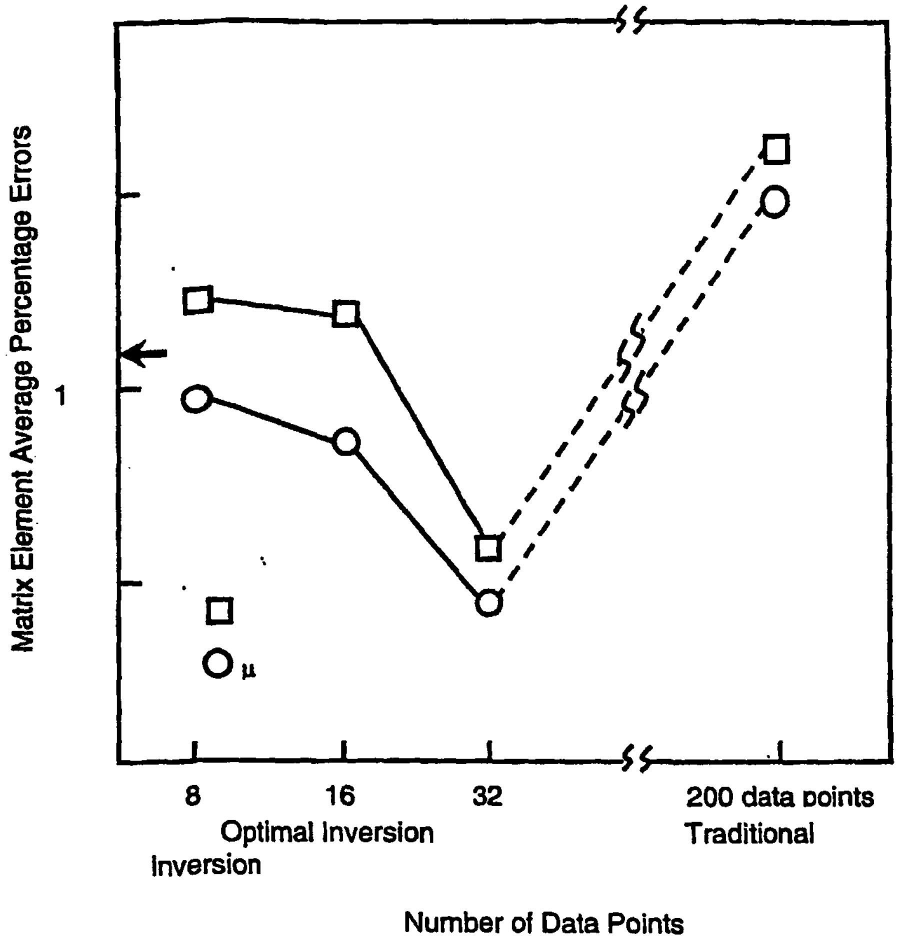

Matrix Element Average Percentage Errors
1
μ
8
16
32
200 data points
Optimal Inversion
Inversion
Traditional
Number of Data Points

FIG 2.4

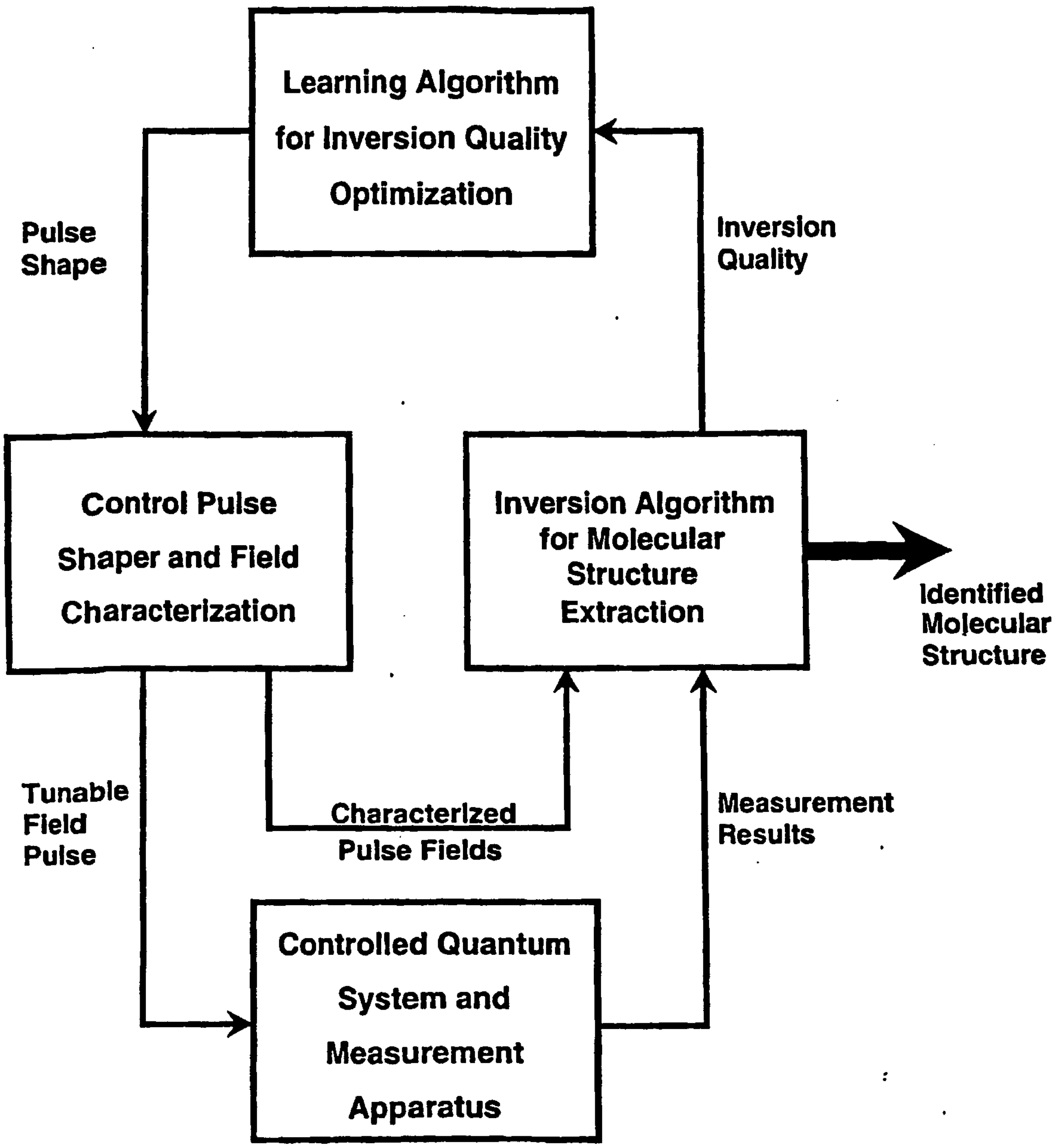
Learning Algorithm for Inversion Quality Optimization
Pulse Shape
Inversion Quality
Control Pulse Shaper and Field Characterization
Inversion Algorithm for Molecular Structure Extraction
Identified Molecular Structure
Tunable Field Pulse
Characterized Pulse Fields
Measurement Results
Controlled Quantum System and Measurement Apparatus

FIG 2.5

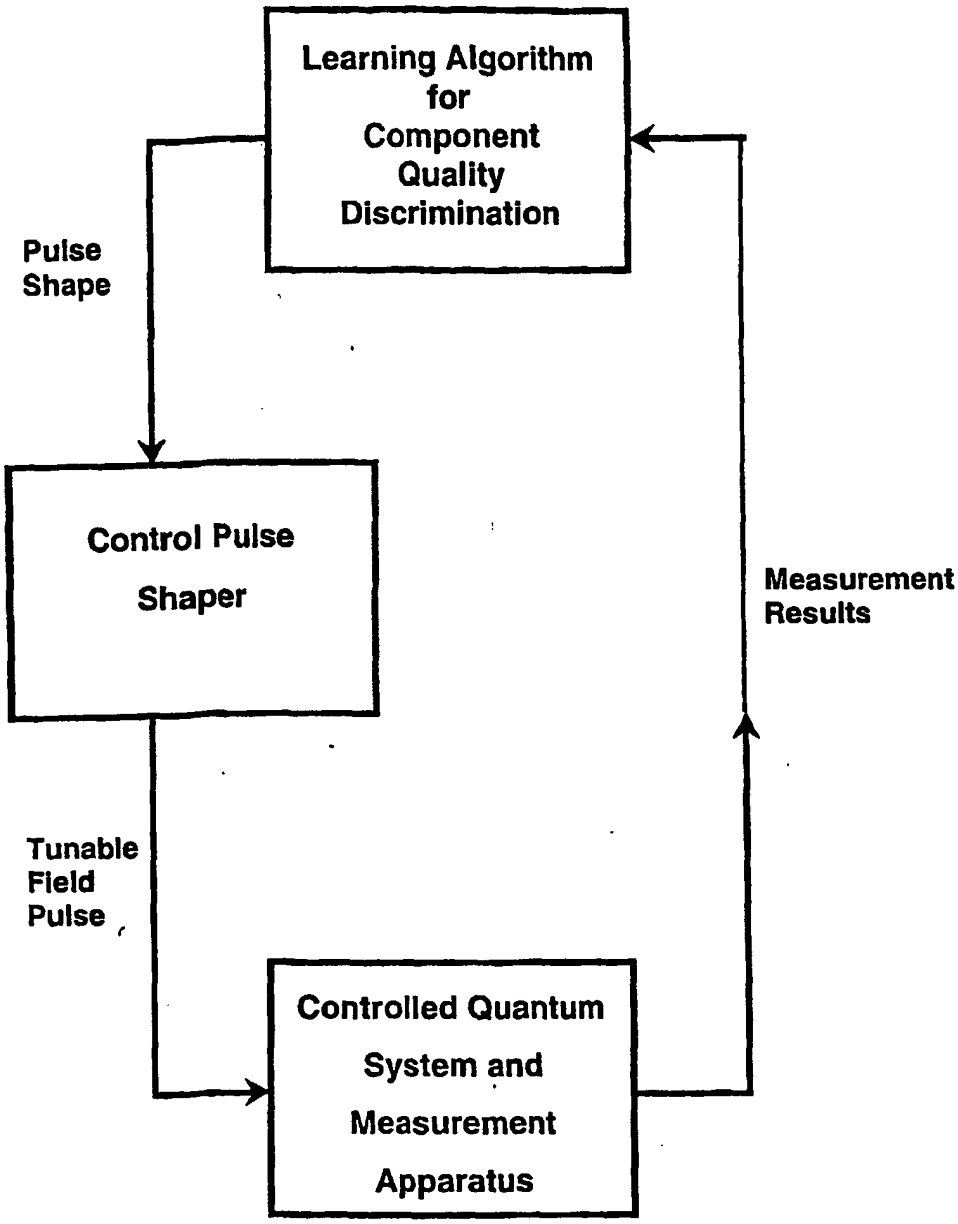
Learning Algorithm for Component Quality Discrimination
Pulse Shape
Control Pulse Shaper
Measurement Results
Tunable Field Pulse
Controlled Quantum System and Measurement Apparatus

FIG 2.6

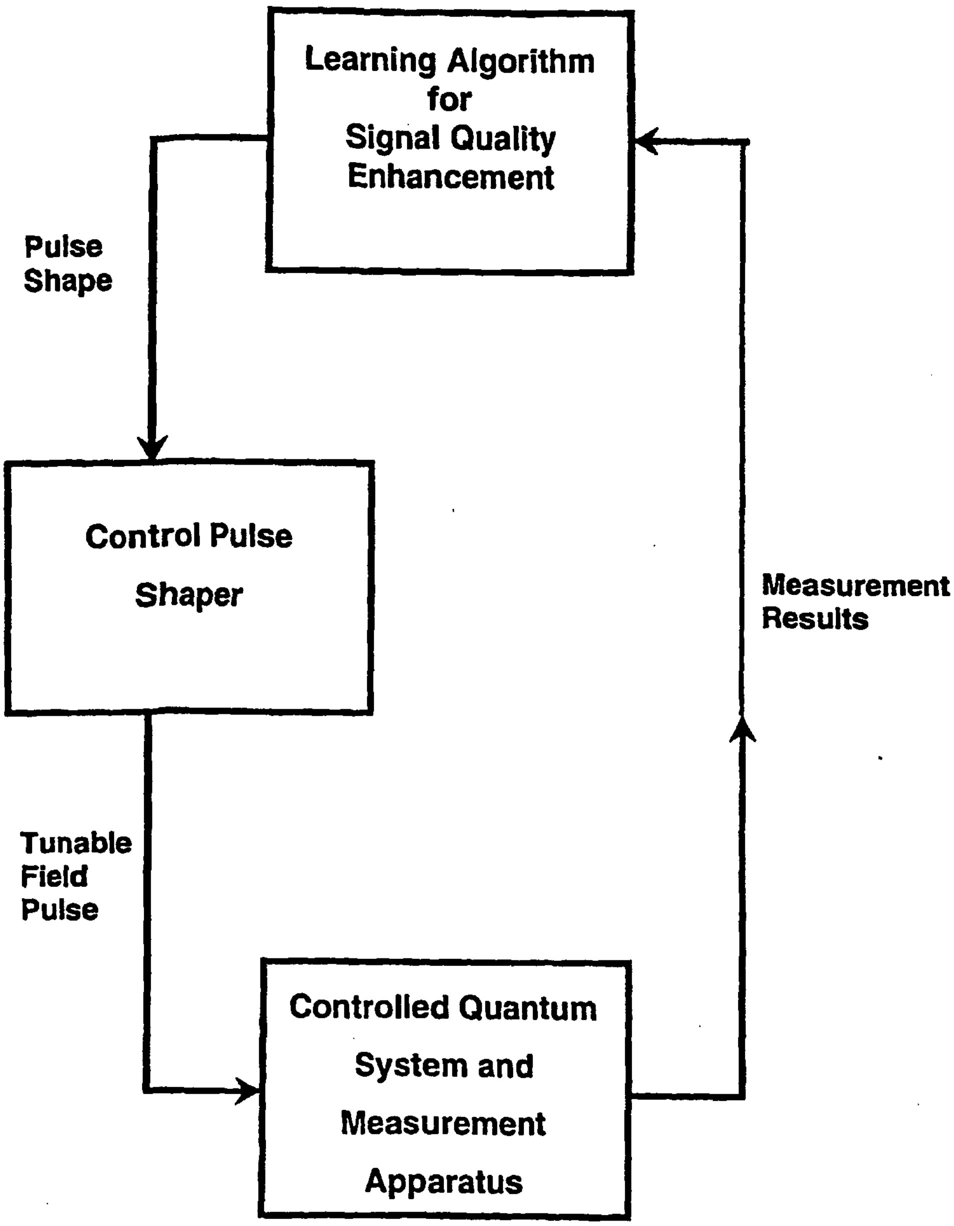
Learning Algorithm
for
Signal Quality
Enhancement
Pulse
Shape
Control Pulse
Shaper
Measurement
Results
Tunable
Field
Pulse
Controlled Quantum
System and
Measurement
Apparatus

FIG 3.1

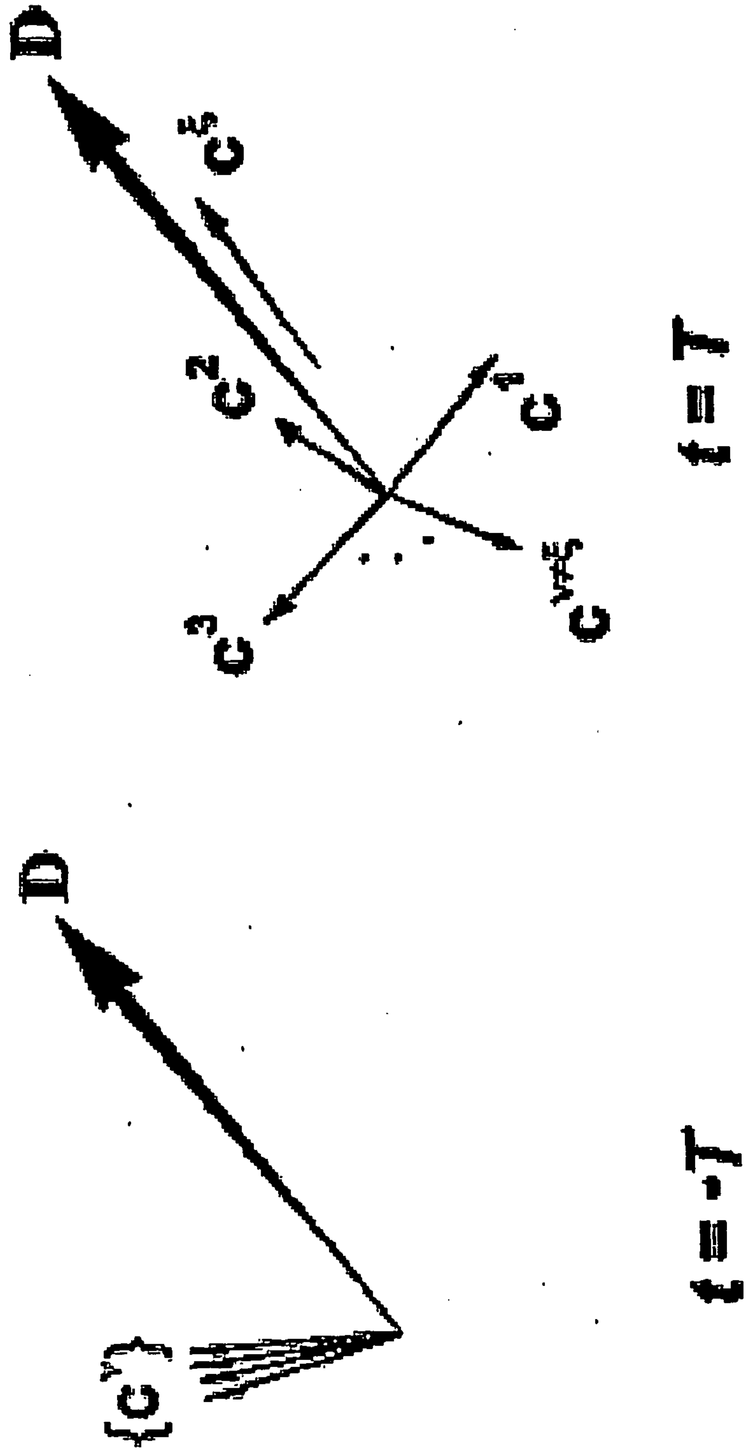

FIG 3.2

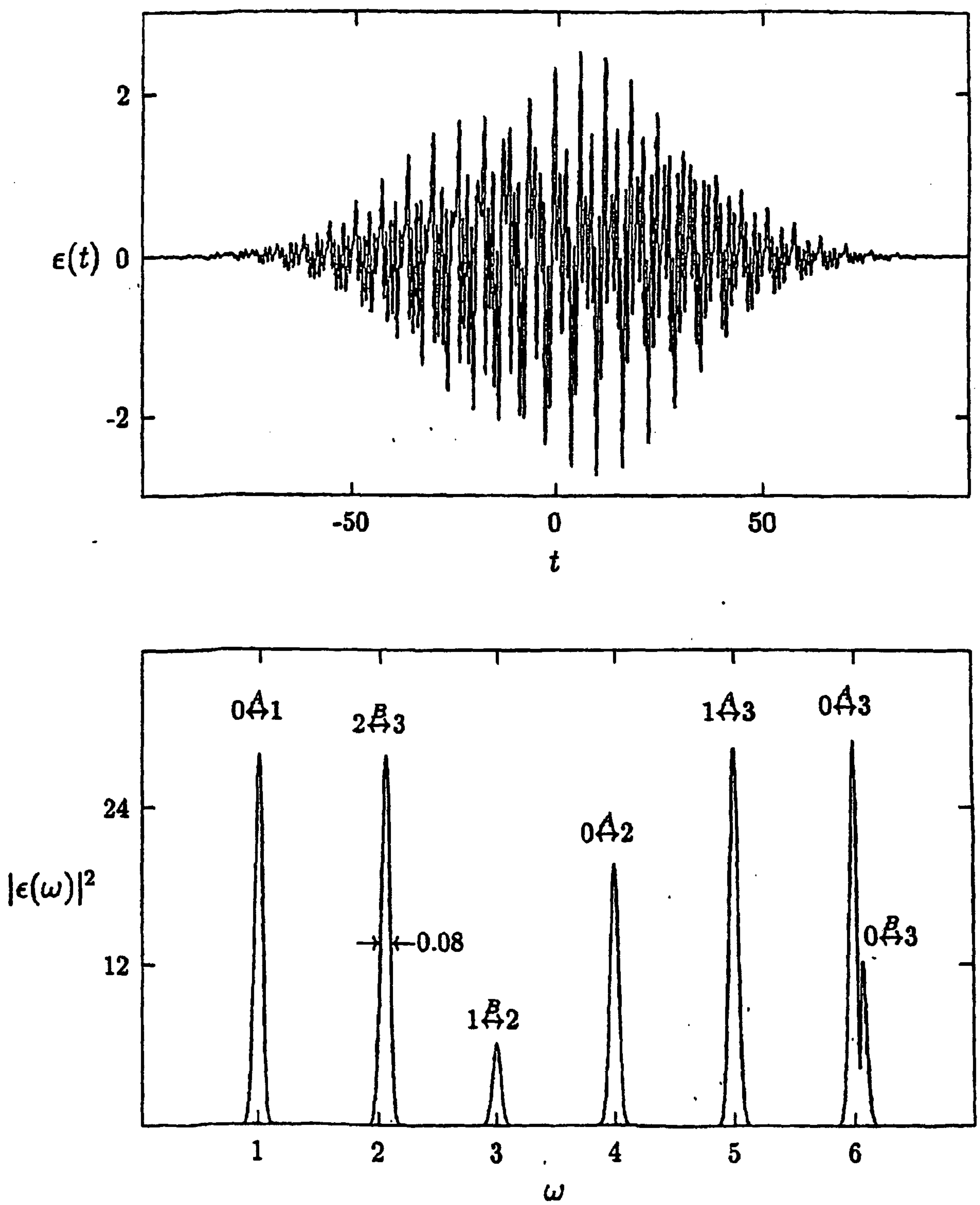

FIG 3.3

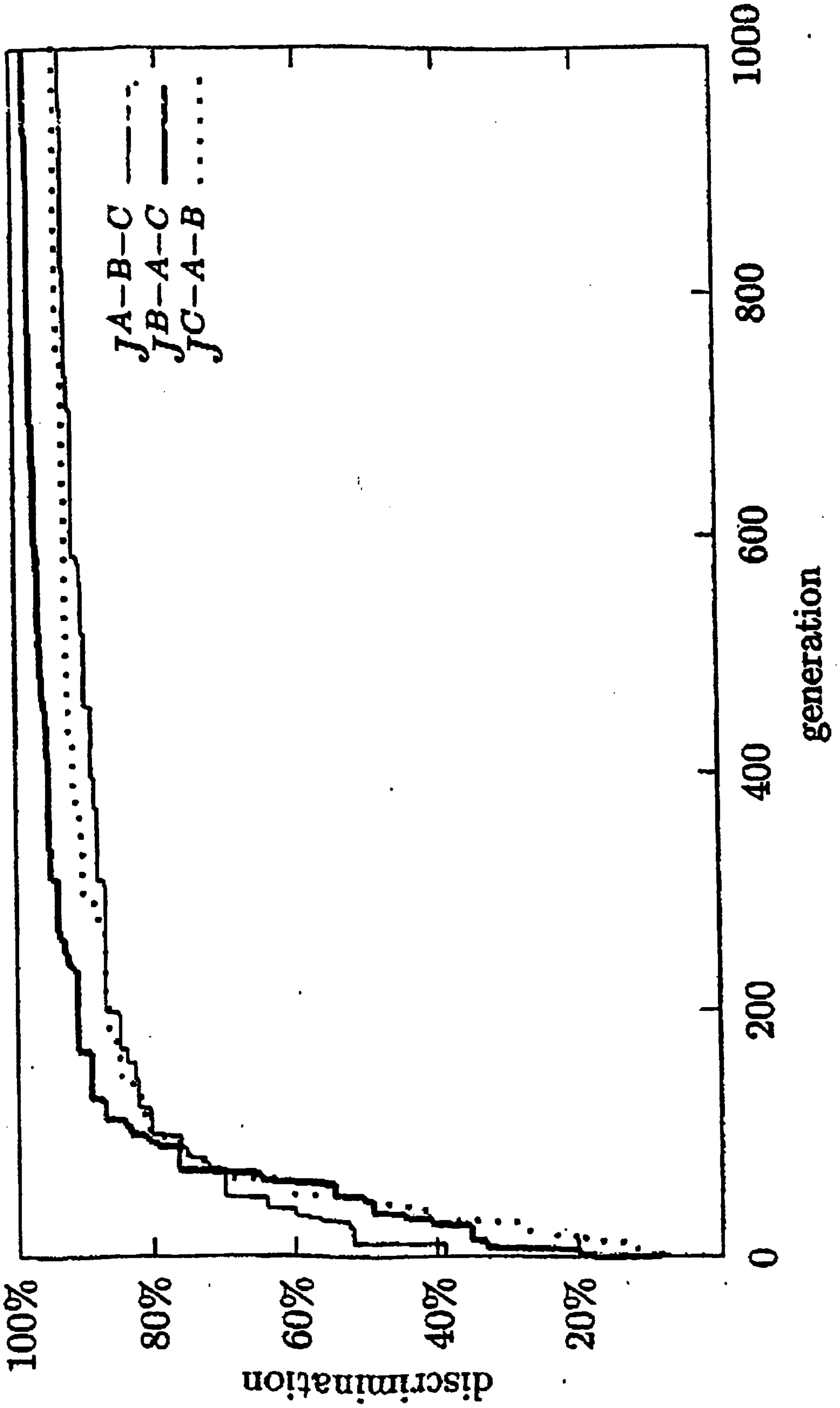
100%
80%
60%
40%
20%
discrimination
0
200
400
600
800
1000
generation
JA−B−C
JB−A−C
JC−A−B

FIG 4.1

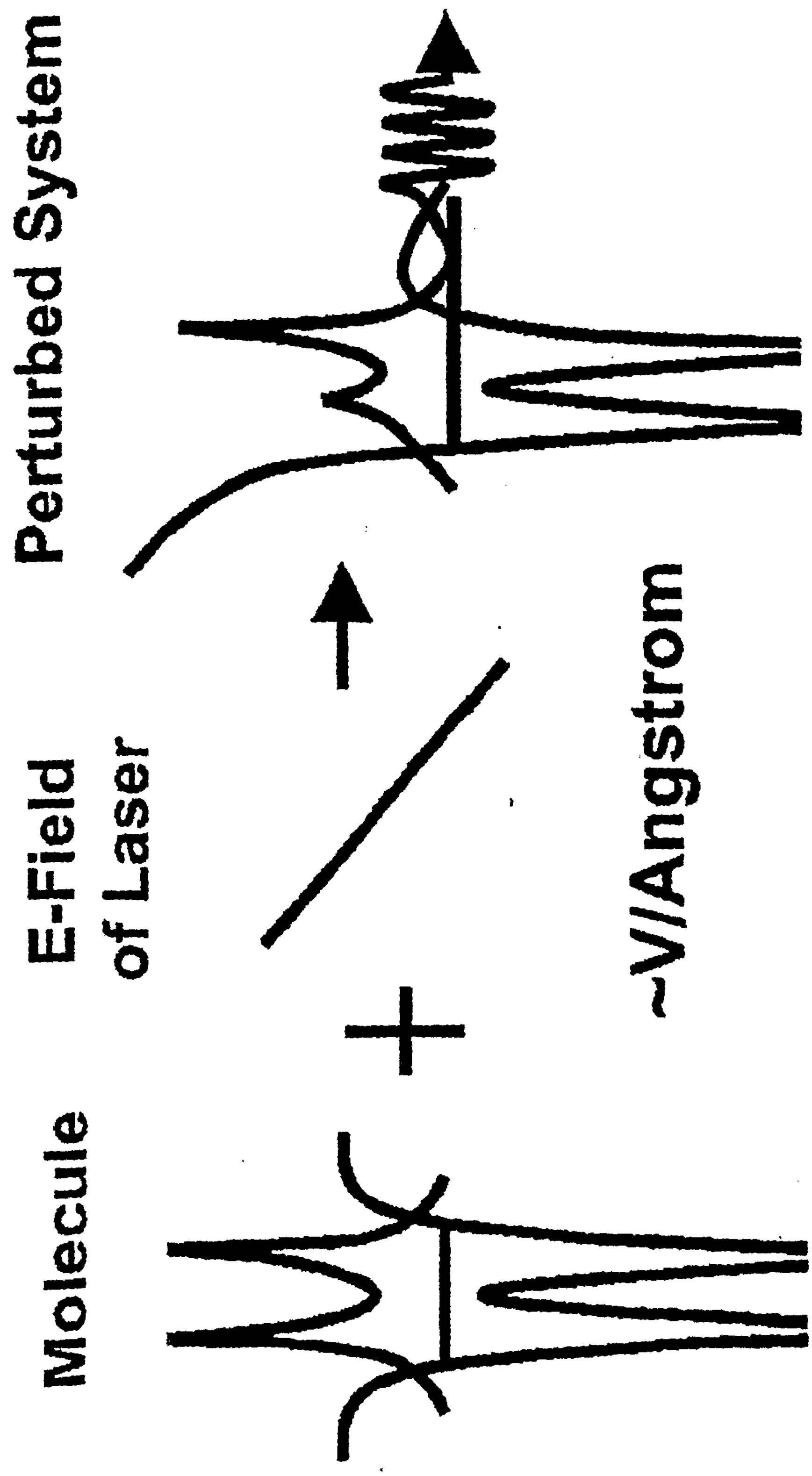

FIG 4.2

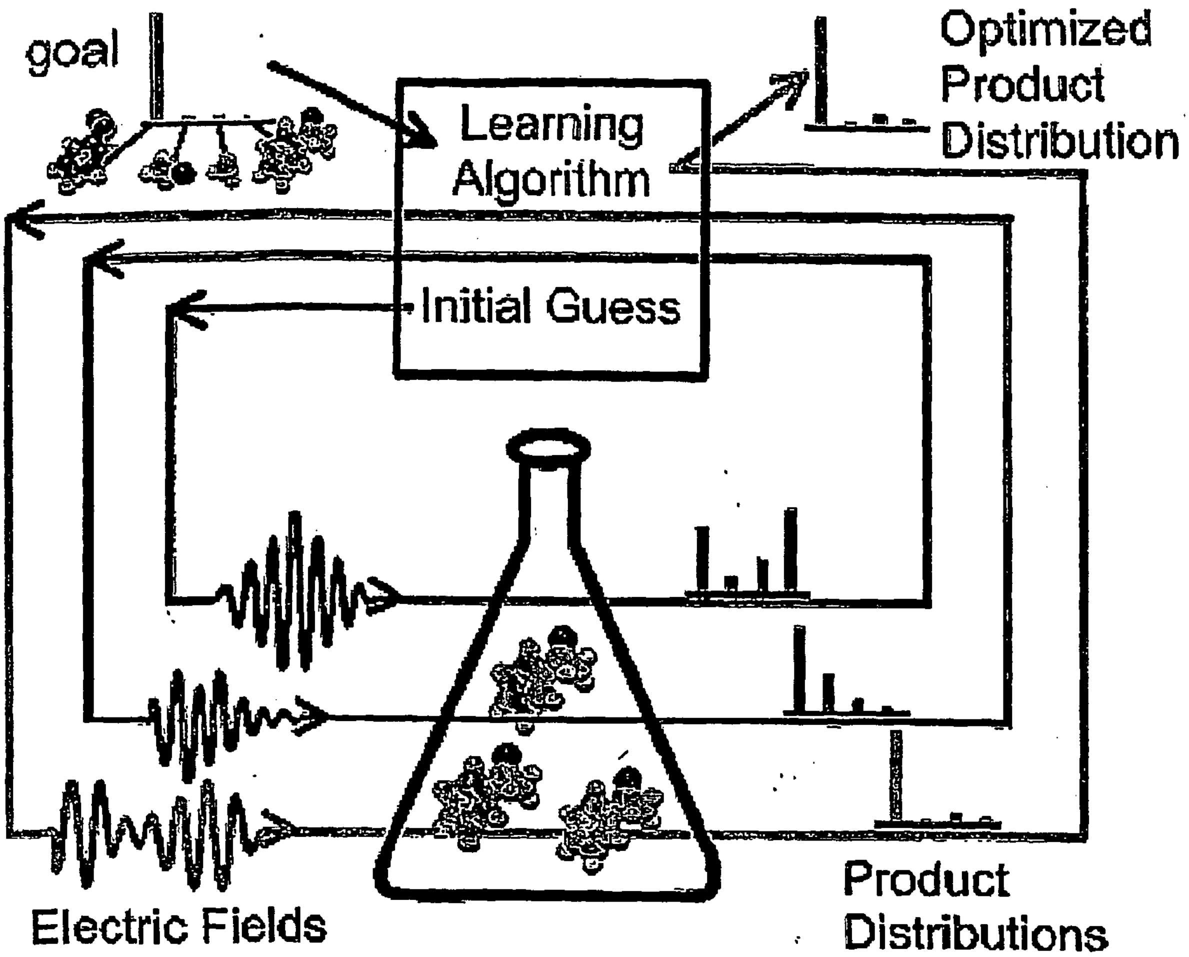
goal
Learning
Algorithm
Optimized
Product
Distribution
Initial Guess
Electric Fields
Product
Distributions

FIG 4.3

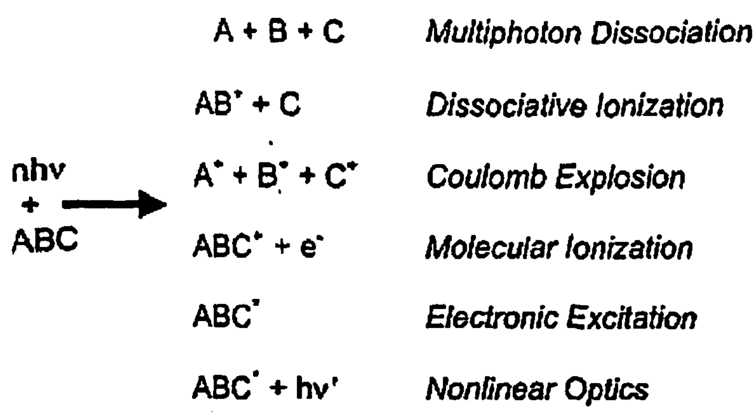
nhv
+
ABC
A + B + C
Multiphoton Dissociation
AB⁺ + C
Dissociative Ionization
A⁺ + B⁺ + C⁺
Coulomb Explosion
ABC⁺ + e⁻
Molecular Ionization
ABC*
Electronic Excitation
ABC* + hv'
Nonlinear Optics

FIG 4.4

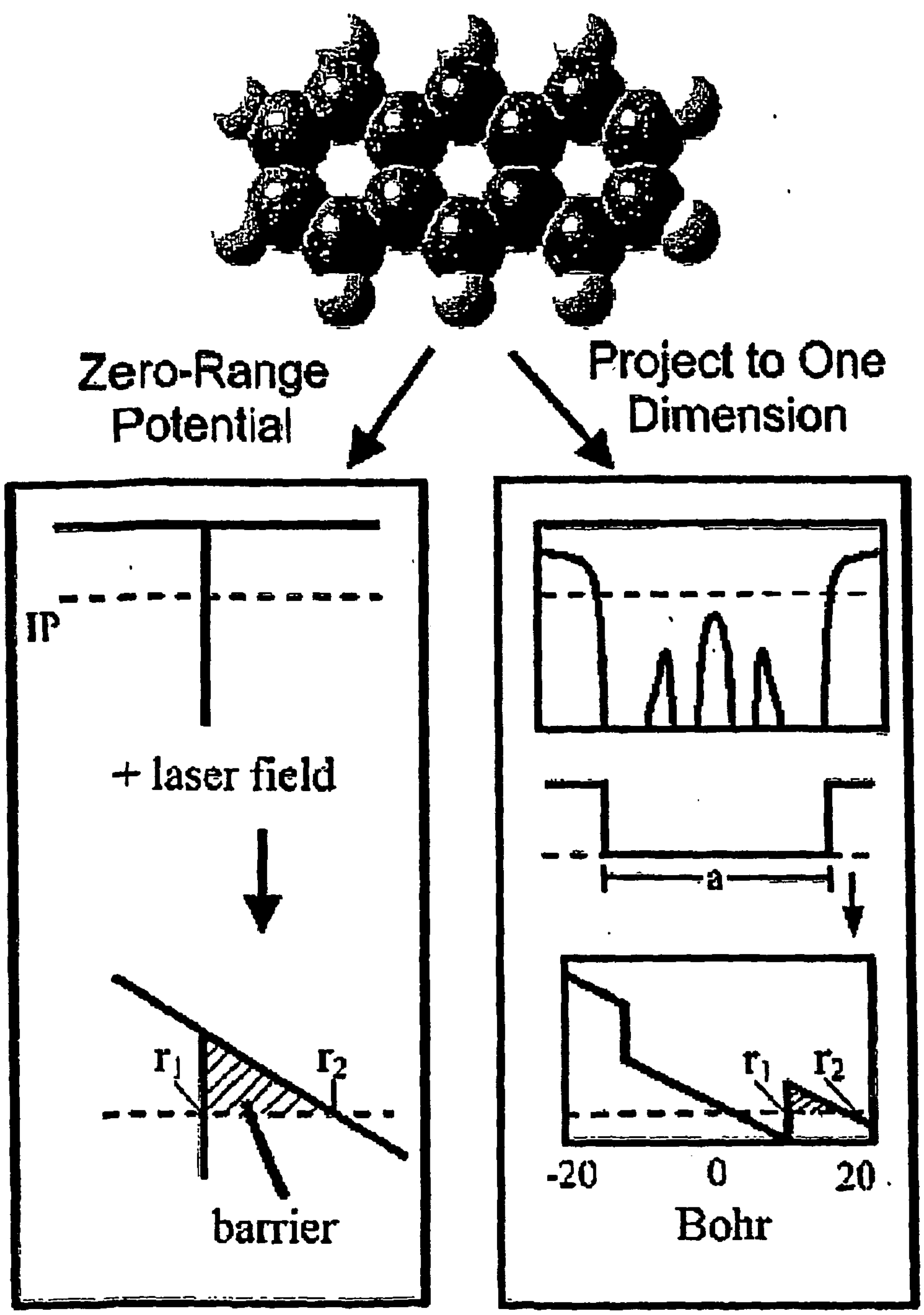
Zero-Range Potential
Project to One Dimension
IP
+ laser field
r1
r2
barrier
a
r1
r2
-20
0
20
Bohr

FIG 4.5

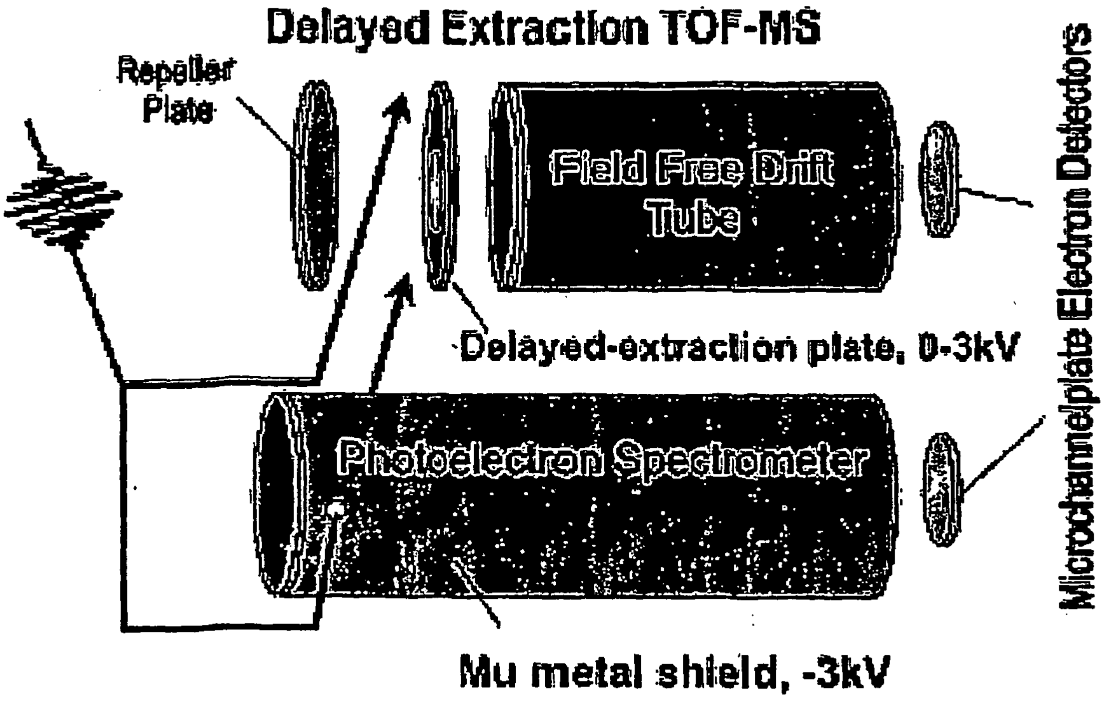
Delayed Extraction TOF-MS
Repeller Plate
Field Free Drift Tube
Delayed-extraction plate, 0-3kV
Photoelectron Spectrometer
Mu metal shield, -3kV
Microchannelplate Electron Detectors

FIG 4.6

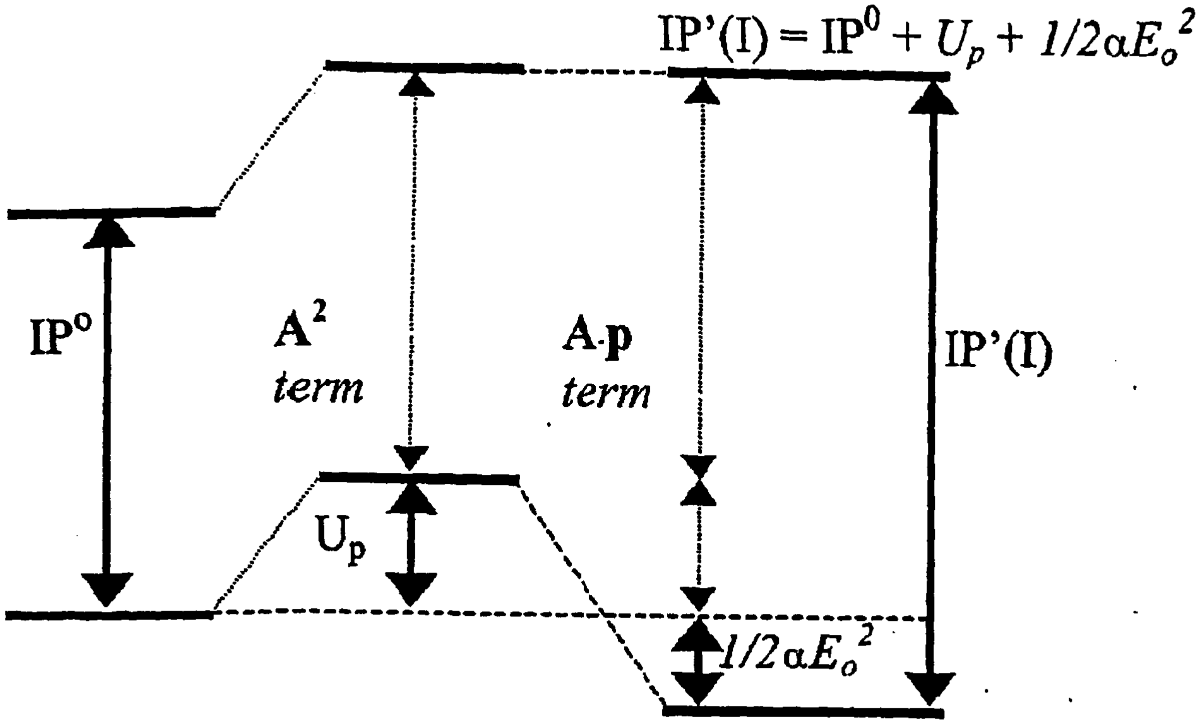

FIG 4.7

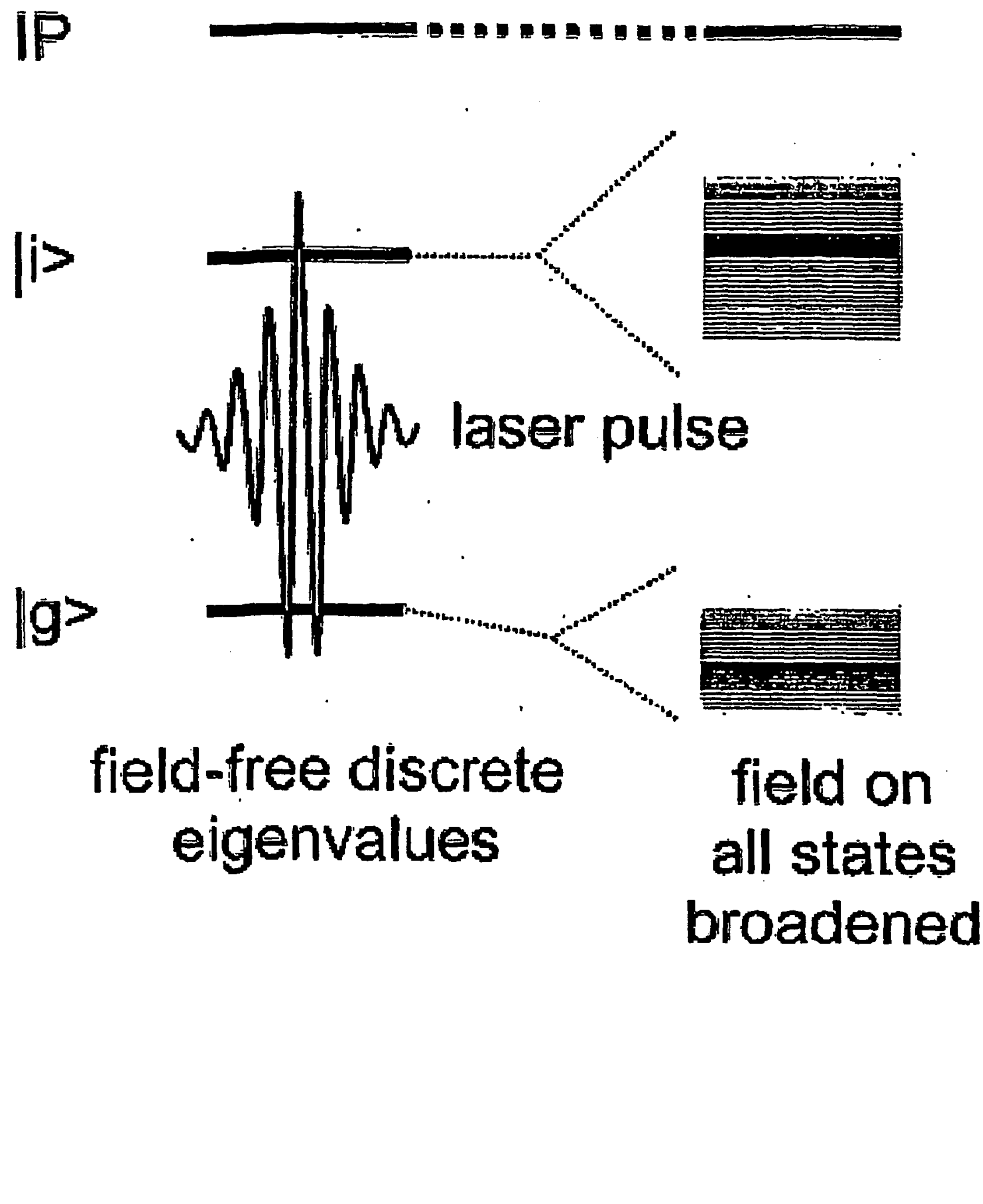
|P
|i>
|g>
laser pulse
field-free discrete eigenvalues
field on all states broadened

FIG 4.8

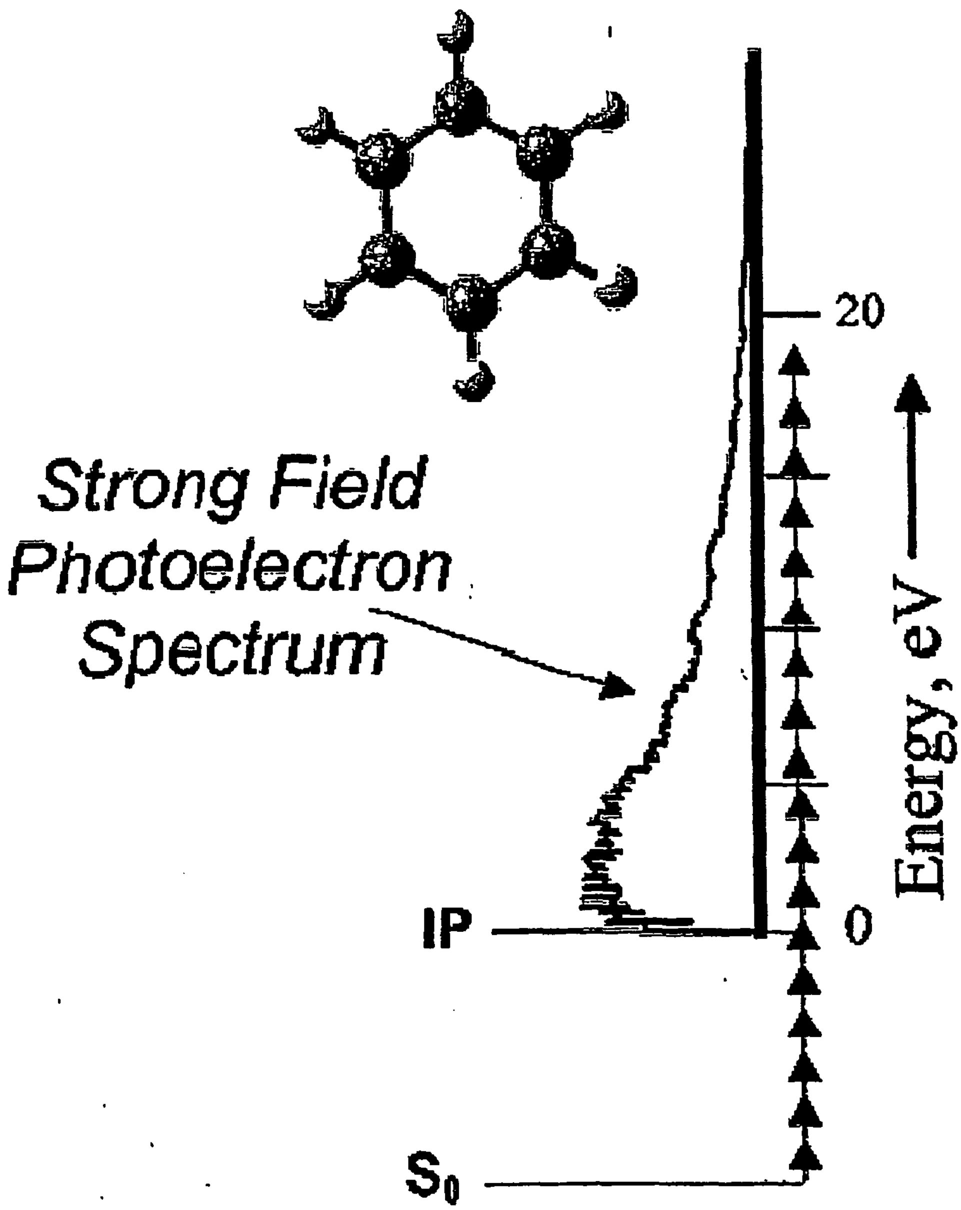

FIG 4.9

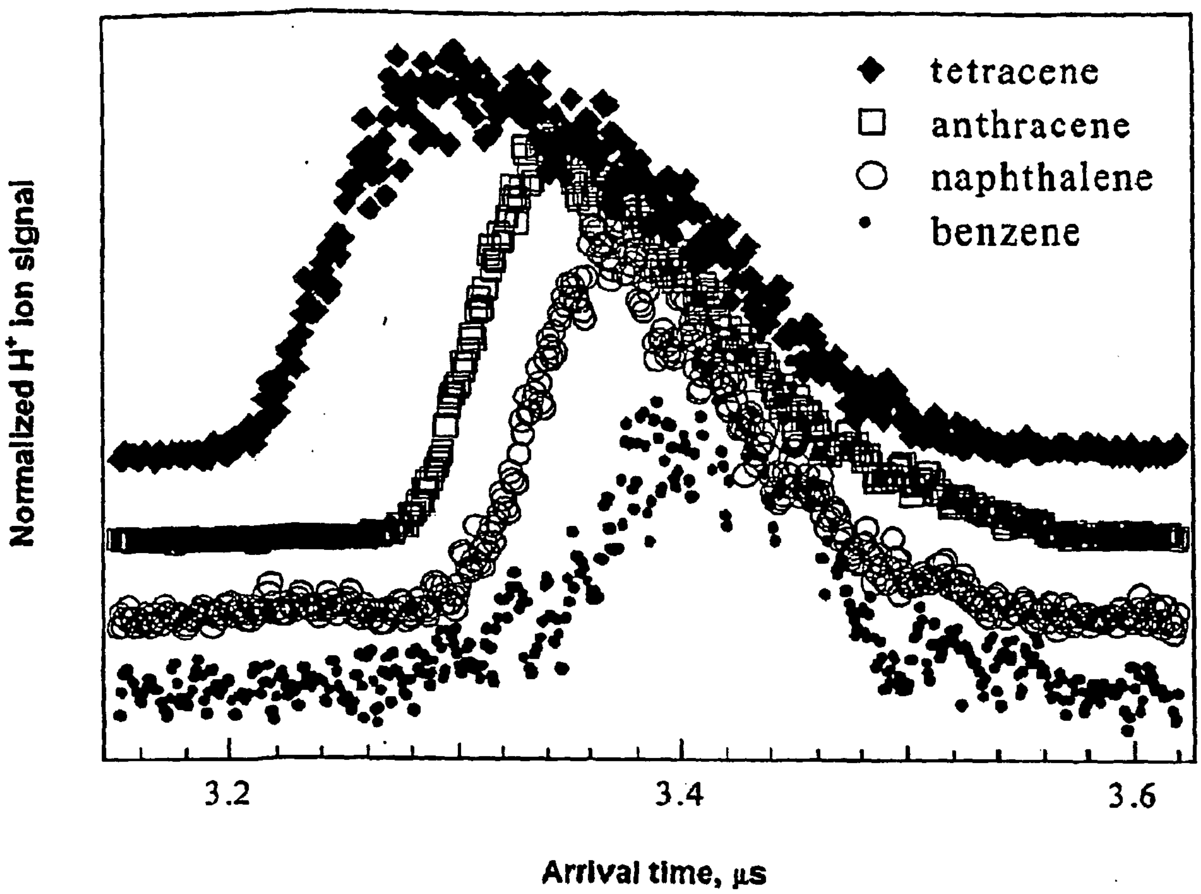
tetracene
anthracene
naphthalene
benzene
Normalized $H^+$ ion signal
3.2
3.4
3.6
Arrival time, μs

FIG 4.10

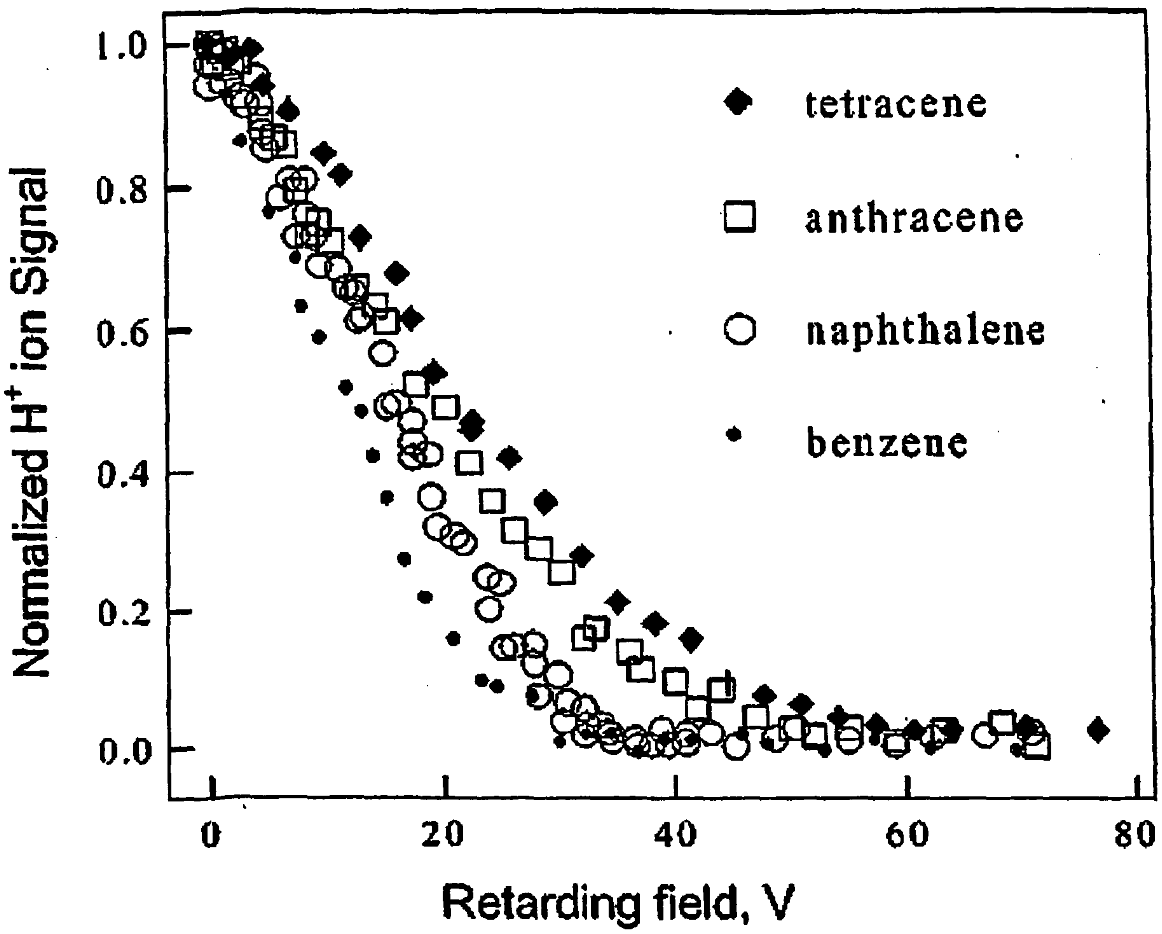
tetracene
anthracene
naphthalene
benzene
Normalized H+ ion Signal
Retarding field, V
1.0
0.8
0.6
0.4
0.2
0.0
0
20
40
60
80

FIG 4.11

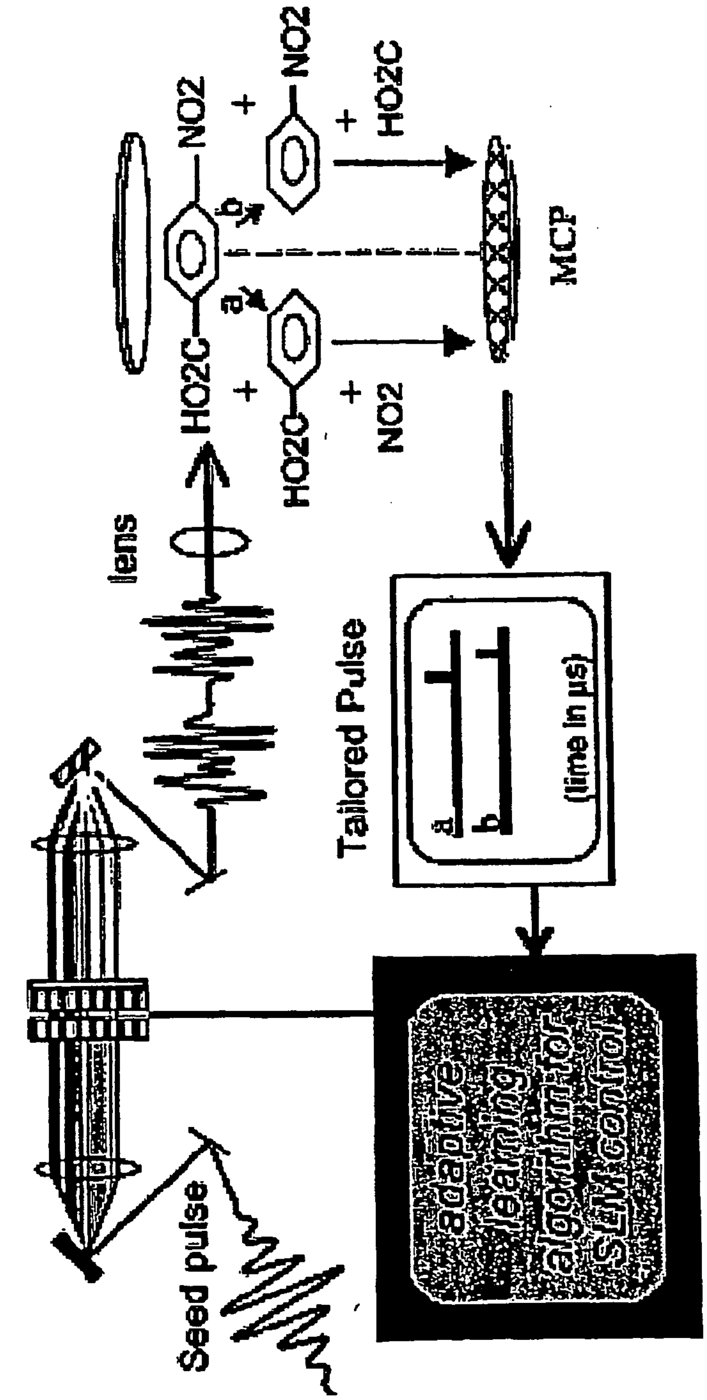
Seed pulse
lens
Tailored Pulse
(time in µs)
MCP
adaptive learning algorithm for SLM control

FIG 4.12

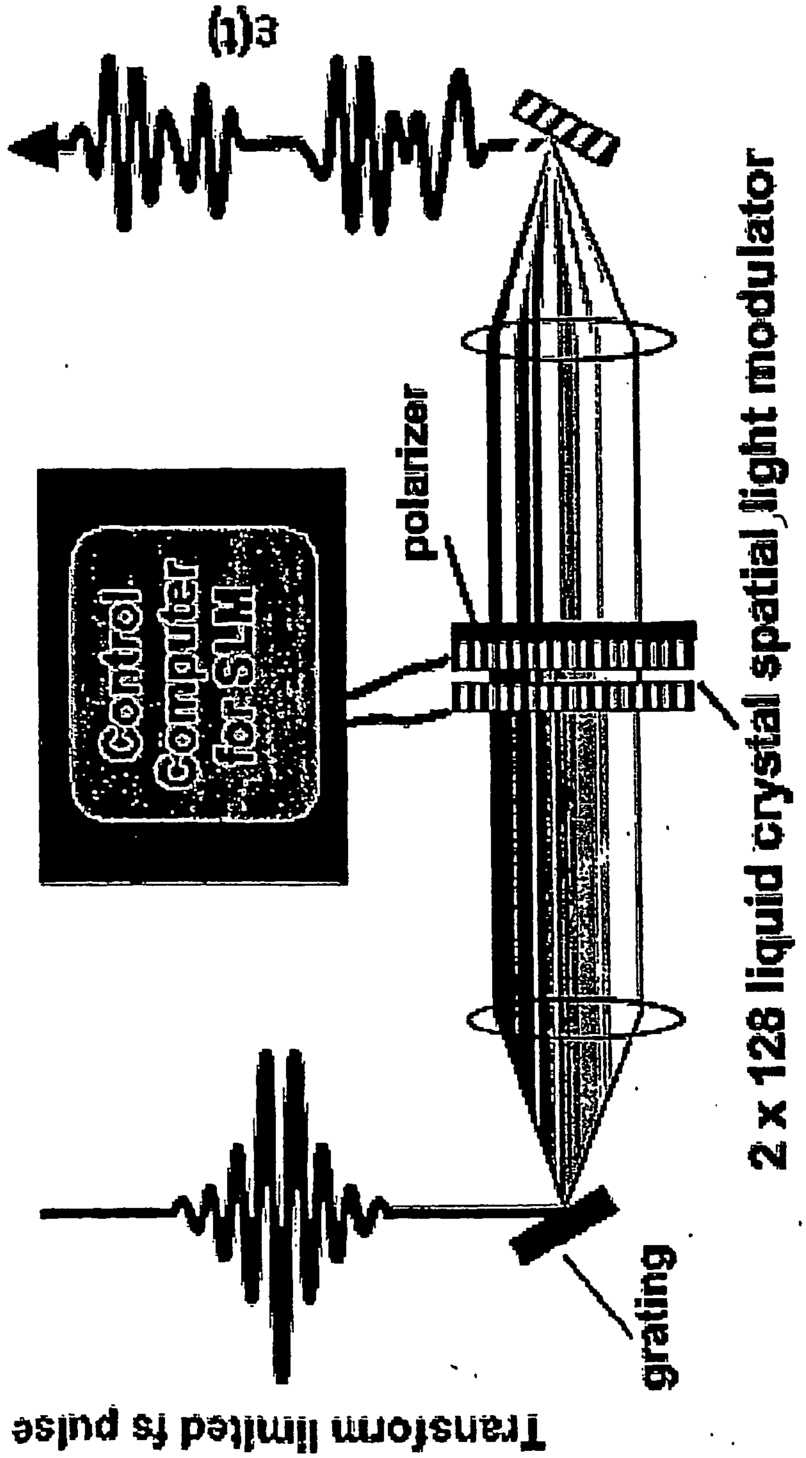
ε(t)
Control
Computer
for SLM
polarizer
2 x 128 liquid crystal spatial light modulator
grating
Transform limited fs pulse

FIG 4.13

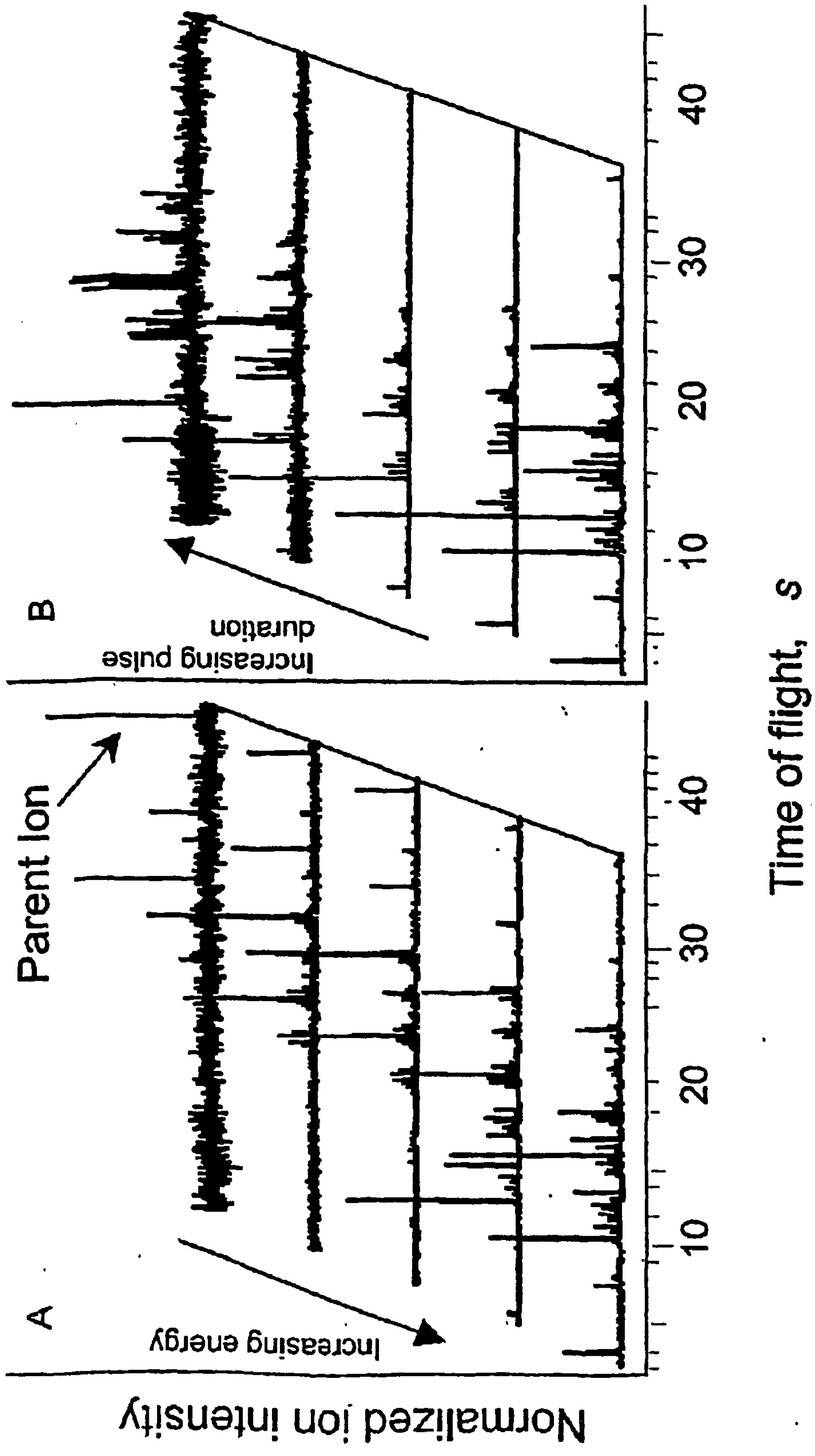
A
B
Parent Ion
Increasing energy
Increasing pulse duration
Normalized ion intensity
Time of flight, s
10
20
30
40

FIG 4.14

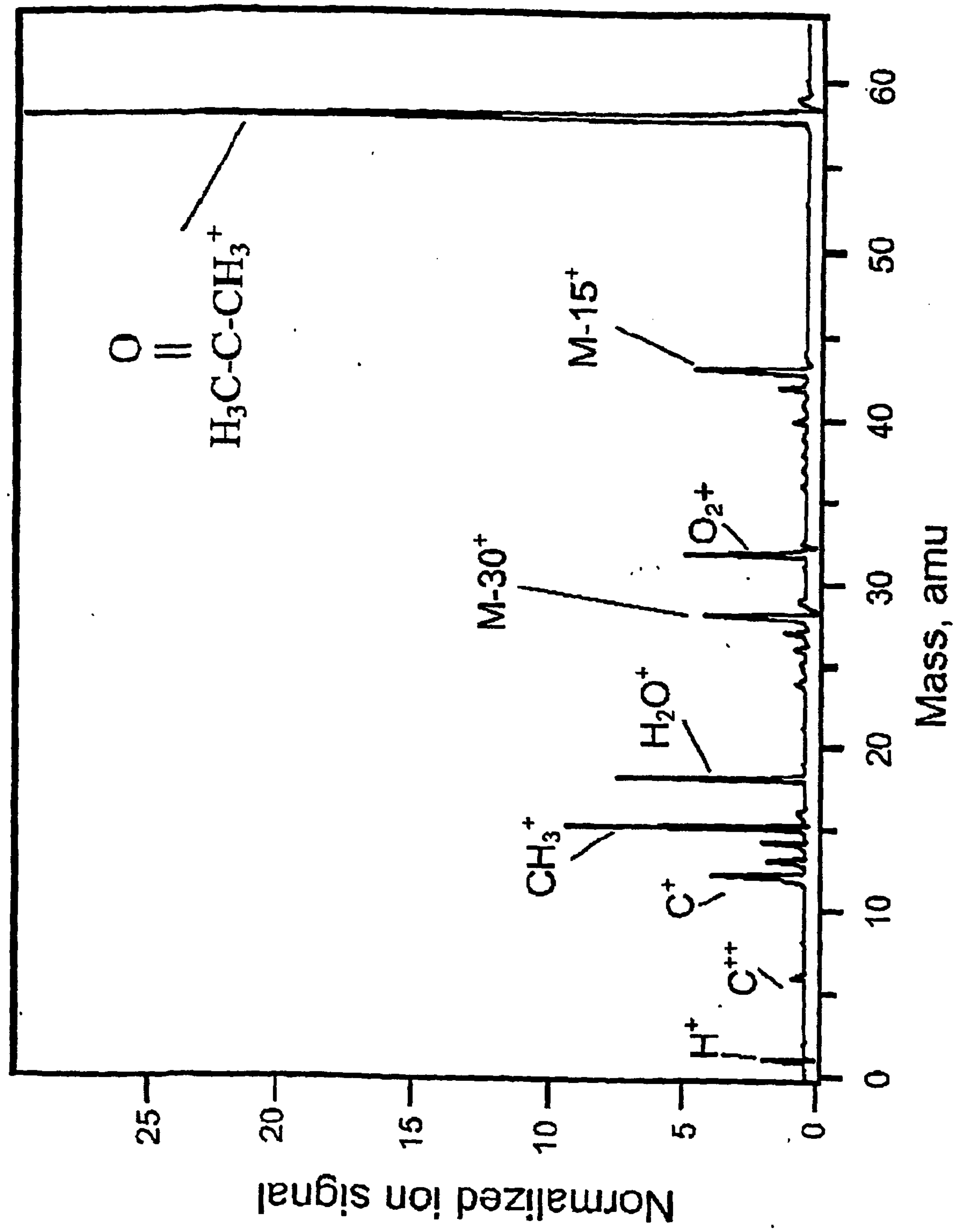

O
||
$H_3C$-C-$CH_3^+$
M-15+
M-30+
$O_2$+
$H_2O^+$
$CH_3^+$
C+
C++
H+
Mass, amu
Normalized ion signal
0
10
20
30
40
50
60
0
5
10
15
20
25

FIG 4.15

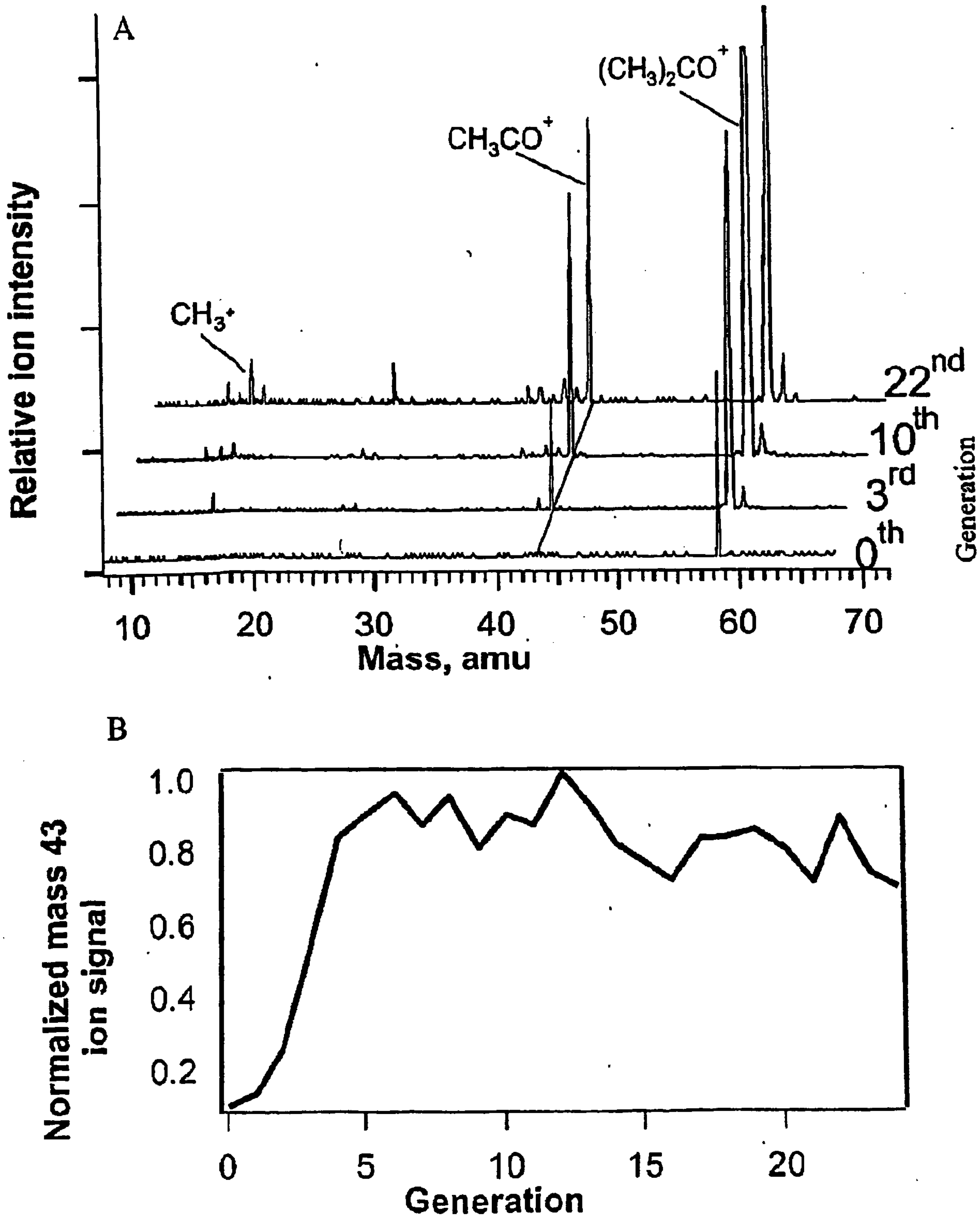
A
Relative Ion intensity
CH3+
CH3CO+
(CH3)2CO+
22nd
10th
3rd
0th
Generation
10
20
30
40
50
60
70
Mass, amu
B
Normalized mass 43 ion signal
1.0
0.8
0.6
0.4
0.2
0
5
10
15
20
Generation

FIG 4.16

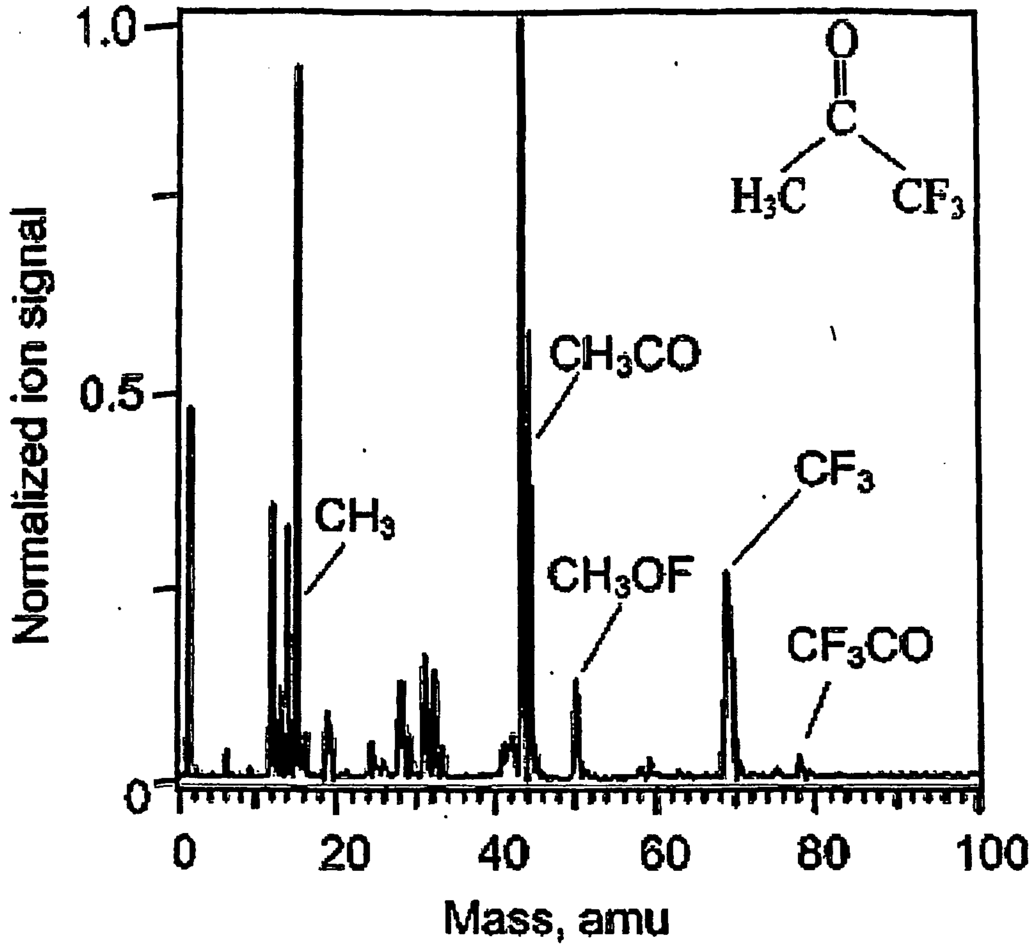
1.0
0.5
0
Normalized ion signal
CH3
CH3CO
CH3OF
CF3
CF3CO
H3C
CF3
O
C
0
20
40
60
80
100
Mass, amu

FIG 4.17

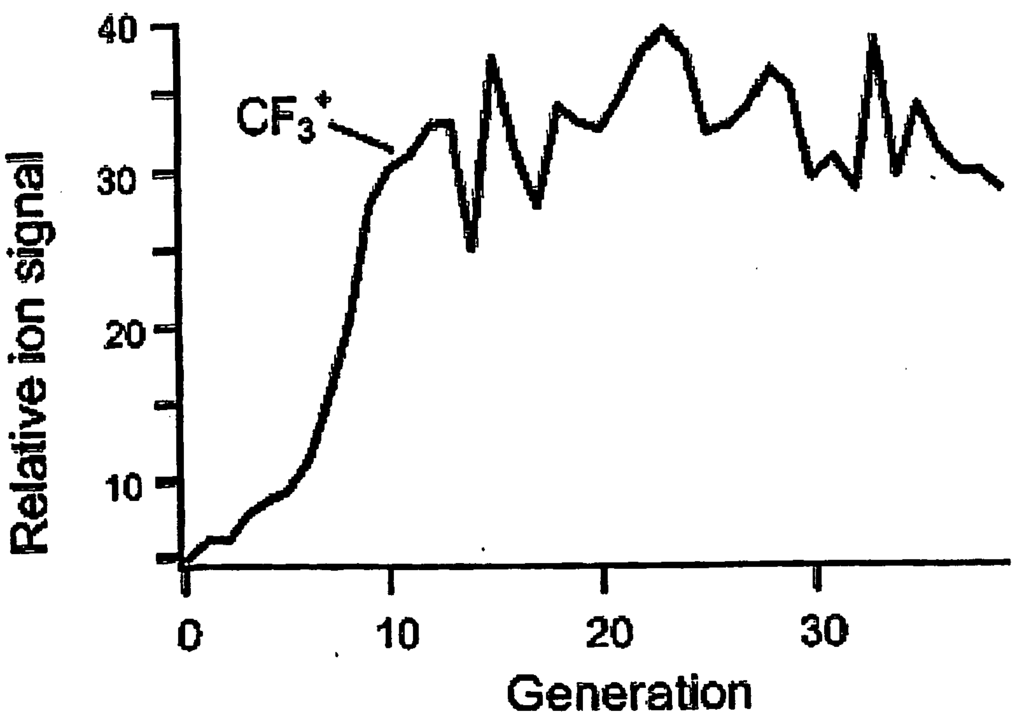

FIG 4.18

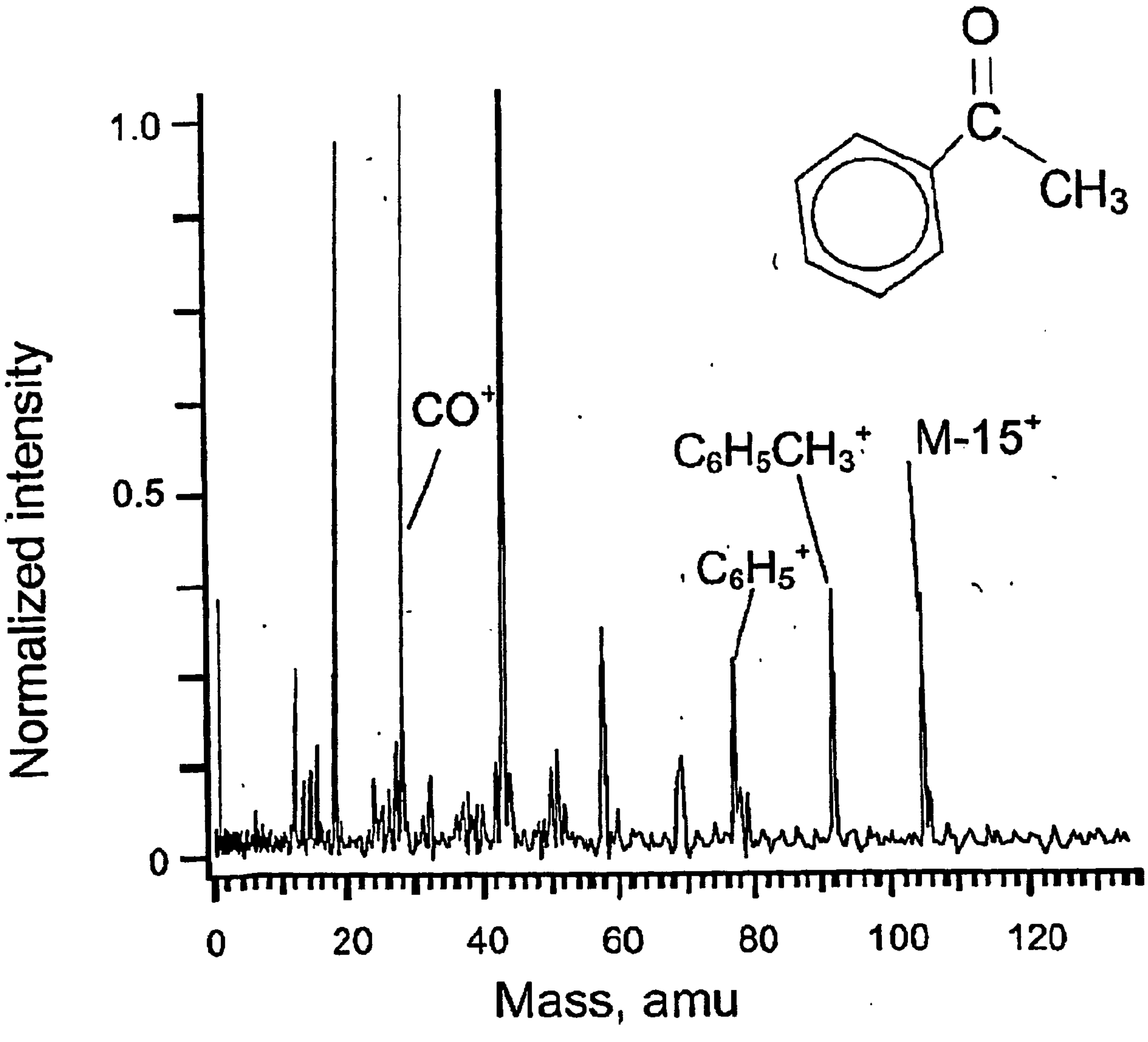
Normalized intensity
1.0
0.5
0
CO$^+$
$C_6H_5CH_3^+$
M-15$^+$
$C_6H_5^+$
0
20
40
60
80
100
120
Mass, amu

FIG 4.19

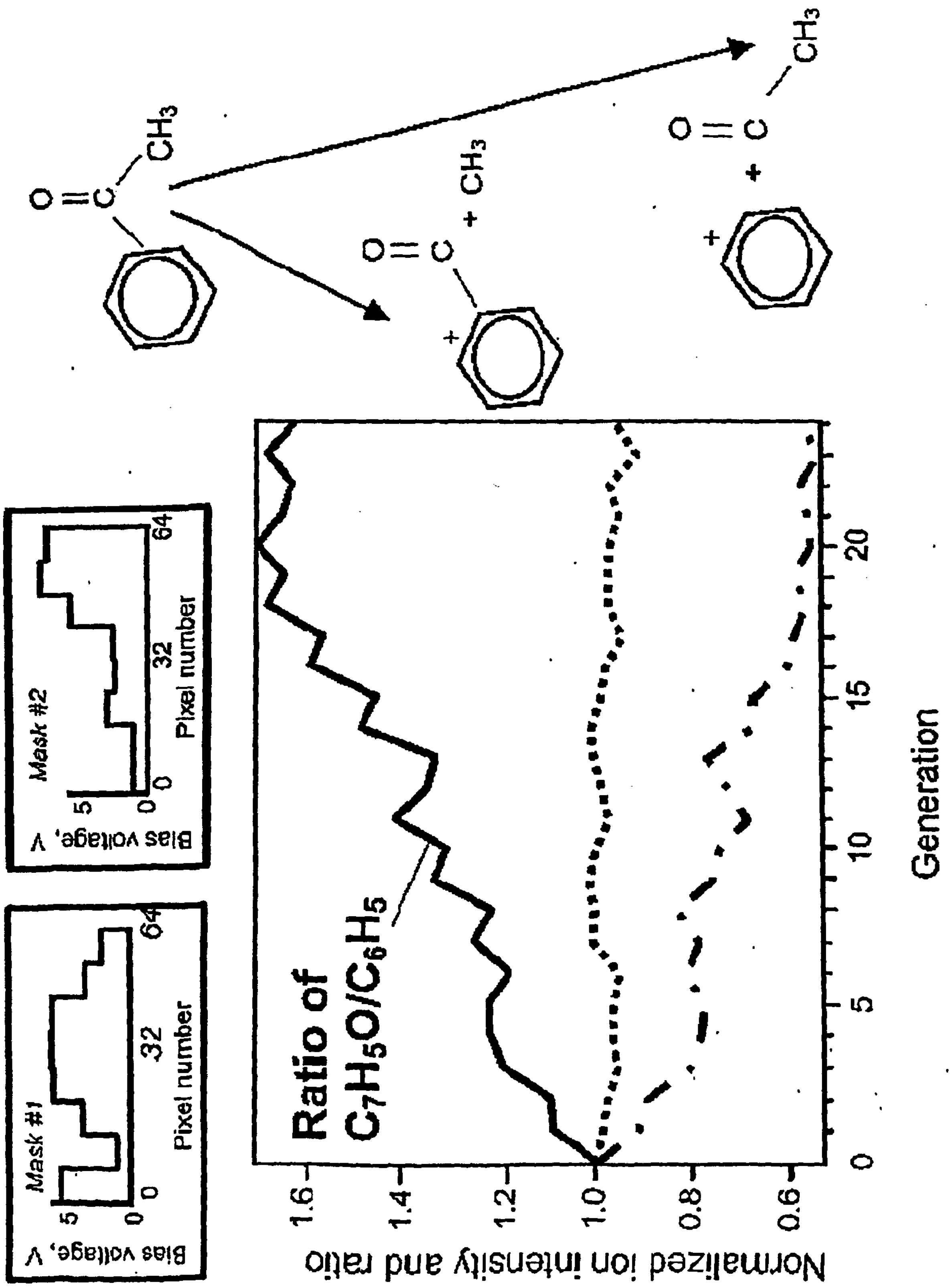
Mask #1
Bias voltage, V
Pixel number
Mask #2
Bias voltage, V
Pixel number
Ratio of $C_7H_5O/C_6H_5$
Normalized ion intensity and ratio
Generation

FIG 4.20

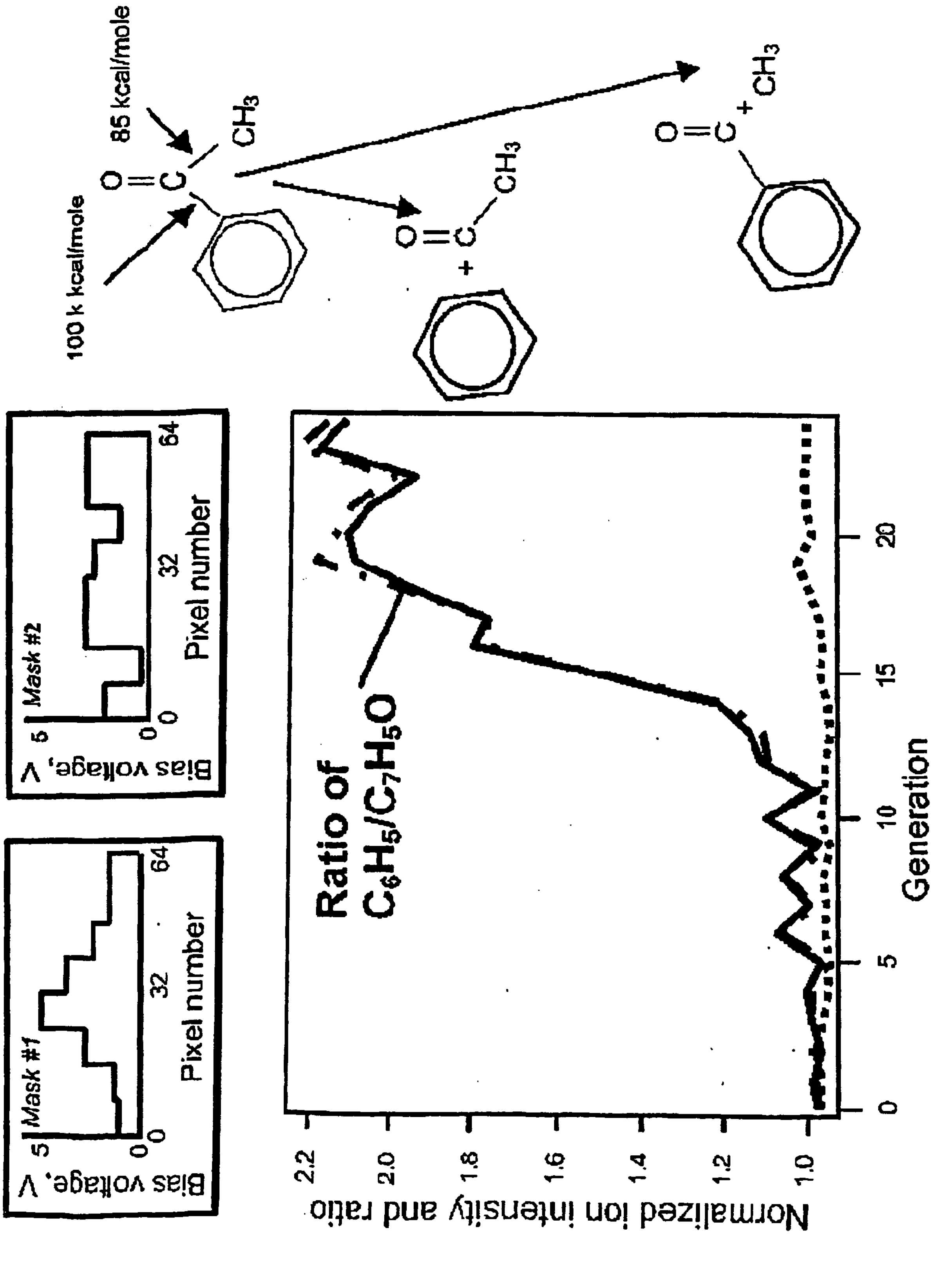
100 k kcal/mole
85 kcal/mole
Mask #1
Bias voltage, V
Pixel number
Mask #2
Bias voltage, V
Pixel number
Ratio of
C6H5/C7H5O
Generation
Normalized ion intensity and ratio

FIG 4.21

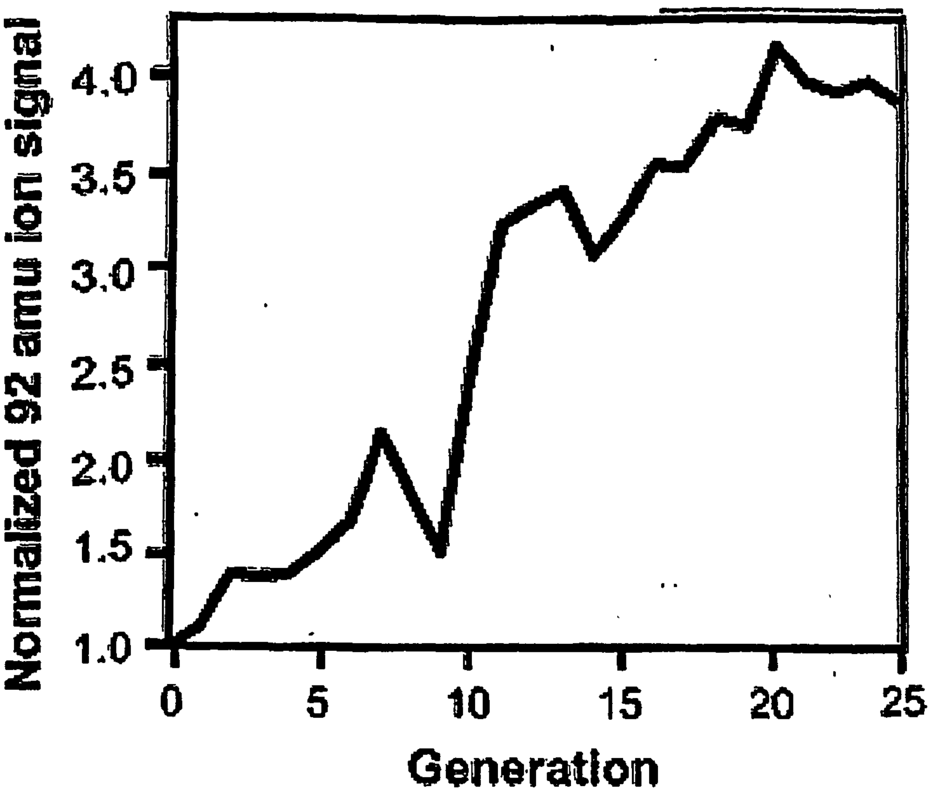
Normalized 92 amu ion signal
4.0
3.5
3.0
2.5
2.0
1.5
1.0
0
5
10
15
20
25
Generation

FIG 5.1

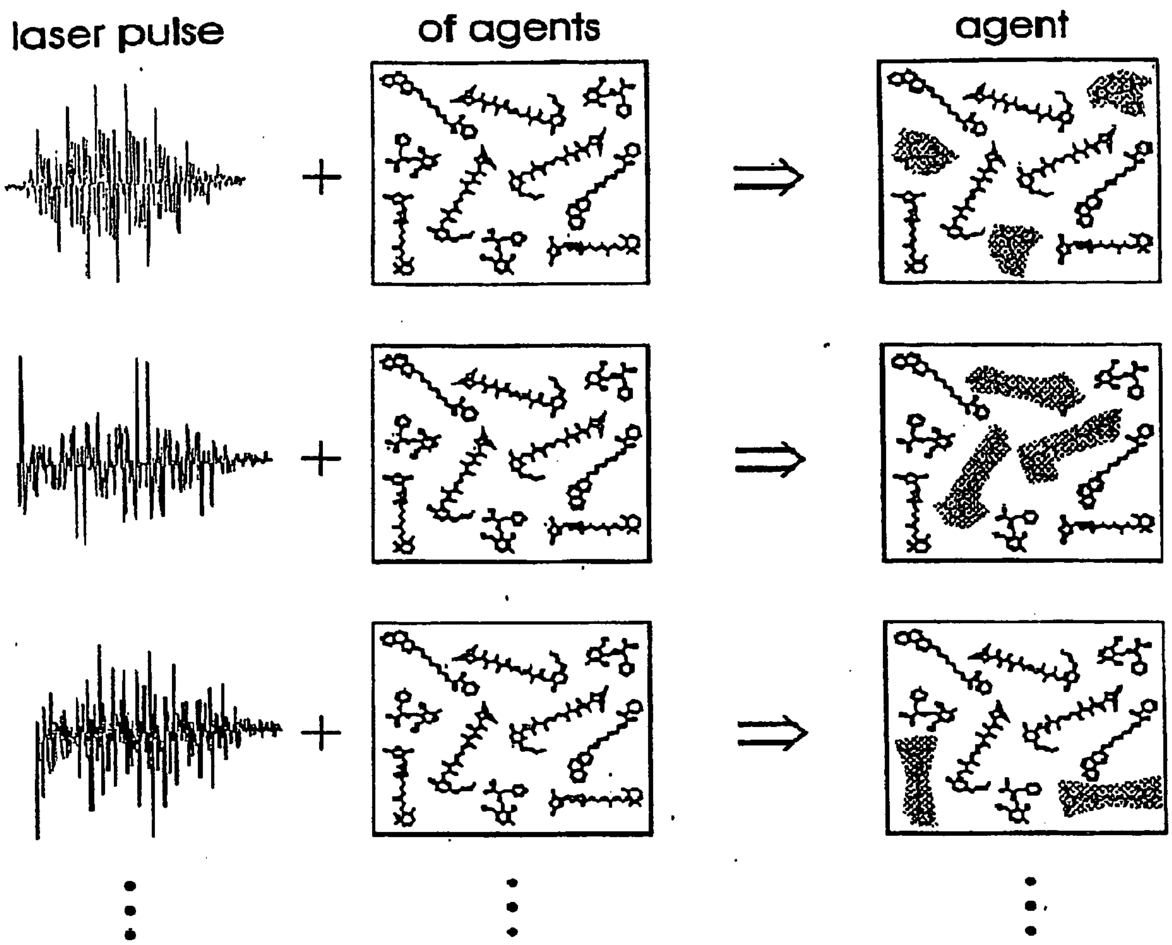

FIG 5.2

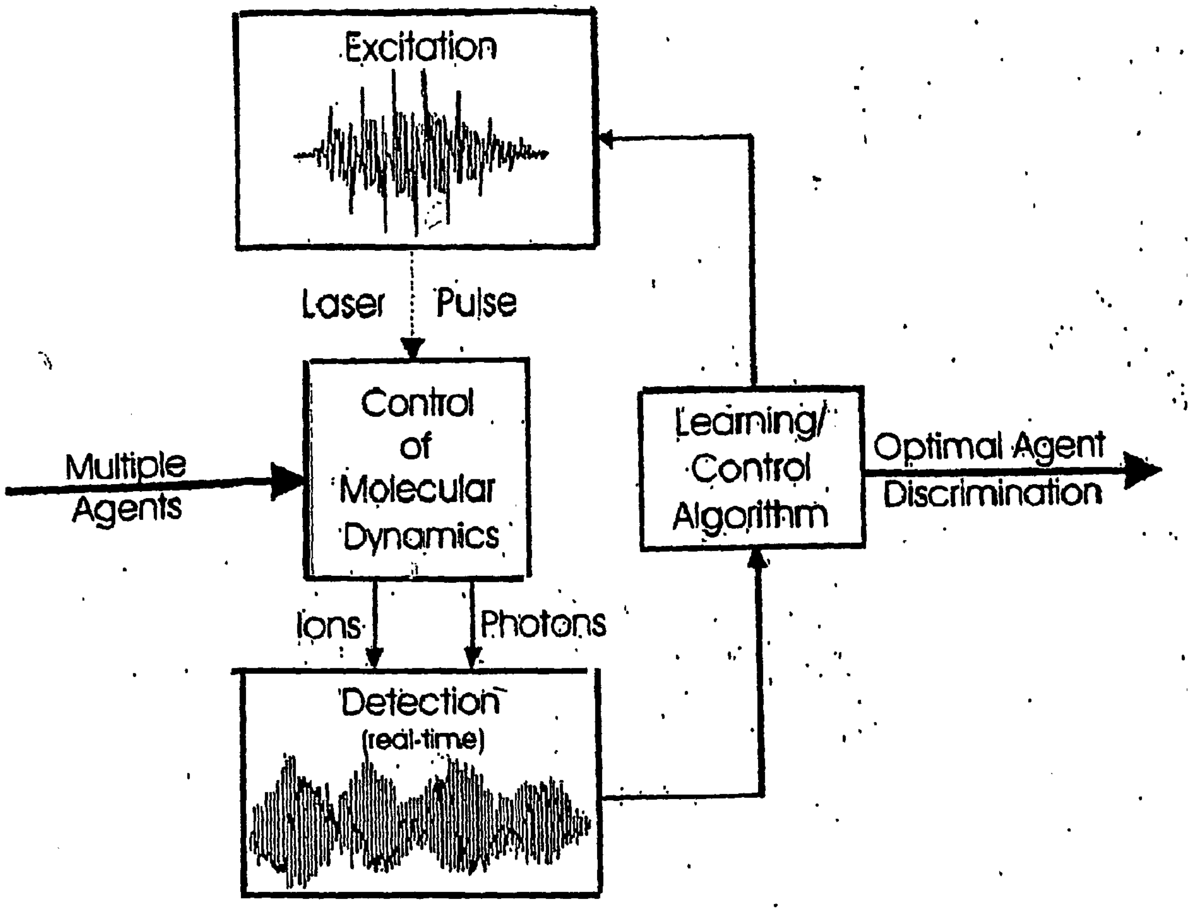
Excitation
Laser Pulse
Multiple Agents
Control of Molecular Dynamics
Ions
Photons
Detection (real-time)
Learning/ Control Algorithm
Optimal Agent Discrimination

European Patent Office

# EUROPEAN SEARCH REPORT

Application Number
EP 05 07 5109

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | R. J. LEVIS AND H. A. RABITZ: "Closing the loop on bond selective chemistry using tailored strong field laser pulses" JOURNAL OF PHYSICAL CHEMISTRY A, vol. 106, no. 27, 18 June 2002 (2002-06-18), pages 6427-6444, XP002330750 * the whole document * | 1-48 | G01N21/00 G01N21/17 G01N21/31 G01N21/62 G01N37/00 |
| P,X | B. LI, G. TURINICI, V. RAMAKRISHNA AND H. RABITZ: "Optimal dynamic discrimination of similar molecules through quantum learning control" JOURNAL OF PHYSICAL CHEMISTRY B, vol. 106, 3 July 2002 (2002-07-03), pages 8125-8131, XP002330751 * the whole document * | 1-48 | |
| P,X | J. M. GEREMIA AND H. RABITZ: "Optimal identification of Hamiltonian information by closed-loop laser control of quantum systems" PHYSICAL REVIEW LETTERS, vol. 89, no. 26, 12 December 2002 (2002-12-12), pages 263902-1-263902-4, XP002330752 * the whole document * | 1-48 | TECHNICAL FIELDS SEARCHED (Int.Cl.7) G01N |
| X | R. S. JUDSON AND H. RABITZ: "Teaching lasers to control molecules" PHYSCIAL REVIEW LETTERS, vol. 68, no. 10, 9 March 1992 (1992-03-09), pages 1500-1503, XP002330753 * the whole document * | 1-48 | |
| | -/-- | | |

The present search report has been drawn up for all claims

| Place of search | Date of completion of the search | Examiner |
|---|---|---|
| Munich | 13 June 2005 | Purdie, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

European Patent Office

# EUROPEAN SEARCH REPORT

Application Number
EP 05 07 5109

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | B. J. PEARSON, J. L. WHITE, T. C. WEINACT AND P. H. BUCKSBAUM: "Coherent control using adaptive learning algorithms" PHYSICAL REVIEW A, vol. 63, 16 May 2001 (2001-05-16), pages 063412-1-063412-12, XP002330754 * the whole document * ----- | 1-48 | |
| X | D. ZEIDLER, S. FREY, K.-L. KOMPA AND M. MOTZKUS: "Evolutionary algorithms and their application to optimal control systems" PHYSICAL REVIEW A, vol. 64, 17 July 2001 (2001-07-17), pages 023420-1-023420-13, XP002330755 * the whole document * ----- | 1-48 | |
| | | | TECHNICAL FIELDS SEARCHED (Int.Cl.7) |

The present search report has been drawn up for all claims

| Place of search | Date of completion of the search | Examiner |
|---|---|---|
| Munich | 13 June 2005 | Purdie, D |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)